# EUROPEAN PATENT APPLICATION

(11) **EP 4 717 893 A2**
(43) Date of publication of application: **01.04.2026**
(21) Application number: 26158128.4
(22) Date of filing: 01.12.2020
(51) Int. Cl.: F01N 3/28

(54) **DECOMPOSITION CHAMBER**

(30) Priority: 02.12.2019 US 201962942470 P
(62) Divisional of application: 25189824.3
(71) Applicant: Cummins Emission Solutions Inc., Columbus, IN 47201 (US)
(72) Inventor: JOHNSON, Samuel, East Wenatchee, Washington, 98802 (US); FRISCH, Paul T., Madison, Wisconsin, 53714 (US); JANG, Peter Te-Cheng, Waterloo, Iowa, 50702 (US); ZORAN, Randolph G., McFarland, Wisconsin, 53558 (US); JOHNSON, Ryan M., Cottage Grove, Wisconsin, 53527 (US); BUECHLER, John G., Indianapolis, Indiana, 46259 (US); ALONZO, Jim L., Verona, Wisconsin, 53593 (US); NANDURU, Enoch, 411021 Pune (IN); JOSHI, Pradnya C., 414003 Ahmednagar (IN); CHIRUTA, Mihai, Madison, Wisconsin, 53711 (US); MONTGOMERY, Isabel Valborg, Stoughton, Wisconsin, 53589 (US); DALDEGAN, Guilherme, Fridley, Minnesota, 55432 (US)
(74) Representative: Hoffmann Eitle

(57) **Abstract**

There is disclosed herein a decomposition chamber for an exhaust gas aftertreatment system, the decomposition chamber comprising: a selective catalytic reduction (SCR) catalyst member; a distribution cap configured to receive exhaust gas; a mixing collector wall comprising a mixing assembly flow aperture; a mixing assembly wall coupled to the mixing collector wall; an outer housing wall coupled to the mixing assembly wall; and a dividing tube coupled to the mixing collector wall around the mixing assembly flow aperture, the dividing tube separating the distribution cap from the mixing assembly flow aperture, the dividing tube comprising: a dividing tube body separated from the outer housing wall; a dividing tube inlet aperture extending through the dividing tube body and configured to receive the exhaust gas from the distribution cap; a dividing tube body bypass opening extending through the dividing tube body, aligned with the dividing tube inlet aperture, in confronting relation with the mixing assembly wall, and configured to receive the exhaust gas from between the dividing tube body and the mixing collector wall; and a dividing tube outlet aperture configured to provide the exhaust gas to the mixing assembly flow aperture.

## Description

### CROSS-REFERENCE TO RELATED PATENT APPLICATION

This Application claims the benefit of U.S. Provisional Application No. 62/942,470, filed December 2, 2019.

### TECHNICAL FIELD

The present application relates generally to decomposition chambers for an exhaust gas aftertreatment system of an internal combustion engine.

### BACKGROUND

For internal combustion engines, such as diesel engines, nitrogen oxide (NOₓ) compounds may be emitted in exhaust. It may be desirable to reduce NOₓ emissions to comply with environmental regulations, for example. To reduce NOₓ emissions, a reductant may be dosed into the exhaust by a dosing system and within an aftertreatment system. The reductant facilitates conversion of a portion of the exhaust into non-NOₓ emissions, such as nitrogen (N₂), carbon dioxide (CO₂), and water (H₂O), thereby reducing NOₓ emissions.

The exhaust and reductant react within a component of the aftertreatment system. This component is typically configured to attain a specific conversion of the exhaust into non-NOₓ emissions. However, this configuration typically decreases performance and efficiency of the aftertreatment system. For example, this configuration may cause an increase in back pressure on an internal combustion engine which can cause decreased efficiency of the internal combustion engine.

### SUMMARY

In one embodiment, a decomposition chamber for an exhaust gas aftertreatment system includes an inlet tube, a selective catalytic reduction (SCR) catalyst member, a mixing collector wall, a distribution cap, and a dividing tube. The inlet tube is configured to receive exhaust gas. The mixing collector wall includes a mixing assembly flow aperture. The distribution cap is coupled to the inlet tube and configured to receive the exhaust gas from the inlet tube. The dividing tube is coupled to the mixing collector wall. The dividing tube separates the distribution cap from the mixing assembly flow aperture. The dividing tube includes a first dividing tube inlet aperture that is configured to receive the exhaust gas from the distribution cap. The dividing tube outlet aperture is configured to provide the exhaust gas to the mixing assembly flow aperture.

In another embodiment, a decomposition chamber for an exhaust gas aftertreatment system includes a selective catalytic reduction (SCR) catalyst member, a distribution cap, a mixing collector wall, and a dividing tube assembly. The distribution cap is configured to receive exhaust gas. The mixing collector wall includes a mixing assembly flow aperture. The dividing tube assembly extends between a first portion of the mixing collector wall and a second portion of the mixing collector wall. The dividing tube assembly includes an inlet dividing tube and an outlet dividing tube. The inlet dividing tube has an inlet dividing tube inlet aperture that is configured to receive the exhaust gas from the distribution cap. The outlet dividing tube is configured to receive the exhaust gas from the inlet dividing tube. The outlet dividing tube has an outlet dividing tube outlet aperture that is configured to provide the exhaust gas to the mixing assembly flow aperture.

In yet another embodiment, a decomposition chamber for an exhaust gas aftertreatment system includes a selective catalytic reduction (SCR) catalyst member, a distribution cap, a mixing collector wall, a mixing assembly wall, an outer housing wall, and a dividing tube. The SCR catalyst member is configured to receive exhaust gas. The mixing collector wall includes a mixing assembly flow aperture. The mixing assembly wall is coupled to the mixing collector wall. The outer housing wall is coupled to the mixing assembly wall. The dividing tube is coupled to the mixing collector wall around the mixing assembly flow aperture. The dividing tube separating the distribution cap from the mixing assembly flow aperture. The dividing tube includes a dividing tube body, a dividing tube inlet aperture, a dividing tube body bypass opening, and a dividing tube outlet aperture. The dividing tube body is separated from the outer housing wall. The dividing tube inlet aperture extends through the dividing tube body and is configured to receive the exhaust gas from the distribution cap. The dividing tube body bypass opening extends through the dividing tube body. The dividing tube body bypass opening is aligned with the dividing tube inlet aperture, in confronting relation with the mixing assembly wall. The dividing tube body bypass opening is configured to receive the exhaust gas from between the dividing tube body and the mixing collector wall. The dividing tube outlet aperture is configured to provide the exhaust gas to the mixing assembly flow aperture.

### BRIEF DESCRIPTION OF THE DRAWINGS

The details of one or more implementations are set forth in the accompanying drawings and the description below. Other features, aspects, and advantages of the disclosure will become apparent from the description, the drawings, and the claims, in which:
Figure 1 is a block schematic diagram of an example exhaust gas aftertreatment system;
Figure 2 is an exploded view of an example decomposition chamber for an exhaust gas aftertreatment system;
Figure 3 is a perspective view of a portion of an example decomposition chamber for an exhaust gas aftertreatment system;
Figure 4 is a perspective view of a portion of an example decomposition chamber for an exhaust gas aftertreatment system;
Figure 5 is a cross-sectional view of a portion of an example decomposition chamber for an exhaust gas aftertreatment system;
Figure 6 is a perspective view of a portion of an example decomposition chamber for an exhaust gas aftertreatment system;
Figure 7A is a perspective view of a portion of an example decomposition chamber for an exhaust gas aftertreatment system;
Figure 7B is a cross-sectional view of a portion of the decomposition chamber shown in Figure 7A, taken along plane A-A;
Figure 8 is a front view of a portion of an example decomposition chamber for an exhaust gas aftertreatment system;
Figure 9A is a cross-sectional view of a portion of the decomposition chamber shown in Figure 8, taken along plane B-B;
Figure 9B is a cross-sectional view of a portion of the decomposition chamber shown in Figure 8, taken along plane C-C;
Figure 10 is a cross-sectional view of a portion of the decomposition chamber shown in Figure 9A, taken along plane D-D;
Figure 11 is a perspective view of an example dividing tube for a decomposition chamber for an exhaust gas aftertreatment system;
Figure 12 is a cross-sectional view of a portion of the dividing tube shown in Figure 11, taken along plane E-E;
Figure 13 is a front view of a portion of an example decomposition chamber for an exhaust gas aftertreatment system;
Figure 14 is a cross-sectional view of a portion of the decomposition chamber shown in Figure 13, taken along plane F-F;
Figure 15 is a cross-sectional view of a portion of the decomposition chamber shown in Figure 14, taken along plane G-G;
Figure 16 is a perspective view of an example dividing tube for a decomposition chamber for an exhaust gas aftertreatment system;
Figure 17 is a cross-sectional view of a portion of the dividing tube shown in Figure 16, taken along plane H-H;
Figure 18 is a perspective view of a portion of an example decomposition chamber for an exhaust gas aftertreatment system;
Figure 19 is a cross-sectional view of a portion of the decomposition chamber shown in Figure 18, taken along plane J-J;
Figure 20 is a perspective view of a portion of an example decomposition chamber for an exhaust gas aftertreatment system;
Figure 21 is a top perspective view of an example transfer tube for a decomposition chamber for an exhaust gas aftertreatment system;
Figure 22 is a bottom perspective view of the transfer tube shown in Figure 21;
Figure 23 is a perspective view of a portion of an example decomposition chamber for an exhaust gas aftertreatment system;
Figure 24 is a perspective view of a portion of an example decomposition chamber for an exhaust gas aftertreatment system;
Figure 25 is a perspective view of a portion of an example decomposition chamber for an exhaust gas aftertreatment system;
Figure 26 is a perspective view of a portion of an example decomposition chamber for an exhaust gas aftertreatment system;
Figure 27 is a perspective view of a portion of an example decomposition chamber for an exhaust gas aftertreatment system;
Figure 28 is a front view of a portion of an example decomposition chamber for an exhaust gas aftertreatment system;
Figure 29 is an exploded view of a dividing tube for the decomposition chamber shown in Figure 28;
Figure 30 is a rear exploded view of a portion of the decomposition chamber shown in Figure 28;
Figure 31A is a cross-sectional view of a portion of the decomposition chamber shown in Figure 28, taken along plane K-K;
Figure 31B is another cross-sectional view of a portion of the decomposition chamber shown in Figure 28, taken along plane K-K;
Figure 32 is a cross-sectional view of a portion of the decomposition chamber shown in Figure 28, taken along plane L-L;
Figure 33 is a cross-sectional view of a portion of the decomposition chamber shown in Figure 28, taken along plane M-M;
Figure 34 is a perspective view of a portion of an example decomposition chamber for an exhaust gas aftertreatment system;
Figure 35 is a cross-sectional view of a portion of the decomposition chamber shown in Figure 34, taken along plane N-N;
Figure 36 is a cross-sectional view of a portion of the decomposition chamber shown in Figure 34, taken along plane P-P;
Figure 37 is a perspective view of a portion of the example decomposition chamber shown in Figure 34;
Figure 38 is a cross-sectional view of a portion of the decomposition chamber shown in Figure 34, taken along plane Q-Q.
Figure 39 is a cross-sectional view of a portion of an example decomposition chamber;
Figure 40 is a perspective view of an example dividing tube for a decomposition chamber for an exhaust gas aftertreatment system;
Figure 41 is another perspective view of the dividing tube shown in Figure 40;
Figure 42 is a perspective view of an example dividing tube for a decomposition chamber for an exhaust gas aftertreatment system;
Figure 43 is another perspective view of the dividing tube shown in Figure 42;
Figure 44 is a perspective view of a portion of an example decomposition chamber for an exhaust gas aftertreatment system;
Figure 45 is a perspective view of a portion of an example decomposition chamber for an exhaust gas aftertreatment system;
Figure 46 is a perspective view of a portion of an example decomposition chamber for an exhaust gas aftertreatment system;
Figure 47 is a cross-sectional view of a portion of the decomposition chamber shown in Figure 46, taken along plane R-R;
Figure 48 is a perspective view of a dividing tube for the decomposition chamber shown in Figure 46;
Figure 49 is a front view of the dividing tube shown in Figure 48;

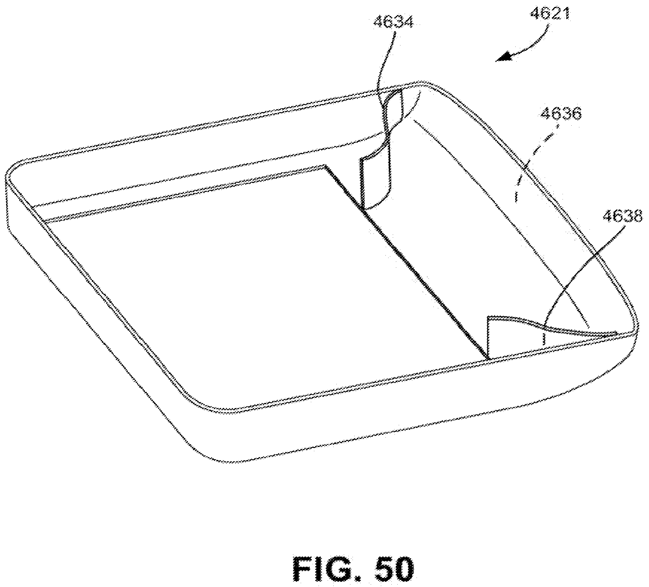

Figure 50 is a perspective view of a dividing tube collector for the decomposition chamber shown in Figure 46;
Figure 51 is a perspective view of an example dividing tube for a decomposition chamber for an exhaust gas aftertreatment system;
Figure 52 is another perspective view of the dividing tube shown in Figure 51;
Figure 53 is a perspective view of a first dividing tube flange for the dividing tube shown in Figure 51;
Figure 54 is a perspective view of another first dividing tube flange for the dividing tube shown in Figure 51;
Figure 55 is a perspective view of another first dividing tube flange for the dividing tube shown in Figure 51;
Figure 56 is a perspective view of a portion of an example decomposition chamber for an exhaust gas aftertreatment system;
Figure 57 is a cross-sectional view of a portion of the decomposition chamber shown in Figure 56, taken along plane S-S;
Figure 58 is a perspective view of a portion of an example decomposition chamber for an exhaust gas aftertreatment system;
Figure 59 is a perspective view of an example dividing tube for a decomposition chamber for an exhaust gas aftertreatment system;
Figure 60 is another perspective view of the dividing tube shown in Figure 59;
Figure 61 is a perspective view of the dividing tube shown in Figure 59;
Figure 62 is a perspective view of a portion of an example decomposition chamber for an exhaust gas aftertreatment system;
Figure 63A is another perspective view of the decomposition chamber shown in Figure 62;
Figure 63B is a cross-sectional view of a portion of the decomposition chamber shown in Figure 63A, taken along plane T-T;
Figure 63C is a cross-sectional view of a portion of the decomposition chamber shown in Figure 63A, taken along plane U-U;
Figure 64 is a perspective view of an example dividing tube for a decomposition chamber for an exhaust gas aftertreatment system;
Figure 65 is another perspective view of the dividing tube shown in Figure 64;
Figure 66 is a cross-sectional view of the dividing tube shown in Figure 64, taken along plane V-V;
Figure 67 is a perspective view of an example dividing tube for a decomposition chamber for an exhaust gas aftertreatment system;
Figure 68 is another perspective view of the dividing tube shown in Figure 67;
Figure 69 is a bottom view of the dividing tube shown in Figure 67;
Figure 70 is a perspective view of an example dividing tube for a decomposition chamber for an exhaust gas aftertreatment system;
Figure 71 is a perspective view of an example dividing tube for a decomposition chamber for an exhaust gas aftertreatment system;
Figure 72 is a perspective view of an example dividing tube for a decomposition chamber for an exhaust gas aftertreatment system;
Figure 73 is a perspective view of an example dividing tube for a decomposition chamber for an exhaust gas aftertreatment system;
Figure 74 is a perspective view of an example dividing tube for a decomposition chamber for an exhaust gas aftertreatment system;
Figure 75 is a perspective view of an example dividing tube for a decomposition chamber for an exhaust gas aftertreatment system;
Figure 76 is a perspective view of an example dividing tube for a decomposition chamber for an exhaust gas aftertreatment system;
Figure 77 is a perspective view of an example dividing tube for a decomposition chamber for an exhaust gas aftertreatment system;
Figure 78A is a perspective view of an example dividing tube for a decomposition chamber for an exhaust gas aftertreatment system;
Figure 78B is a cross-sectional view of the dividing tube shown in Figure 78A, taken along plane X-X;
Figure 78C is a cross-sectional view of the dividing tube shown in Figure 78A, taken along plane W-W;
Figure 78D is another perspective view of the dividing tube shown in Figure 78A;
Figure 79 is a cross-sectional view of the dividing tube shown in Figure 78D, taken along plane Y-Y;
Figure 80 is a cross-sectional view of the dividing tube shown in Figure 78D, taken along plane Z-Z;
Figure 81 is a perspective view of a portion of an example decomposition chamber for an exhaust gas aftertreatment system;
Figure 82 is another perspective view of the decomposition chamber shown in Figure 81;
Figure 83 is another perspective view of the decomposition chamber shown in Figure 81;
Figure 84 is a perspective view of a portion of an example decomposition chamber for an exhaust gas aftertreatment system;
Figure 85 is another perspective view of the decomposition chamber shown in Figure 84;
Figure 86 is a perspective cross-sectional view of the dividing tube shown in Figure 84, taken along plane AA-AA;
Figure 87 is a cross-sectional view of the dividing tube shown in Figure 84, taken along plane BB-BB;
Figure 88 is a cross-sectional view of the decomposition chamber shown in Figure 84, taken along plane AA-AA;
Figure 89 is another perspective cross-sectional view of the decomposition chamber shown in Figure 84, taken along plane AA-AA;
Figure 90 is another perspective cross-sectional view of the decomposition chamber shown in Figure 84;
Figure 91 is another perspective cross-sectional view of the decomposition chamber shown in Figure 84;
Figure 92 is a perspective view of a portion of an example decomposition chamber for an exhaust gas aftertreatment system;
Figure 93 is a perspective view of a portion of an example decomposition chamber for an exhaust gas aftertreatment system;
Figure 94 is a perspective view of an example dividing tube for a decomposition chamber for an exhaust gas aftertreatment system;
Figure 95 is a cross-sectional view of the dividing tube shown in Figure 94, taken along plane CC-CC;
Figure 96 is a perspective cross-sectional view of the dividing tube shown in Figure 94, taken along plane CC-CC;
Figure 97 is another perspective view of the dividing tube shown in Figure 94;
Figure 98 is a perspective cross-sectional view of the dividing tube shown in Figure 94, taken along plane DD-DD;
Figure 99 is a perspective view of an example dividing tube for a decomposition chamber for an exhaust gas aftertreatment system;
Figure 100 is a perspective cross-sectional view of the dividing tube shown in Figure 99, taken along plane EE-EE;
Figure 101 is a perspective cross-sectional view of the dividing tube shown in Figure 99, taken along plane FF-FF;
Figure 102 is a perspective cross-sectional view of the dividing tube shown in Figure 99, taken along plane FF-FF;
Figure 103 is a perspective view of a portion of an example decomposition chamber for an exhaust gas aftertreatment system;
Figure 104 is a perspective view of a portion of an example decomposition chamber for an exhaust gas aftertreatment system;
Figure 105 is a front view of a portion of an example decomposition chamber for an exhaust gas aftertreatment system;
Figure 106 is a front view of a portion of an example decomposition chamber for an exhaust gas aftertreatment system;
Figure 107 is a front view of a portion of an example decomposition chamber for an exhaust gas aftertreatment system;
Figure 108A is a side wireframe view of a portion of an example decomposition chamber for an exhaust gas aftertreatment system;
Figure 108B is a cross-sectional view of the decomposition chamber shown in Figure 108A;
Figure 109 is a front view of a portion of an example decomposition chamber for an exhaust gas aftertreatment system;
Figure 110 is a perspective view of a portion of an example decomposition chamber for an exhaust gas aftertreatment system;
Figure 111 is a front view of a portion of an example decomposition chamber for an exhaust gas aftertreatment system;
Figure 112 is a perspective view of a portion of an example decomposition chamber for an exhaust gas aftertreatment system;
Figure 113 is a perspective view of a portion of an example decomposition chamber for an exhaust gas aftertreatment system;
Figure 114 is a perspective view of a portion of an example decomposition chamber for an exhaust gas aftertreatment system;
Figure 115 is a perspective view of a portion of an example decomposition chamber for an exhaust gas aftertreatment system;
Figure 116 is a perspective view of a portion of an example decomposition chamber for an exhaust gas aftertreatment system;
Figure 117 is a front view of a portion of an example decomposition chamber for an exhaust gas aftertreatment system;
Figure 118 is a front view of a portion of an example decomposition chamber for an exhaust gas aftertreatment system;
Figure 119 is a front view of a portion of an example decomposition chamber for an exhaust gas aftertreatment system;
Figure 120 is a front view of a portion of an example decomposition chamber for an exhaust gas aftertreatment system;
Figure 121 is a perspective view of a portion of an example decomposition chamber for an exhaust gas aftertreatment system;
Figure 122 is a front view of a portion of an example decomposition chamber for an exhaust gas aftertreatment system;
Figure 123 is a perspective view of a portion of an example decomposition chamber for an exhaust gas aftertreatment system;
Figure 124 is a perspective view of a portion of an example decomposition chamber for an exhaust gas aftertreatment system;
Figure 125 is a perspective view of a portion of an example decomposition chamber for an exhaust gas aftertreatment system;
Figure 126 is a perspective view of a portion of an example decomposition chamber for an exhaust gas aftertreatment system;
Figure 127 is a perspective view of a portion of an example decomposition chamber for an exhaust gas aftertreatment system;
Figure 128 is a perspective view of a portion of an example decomposition chamber for an exhaust gas aftertreatment system;
Figure 129 is a perspective view of a portion of an example decomposition chamber for an exhaust gas aftertreatment system;
Figure 130 is a perspective view of a portion of an example decomposition chamber for an exhaust gas aftertreatment system;
Figure 131 is a perspective view of a portion of an example decomposition chamber for an exhaust gas aftertreatment system;
Figure 132 is a front view of a portion of an example decomposition chamber for an exhaust gas aftertreatment system;
Figure 133 is a front view of a portion of an example decomposition chamber for an exhaust gas aftertreatment system;
Figure 134 is a perspective view of a portion of an example decomposition chamber for an exhaust gas aftertreatment system;
Figure 135 is a perspective view of a portion of an example decomposition chamber for an exhaust gas aftertreatment system;
Figure 136 is a perspective view of a portion of an example decomposition chamber for an exhaust gas aftertreatment system;
Figure 137 is a front view of a portion of an example decomposition chamber for an exhaust gas aftertreatment system;
Figure 138 is a front view of a portion of an example decomposition chamber for an exhaust gas aftertreatment system;
Figure 139 is a perspective view of a portion of an example decomposition chamber for an exhaust gas aftertreatment system;
Figure 140 is a perspective view of a portion of an example decomposition chamber for an exhaust gas aftertreatment system; and
Figure 141 is a front view of a portion of an example decomposition chamber for an exhaust gas aftertreatment system.

It will be recognized that some or all of the Figures are schematic representations for purposes of illustration. The Figures are provided for the purpose of illustrating one or more implementations with the explicit understanding that they will not be used to limit the scope or the meaning of the claims.

### DETAILED DESCRIPTION

Following below are more detailed descriptions of various concepts related to, and implementations of, methods, apparatuses, and for decomposing exhaust gas in an exhaust gas aftertreatment system of an internal combustion engine. The various concepts introduced above and discussed in greater detail below may be implemented in any of a number of ways, as the described concepts are not limited to any particular manner of implementation. Examples of specific implementations and applications are provided primarily for illustrative purposes.

### I. Overview

Internal combustion engines (e.g., diesel internal combustion engines, etc.) produce exhaust gas that contains constituents, such as NOₓ, N₂, CO₂, and/or H₂O. In some applications, an exhaust gas aftertreatment system is utilized to dose the exhaust gas with a reductant so as to reduce NOₓ emissions in the exhaust gas. These exhaust gas aftertreatment systems may include a decomposition chamber within which the reductant is provided and mixed with the exhaust gas.

Enhancing mixing of the reductant and exhaust gas can increase desirability of an exhaust gas aftertreatment system. However, enhancing mixing of the reductant and exhaust gas can lead to increasing the backpressure of the decomposition chamber (e.g., on an internal combustion engine having the exhaust gas aftertreatment system, etc.), thereby decreasing desirability of the exhaust gas aftertreatment system (e.g., because performance of the internal combustion engine is negatively impacted by the increased backpressure, etc.). Additionally, the reductant may form deposits within the exhaust gas aftertreatment system, such as on internal surfaces of the decomposition chamber, which can decrease desirability of the decomposition chamber because the backpressure of the decomposition chamber is increased, and/or because NOₓ emissions cannot be desirably reduced.

Implementations described herein are related to various decomposition chambers that mix reductant and exhaust gas in ways that do not increase backpressure and that mitigate formation of reductant deposits, thereby increasing the desirability of the decomposition chambers described herein compared to other decomposition chambers.

Some implementations described herein relate to a decomposition chamber with concentration walls that form a throat portion and swirl cavities. The exhaust gas is propelled by the concentration walls through the throat portion where velocity of the exhaust gas is increased and subsequently provided into the swirl cavities where the exhaust gas is swirled to increase mixing of the reductant and exhaust gas.

Some implementations described herein relate to a decomposition chamber with channel walls and flow guides that swirl the exhaust gas. The decomposition chamber also includes baffles to shield a distribution cap from impingement of reductant.

Some implementations described herein relate to a decomposition chamber with a dividing tube where reductant is provided. The exhaust gas is propelled into the dividing tube, mixed with the reductant, swirled by the dividing tube, and provided out of the dividing tube. The dividing tube also includes ducts for guiding the exhaust gas into the dividing tube and a duct for guiding the exhaust gas across various surfaces of the dividing tube to mitigate impingement of reductant on those surfaces.

Some implementations described herein relate to a decomposition chamber with a transfer tube where reductant is provided. The exhaust gas is provided into the transfer tube on one side of a housing wall, mixed with the reductant, provided through the housing wall via the transfer tube, and provided from the transfer tube on the other side of the housing wall.

Implementations herein may provide exhaust gas radially (e.g., along tangents) into various bodies. By providing the exhaust gas radially, the exhaust gas may be caused to swirl within the various bodies. This utility of this swirl can be realized by injecting reductant into the exhaust gas and using this swirl to facilitate mixing of the reductant and the exhaust gas. Additionally, implementations herein may provide exhaust gas radially from various bodies (e.g., to catalyst members, etc.). By providing the exhaust gas radially, the momentum of the exhaust gas may be conserved and a pressure drop experienced by the exhaust gas may be decreased.

### II. Example Exhaust Gas Aftertreatment System

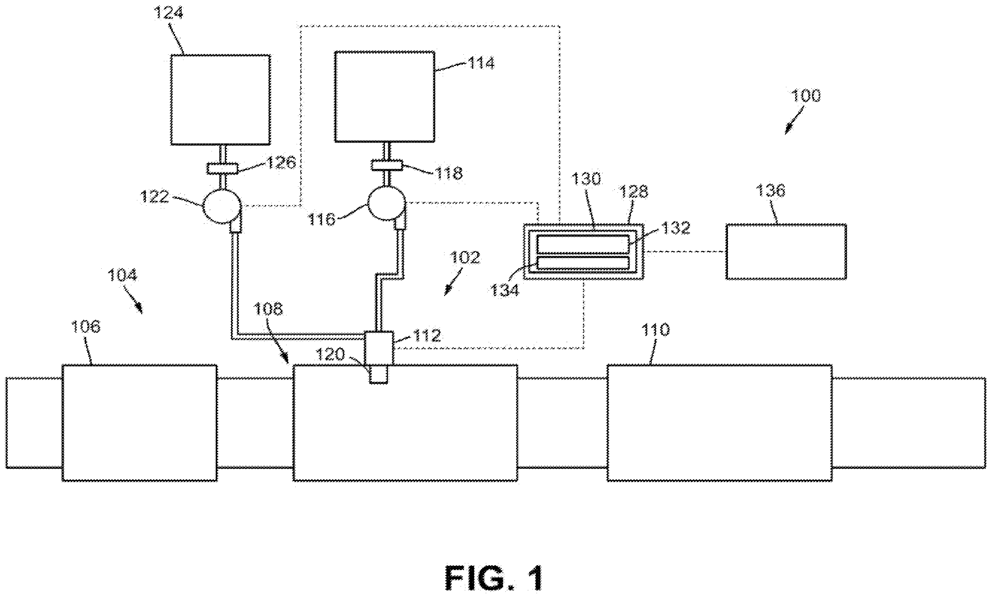

Figure 1 depicts an exhaust gas aftertreatment system 100 having an example reductant delivery system 102 for an exhaust gas conduit system 104. The exhaust gas aftertreatment system 100 includes the reductant delivery system 102, a particulate filter (e.g., a diesel particulate filter (DPF)) 106, a decomposition chamber 108 (e.g., decomposition reactor, reactor pipe, decomposition tube, reactor tube, etc.), and a selective catalytic reduction (SCR) catalyst member 110.

The DPF 106 is configured to remove particulate matter, such as soot, from exhaust gas flowing in the exhaust gas conduit system 104. The DPF 106 includes an inlet, where the exhaust gas is received, and an outlet, where the exhaust gas exits after having particulate matter substantially filtered from the exhaust gas and/or converting the particulate matter into carbon dioxide. In some implementations, the DPF 106 may be omitted.

The decomposition chamber 108 is configured to convert a reductant into ammonia. The reductant may be, for example, urea, diesel exhaust fluid (DEF), Adblue^{®}, a urea water solution (UWS), an aqueous urea solution (e.g., AUS32, etc.), and other similar fluids. The decomposition chamber 108 includes an inlet fluidly coupled to (e.g., fluidly configured to communicate with, etc.) the DPF 106 to receive the exhaust gas containing NOₓ emissions and an outlet for the exhaust gas, NOₓ emissions, ammonia, and/or reductant to flow to the SCR catalyst member 110.

The reductant delivery system 102 includes a dosing module 112 (e.g., doser, etc.) configured to dose the reductant into the decomposition chamber 108 (e.g., via an injector). The dosing module 112 is mounted to the decomposition chamber 108 such that the dosing module 112 may dose the reductant into the exhaust gas flowing in the exhaust gas conduit system 104. The dosing module 112 may include an insulator interposed between a portion of the dosing module 112 and the portion of the decomposition chamber 108 on which the dosing module 112 is mounted.

The dosing module 112 is fluidly coupled to a reductant source 114. The reductant source 114 may include multiple reductant sources 114. The reductant source 114 may be, for example, a diesel exhaust fluid tank containing Adblue^{®}. A reductant pump 116 (e.g., supply unit, etc.) is used to pressurize the reductant from the reductant source 114 for delivery to the dosing module 112. In some embodiments, the reductant pump 116 is pressure controlled (e.g., controlled to obtain a target pressure, etc.). The reductant pump 116 includes a reductant filter 118. The reductant filter 118 filters (e.g., strains, etc.) the reductant prior to the reductant being provided to internal components (e.g., pistons, vanes, etc.) of the reductant pump 116. For example, the reductant filter 118 may inhibit or prevent the transmission of solids (e.g., solidified reductant, contaminants, etc.) to the internal components of the reductant pump 116. In this way, the reductant filter 118 may facilitate (e.g., allow, permit, etc.) prolonged desirable operation of the reductant pump 116. In some embodiments, the reductant pump 116 is coupled to a chassis of a vehicle associated with the exhaust gas aftertreatment system 100.

The dosing module 112 includes at least one injector 120. Each injector 120 is configured to dose the reductant into the exhaust gas (e.g., within the decomposition chamber 108, etc.). In some embodiments, the reductant delivery system 102 also includes an air pump 122. In these embodiments, the air pump 122 draws air from an air source 124 (e.g., air intake, etc.) and through an air filter 126 disposed upstream of the air pump 122. Additionally, the air pump 122 provides the air to the dosing module 112 via a conduit. In these embodiments, the dosing module 112 is configured to mix the air and the reductant into an air-reductant mixture and to provide the air-reductant mixture into the decomposition chamber 108. In other embodiments, the reductant delivery system 102 does not include the air pump 122 or the air source 124. In such embodiments, the dosing module 112 is not configured to mix the reductant with air.

The dosing module 112 and the reductant pump 116 are also electrically or communicatively coupled to a reductant delivery system controller 128. The reductant delivery system controller 128 is configured to control the dosing module 112 to dose the reductant into the decomposition chamber 108. The reductant delivery system controller 128 may also be configured to control the reductant pump 116.

The reductant delivery system controller 128 includes a processing circuit 130. The processing circuit 130 includes a processor 132 and a memory 134. The processor 132 may include a microprocessor, an application-specific integrated circuit (ASIC), a field-programmable gate array (FPGA), etc., or combinations thereof. The memory 134 may include, but is not limited to, electronic, optical, magnetic, or any other storage or transmission device capable of providing a processor, ASIC, FPGA, etc. with program instructions. This memory 134 may include a memory chip, Electrically Erasable Programmable Read-Only Memory (EEPROM), Erasable Programmable Read Only Memory (EPROM), flash memory, or any other suitable memory from which the reductant delivery system controller 128 can read instructions. The instructions may include code from any suitable programming language. The memory 134 may include various modules that include instructions which are configured to be implemented by the processor 132.

In various embodiments, the reductant delivery system controller 128 is configured to communicate with a central controller 136 (e.g., engine control unit (ECU)), engine control module (ECM), etc.) of an internal combustion engine having the exhaust gas aftertreatment system 100. In some embodiments, the central controller 136 and the reductant delivery system controller 128 are integrated into a single controller.

In some embodiments, the central controller 136 is communicable with a display device (e.g., screen, monitor, touch screen, heads up display (HUD), indicator light, etc.). The display device may be configured to change state in response to receiving information from the central controller 136. For example, the display device may be configured to change between a static state (e.g., displaying a green light, displaying a "SYSTEM OK" message, etc.) and an alarm state (e.g., displaying a blinking red light, displaying a "SERVICE NEEDED" message, etc.) based on a communication from the central controller 136. By changing state, the display device may provide an indication to a user (e.g., operator, etc.) of a status (e.g., operation, in need of service, etc.) of the reductant delivery system 102.

The decomposition chamber 108 is located upstream of the SCR catalyst member 110. As a result, the reductant is injected by the injector 120 upstream of the SCR catalyst member 110 such that the SCR catalyst member 110 receives a mixture of the reductant and exhaust gas. The reductant droplets undergo the processes of evaporation, thermolysis, and hydrolysis to form non-NOₓ emissions (e.g., gaseous ammonia, etc.) within the decomposition chamber 108 and/or the exhaust gas conduit system 104.

The SCR catalyst member 110 is configured to assist in the reduction of NOₓ emissions by accelerating a NOₓ reduction process between the reductant and the NOₓ of the exhaust gas into diatomic nitrogen, water, and/or carbon dioxide. The SCR catalyst member 110 includes an inlet fluidly coupled to the decomposition chamber 108 from which exhaust gas and reductant are received and an outlet fluidly coupled to an end of the exhaust gas conduit system 104.

The exhaust gas aftertreatment system 100 may further include an oxidation catalyst (e.g., a diesel oxidation catalyst (DOC)) fluidly coupled to the exhaust gas conduit system 104 (e.g., downstream of the SCR catalyst member 110 or upstream of the DPF 106) to oxidize hydrocarbons and carbon monoxide in the exhaust gas.

In some implementations, the DPF 106 may be positioned downstream of the decomposition chamber 108. For instance, the DPF 106 and the SCR catalyst member 110 may be combined into a single unit. In some implementations, the dosing module 112 may instead be positioned downstream of a turbocharger or upstream of a turbocharger.

While the exhaust gas aftertreatment system 100 has been shown and described in the context of use with a diesel internal combustion engine, it is understood that the exhaust gas aftertreatment system 100 may be used with other internal combustion engines, such as gasoline internal combustion engines, hybrid internal combustion engines, propane internal combustion engines, and other similar internal combustion engines.

### III. Example Decomposition Chamber

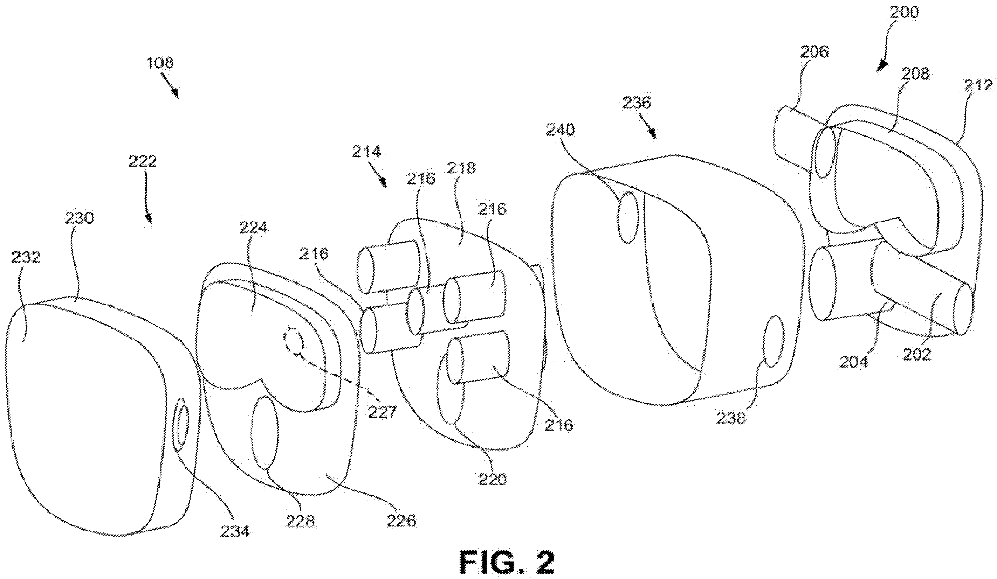

Figure 2 illustrates an exploded view of the decomposition chamber 108 according to an example embodiment. The decomposition chamber 108 includes a communication assembly 200 (e.g., inlet/outlet assembly, etc.). The communication assembly 200 includes an inlet fitting 202 (e.g., connector, coupling, etc.). The inlet fitting 202 is configured to receive the exhaust gas from a portion of the exhaust gas conduit system 104 that is downstream of the DPF 106 and upstream of the decomposition chamber 108. The communication assembly 200 also includes an inlet tube 204. The inlet tube 204 is coupled to (e.g., attached to, fixed to, welded to, integrated with, etc.) the inlet fitting 202 and configured to receive the exhaust gas from the inlet fitting 202. The communication assembly 200 also includes an outlet fitting 206 (e.g., connector, coupling, etc.). The outlet fitting 206 is configured to provide the exhaust gas from the decomposition chamber 108 and into a portion of the exhaust gas conduit system 104 that is downstream of the decomposition chamber 108 and upstream of the SCR catalyst member 110. The communication assembly 200 also includes an outlet communicator 208. The outlet communicator 208 is coupled to the outlet fitting 206 and configured to provide the exhaust gas to the outlet fitting 206. The communication assembly 200 also includes a communication assembly housing wall 212 (e.g., panel, body, etc.). The inlet tube 204 and the outlet communicator 208 are each coupled to the communication assembly housing wall 212.

The decomposition chamber 108 also includes a transfer assembly 214 (e.g., exchange assembly, etc.). The transfer assembly 214 includes at least one SCR catalyst member 216 (e.g., member, pipe, channel, etc.). Each SCR catalyst member 216 is coupled to the outlet communicator 208 and configured to provide the exhaust gas to the outlet communicator 208. Similar to the SCR catalyst member 110, each SCR catalyst member 216 is configured to assist in the reduction of NOₓ emissions by accelerating a NOₓ reduction process between the reductant and the NOₓ of the exhaust gas into diatomic nitrogen, water, and/or carbon dioxide.

Each SCR catalyst member 216 is also coupled to a transfer assembly housing wall 218 (e.g., panel, body, etc.). For example, the transfer assembly housing wall 218 may include a plurality of apertures, each SCR catalyst member 216 coupled to the transfer assembly housing wall 218 around (e.g., about, along, etc.) one of the apertures and along a length of the SCR catalyst member 216 (e.g., as opposed to at an end of the SCR catalyst member 216, etc.). In this way, the SCR catalyst member 216 provides the exhaust gas through the transfer assembly housing wall 218. In an example embodiment, the transfer assembly 214 includes five SCR catalyst members 216. In other embodiments, the transfer assembly 214 includes one, two, three, four, six, eight, ten, or other numbers of SCR catalyst members 216. The transfer assembly 214 includes a transfer assembly inlet tube aperture 220 (e.g., hole, opening, etc.) in the transfer assembly housing wall 218. The transfer assembly inlet tube aperture 220 is configured to receive the inlet tube 204 such that the inlet tube 204 protrudes through the transfer assembly housing wall 218. The inlet tube 204 is coupled to the transfer assembly housing wall 218 around the transfer assembly inlet tube aperture 220.

The decomposition chamber 108 also includes a mixing assembly 222 (e.g., treatment assembly, decomposition assembly, etc.). The mixing assembly 222 includes a mixing collector 224. The mixing collector 224 is configured to provide the exhaust gas to each SCR catalyst member 216. The mixing collector 224 is coupled to a mixing collector wall 226 (e.g., panel, body, etc.) of the mixing collector 224. The mixing collector wall 226 includes a mixing collector wall aperture 227 (e.g., hole, opening, etc.). The mixing collector wall aperture 227 is configured to facilitate flow of the exhaust from the mixing collector 224 to the SCR catalyst members 216.

The mixing assembly 222 includes a mixing assembly inlet tube aperture 228 (e.g., hole, opening, etc.) in the mixing collector wall 226. The mixing assembly inlet tube aperture 228 is configured to receive the inlet tube 204 such that the inlet tube 204 protrudes through the mixing collector wall 226. The inlet tube 204 is coupled to the mixing collector wall 226 around the mixing assembly inlet tube aperture 228.

The mixing assembly 222 also includes a mixing assembly wall 230 (e.g., panel, body, etc.) and an outer housing wall 232 (e.g., panel, body, etc.). The mixing assembly wall 230 is coupled to the mixing collector wall 226. For example, the mixing assembly wall 230 may be coupled to the mixing collector wall 226 along a perimeter of the mixing collector wall 226. Similarly, the mixing assembly wall 230 is coupled to the outer housing wall 232. For example, the mixing assembly wall 230 may be coupled to the outer housing wall 232 along a perimeter of the outer housing wall 232. The mixing assembly 222 also includes an injector coupler 234. The injector coupler 234 is coupled to the mixing assembly wall 230 and/or the outer housing wall 232. The injector coupler 234 is configured to be coupled to the injector 120 and/or the dosing module 112 and to facilitate injection of the reductant through the mixing assembly wall 230 and/or the outer housing wall 232.

The decomposition chamber 108 also includes a housing body 236 (e.g., wall, panel, etc.). The housing body 236 is coupled to the communication assembly housing wall 212, the transfer assembly housing wall 218, the mixing collector wall 226, and the mixing assembly wall 230. For example, the housing body 236 may be coupled to the communication assembly housing wall 212 around a perimeter of the communication assembly housing wall 212, to the transfer assembly housing wall 218 around a perimeter of the transfer assembly housing wall 218, to the mixing collector wall 226 around a perimeter of the mixing collector wall 226, and to the mixing assembly wall 230 along an edge of the mixing assembly wall 230. The housing body 236 includes an inlet fitting aperture 238 (e.g., hole, opening, etc.) and an outlet fitting aperture 240 (e.g., hole, opening, etc.). The inlet fitting aperture 238 is configured to receive the inlet fitting 202 such that the inlet fitting 202 protrudes through the housing body 236 and the outlet fitting aperture 240 is configured to receive the outlet fitting 206 such that the outlet fitting 206 protrudes through the housing body 236. The housing body 236 is coupled to the inlet fitting 202 around the inlet fitting aperture 238 and to the outlet fitting 206 around the outlet fitting aperture 240.

In operation, exhaust gas enters the inlet fitting 202, flows through the housing body 236 via the inlet fitting aperture 238, and flows into the inlet tube 204. The exhaust gas traverses the transfer assembly housing wall 218 and the mixing collector wall 226 through the inlet tube 204 and flows into a cavity (e.g., a mixing assembly cavity, etc.) defined between the mixing collector wall 226, the mixing assembly wall 230, and the outer housing wall 232. Reductant is inserted via the injector coupler 234 and mixed with the exhaust gas within the cavity. The exhaust gas then flows into the mixing collector 224. The exhaust gas is provided through the mixing collector wall 226 via the mixing collector 224 and provided into the SCR catalyst members 216. The SCR catalyst members 216 facilitate passage of the exhaust gas through the transfer assembly housing wall 218 and into the outlet communicator 208. The exhaust gas then flows from the outlet communicator 208 into the outlet fitting 206, flows through the housing body 236 via the outlet fitting aperture 240, and flows out of the decomposition chamber 108.

### IV. Example Decomposition Chamber Having a First Example Mixing Assembly

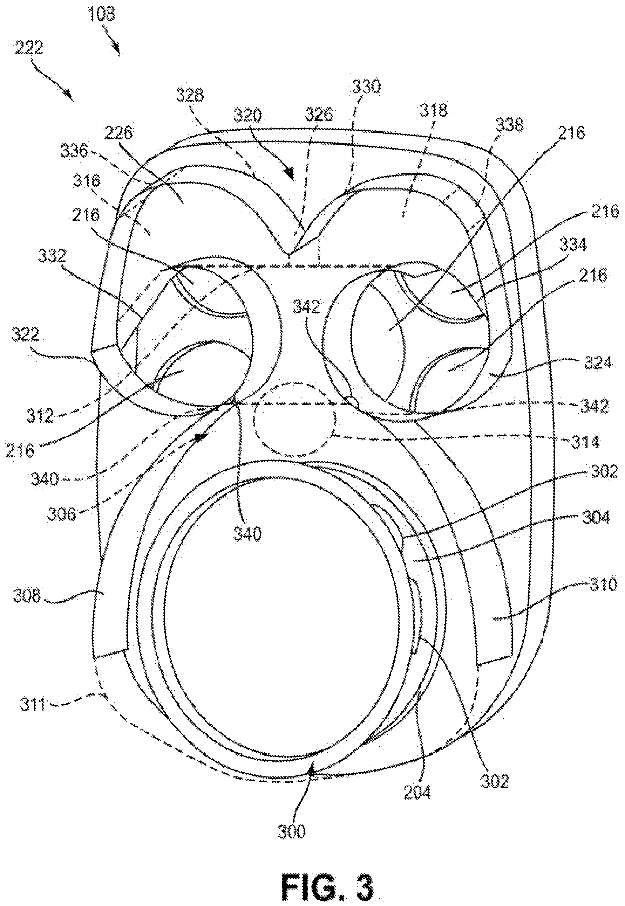

Figures 3-5 illustrate the decomposition chamber 108 and the mixing assembly 222 according to an example embodiment. The decomposition chamber 108 includes a distribution cap 300 coupled to the inlet tube 204. The distribution cap 300 may interface with, or be coupled to the mixing collector wall 226. The distribution cap 300 includes at least one distribution cap aperture 302 disposed on a distribution cap wall 304. As the exhaust gas flows out of the inlet tube 204, the exhaust gas first flows into the distribution cap 300, rather than flowing directly into the cavity defined between the mixing collector wall 226, the mixing assembly wall 230, and the outer housing wall 232. The exhaust gas exits the distribution cap 300 via the distribution cap aperture 302.

In various embodiments, the distribution cap 300 includes a plurality of distribution cap apertures 302. For example, the distribution cap 300 may include three, five, six, eight, ten, twelve, or other numbers of distribution cap apertures 302. The distribution cap apertures 302 may be uniformly disposed along the distribution cap wall 304. In some embodiments, each of the distribution cap apertures 302 is identical (e.g., has the same diameter, etc.). The number, shape, and size of the distribution cap apertures 302 can be selected so as to direct flow in a target manner.

After flowing out of the distribution cap 300 via the distribution cap aperture 302, the exhaust gas flows into a concentration cavity 306 defined between the distribution cap wall 304, the mixing collector wall 226, the mixing assembly wall 230, the outer housing wall 232, a first concentration wall 308 (e.g., panel, etc.), and a second concentration wall 310 (e.g., panel, etc.). The first concentration wall 308 and the second concentration wall 310 are each coupled to the mixing collector wall 226 and the outer housing wall 232.

The concentration cavity 306 has an annular portion 311 extending around the distribution cap 300 and generally formed between the distribution cap wall 304 and one of the first concentration wall 308 or the second concentration wall 310. The concentration cavity 306 also has a throat portion 312 (e.g., hourglass shaped portion, converging portion, etc.) formed between the first concentration wall 308 and the second concentration wall 310. As the exhaust gas flows out from the distribution cap aperture 302, the velocity of the exhaust gas increases as it flows towards the throat portion 312. A first width of the concentration cavity 306 in the throat portion 312 is less than a second width of the concentration cavity 306 outside of the throat portion 312 (e.g., proximate the distribution cap 300, etc.). In various embodiments, the width of the concentration cavity 306 gradually decreases from the distribution cap 300 to the throat portion 312.

The injector coupler 234 is coupled to the outer housing wall 232 rather than the mixing assembly wall 230. The injector coupler 234 is coupled to the outer housing wall 232. In operation, reductant is provided by the injector 120 and/or the dosing module 112 into an injection region 314. In various embodiments, the injector coupler 234 is positioned along the outer housing wall 232 so as to position the injection region 314 near a junction (e.g., crossover, border, etc.) between the annular portion 311 and the throat portion 312. As a result, the injection region 314 is immediately upstream of the throat portion 312. The injector coupler 234 may be located such that the reductant is dispersed into the exhaust gas at a location (e.g., immediately upstream of the throat portion 312, etc.) where the velocity of the exhaust gas is relatively high. As a result, impingement of the reductant (e.g., accumulation of reductant deposits, formation of a wall film, etc.) on the mixing collector wall 226 is minimized. By minimizing impingement of the reductant, the decomposition chamber 108 is capable of operating for a prolonged period of time between servicing (e.g., cleaning, etc.) or replacement. In other embodiments, the injector coupler 234 is configured such that the injection region 314 is located at a location other than near the junction between the annular portion 311 and the throat portion 312.

After flowing out of the throat portion 312, the exhaust flows into a first swirl cavity 316 and a second swirl cavity 318. The first swirl cavity 316 is defined between the mixing collector wall 226, the outer housing wall 232, the first concentration wall 308, a splitting wall 320, and a first swirl wall 322. Similarly, the second swirl cavity 318 is defined between the mixing collector wall 226, the outer housing wall 232, the first concentration wall 308, the splitting wall 320, and a second swirl wall 324.

The first concentration wall 308 is coupled to the mixing collector wall 226, the outer housing wall 232, the splitting wall 320, and the first swirl wall 322 (e.g., such that flow of the exhaust gas between the first concentration wall 308 and the mixing collector wall 226 is substantially prohibited, such that flow of the exhaust gas between the first concentration wall 308 and the outer housing wall 232 is substantially prohibited, such that flow of the exhaust gas between the first concentration wall 308 and the splitting wall 320 is substantially prohibited, such that flow of the exhaust gas between the first concentration wall 308 and the first swirl wall 322 is substantially prohibited, etc.). When flow between two elements is "substantially prohibited," it is understood that the transfer of fluid between the two elements may be entirely prohibited or that the transfer of only a de minimus amount of the fluid (e.g., 5%, etc.) between the two elements is permitted.

The second concentration wall 310 is coupled to the mixing collector wall 226, the outer housing wall 232, the splitting wall 320, and the second swirl wall 324 (e.g., such that flow of the exhaust gas between the second concentration wall 310 and the mixing collector wall 226 is substantially prohibited, such that flow of the exhaust gas between the second concentration wall 310 and the outer housing wall 232 is substantially prohibited, such that flow of the exhaust gas between the second concentration wall 310 and the splitting wall 320 is substantially prohibited, such that flow of the exhaust gas between the second concentration wall 310 and the second swirl wall 324 is substantially prohibited, etc.).

The splitting wall 320 is coupled to the mixing collector wall 226, the outer housing wall 232, the first concentration wall 308, the second concentration wall 310, the first swirl wall 322, and the second swirl wall 324 (e.g., such that flow of the exhaust gas between the splitting wall 320 and the mixing collector wall 226 is substantially prohibited, such that flow of the exhaust gas between the splitting wall 320 and the outer housing wall 232 is substantially prohibited, such that flow of the exhaust gas between the splitting wall 320 and the first concentration wall 308 is substantially prohibited, such that flow of the exhaust gas between the splitting wall 320 and the second concentration wall 310 is substantially prohibited, such that flow of the exhaust gas between the splitting wall 320 and the first swirl wall 322 is substantially prohibited, such that flow of the exhaust gas between the splitting wall 320 and the second swirl wall 324 is substantially prohibited, etc.).

The first swirl wall 322 is coupled to the mixing collector wall 226, the outer housing wall 232, the splitting wall 320, and the first concentration wall 308 (e.g., such that flow of the exhaust gas between the first swirl wall 322 and the mixing collector wall 226 is substantially prohibited, such that flow of the exhaust gas between the first swirl wall 322 and the outer housing wall 232 is substantially prohibited, such that flow of the exhaust gas between the first swirl wall 322 and the splitting wall 320 is substantially prohibited, such that flow of the exhaust gas between the first swirl wall 322 and the first concentration wall 308 is substantially prohibited, etc.).

The second swirl wall 324 is coupled to the mixing collector wall 226, the outer housing wall 232, the splitting wall 320, and the second concentration wall 310 (e.g., such that flow of the exhaust gas between the second swirl wall 324 and the mixing collector wall 226 is substantially prohibited, such that flow of the exhaust gas between the second swirl wall 324 and the outer housing wall 232 is substantially prohibited, such that flow of the exhaust gas between the second swirl wall 324 and the splitting wall 320 is substantially prohibited, such that flow of the exhaust gas between the second swirl wall 324 and the second concentration wall 310 is substantially prohibited, etc.).

The splitting wall 320 includes a splitting face 326, a first swirl face 328, and a second swirl face 330. In various embodiments, the splitting wall 320 is symmetrical about a plane bisecting the splitting face 326 such that the first swirl face 328 is identical to the second swirl face 330. As is explained in more detail herein, the splitting wall 320 divides the flow of the exhaust gas into the first swirl cavity 316 and the second swirl cavity 318 such that a uniformity index (UI) of the reductant and exhaust gas and a flow distribution index (FDI) of the exhaust gas are both increased, thereby increasing the desirability of the decomposition chamber 108 (e.g., compared to other decomposition chambers, etc.).

After flowing through the throat portion 312, the exhaust gas may flow against (e.g., into, etc.) the splitting face 326. The splitting face 326 is curved (e.g., rounded, convex, etc.) towards the throat portion 312 such that the exhaust gas is caused to split (e.g., be divided, etc.). As a result of this split, a portion of the exhaust gas flows towards the first swirl face 328 and a portion of the exhaust gas flows towards the second swirl face 330. The first swirl face 328 and the second swirl face 330 are each curved (e.g., concave, etc.) such that the exhaust gas flowing along the first swirl face 328 is propelled into the first swirl cavity 316 (e.g., away from the second swirl cavity 318, etc.) and the exhaust gas flowing along the second swirl face 330 is propelled into the second swirl cavity 318 (e.g., away from the first swirl cavity 316, etc.). In addition to splitting the exhaust gas between the first swirl cavity 316 and the second swirl cavity 318, the splitting wall 320 also functions to prevent flow of the exhaust gas from the throat portion 312, where the exhaust gas has relatively high velocity, directly onto the mixing assembly wall 230. In this way, impingement of reductant on the mixing assembly wall 230 may be decreased. Additionally, impingement of reductant on the splitting wall 320 is minimized due to the rounded shape of the splitting face 326, the first swirl face 328, and the second swirl face 330.

The mixing collector wall 226 includes a first mixing assembly flow aperture 332 (e.g., hole, opening, etc.) positioned between the first swirl wall 322 and the first concentration wall 308 and a second mixing assembly flow aperture 334 (e.g., hole, opening, etc.) positioned between the second swirl wall 324 and the second concentration wall 310. After flowing along the first swirl face 328, the exhaust gas is caused to flow between the splitting wall 320 and the first concentration wall 308, along a first corner portion 336 of the splitting wall 320, and then between the first concentration wall 308 and the first swirl wall 322 and into the first mixing assembly flow aperture 332. The first mixing assembly flow aperture 332 and the second mixing assembly flow aperture 334 collectively function as the mixing collector wall aperture 227. Similarly, after flowing along the second swirl face 330, the exhaust gas is caused to flow between the splitting wall 320 and the second concentration wall 310, along a second corner portion 338 of the splitting wall 320, and then between the second concentration wall 310 and the second swirl wall 324 and into the second mixing assembly flow aperture 334. The first concentration wall 308, the first corner portion 336, the first swirl wall 322, the second concentration wall 310, the second corner portion 338, and the second swirl wall 324 are each generally curved such that impingement of reductant (e.g., formation of deposits of reductant, etc.) is minimized and such that backpressure of the decomposition chamber 108 (e.g., on the internal combustion engine, etc.) is minimized. The first mixing assembly flow aperture 332 and the second mixing assembly flow aperture 334 are each positioned so as to be at least partially aligned with at least one SCR catalyst member 216. Minimizing backpressure increases the desirability of the decomposition chamber 108 (e.g., compared to other decomposition chambers, etc.) because efficiency and/or performance characteristics (e.g., power, torque, etc.) of an internal combustion engine having the exhaust gas aftertreatment system 100 is increased.

In various embodiments, the distribution cap 300, the distribution cap aperture 302, the first concentration wall 308, the second concentration wall 310, the splitting wall 320, the first swirl wall 322, and the second swirl wall 324 are configured such that the concentration cavity 306 is symmetric about an axis bisecting the concentration cavity 306 and such that the first swirl cavity 316 is a mirror of the second swirl cavity 318. As a result of this configuration, flow of the exhaust gas through the mixing assembly 222 is optimized and mixing (e.g., dispersion, etc.) of reductant in the exhaust gas is enhanced. By increasing mixing of the reductant in the exhaust gas, the UI of the exhaust gas is increased.

In some embodiments, the first concentration wall 308 includes at least one first concentration wall bleed aperture 340 (e.g., hole, opening, etc.) and the second concentration wall 310 includes at least one second concentration wall bleed aperture 342 (e.g., hole, opening, etc.). The first concentration wall bleed aperture 340 facilitates passage of the exhaust gas through the first concentration wall 308 and directly into the first mixing assembly flow aperture 332. Similarly, the second concentration wall bleed aperture 342 facilitates passage of the exhaust gas through the second concentration wall 310 and directly into the second mixing assembly flow aperture 334. In this way, the first concentration wall bleed aperture 340 and the second concentration wall bleed aperture 342 facilitate bypassing of the throat portion 312, the first swirl cavity 316, and the second swirl cavity 318 by a portion of the exhaust gas flowing into the first mixing assembly flow aperture 332 and the second mixing assembly flow aperture 334. As a result, the backpressure of the decomposition chamber 108 may be decreased.

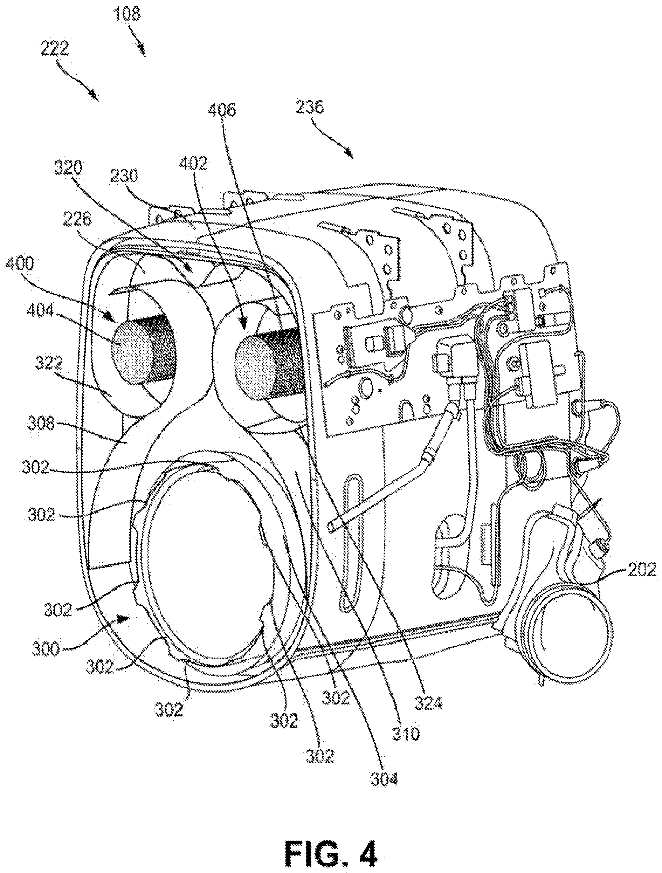

In some embodiments, as shown in Figure 4, the decomposition chamber 108 further includes a first perforated cylinder 400 and a second perforated cylinder 402. The first perforated cylinder 400 is coupled to the outer housing wall 232 (e.g., such that flow of the exhaust gas between the first perforated cylinder 400 and the outer housing wall 232 is substantially prohibited, etc.) and the mixing collector wall 226 around the first mixing assembly flow aperture 332 (e.g., such that flow of the exhaust gas between the first perforated cylinder 400 and the mixing collector wall 226 is substantially prohibited, etc.). Similarly, the second perforated cylinder 402 is coupled to the outer housing wall 232 (e.g., such that flow of the exhaust gas between the second perforated cylinder 402 and the outer housing wall 232 is substantially prohibited, etc.) and the mixing collector wall 226 around the second mixing assembly flow aperture 334 (e.g., such that flow of the exhaust gas between the second perforated cylinder 402 and the mixing collector wall 226 is substantially prohibited, etc.).

The first perforated cylinder 400 includes a plurality of first perforated cylinder perforations 404 (e.g., holes, openings, apertures, etc.). In operation, the exhaust gas flows from the first swirl cavity 316 through the first perforated cylinder perforations 404 into the first perforated cylinder 400, and through the first mixing assembly flow aperture 332. As the exhaust gas flows through the first perforated cylinder perforations 404, a flow of the exhaust gas is straightened (e.g., turbulence of the exhaust gas is reduced, etc.). As a result, the backpressure of the decomposition chamber 108 may be decreased. Additionally, the first perforated cylinder perforations 404 cause a deceleration of a rotational velocity of the exhaust gas flowing along the first perforated cylinder 400. As a result, reductant within the exhaust gas flowing around the first perforated cylinder 400 is propelled towards the first swirl wall 322, the first concentration wall 308, and the splitting wall 320 which increases mixing of the reductant in the exhaust gas proximate the first perforated cylinder 400. This reduced rotational velocity of the exhaust gas also facilitates increased diffusion of the reductant in the exhaust gas proximate the first perforated cylinder 400. Furthermore, the first perforated cylinder perforations 404 create micro-eddies (e.g., turbulence, etc.) downstream of the first perforated cylinder perforations 404 and within the first perforated cylinder 400. These micro-eddies further increase mixing of the reductant and the exhaust gas.

Similarly, the second perforated cylinder 402 includes a plurality of second perforated cylinder perforations 406 (e.g., holes, openings, apertures, etc.). In operation, the exhaust gas flows from the second swirl cavity 318 through the second perforated cylinder perforations 406 into the second perforated cylinder 402, and through the second mixing assembly flow aperture 334. As the exhaust gas flows through the second perforated cylinder perforations 406, a flow of the exhaust gas is straightened (e.g., turbulence of the exhaust gas is reduced, etc.). As a result, the backpressure of the decomposition chamber 108 may be decreased. Additionally, the second perforated cylinder perforations 406 cause a deceleration of a rotational velocity of the exhaust gas flowing along the second perforated cylinder 402. As a result, reductant within the exhaust gas flowing around the second perforated cylinder 402 is propelled towards the second swirl wall 324, the second concentration wall 310, and the splitting wall 320 which increases mixing of the reductant in the exhaust gas proximate the second perforated cylinder 402. This reduced rotational velocity of the exhaust gas also facilitates increased diffusion of the reductant in the exhaust gas proximate the second perforated cylinder 402. Furthermore, the second perforated cylinder perforations 406 create micro-eddies (e.g., turbulence, etc.) downstream of the second perforated cylinder perforations 406 and within the second perforated cylinder 402. These micro-eddies further increase mixing of the reductant and the exhaust gas.

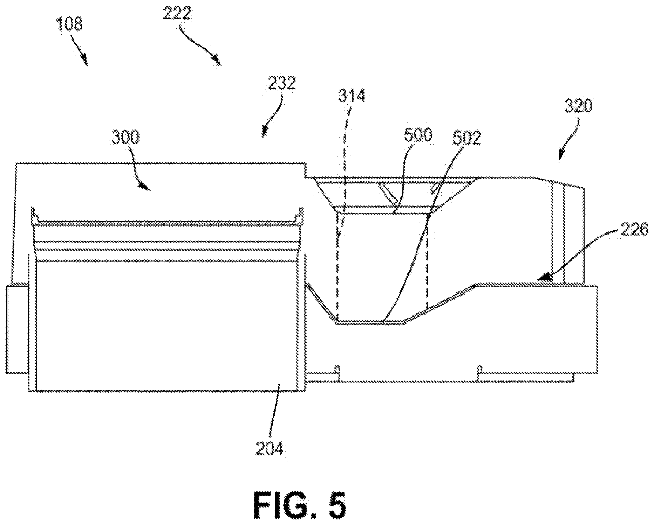

In some embodiments, as shown in Figure 5, the outer housing wall 232 includes an injector coupling recess 500 that is recessed (e.g., inset, etc.) in the outer housing wall 232 and the mixing collector wall 226 includes an injection region recess 502 that is recessed in the mixing collector wall 226. The injector coupling recess 500 is configured to receive the injector coupler 234 such that the injector coupler 234 may be coupled to the outer housing wall 232 without protruding substantially from the outer housing wall 232. In this way, the space claim of the decomposition chamber 108 may be decreased. The injection region recess 502 is configured to contain at least a portion of the injection region 314. Through the injection region recess 502, impingement is decreased because a distance between the injector coupler 234 and the mixing collector wall 226 is maintained despite the injector coupling recess 500. In some embodiments, the injector coupling recess 500 is defined by a first recess distance (e.g., relative to the outer housing wall 232, etc.) and the injection region recess 502 is defined by a second recess distance (e.g., relative to the mixing collector wall 226) that is substantially equal to (e.g., within 5% of, etc.) the first recess distance. In some embodiments, the first recess distance and the second recess distance are each equal to substantially 35 millimeters (mm) (e.g., within 5% of 35mm, etc.). In various applications, the first recess distance and/or the second recess distance are between 1mm and 90mm, inclusive. In other applications, the first recess distance and/or the second recess distance are between 20mm and 90mm, inclusive. In some embodiments, the first recess distance and the second recess distance are each equal and are each less than or equal to substantially 50.8 mm (e.g., within 5% of 50.8 mm, etc.).

### V. Example Decomposition Chamber Having a Second Example Mixing Assembly

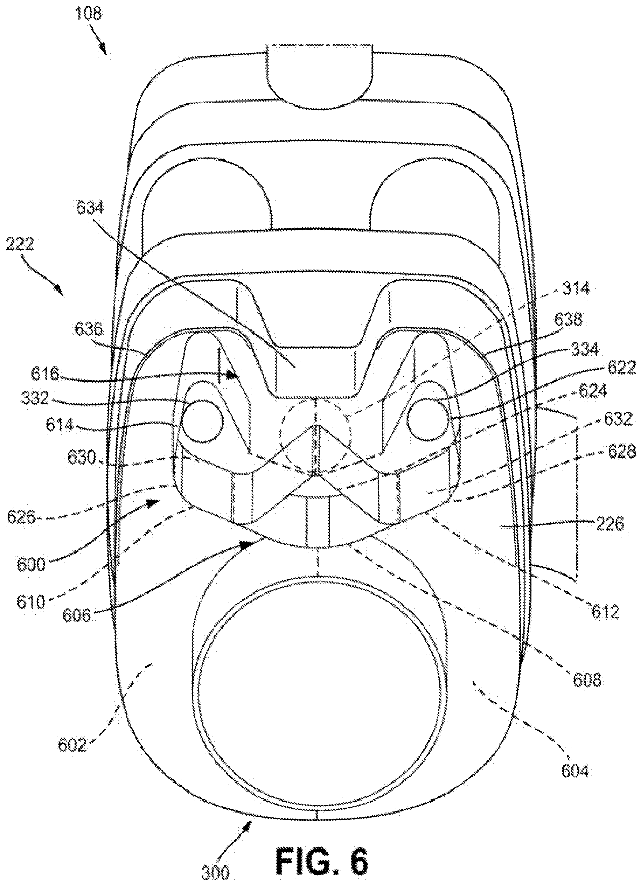

Figure 6 illustrates the decomposition chamber 108 and the mixing assembly 222 according to another example embodiment. The decomposition chamber 108 includes the distribution cap 300 as described herein. The decomposition chamber 108 also includes a flow guide 600. As is explained in more detail herein, the flow guide 600 divides the exhaust gas into a first concentration cavity 602 and a second concentration cavity 604. The flow guide 600 includes a first splitting wall 606. The first splitting wall 606 includes a first splitting face 608, a first concentrating face 610, and a second concentrating face 612. The flow guide 600 is coupled to the outer housing wall 232 (e.g., such that flow of the exhaust gas between the flow guide 600 and the outer housing wall 232 is substantially prohibited, etc.) and the mixing collector wall 226 (e.g., such that flow of the exhaust gas between the flow guide 600 and the mixing collector wall 226 is substantially prohibited, etc.).

After the exhaust gas flows out of the distribution cap aperture 302, the exhaust gas flows into either the first concentration cavity 602 defined between the first concentrating face 610, the distribution cap wall 304, the mixing collector wall 226, the mixing assembly wall 230, and the outer housing wall 232 or the second concentration cavity 604 defined between the second concentrating face 612, the distribution cap wall 304, the mixing collector wall 226, the mixing assembly wall 230, and the outer housing wall 232. The first splitting face 608 is curved (e.g., rounded, convex, etc.) towards the distribution cap 300 such that the exhaust gas is caused to split (e.g., be divided, etc.). As a result of this split, a portion of the exhaust gas flows towards the first concentrating face 610 and a portion of the exhaust gas flows towards the second concentrating face 612.

As the exhaust gas flows within the first concentration cavity 602, the exhaust gas flows along a first concentration wall 614 (e.g., between the first concentration wall 614 and the mixing assembly wall 230, etc.) of the flow guide 600 and towards a second splitting wall 616 of the flow guide 600. Similarly, as the exhaust gas flows within the second concentration cavity 604, the exhaust gas flows along a second concentration wall 622 (e.g., between the first concentration wall 614 and the mixing assembly wall 230, etc.) of the flow guide 600 and towards the second splitting wall 616. The second splitting wall 616 includes a second splitting face 624, a first swirl face 626, and a second swirl face 628.

The exhaust gas flows into either a first swirl cavity 630 defined between the first concentration wall 614, the first swirl face 626, the mixing collector wall 226, and the outer housing wall 232 or a second swirl cavity 632 defined between the second concentration wall 622, the second swirl face 628, the mixing collector wall 226, and the outer housing wall 232. The second splitting face 624 is curved (e.g., rounded, convex, etc.) towards the mixing assembly wall 230 such that the exhaust gas is caused to split (e.g., be divided, etc.). As a result of this split, a portion of the exhaust gas flows towards the first swirl face 626 and a portion of the exhaust gas flows towards the second swirl face 628.

As the exhaust gas flows within the first swirl cavity 630, the exhaust gas flows along the first swirl face 626 and the first concentration wall 614 and towards the first mixing assembly flow aperture 332. Similarly, as the exhaust gas flows within the second swirl cavity 632, the exhaust gas flows along the second swirl face 628 and the second concentration wall 622 and towards the second mixing assembly flow aperture 334.

The mixing assembly wall 230 includes an injector coupling recess 634 that is configured to receive the injector coupler 234. The injector coupler 234 is coupled to the injector coupling recess 634. The injector coupling recess 634 extends into a region between the first concentration cavity 602 and the second concentration cavity 604 and aligned with the second splitting face 624. As such, the injection region 314 disposed at a junction between the first concentration cavity 602, the second concentration cavity 604, the first swirl cavity 630, and the second swirl cavity 632. Due to the relatively high velocity of the exhaust gas within the first concentration cavity 602, the second concentration cavity 604, the first swirl cavity 630, and the second swirl cavity 632, impingement of the reductant on the second splitting wall 616, the first concentration wall 614, and the second concentration wall 622 is minimized.

The injector coupling recess 634 is configured to receive the injector coupler 234 such that the injector coupler 234 may be coupled to the mixing assembly wall 230 without protruding substantially from the mixing assembly wall 230. In this way, the space claim of the decomposition chamber 108 may be decreased.

The decomposition chamber 108 also includes a first corner wall 636 (e.g., flange, wall, etc.). The first corner wall 636 is coupled to the mixing collector wall 226 and the outer housing wall 232. The first corner wall 636 is disposed adjacent a first corner of the mixing assembly wall 230 proximate the first mixing assembly flow aperture 332. The first corner wall 636 extends away from the first corner and along the mixing assembly wall 230 towards the distribution cap 300. The first corner wall 636 may extend around a portion of the first concentration wall 614. The first corner wall 636 is separated from (e.g., spaced apart from, etc.) the mixing assembly wall 230 by a first gap distance. In some embodiments, the first gap distance is constant along the first corner wall 636. In various embodiments, the first gap distance is less than 10 mm. The first gap distance provides thermal insulation, thereby mitigating heat transfer from the first corner wall 636 and maintaining the first corner wall 636 at a relatively high temperature. This relatively high temperature may mitigate formation of reductant deposits and increase the desirability of the decomposition chamber 108.

The decomposition chamber 108 also includes a second corner wall 638 (e.g., flange, wall, etc.). The second corner wall 638 is coupled to the mixing collector wall 226 and the outer housing wall 232. The second corner wall 638 is disposed adjacent a second corner of the mixing assembly wall 230 proximate the second mixing assembly flow aperture 334. The second corner wall 638 extends away from the second corner and along the mixing assembly wall 230 towards the distribution cap 300. The second corner wall 638 may extend around a portion of the second concentration wall 622. The second corner wall 638 is separated from (e.g., spaced apart from, etc.) the mixing assembly wall 230 by a second gap distance. In some embodiments, the second gap distance is constant along the second corner wall 638. In various embodiments, the second gap distance is less than 10 mm. In some embodiments, the second gap distance is approximately equal to the first gap distance. In some embodiments, the second corner wall 638 is an identical reflection of the first corner wall 636. The second gap distance provides thermal insulation, thereby mitigating heat transfer from the second corner wall 638 and maintaining the second corner wall 638 at a relatively high temperature. This relatively high temperature may mitigate formation of reductant deposits and increase the desirability of the decomposition chamber 108.

In some embodiments, the first splitting wall 606 includes an aperture and the second splitting wall 616 includes an aperture. As a result, the exhaust gas may flow from the distribution cap aperture 302 through the aperture in the first splitting wall 606, through the aperture in the second splitting wall 616, and into the injection region 314 without flowing through the first concentration cavity 602 or the second concentration cavity 604. This exhaust gas disrupts the spray of reductant, increases convective heat transfer to the sprayed reductant, and increases decomposition of the reductant (which correspondingly decreases a likelihood of impingement of the reductant, and increases uniformity index).

In some embodiments, the first splitting wall 606 and the second splitting wall 616 are each perforated such that exhaust gas may flow from the distribution cap aperture 302 through the first splitting wall 606, through the second splitting wall 616, and into the injection region 314 without flowing through the first concentration cavity 602 or the second concentration cavity 604. This exhaust gas disrupts the spray of reductant, increases convective heat transfer to the sprayed reductant, and increases decomposition of the reductant (which correspondingly decreases a likelihood of impingement of the reductant, and increases uniformity index).

### VI. Example Decomposition Chamber Having a Third Example Mixing Assembly

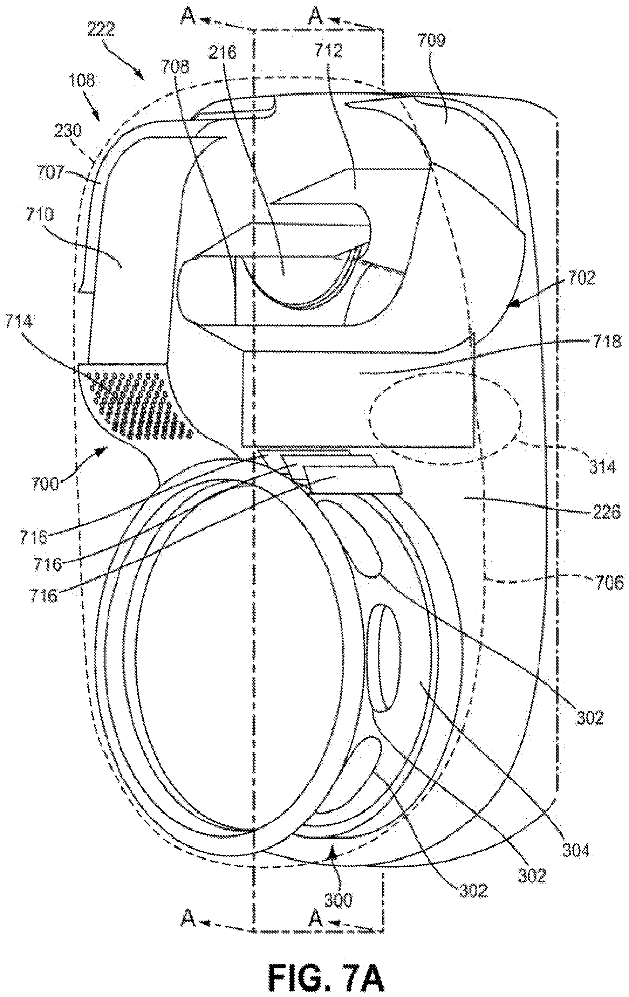

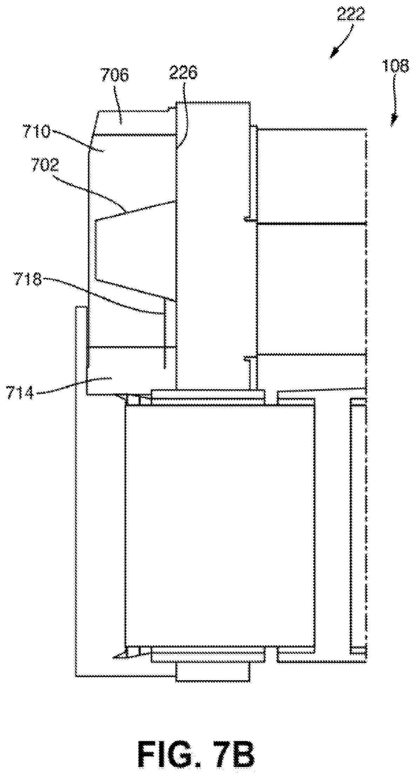

Figures 7A and 7B illustrate the decomposition chamber 108 and the mixing assembly 222 according to another example embodiment. The decomposition chamber 108 includes the distribution cap 300 as described herein. The decomposition chamber 108 also includes a first channel wall 700 coupled to the mixing collector wall 226 (e.g., such that flow of the exhaust gas between the first channel wall 700 and the mixing collector wall 226 is substantially prohibited, etc.), the outer housing wall 232 (e.g., such that flow of the exhaust gas between the first channel wall 700 and the outer housing wall 232 is substantially prohibited, etc.), the distribution cap wall 304 (e.g., such that flow of the exhaust gas between the first channel wall 700 and the distribution cap wall 304 is substantially prohibited, etc.), and the mixing assembly wall 230 (e.g., such that flow of the exhaust gas between the first channel wall 700 and the mixing assembly wall 230 is substantially prohibited, etc.).

The decomposition chamber 108 also includes a second channel wall 702 coupled to the mixing collector wall 226 (e.g., such that flow of the exhaust gas between the second channel wall 702 and the mixing collector wall 226 is substantially prohibited, etc.), the outer housing wall 232 (e.g., such that flow of the exhaust gas between the second channel wall 702 and the outer housing wall 232 is substantially prohibited, etc.), and the mixing assembly wall 230 (e.g., such that flow of the exhaust gas between the second channel wall 702 and the mixing assembly wall 230 is substantially prohibited, etc.).

The first channel wall 700 and the second channel wall 702 collectively form a channel cavity 706. The channel cavity 706 originates at the distribution cap 300 and terminates at a mixing assembly flow aperture 708 (e.g., hole, etc.) in the mixing collector wall 226. The mixing assembly flow aperture 708 functions as the mixing collector wall aperture 227. In various embodiments, the mixing assembly flow aperture 708 is substantially centered relative to the SCR catalyst member 216. For example, the mixing assembly flow aperture 708 may be located on the mixing collector wall 226 so as to have a center (e.g., center point, etc.) that is centered relative to centers of each SCR catalyst member 216. In this way, the mixing assembly flow aperture 708 may increase the FDI and the UI of the exhaust gas.

The decomposition chamber 108 also includes a first corner wall 707 and a second corner wall 709. The first corner wall 707 is located proximate a first corner of the mixing assembly wall 230 and the second corner wall 709 is located proximate a second corner of the mixing assembly wall 230. The first corner wall 707 is coupled to the mixing collector wall 226 (e.g., such that flow of the exhaust gas between the first corner wall 707 and the mixing collector wall 226 is substantially prohibited, etc.), the outer housing wall 232 (e.g., such that flow of the exhaust gas between the first corner wall 707 and the outer housing wall 232 is substantially prohibited, etc.), and the mixing assembly wall 230 (e.g., such that flow of the exhaust gas between the first corner wall 707 and the mixing assembly wall 230 is substantially prohibited, etc.). The first corner wall 707 is coupled to the mixing assembly wall 230 at a first end of the first corner wall 707 and at a second end of the first corner wall 707, but is separated from the mixing assembly wall 230 between the first end of the first corner wall 707 and the second end of the first corner wall 707. The second corner wall 709 is coupled to the mixing collector wall 226 (e.g., such that flow of the exhaust gas between the second corner wall 709 and the mixing collector wall 226 is substantially prohibited, etc.), the outer housing wall 232 (e.g., such that flow of the exhaust gas between the second corner wall 709 and the outer housing wall 232 is substantially prohibited, etc.), and the mixing assembly wall 230 (e.g., such that flow of the exhaust gas between the second corner wall 709 and the mixing assembly wall 230 is substantially prohibited, etc.). The second corner wall 709 is coupled to the mixing assembly wall 230 at a first end of the second corner wall 709 and at a second end of the second corner wall 709, but is separated from the mixing assembly wall 230 between the first end of the second corner wall 709 and the second end of the second corner wall 709.

The first corner wall 707 is separated from (e.g., spaced apart from, etc.) the mixing assembly wall 230 by a first gap distance. In some embodiments, the first gap distance is constant along the first corner wall 707. In various embodiments, the first gap distance is less than 10 mm. The first gap distance provides thermal insulation, thereby mitigating heat transfer from the first corner wall 707 and maintaining the first corner wall 707 at a relatively high temperature. This relatively high temperature may mitigate formation of reductant deposits and increase the desirability of the decomposition chamber 108.

The second corner wall 709 is separated from (e.g., spaced apart from, etc.) the mixing assembly wall 230 by a second gap distance. In some embodiments, the second gap distance is constant along the second corner wall 709. In various embodiments, the second gap distance is less than 10 mm. In some embodiments, the second gap distance is approximately equal to the first gap distance. In some embodiments, the second corner wall 709 is an identical reflection of the first corner wall 707. The second gap distance provides thermal insulation, thereby mitigating heat transfer from the second corner wall 709 and maintaining the second corner wall 709 at a relatively high temperature. This relatively high temperature may mitigate formation of reductant deposits and increase the desirability of the decomposition chamber 108.

After flowing out of the distribution cap 300 (e.g., via the distribution cap aperture 302), the exhaust gas is directed into the second channel wall 702 by the first channel wall 700 and a first flow guide 710 (e.g., vane, wall, partition, etc.). The first flow guide 710 is coupled to the mixing collector wall 226 (e.g., such that flow of the exhaust gas between the first flow guide 710 and the mixing collector wall 226 is substantially prohibited, etc.) and the outer housing wall 232 (e.g., such that flow of the exhaust gas between the first flow guide 710 and the outer housing wall 232 is substantially prohibited, etc.). The first flow guide 710 has a curvature that generally matches a curvature of an adjacent portion of the first corner wall 707. The exhaust gas flows between the first flow guide 710 and the first corner wall 707 and between the first flow guide 710 and the second channel wall 702 (e.g., the first flow guide 710 divides the exhaust gas as the exhaust gas flows towards the mixing assembly flow aperture 708, etc.).

After flowing past the first flow guide 710, the exhaust gas is directed into the mixing assembly flow aperture 708 by a second flow guide 712 (e.g., vane, wall, partition, divider, etc.). The second flow guide 712 is coupled to the mixing collector wall 226 (e.g., such that flow of the exhaust gas between the second flow guide 712 and the mixing collector wall 226 is substantially prohibited, etc.), the outer housing wall 232 (e.g., such that flow of the exhaust gas between the second flow guide 712 and the outer housing wall 232 is substantially prohibited, etc.), and the second corner wall 709 (e.g., such that flow of the exhaust gas between the second corner wall 709 and the second flow guide 712 is substantially prohibited, etc.). The exhaust gas flows between the second flow guide 712 and the second corner wall 709 and then between the second flow guide 712 and the second channel wall 702. Additionally, the exhaust gas flows between the second flow guide 712 and the second channel wall 702 (e.g., the second flow guide 712 divides the exhaust gas as the exhaust gas flows towards the mixing assembly flow aperture 708, etc.).

The second channel wall 702 partially borders the mixing assembly flow aperture 708 such that the exhaust gas can only flow into the mixing assembly flow aperture 708 after first flowing between the second flow guide 712 and the second channel wall 702. The first flow guide 710 and the second flow guide 712 cooperate to reduce turbulence (e.g., noise, etc.) of the exhaust gas, reduce backpressure of the decomposition chamber 108, and to increase the FDI and the UI of the exhaust gas.

The first channel wall 700 is heated by the exhaust gas flowing out of the distribution cap 300 (e.g., prior to the exhaust gas flowing between the second channel wall 702 and the distribution cap wall 304, etc.). This heating mitigates impingement of the reductant on the first channel wall 700.

In various embodiments, the first channel wall 700 includes a plurality of perforations 714 (e.g., holes, openings, apertures, etc.). The perforations 714 enable the exhaust gas to pass directly through the first channel wall 700 without flowing around the distribution cap wall 304. The exhaust gas that passes through the perforations 714 functions to flush wall film off of the first channel wall 700, thereby mitigating impingement of the reductant on the first channel wall 700 and enabling the backpressure of the decomposition chamber 108 to be decreased.

Similar to the decomposition chamber 108 described in Figure 5, the injector coupler 234 is coupled to the mixing assembly wall 230 in Figures 7A and 7B. Specifically, the injector coupler 234 is coupled to the mixing assembly wall 230 between the second channel wall 702 and the distribution cap wall 304 and such that the injection region 314 is located between the second channel wall 702 and the distribution cap wall 304.

The decomposition chamber 108 also includes at least one baffle 716 (e.g., flap, fin, vane, etc.). Each baffle 716 may be coupled to the distribution cap 300 (e.g., to the distribution cap wall 304, etc.), the mixing collector wall 226 (e.g., such that flow of the exhaust gas between the baffle 716 and the mixing collector wall 226 is substantially prohibited, etc.), and/or the outer housing wall 232 (e.g., such that flow of the exhaust gas between the baffle 716 and the outer housing wall 232 is substantially prohibited, etc.). The baffle 716 is located proximate (e.g., underneath, etc.) the injection region 314. For example, the baffle 716 may be located between the injection region 314 and the distribution cap wall 304. The baffle 716 functions to both direct exhaust gas towards the mixing assembly flow aperture 708 and mitigate impingement of the reductant on the distribution cap wall 304.

The first channel wall 700, the second channel wall 702, the first flow guide 710, and the second flow guide 712 may each be angled (e.g., tilted, etc.) relative to the mixing collector wall 226 (e.g., angled at an angle other than 90° relative to the mixing collector wall 226, etc.). This angling may increase flow area, thereby decreasing the backpressure of the decomposition chamber 108. For example, each of the first channel wall 700, the second channel wall 702, the first flow guide 710, and the second flow guide 712 are angled between 100° and 130°, inclusive, relative to the mixing collector wall 226, in some embodiments. As shown in Figures 7A and 7B, the second channel wall 702 and the second flow guide 712 are angled. In some embodiments, none of the first channel wall 700, the second channel wall 702, the first flow guide 710, and the second flow guide 712 are angled relative to the mixing collector wall 226 (e.g., each of the first channel wall 700, the second channel wall 702, the first flow guide 710, and the second flow guide 712 are angled 90° relative to the mixing collector wall 226).

The decomposition chamber 108 also includes a third flow guide 718 (e.g., vane, wall, partition, divider, etc.). The third flow guide 718 is coupled to the second channel wall 702 and extends towards the distribution cap wall 304 (e.g., proximate the baffle 716, etc.). The third flow guide 718 functions to break up turbulence between the mixing collector wall 226 and the outer housing wall 232 and guides the exhaust gas and reductant between the second channel wall 702 and the distribution cap wall 304 towards the first channel wall 700. Additionally, the third flow guide 718 may function to mitigate impingement of the reductant on the mixing collector wall 226. While reductant may contact the third flow guide 718, exhaust gas flows above and below the third flow guide 718. This exhaust gas heats the third flow guide 718, potentially causing the reductant contacting the third flow guide 718 to vaporize, and also biases the reductant off of the third flow guide 718. In various embodiments, the third flow guide 718 is disposed on a plane that is substantially parallel to a plane upon which the mixing collector wall 226 is disposed. The third flow guide 718 may at least partially bisect the injection region 314. In some embodiments, the decomposition chamber 108 does not include the third flow guide 718.

### VII. Example Decomposition Chamber Having a Fourth Example Mixing Assembly

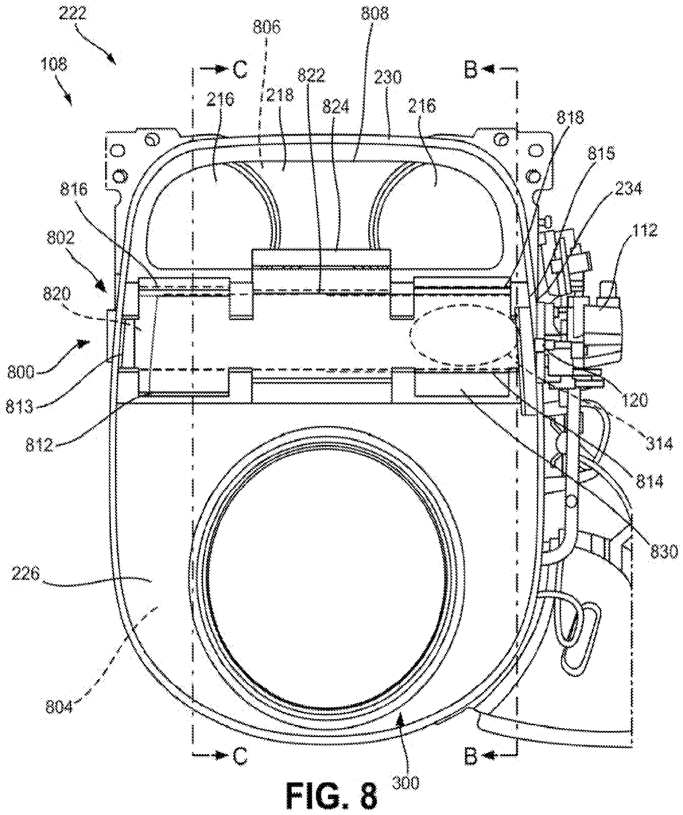

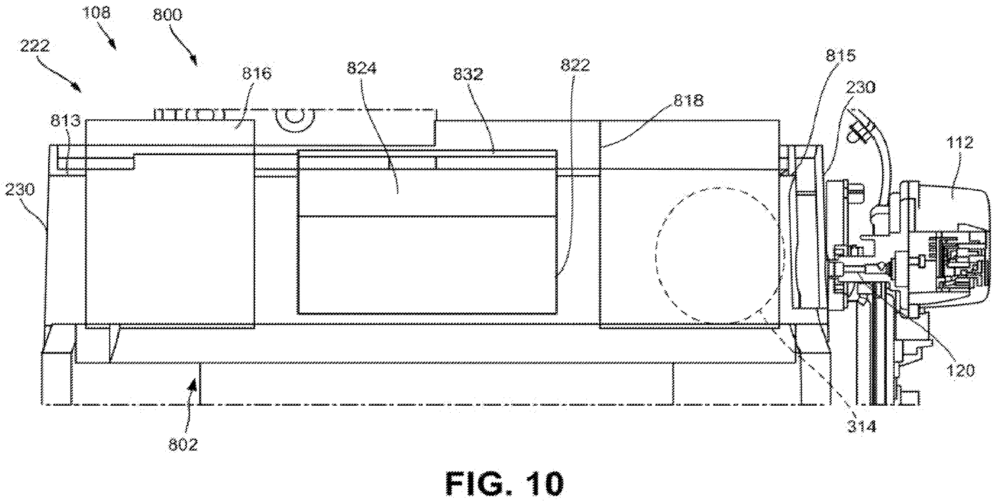

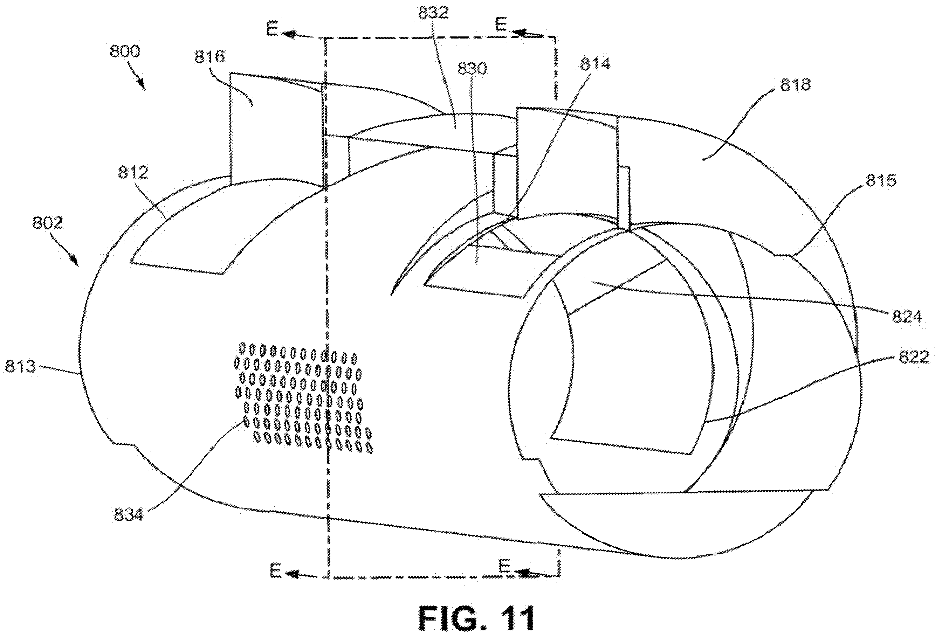

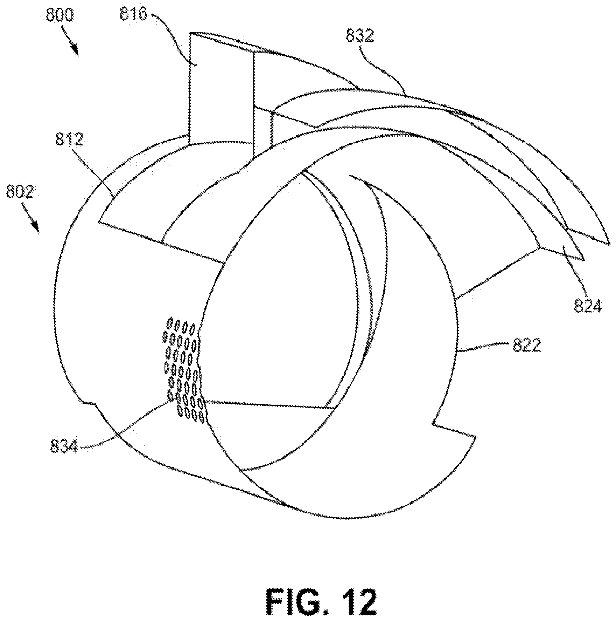

Figures 8-12 illustrate the decomposition chamber 108 and the mixing assembly 222 according to another example embodiment. The decomposition chamber 108 includes the distribution cap 300 as described herein. The decomposition chamber 108 also includes a dividing tube 800. The dividing tube 800 includes a dividing tube body 802 (e.g., frame, shell, etc.). The dividing tube body 802 is generally cylindrical (e.g., tubular, etc.). In various embodiments, the dividing tube body 802 is coupled to the mixing assembly wall 230 (e.g., such that flow of the exhaust gas between the dividing tube body 802 and the mixing assembly wall 230 is substantially prohibited, etc.), the mixing collector wall 226 (e.g., such that flow of the exhaust gas between the dividing tube body 802 and the mixing collector wall 226 is substantially prohibited, etc.), and the outer housing wall 232 (e.g., such that flow of the exhaust gas between the dividing tube body 802 and the outer housing wall 232 is substantially prohibited, etc.).

The dividing tube 800 separates a concentration cavity 804 from a transfer cavity 806. The concentration cavity 804 is defined between the mixing collector wall 226, the distribution cap wall 304, the outer housing wall 232, the mixing assembly wall 230, and the dividing tube body 802. The transfer cavity 806 is defined between the mixing collector wall 226, the outer housing wall 232, the mixing assembly wall 230, the dividing tube body 802, and a mixing assembly flow aperture 808 (e.g., hole, opening, etc.) in the mixing collector wall 226. The mixing assembly flow aperture 808 functions as the mixing collector wall aperture 227.

After flowing out of the distribution cap 300 (e.g., via the distribution cap aperture 302), the exhaust gas enters the concentration cavity 804 and enters the dividing tube 800 via a first dividing tube inlet aperture 812 (e.g., hole, opening, etc.) or a second dividing tube inlet aperture 814 (e.g., hole, opening, etc.). The first dividing tube inlet aperture 812 is located proximate a first end 813 of the dividing tube body 802 that interfaces with and/or is coupled to the mixing assembly wall 230 and the second dividing tube inlet aperture 814 is located proximate a second end 815 of the dividing tube body 802 that interfaces with and/or is coupled to the mixing assembly wall 230 opposite the first end 813. The first end 813 and/or the second end 815 may include tabs (e.g., projections, etc.) that are configured to be received within slots (e.g., holes, openings, apertures, etc.) within the mixing assembly wall 230 to facilitate coupling of the dividing tube 800 to the mixing assembly wall 230.

The dividing tube body 802 also includes a first duct 816 (e.g., cowl, hood, etc.) and a second duct 818 (e.g., cowl, hood, etc.). The first duct 816 is contiguous with, and extends over, the first dividing tube inlet aperture 812. The first duct 816 extends towards the concentration cavity 804 such that the first duct 816 functions to direct the exhaust gas into the first dividing tube inlet aperture 812. Similarly, the second duct 818 is contiguous with, and extends over, the second dividing tube inlet aperture 814. The second duct 818 extends also extends towards the concentration cavity 804 such that the second duct 818 functions to direct the exhaust gas into the second dividing tube inlet aperture 814.

After flowing through the first dividing tube inlet aperture 812 or the second dividing tube inlet aperture 814, the exhaust gas enters a dividing tube cavity 820. At least a portion of the first dividing tube inlet aperture 812, at least a portion of the first duct 816, at least a portion of the second dividing tube inlet aperture 814, and at least a portion of the second duct 818 are located proximate the outer housing wall 232. As a result, the exhaust gas enters the dividing tube cavity 820 radially (e.g., along a tangent of the dividing tube body 802, along a line that is parallel to and offset from a tangent of the dividing tube body 802, etc.) after flowing through the first dividing tube inlet aperture 812 or the second dividing tube inlet aperture 814. This radial entry causes the exhaust gas to swirl within the dividing tube cavity 820.

The mixing assembly wall 230 includes the injector coupler 234. The dividing tube 800 is positioned such that the second end 815 is disposed around (e.g., circumscribes, borders, etc.) the injector coupler 234. As a result, the injection region 314 is located within the dividing tube cavity 820. The swirl imparted by the first dividing tube inlet aperture 812, the first duct 816, the second dividing tube inlet aperture 814, and the second duct 818 facilitates mixing of the exhaust gas and the reductant within the dividing tube cavity 820 and ensures shear on the dividing tube body 802 is relatively high, thereby mitigating impingement of the reductant on the dividing tube body 802.

The exhaust gas exits the dividing tube cavity 820 via a dividing tube outlet aperture 822 and flows into the transfer cavity 806. From the transfer cavity 806, the exhaust gas flows through the mixing assembly flow aperture 808 and towards the SCR catalyst member 216. In various embodiments, the mixing assembly flow aperture 808 is substantially centered relative to the SCR catalyst member 216. For example, the mixing assembly flow aperture 808 may be located on the mixing collector wall 226 so as to have a center (e.g., center point, etc.) that is centered relative to centers of each SCR catalyst member 216. In this way, the mixing assembly flow aperture 808 may increase the FDI and the UI of the exhaust gas.

The dividing tube outlet aperture 822 is positioned between the first dividing tube inlet aperture 812 and the second dividing tube inlet aperture 814. Therefore, the dividing tube outlet aperture 822 does not overlap either the first dividing tube inlet aperture 812 or the second dividing tube inlet aperture 814. As a result, straight flow (e.g., flow without swirling, etc.) of the exhaust gas from the first dividing tube inlet aperture 812 to the dividing tube outlet aperture 822 or from the second dividing tube inlet aperture 814 to the dividing tube outlet aperture 822 is substantially prevented, thereby ensuring that substantially all of the exhaust gas that exits the dividing tube outlet aperture 822 is first swirled by the dividing tube body 802. As a result, the dividing tube 800 increases mixing of the reductant in the exhaust gas and the FDI and the UI of the exhaust gas.

The dividing tube body 802 also includes a third duct 824 (e.g., cowl, hood, etc.). The third duct 824 is contiguous with, and extends over, the dividing tube outlet aperture 822. The third duct 824 extends towards the transfer cavity 806 such that the third duct 824 functions to direct the exhaust gas towards the mixing assembly flow aperture 808. In some embodiments, the third duct 824 extends over the mixing assembly flow aperture 808. The exhaust gas exits the dividing tube cavity 820 radially after flowing through the dividing tube outlet aperture 822. This radial exit propels the exhaust gas into the mixing assembly flow aperture 808, thereby minimizing backpressure of the decomposition chamber 108.

In various embodiments, the mixing collector wall 226 also includes a dividing tube coupling aperture 826 (e.g., hole, opening, etc.). The dividing tube coupling aperture 826 is configured to receive a portion of the dividing tube body 802. The dividing tube body 802 is coupled to the mixing collector wall 226 around the dividing tube coupling aperture 826 (e.g., such that flow of the exhaust gas between the dividing tube body 802 and the mixing collector wall 226 is substantially prohibited, etc.). As a result, a plane along which the mixing collector wall 226 is disposed bisects the dividing tube cavity 820 such that a first portion of the dividing tube cavity 820 is located on one side of the mixing collector wall 226 and a second portion of the dividing tube cavity 820 is located on another side of the mixing collector wall 226. As a result of this arrangement, a diameter of the dividing tube 800 can be increased without increasing a distance between the mixing collector wall 226 and the outer housing wall 232, thereby enabling a space claim of the decomposition chamber 108 to be minimized. By increasing the diameter of the dividing tube 800, the UI can be enhanced.

In various embodiments, the outer housing wall 232 includes one or more rounded walls 828. Each of the rounded walls 828 may be configured to receive a portion of one of the first duct 816, the second duct 818, or the third duct 824. Each of the rounded walls 828 may terminate upstream and/or downstream of the first duct 816, the second duct 818, or the third duct 824, so as to function as an extension of the first duct 816, the second duct 818, or the third duct 824 and thereby functioning to propel, rather than impede, flow of the exhaust gas into and/or out of the dividing tube cavity 820. Similar to the dividing tube coupling aperture 826, the rounded walls 828 enable the diameter of the dividing tube 800 to be increased without substantially increasing a space claim of the decomposition chamber 108.

In various embodiments, the dividing tube body 802 includes a shield 830 (e.g., wall, projection, etc.). The shield 830 is contiguous with the second dividing tube inlet aperture 814 and extends into the dividing tube cavity 820 and towards the transfer cavity 806 (e.g., the shield 830 is bent inward relative to the dividing tube body 802, etc.). The shield 830 functions to mitigate non-radial flow of the exhaust gas into the dividing tube cavity 820 via the second dividing tube inlet aperture 814.

In various embodiments, the dividing tube body 802 also includes a fourth duct 832 (e.g., cowl, hood, etc.). Unlike the first duct 816, the second duct 818, and the third duct 824, the fourth duct 832 does not function to direct the exhaust gas into the dividing tube cavity 820 or out of the dividing tube cavity 820. Instead, the fourth duct 832 functions to direct the exhaust gas from upstream of the dividing tube 800, across the third duct 824, and downstream of the dividing tube 800. By flowing exhaust gas across the third duct 824, the temperature of the third duct 824 is increased. By increasing the temperature of the third duct 824, impingement of the reductant on the third duct 824 is minimized. In these embodiments, a rounded wall 828 may be configured to receive a portion of the fourth duct 832. This rounded wall 828 may terminate upstream and/or downstream of the fourth duct 832, thereby functioning to propel, rather than impede, flow of the exhaust gas into or out of the fourth duct 832.

In various embodiments, the dividing tube body 802 also includes a plurality of dividing tube body perforations 834 (e.g., apertures, holes, etc.). The dividing tube body perforations 834 are disposed on an upstream surface of the dividing tube body 802 (e.g., adjacent the concentration cavity 804, etc.). In some embodiments, at least some of the dividing tube body perforations 834 are located between the first dividing tube inlet aperture 812 and the second dividing tube inlet aperture 814 and/or aligned with the dividing tube outlet aperture 822. In operation, the dividing tube body perforations 834 facilitate passage of the exhaust gas through the dividing tube body 802 and into the dividing tube cavity 820 without passing through the first dividing tube inlet aperture 812 or the second dividing tube inlet aperture 814. As a result, the backpressure of the decomposition chamber 108 may be decreased. Furthermore, the exhaust gas flowing through the dividing tube body perforations 834 functions to heat the dividing tube body 802, thereby mitigating impingement of the reductant on the dividing tube body 802. By aligning at least some of the dividing tube body perforations 834 with the dividing tube outlet aperture 822, the exhaust gas flowing within the dividing tube cavity 820 may be propelled out of the dividing tube outlet aperture 822, thereby decreasing the backpressure of the decomposition chamber 108 and increasing the UI of the exhaust gas.

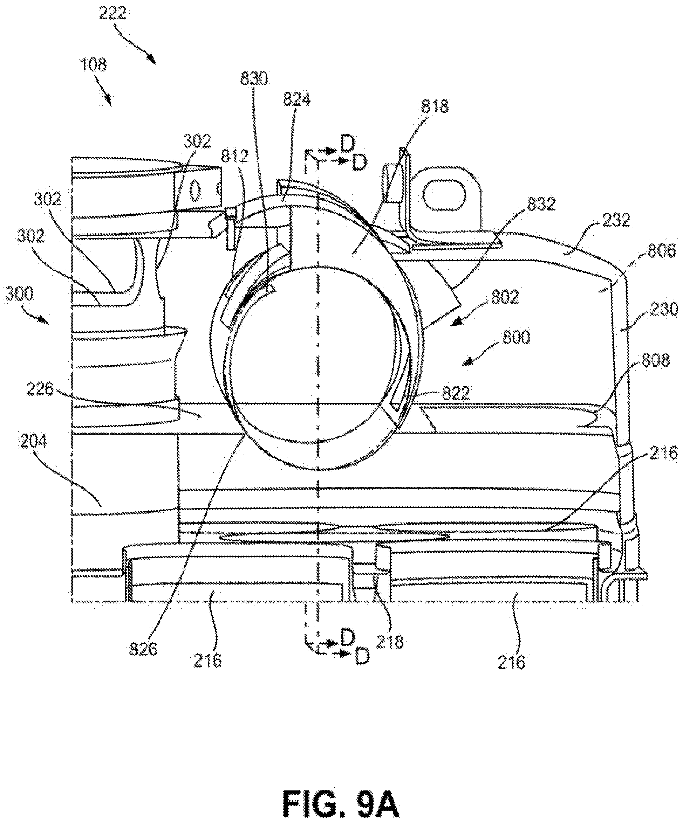

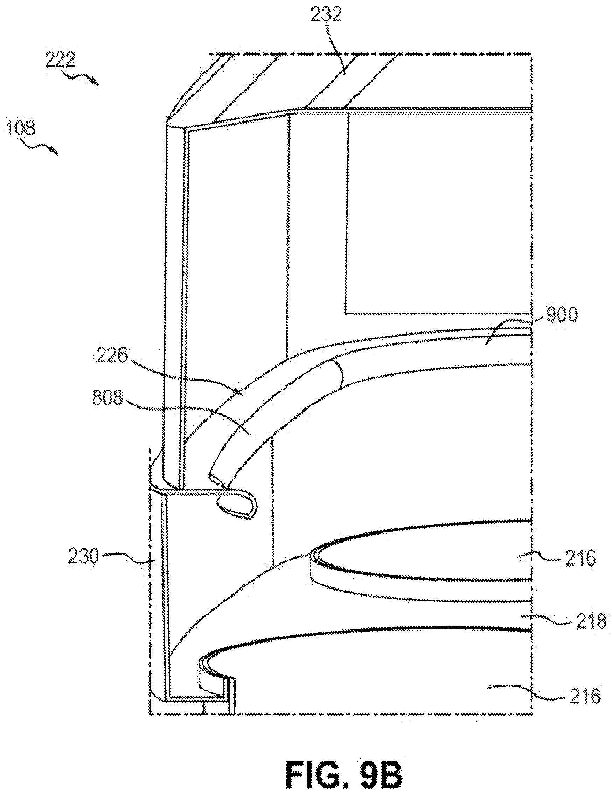

In some embodiments, such as is shown in Figure 9B, the mixing collector wall 226 also includes a bellmouth lip 900 (e.g., rounded lip, curved lip, etc.). The bellmouth lip 900 extends along the mixing assembly flow aperture 808 and curved away from the mixing collector wall 226 towards the transfer assembly housing wall 218 and towards the mixing assembly wall 230. The bellmouth lip 900 may increase rigidity of the mixing collector wall 226 and improve flow separation of the exhaust gas proximate the bellmouth lip 900 (e.g., along an edge of the mixing assembly flow aperture 808, etc.).

### VIII. Example Decomposition Chamber Having a Fifth Example Mixing Assembly

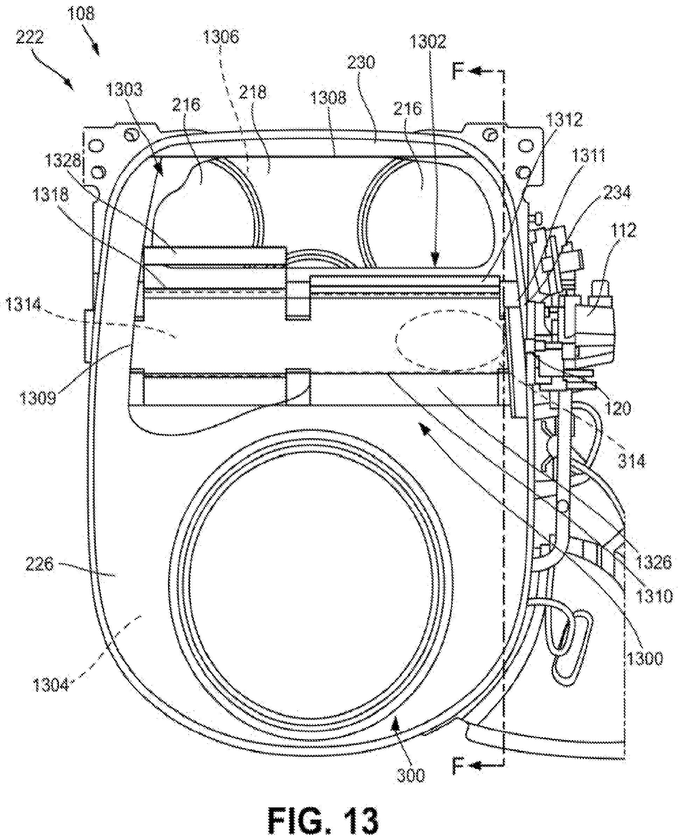

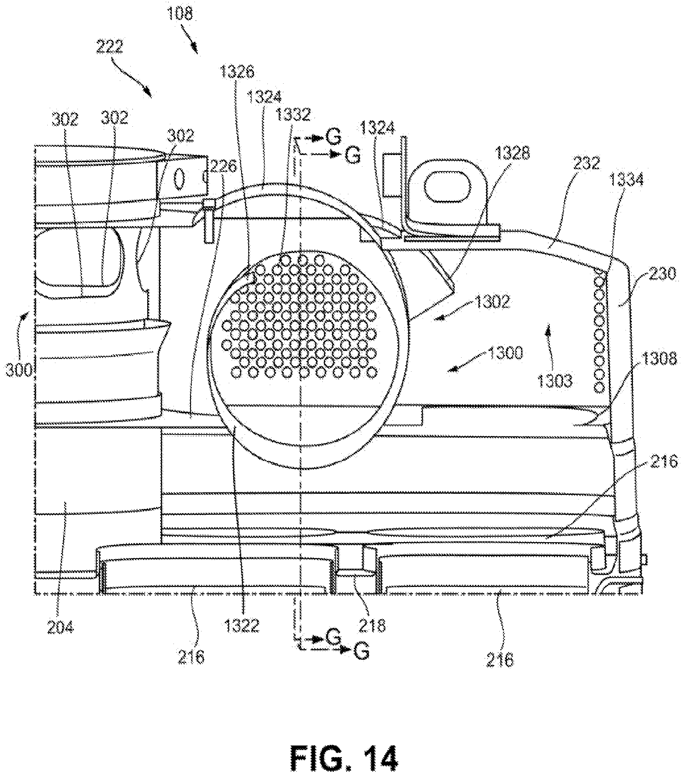

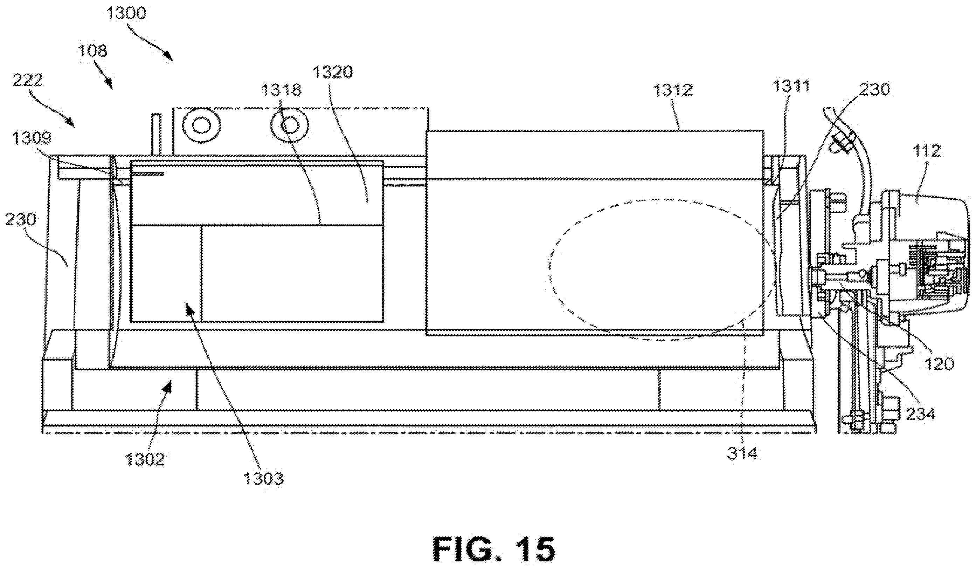

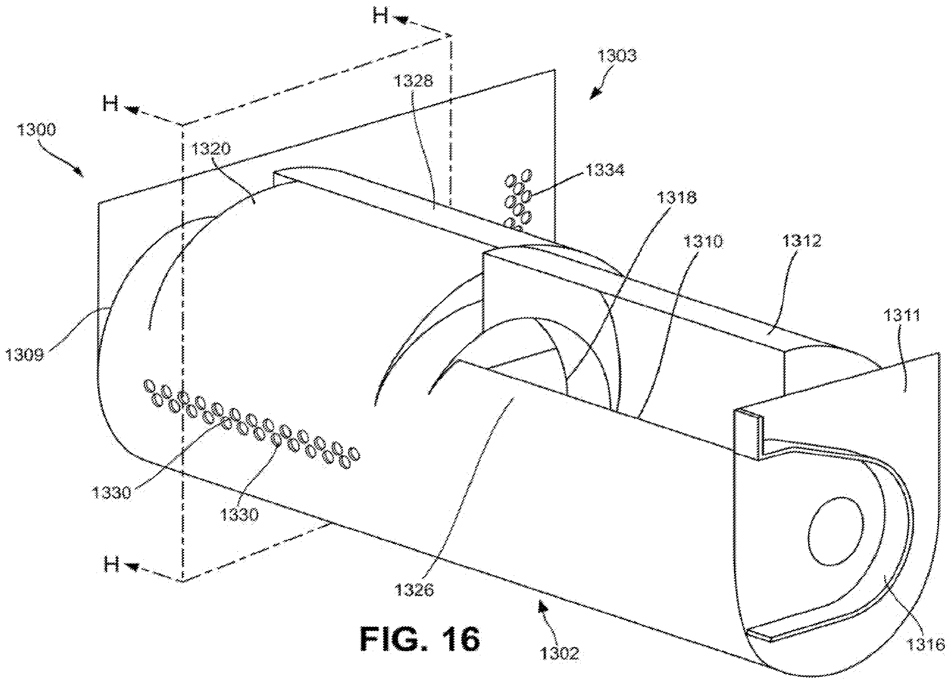

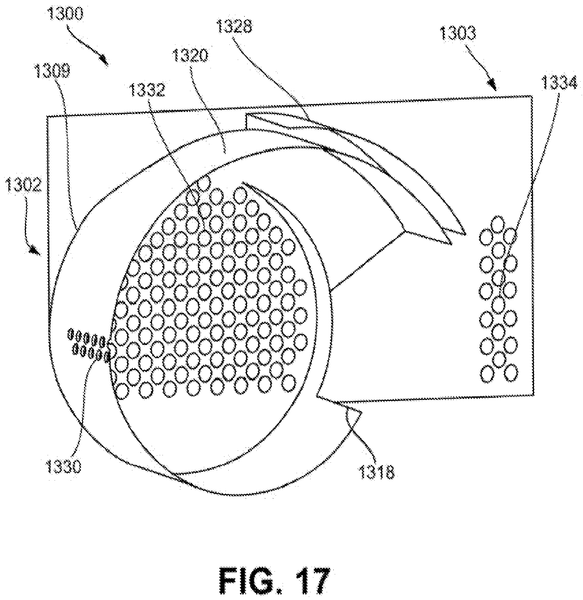

Figures 13-17 illustrate the decomposition chamber 108 and the mixing assembly 222 according to another example embodiment. The decomposition chamber 108 includes the distribution cap 300 as described herein. The decomposition chamber 108 also includes a dividing tube 1300. The dividing tube 1300 includes a dividing tube body 1302 (e.g., frame, shell, etc.) and a dividing tube flange 1303 (e.g., wall, divider, etc.). The dividing tube body 1302 is generally cylindrical. In various embodiments, the dividing tube body 1302 is coupled to the mixing assembly wall 230 (e.g., such that flow of the exhaust gas between the dividing tube body 1302 and the mixing assembly wall 230 is substantially prohibited, etc.), the mixing collector wall 226 (e.g., such that flow of the exhaust gas between the dividing tube body 1302 and the mixing collector wall 226 is substantially prohibited, etc.), and the outer housing wall 232 (e.g., such that flow of the exhaust gas between the dividing tube body 1302 and the outer housing wall 232 is substantially prohibited, etc.).

The dividing tube 1300 separates a concentration cavity 1304 from a transfer cavity 1306. The concentration cavity 1304 is defined between the mixing collector wall 226, the distribution cap wall 304, the outer housing wall 232, the mixing assembly wall 230, the dividing tube body 1302, and the dividing tube flange 1303. The transfer cavity 1306 is defined between the mixing collector wall 226, the outer housing wall 232, the mixing assembly wall 230, the dividing tube body 1302, the dividing tube flange 1303, and a mixing assembly flow aperture 1308 (e.g., hole, opening, etc.) in the mixing collector wall 226. The mixing assembly flow aperture 1308 functions as the mixing collector wall aperture 227.

After flowing out of the distribution cap 300 (e.g., via the distribution cap aperture 302), the exhaust gas enters the concentration cavity 1304 and enters the dividing tube 1300 via a dividing tube inlet aperture 1310 (e.g., hole, opening, etc.). The dividing tube body 1302 includes a first end 1309 and a second end 1311 opposite the first end 1309. The first end 1309 interfaces with and/or is coupled to the dividing tube flange 1303. The second end 1311 interfaces with and/or is coupled to the mixing assembly wall 230. The dividing tube inlet aperture 1310 is located proximate the second end 1311. The first end 1309 may include tabs that are configured to be received within slots within the dividing tube flange 1303 to facilitate coupling of the dividing tube 1300 to the dividing tube flange 1303. The second end 1311 may include tabs that are configured to be received within slots within the mixing assembly wall 230 to facilitate coupling of the dividing tube 1300 to the mixing assembly wall 230.

The dividing tube body 1302 also includes a first duct 1312 (e.g., cowl, hood, etc.). The first duct 1312 is contiguous with, and extends over, the dividing tube inlet aperture 1310. The first duct 1312 extends towards the concentration cavity 1304 such that the first duct 1312 functions to direct the exhaust gas into the dividing tube inlet aperture 1310.

After flowing through the dividing tube inlet aperture 1310, the exhaust gas enters a dividing tube cavity 1314. At least a portion of the dividing tube inlet aperture 1310 and at least a portion of the first duct 1312 are located proximate the outer housing wall 232. As a result, the exhaust gas enters the dividing tube cavity 1314 radially (e.g., along a tangent of the dividing tube body 1302, along a line that is parallel to and offset from a tangent of the dividing tube body 1302, etc.) after flowing through the dividing tube inlet aperture 1310. This radial entry causes the exhaust gas to swirl within the dividing tube cavity 1314. The swirl imparted by the dividing tube inlet aperture 1310 and the first duct 1312 facilitates mixing of the exhaust gas and the reductant within the dividing tube cavity 1314 and ensures shear on the dividing tube body 1302 is relatively high, thereby mitigating impingement of the reductant on the dividing tube body 1302.

The mixing assembly wall 230 includes the injector coupler 234. The dividing tube 1300 is positioned such that the injector coupler 234 is received in an injector mount receiver 1316 in the second end 1311. As a result, the injection region 314 is located within the dividing tube cavity 1314.

The exhaust gas exits the dividing tube cavity 1314 via a dividing tube outlet aperture 1318 and flows into the transfer cavity 1306. From the transfer cavity 1306, the exhaust gas flows through the mixing assembly flow aperture 1308 and towards the SCR catalyst member 216. In various embodiments, the mixing assembly flow aperture 1308 is substantially centered relative to the SCR catalyst member 216. For example, the mixing assembly flow aperture 1308 may be located on the mixing collector wall 226 so as to have a center (e.g., center point, etc.) that is centered relative to centers of each SCR catalyst member 216. In this way, the mixing assembly flow aperture 1308 may increase the FDI and the UI of the exhaust gas.

The dividing tube outlet aperture 1318 is positioned proximate the first end 1309. As a result, straight flow (e.g., flow without swirling, etc.) of the exhaust gas from the dividing tube inlet aperture 1310 to the dividing tube outlet aperture 1318 is substantially prevented, thereby ensuring that substantially all of the exhaust gas that exits the dividing tube outlet aperture 1318 is first swirled by the dividing tube body 1302. Furthermore, due to the dividing tube inlet aperture 1310 being positioned proximate the second end 1311 and the dividing tube outlet aperture 1318 being positioned proximate the first end 1309, a distance between the dividing tube inlet aperture 1310 and the dividing tube outlet aperture 1318 may be maximized, thereby increasing the amount of time that the exhaust gas is retained within the dividing tube cavity 1314 which correspondingly increases mixing of the reductant in the exhaust gas and the UI.

The dividing tube body 1302 also includes a second duct 1320 (e.g., cowl, hood, etc.). The second duct 1320 is contiguous with, and extends over, the dividing tube outlet aperture 1318. The second duct 1320 extends towards the transfer cavity 1306 such that the second duct 1320 functions to direct the exhaust gas towards the mixing assembly flow aperture 1308. In some embodiments, the second duct 1320 extends over the mixing assembly flow aperture 1308. The exhaust gas exits the dividing tube cavity 1314 radially after flowing through the dividing tube outlet aperture 1318. This radial exit propels the exhaust gas into the mixing assembly flow aperture 1308, thereby minimizing backpressure of the decomposition chamber 108.

In various embodiments, the mixing collector wall 226 also includes a dividing tube coupling aperture 1322 (e.g., hole, opening, etc.). The dividing tube coupling aperture 1322 is configured to receive a portion of the dividing tube body 1302. The dividing tube body 1302 is coupled to the mixing collector wall 226 around the dividing tube coupling aperture 1322 (e.g., such that flow of the exhaust gas between the dividing tube body 1302 and the mixing collector wall 226 is substantially prohibited, etc.). As a result, a plane along which the mixing collector wall 226 is disposed bisects the dividing tube cavity 1314 such that a first portion of the dividing tube cavity 1314 is located on one side of the mixing collector wall 226 and a second portion of the dividing tube cavity 1314 is located on another side of the mixing collector wall 226. As a result of this arrangement, a diameter of the dividing tube 1300 can be increased without increasing a distance between the mixing collector wall 226 and the outer housing wall 232, thereby enabling a space claim of the decomposition chamber 108 to be minimized. By increasing the diameter of the dividing tube 1300, the UI of the exhaust gas can be increased.

In various embodiments, the outer housing wall 232 includes one or more rounded walls 1324. Each of the rounded walls 1324 may be configured to receive a portion of one of the first duct 1312 or the second duct 1320. Each of the rounded walls 1324 may terminate upstream and/or downstream of the first duct 1312 or the second duct 1320, so as to function as an extension of the first duct 1312 or the second duct 1320 and thereby functioning to propel, rather than impede, flow of the exhaust gas into and/or out of the dividing tube cavity 1314. Similar to the dividing tube coupling aperture 1322, the rounded walls 1324 enable the diameter of the dividing tube 1300 to be increased without substantially increasing a space claim of the decomposition chamber 108.

In various embodiments, the dividing tube body 1302 includes a shield 1326 (e.g., wall, projection, etc.). The shield 1326 is contiguous with the dividing tube inlet aperture 1310 and extends into the dividing tube cavity 1314 and towards the transfer cavity 1306 (e.g., the shield 1326 is bent inward relative to the dividing tube body 1302, etc.). The shield 1326 functions to mitigate non-radial flow of the exhaust gas into the dividing tube cavity 1314 via the dividing tube inlet aperture 1310.

In various embodiments, the dividing tube body 1302 also includes a third duct 1328 (e.g., cowl, hood, etc.). Unlike the first duct 1312 and the second duct 1320, the third duct 1328 does not function to direct the exhaust gas into the dividing tube cavity 1314 or out of the dividing tube cavity 1314. Instead, the third duct 1328 functions to direct the exhaust gas from upstream of the dividing tube 1300, across the second duct 1320, and downstream of the dividing tube 1300. By flowing exhaust gas across the second duct 1320, the temperature of the second duct 1320 is increased. By increasing the temperature of the second duct 1320, impingement of the reductant on the second duct 1320 is minimized. In these embodiments, a rounded wall 1324 may be configured to receive a portion of the third duct 1328. This rounded wall 1324 may terminate upstream and/or downstream of the third duct 1328, thereby functioning to propel, rather than impede, flow of the exhaust gas into or out of the third duct 1328.

In various embodiments, the dividing tube body 1302 also includes a plurality of dividing tube body perforations 1330 (e.g., apertures, holes, etc.). The dividing tube body perforations 1330 are disposed on an upstream surface of the dividing tube body 1302 (e.g., adjacent the concentration cavity 1304, etc.). In some embodiments, at least some of the dividing tube body perforations 1330 are aligned with the dividing tube outlet aperture 1318. In operation, the dividing tube body perforations 1330 facilitate passage of the exhaust gas through the dividing tube body 1302 and into the dividing tube cavity 1314 without passing through the dividing tube inlet aperture 1310. As a result, the backpressure of the decomposition chamber 108 may be decreased. Furthermore, the exhaust gas flowing through the dividing tube body perforations 1330 functions to heat the dividing tube body 1302, thereby mitigating impingement of the reductant on the dividing tube body 1302. By aligning at least some of the dividing tube body perforations 1330 with the dividing tube outlet aperture 1318, the exhaust gas flowing within the dividing tube cavity 1314 may be propelled out of the dividing tube outlet aperture 1318, thereby decreasing the backpressure of the decomposition chamber 108 and increasing the UI of the exhaust gas.

In various embodiments, the dividing tube flange 1303 includes a plurality of dividing tube flange tube perforations 1332 (e.g., apertures, holes, etc.). The dividing tube flange tube perforations 1332 are disposed on a portion of the dividing tube flange 1303 that is opposite the dividing tube cavity 1314 (e.g., are located opposite the first end 1309, etc.). In operation, the dividing tube flange tube perforations 1332 facilitate passage of the exhaust gas (e.g., exhaust gas that has flowed between the mixing assembly wall 230 and the dividing tube flange 1303, etc.) through the dividing tube flange 1303 and into the dividing tube cavity 1314 without passing through the dividing tube inlet aperture 1310 or the dividing tube body perforations 1330. As a result, the backpressure of the decomposition chamber 108 may be decreased. Furthermore, the exhaust gas flowing through the dividing tube flange tube perforations 1332 functions to heat the first end 1309, thereby mitigating impingement of the reductant on the first end 1309. The exhaust gas flowing through the dividing tube flange tube perforations 1332 may also be useful in redirecting the exhaust gas flowing within the dividing tube cavity 1314 towards the dividing tube outlet aperture 1318, thereby decreasing the backpressure of the decomposition chamber 108 and increasing the UI of the exhaust gas.

In various embodiments, the dividing tube flange 1303 includes a plurality of dividing tube flange transfer perforations 1334 (e.g., apertures, holes, etc.). The dividing tube flange transfer perforations 1334 are disposed on a portion of the dividing tube flange 1303 that is not opposite the dividing tube cavity 1314 (e.g., are located downstream of the dividing tube body 1302, etc.). Instead, the dividing tube flange transfer perforations 1334 are disposed on a portion of the dividing tube flange 1303 that is opposite the transfer cavity 1306 (e.g., that is opposite the mixing assembly flow aperture 1308, etc.). In operation, the dividing tube flange transfer perforations 1334 facilitate passage of the exhaust gas (e.g., exhaust gas that has flowed between the mixing assembly wall 230 and the dividing tube flange 1303, etc.) through the dividing tube flange 1303 and into the transfer cavity 1306 without passing through the dividing tube body 1302. As a result, the backpressure of the decomposition chamber 108 may be decreased. Furthermore, the exhaust gas flowing through the dividing tube flange transfer perforations 1334 functions to heat the dividing tube flange 1303, thereby mitigating impingement of the reductant on the dividing tube flange 1303 (e.g., the portion of the dividing tube flange 1303 that is downstream of the dividing tube outlet aperture 1318, etc.). The exhaust gas flowing through the dividing tube flange transfer perforations 1334 may also be useful in redirecting the exhaust gas flowing within the transfer cavity 1306 towards the mixing assembly flow aperture 1308, thereby decreasing the backpressure of the decomposition chamber 108 and increasing the UI of the exhaust gas.

### IX. Example Decomposition Chamber Having a Sixth Example Mixing Assembly

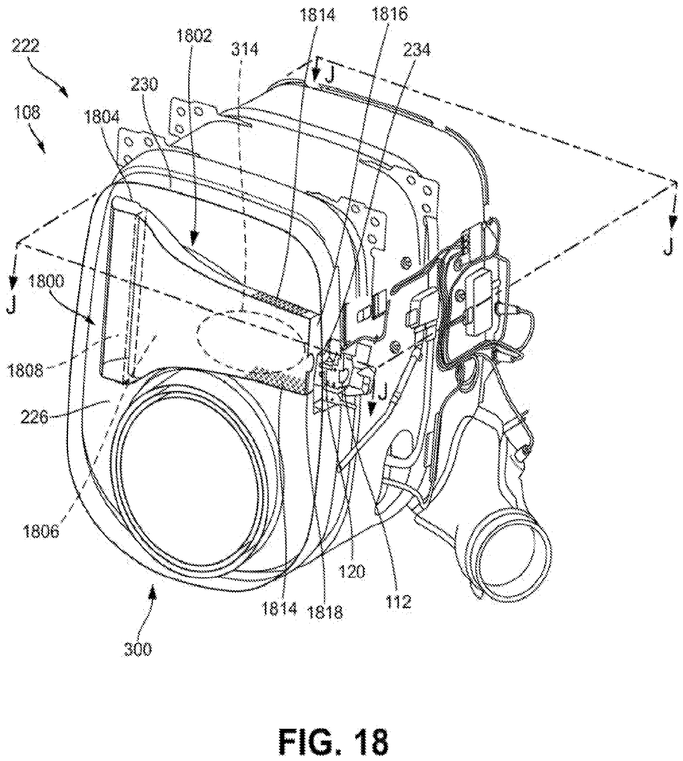

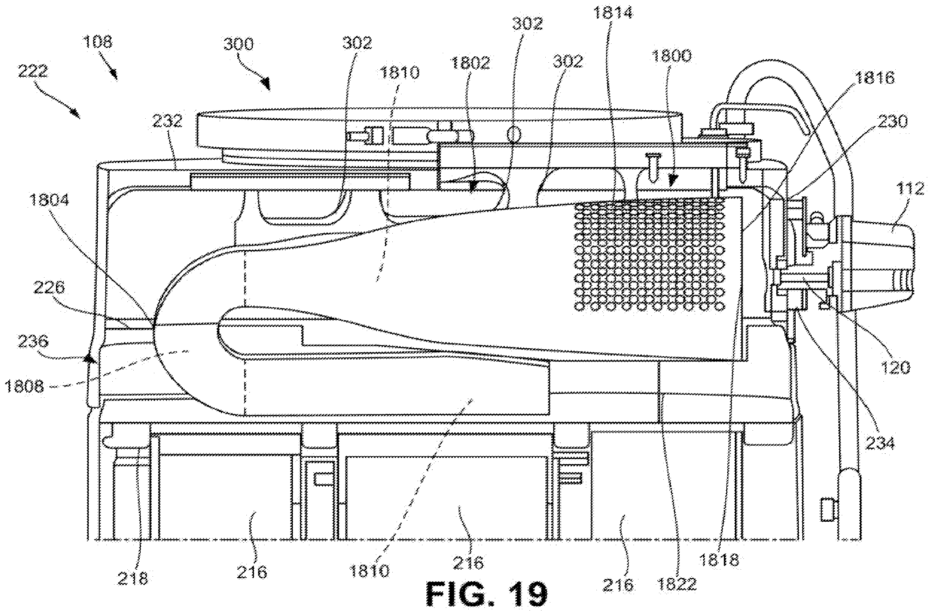

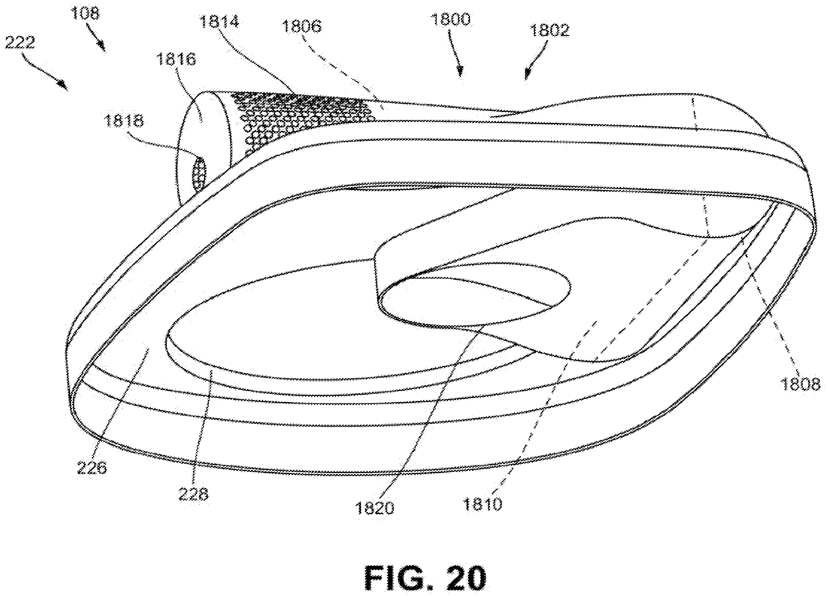

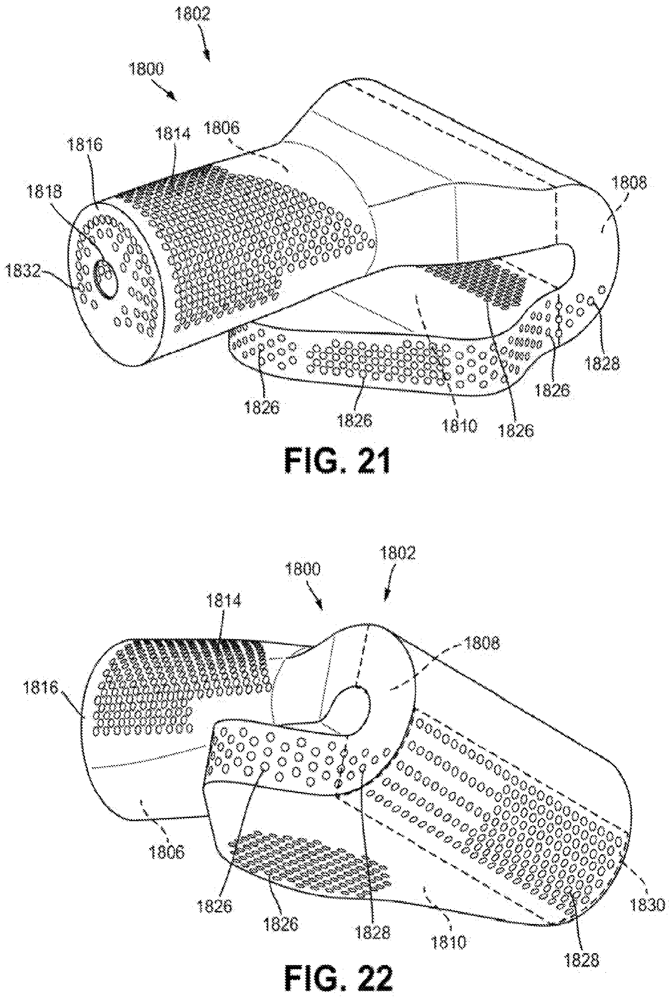

Figures 18-22 illustrate the decomposition chamber 108 and the mixing assembly 222 according to another example embodiment. The decomposition chamber 108 includes the distribution cap 300 as described herein. The decomposition chamber 108 also includes a transfer tube 1800. The transfer tube 1800 includes a transfer tube body 1802 (e.g., frame, shell, etc.). The transfer tube body 1802 is generally tubular and is configured to facilitate passage of the exhaust gas from between the outer housing wall 232 and the mixing collector wall 226 to between the mixing collector wall 226 and the transfer assembly housing wall 218.

The mixing collector wall 226 includes an transfer tube coupling aperture 1804. The transfer tube body 1802 is coupled to the mixing collector wall 226 around the transfer tube coupling aperture 1804 (e.g., such that flow of the exhaust gas between the transfer tube body 1802 and the mixing collector wall 226 is substantially prohibited, etc.). The transfer tube body 1802 is also coupled to the mixing assembly wall 230 (e.g., such that flow of the exhaust gas between the transfer tube body 1802 and the mixing assembly wall 230 is substantially prohibited, etc.).

The transfer tube 1800 includes a transfer tube inlet portion 1806, a transfer tube transfer portion 1808, and a transfer tube outlet portion 1810. The transfer tube inlet portion 1806 is coupled to the mixing assembly wall 230 and positioned entirely between the mixing collector wall 226, the mixing assembly wall 230, and the outer housing wall 232. The transfer tube transfer portion 1808 extends through the transfer tube coupling aperture 1804 and is coupled to the mixing collector wall 226. The transfer tube outlet portion 1810 is positioned entirely between the mixing collector wall 226, the housing body 236, and the transfer assembly housing wall 218. As is explained in more detail herein, the transfer tube inlet portion 1806, the transfer tube transfer portion 1808, and the transfer tube outlet portion 1810 are configured to cooperate to provide the exhaust gas from between the mixing collector wall 226, the mixing assembly wall 230, and the outer housing wall 232 to between the mixing collector wall 226, the housing body 236, and the transfer assembly housing wall 218.

After flowing out of the distribution cap 300 (e.g., via the distribution cap aperture 302), the exhaust gas flows between the mixing collector wall 226, the outer housing wall 232, and the mixing assembly wall 230. The exhaust gas flows into the transfer tube inlet portion 1806 via a plurality of transfer tube inlet portion perforations 1814 (e.g., holes, apertures, openings, etc.). In various embodiments, at least some of the transfer tube inlet portion perforations 1814 are disposed proximate an end 1816 of the transfer tube 1800.

The transfer tube inlet portion perforations 1814 are positioned so as to collectively cause the exhaust gas to swirl within the transfer tube inlet portion 1806. For example, some of the transfer tube inlet portion perforations 1814 may be disposed along a portion of the transfer tube inlet portion 1806 that is proximate the outer housing wall 232 and the end 1816. The swirl imparted by the transfer tube inlet portion perforations 1814 facilitates mixing of the exhaust gas and the reductant within the transfer tube 1800 and ensures shear on the transfer tube body 1802 is relatively high, thereby mitigating impingement of the reductant on the transfer tube body 1802.

The mixing assembly wall 230 includes the injector coupler 234. The transfer tube 1800 is positioned such that the injector coupler 234 is positioned adjacent the end 1816. The end 1816 includes an injector aperture 1818 (e.g., hole, opening, etc.). The injector aperture 1818 is configured to receive the injector 120, the dosing module 112, and/or the reductant provided by the injector 120 and/or the dosing module 112. As a result, the injection region 314 is located within the transfer tube inlet portion 1806.

The exhaust gas within the transfer tube inlet portion 1806 is configured to mix with the reductant (e.g., due to the swirl provided by the positioning of the transfer tube inlet portion perforations 1814, etc.) provided through the injector aperture 1818. The exhaust gas then flows through the transfer tube inlet portion 1806 across the mixing collector wall 226 and to the transfer tube transfer portion 1808. By facilitating flow of the exhaust gas across the mixing collector wall 226, the transfer tube inlet portion 1806 lengthens an amount of time that the exhaust gas and the reductant are mixed, thereby increasing the FDI and the UI of the exhaust gas.

The transfer tube transfer portion 1808 receives the exhaust gas from the transfer tube inlet portion 1806 and routes the exhaust gas through the mixing collector wall 226 and to the transfer tube outlet portion 1810. The transfer tube transfer portion 1808 may be generally U-shaped so as to lengthen the amount of time that the exhaust gas and the reductant are mixed, facilitate flow attachment of the exhaust gas as the exhaust gas traverses the transfer tube transfer portion 1808, and mitigate impingement of the reductant on the transfer tube transfer portion 1808.

The transfer tube outlet portion 1810 receives the exhaust gas from the transfer tube transfer portion 1808 and routes the exhaust gas across the mixing collector wall 226 (e.g., opposite the transfer tube inlet portion 1806, etc.). By facilitating flow of the exhaust gas across the mixing collector wall 226, the transfer tube outlet portion 1810 lengthens the amount of time that the exhaust gas and the reductant are mixed.

In various embodiments, the transfer tube outlet portion 1810 includes a transfer tube outlet portion aperture 1820. The transfer tube outlet portion 1810 provides the exhaust gas through the transfer tube outlet portion aperture 1820 and between the mixing collector wall 226, the housing body 236, and the transfer assembly housing wall 218 so as to be received by each SCR catalyst member 216. In this way, the transfer tube outlet portion aperture 1820 functions as the mixing collector wall aperture 227.

In some embodiments, the transfer tube outlet portion aperture 1820 is substantially centered relative to the SCR catalyst member 216. For example, the transfer tube outlet portion aperture 1820 may be located on the transfer tube outlet portion 1810 so as to have a center (e.g., center point, etc.) that is centered relative to centers of each SCR catalyst member 216. In this way, the transfer tube outlet portion aperture 1820 may increase the FDI and the UI of the exhaust gas.

In various embodiments, a cross-sectional area of the transfer tube 1800 (e.g., relative to a general direction of flow of the exhaust gas through the transfer tube 1800, etc.) is constant, or increases, from the end 1816 to a second end 1822 of the transfer tube 1800. In various applications, the end 1816 has a first cross-sectional area, an inlet of the transfer tube transfer portion 1808 has a second cross-sectional area that is greater than or equal to the first cross-sectional area, an outlet of the transfer tube transfer portion 1808 has a third cross-sectional area that is greater than or equal to the second cross-sectional area, and the second end 1822 has a fourth cross-sectional area. In some of these applications, the fourth cross-sectional area is greater than or equal to the third cross-sectional area. In others of these applications, the fourth cross-sectional area is not greater than or equal to the third cross-sectional area. By maintaining or increasing the cross-sectional area along all or most of the length of the transfer tube 1800 from the end 1816 to the second end 1822, the backpressure of the decomposition chamber 108 may be minimized.

In some embodiments, the mixing collector wall 226 includes a transfer tube recess 1824 that is configured to receive the transfer tube inlet portion 1806 and/or the transfer tube transfer portion 1808. As a result of this arrangement, a diameter of the transfer tube 1800 can be increased without increasing a distance between the mixing collector wall 226 and the outer housing wall 232, thereby enabling a space claim of the decomposition chamber 108 to be minimized. By increasing the diameter of the transfer tube 1800, the UI of the exhaust gas can be increased.

In various embodiments, the transfer tube outlet portion 1810 includes a plurality of transfer tube outlet portion perforations 1826 (e.g., apertures, holes, openings, etc.) instead of, or in addition to, the transfer tube outlet portion aperture 1820. Similar to the transfer tube outlet portion aperture 1820, the exhaust gas exits the transfer tube outlet portion 1810 via the transfer tube outlet portion perforations 1826. The transfer tube outlet portion perforations 1826 may be located on various surfaces of the transfer tube outlet portion 1810. For example, the transfer tube outlet portion perforations 1826 may be located on a surface of the transfer tube outlet portion 1810 that is proximate the mixing collector wall 226, a surface of the transfer tube outlet portion 1810 that is proximate the transfer assembly housing wall 218, and/or on a surface of the transfer tube outlet portion 1810 that is proximate the housing body 236. In some embodiments, the transfer tube outlet portion perforations 1826 are substantially centered relative to the SCR catalyst member 216. For example, the transfer tube outlet portion perforations 1826 may be located on the transfer tube outlet portion 1810 so as to have a center (e.g., average location of the center points of each transfer tube outlet portion perforation 1826, etc.) that is centered relative to centers of each SCR catalyst member 216. In this way, the transfer tube outlet portion perforations 1826 may increase the FDI and the UI of the exhaust gas.

In various embodiments, the transfer tube transfer portion 1808 includes a plurality of transfer tube transfer portion perforations 1828 (e.g., apertures, holes, openings, etc.) located on a surface of the transfer tube transfer portion 1808 that is between the mixing collector wall 226, the housing body 236, and the transfer assembly housing wall 218. Similar to the transfer tube outlet portion perforations 1826, the exhaust gas is capable of exiting the transfer tube transfer portion perforations 1828 (e.g., prior to the exhaust gas flowing into the transfer tube outlet portion 1810, etc.). The transfer tube transfer portion perforations 1828 may decrease the backpressure of the decomposition chamber 108. The transfer tube transfer portion perforations 1828 may be located on various surfaces of the transfer tube transfer portion 1808. For example, the transfer tube transfer portion perforations 1828 may be located on a surface of the transfer tube transfer portion 1808 that is proximate the mixing collector wall 226, a surface of the transfer tube transfer portion 1808 that is proximate the transfer assembly housing wall 218, and/or on a surface of the transfer tube transfer portion 1808 that is proximate the housing body 236. In some embodiments, at least some of the transfer tube transfer portion perforations 1828 are located on a transfer tube downstream surface 1830 located between the mixing collector wall 226, the transfer assembly housing wall 218, and the housing body 236. By locating the transfer tube transfer portion perforations 1828 on the transfer tube downstream surface 1830, the exhaust gas is propelled into the transfer tube transfer portion perforations 1828 by the U-shape of the transfer tube transfer portion 1808, thereby decreasing the backpressure of the decomposition chamber 108 and mitigating impingement of reductant on the transfer tube downstream surface 1830.

In various embodiments, the end 1816 includes a plurality of end perforations 1832 (e.g., apertures, holes, openings, etc.). Similar to the transfer tube inlet portion perforations 1814, the end perforations 1832 receive the exhaust gas and provide the exhaust gas into the transfer tube inlet portion 1806. However, unlike the transfer tube inlet portion perforations, the end perforations 1832 are arranged to propel the exhaust gas towards the transfer tube transfer portion 1808. In addition to causing the exhaust gas received from the transfer tube inlet portion perforations 1814 to be propelled towards the transfer tube transfer portion 1808, the end perforations 1832 also propel the reductant towards the transfer tube transfer portion 1808, thereby enhancing mixing of the reductant and the exhaust gas within the transfer tube inlet portion 1806 and minimizing impingement of the reductant on the transfer tube inlet portion 1806.

### X. Example Decomposition Chamber Having a Seventh Example Mixing Assembly

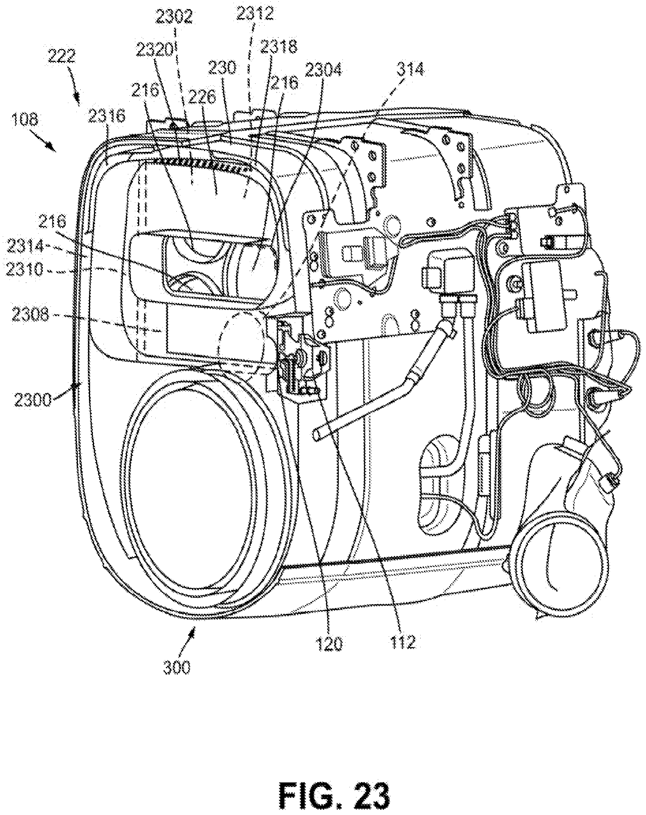

Figure 23 illustrates the decomposition chamber 108 and the mixing assembly 222 according to another example embodiment. The decomposition chamber 108 includes the distribution cap 300 as described herein. The decomposition chamber 108 also includes a channel wall 2300 coupled to the mixing collector wall 226 (e.g., such that flow of the exhaust gas between the channel wall 2300 and the mixing collector wall 226 is substantially prohibited, etc.), and the outer housing wall 232 (e.g., such that flow of the exhaust gas between the channel wall 2300 and the outer housing wall 232 is substantially prohibited, etc.). In some embodiments, the channel wall 2300 is additionally coupled to the distribution cap wall 304 (e.g., such that flow of the exhaust gas between the channel wall 2300 and the distribution cap wall 304 is substantially prohibited, etc.).

The channel wall 2300 forms a channel cavity 2302. The channel cavity 2302 originates at the distribution cap 300 and terminates at a mixing assembly flow aperture 2304 (e.g., hole, etc.) in the mixing collector wall 226. The mixing assembly flow aperture 2304 functions as the mixing collector wall aperture 227.

In various embodiments, the mixing assembly flow aperture 2304 is substantially centered relative to the SCR catalyst member 216. For example, the mixing assembly flow aperture 2304 may be located on the mixing collector wall 226 so as to have a center (e.g., center point, etc.) that is centered relative to centers of each SCR catalyst member 216. In this way, the mixing assembly flow aperture 2304 may increase the FDI and the UI of the exhaust gas.

After flowing out of the distribution cap 300 (e.g., via the distribution cap aperture 302), the exhaust gas may be directed into a first passage 2308 (e.g., passageway, channel, etc.) by the channel wall 2300. Similar to the decomposition chamber 108 described in Figure 5, the injector coupler 234 is coupled to the mixing assembly wall 230 in Figure 23. Specifically, the injector coupler 234 is coupled to the mixing assembly wall 230 such that the injection region 314 is located at least partially within the first passage 2308 (e.g., the injector coupler 234 is located between parallel walls of the channel wall 2300. The channel cavity 2302 includes the first passage 2308, the second passage 2310, and the third passage 2312.

The exhaust gas and the reductant are mixed within the first passage 2308 and the exhaust is propelled from the first passage 2308 into a second passage 2310 (e.g., passageway, channel, etc.), from the second passage 2310 into a third passage 2312 (e.g., passageway, channel, etc.), and from the third passage 2312 into the mixing assembly flow aperture 2304. The first passage 2308 and the second passage 2310 are separated by a bend (e.g., a right angle, etc.) that is configured to facilitate mixing of the exhaust gas and the reductant within the channel cavity 2302. Similarly, the second passage 2310 and the third passage 2312 are separated by a bend (e.g., a right angle, etc.) that is configured to facilitate mixing of the exhaust gas and the reductant within the channel cavity 2302.

After flowing out of the distribution cap 300 (e.g., via the distribution cap aperture 302), the exhaust gas may be directed into a fourth passage 2314 (e.g., passageway, channel, etc.) by the channel wall 2300. The fourth passage 2314 extends around the distribution cap 300 and between the channel wall 2300 and the mixing assembly wall 230.

The decomposition chamber 108 also includes a first corner wall 2316 and a second corner wall 2318. The first corner wall 2316 is located proximate a first corner of the mixing assembly wall 230 and the second corner wall 2318 is located proximate a second corner of the mixing assembly wall 230. The first corner wall 2316 is coupled to the mixing collector wall 226 (e.g., such that flow of the exhaust gas between the first corner wall 2316 and the mixing collector wall 226 is substantially prohibited, etc.), the outer housing wall 232 (e.g., such that flow of the exhaust gas between the first corner wall 2316 and the outer housing wall 232 is substantially prohibited, etc.), and the mixing assembly wall 230 (e.g., such that flow of the exhaust gas between the first corner wall 2316 and the mixing assembly wall 230 is substantially prohibited, etc.). The first corner wall 2316 is coupled to the mixing assembly wall 230 at a first end of the first corner wall 2316 and at a second end of the first corner wall 2316, but is separated from the mixing assembly wall 230 between the first end of the first corner wall 2316 and the second end of the first corner wall 2316. The second corner wall 2318 is coupled to the mixing collector wall 226 (e.g., such that flow of the exhaust gas between the second corner wall 2318 and the mixing collector wall 226 is substantially prohibited, etc.), the outer housing wall 232 (e.g., such that flow of the exhaust gas between the second corner wall 2318 and the outer housing wall 232 is substantially prohibited, etc.), and the mixing assembly wall 230 (e.g., such that flow of the exhaust gas between the second corner wall 2318 and the mixing assembly wall 230 is substantially prohibited, etc.). The second corner wall 2318 is coupled to the mixing assembly wall 230 at a first end of the second corner wall 2318 and at a second end of the second corner wall 2318, but is separated from the mixing assembly wall 230 between the first end of the second corner wall 2318 and the second end of the second corner wall 2318.

The first corner wall 2316 is separated from (e.g., spaced apart from, etc.) the mixing assembly wall 230 by a first gap distance. In some embodiments, the first gap distance is constant along the first corner wall 2316. In various embodiments, the first gap distance is less than 10 mm. The first gap distance provides thermal insulation, thereby mitigating heat transfer from the first corner wall 2316 and maintaining the first corner wall 2316 at a relatively high temperature. This relatively high temperature may mitigate formation of reductant deposits and increase the desirability of the decomposition chamber 108.

The second corner wall 2318 is separated from (e.g., spaced apart from, etc.) the mixing assembly wall 230 by a second gap distance. In some embodiments, the second gap distance is constant along the second corner wall 2318. In various embodiments, the second gap distance is less than 10 mm. In some embodiments, the second gap distance is approximately equal to the first gap distance. In some embodiments, the second corner wall 2318 is an identical reflection of the first corner wall 2316. The second gap distance provides thermal insulation, thereby mitigating heat transfer from the second corner wall 2318 and maintaining the second corner wall 2318 at a relatively high temperature. This relatively high temperature may mitigate formation of reductant deposits and increase the desirability of the decomposition chamber 108.

The fourth passage 2314 extends between the first corner wall 2316 and the channel wall 2300 and between the second corner wall 2318 and the channel wall 2300. The fourth passage 2314 finally extends into the first passage 2308.

In various embodiments, the channel wall 2300 includes a plurality of channel wall apertures 2320 located in a portion of the channel wall 2300 that extends between the first corner wall 2316 and the second corner wall 2318. As a result, exhaust gas may flow between the third passage 2312 and the fourth passage 2314 (e.g., from the third passage 2312 to the fourth passage 2314, from the fourth passage 2314 to the third passage 2312).

### XI. Example Decomposition Chamber Having an Eighth Example Mixing Assembly

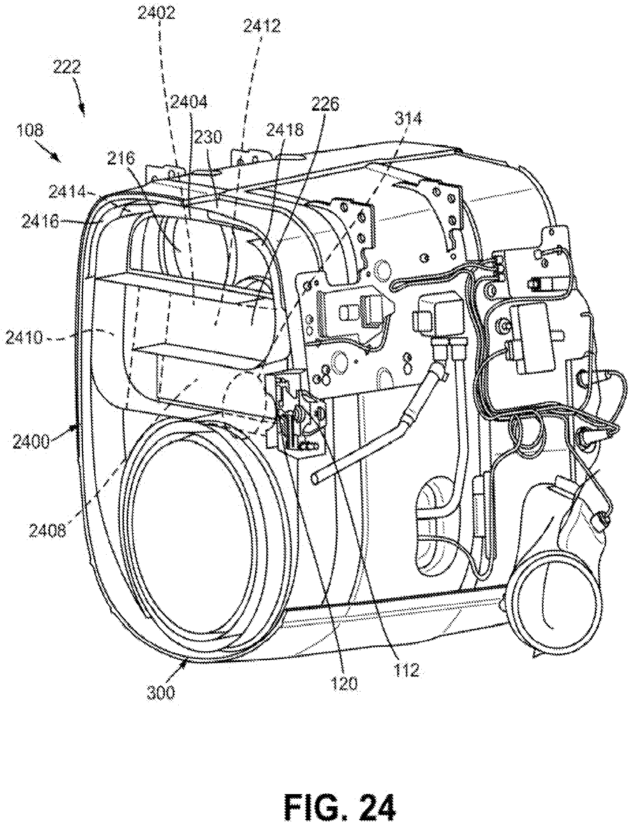

Figure 24 illustrates the decomposition chamber 108 and the mixing assembly 222 according to another example embodiment. The decomposition chamber 108 includes the distribution cap 300 as described herein. The decomposition chamber 108 also includes a channel wall 2400 coupled to the mixing collector wall 226 (e.g., such that flow of the exhaust gas between the channel wall 2400 and the mixing collector wall 226 is substantially prohibited, etc.), the outer housing wall 232 (e.g., such that flow of the exhaust gas between the channel wall 2400 and the outer housing wall 232 is substantially prohibited, etc.). In some embodiments, the channel wall 2400 is additionally coupled to the distribution cap wall 304 (e.g., such that flow of the exhaust gas between the channel wall 2400 and the distribution cap wall 304 is substantially prohibited, etc.).

The channel wall 2400 forms a channel cavity 2402. The channel cavity 2402 originates at the distribution cap 300 and terminates at a mixing assembly flow aperture 2404 (e.g., hole, etc.) in the mixing collector wall 226. The mixing assembly flow aperture 2404 functions as the mixing collector wall aperture 227. Rather than being centered on the SCR catalyst member 216, the mixing assembly flow aperture 2404 extends across the mixing collector wall 226, thereby maximizing the area of the mixing assembly flow aperture 2404 and decreasing a backpressure of the decomposition chamber 108.

After flowing out of the distribution cap 300 (e.g., via the distribution cap aperture 302), the exhaust gas may be directed into a first passage 2408 (e.g., passageway, channel, etc.) by the channel wall 2400. Similar to the decomposition chamber 108 described in Figure 5, the injector coupler 244 is coupled to the mixing assembly wall 230 in Figure 24. Specifically, the injector coupler 244 is coupled to the mixing assembly wall 230 such that the injection region 314 is located at least partially within the first passage 2408 (e.g., the injector coupler 244 is located between parallel walls of the channel wall 2400.

The exhaust gas and the reductant are mixed within the first passage 2408 and the exhaust is propelled from the first passage 2408 into a second passage 2410 (e.g., passageway, channel, etc.), from the second passage 2410 into a third passage 2412 (e.g., passageway, channel, etc.), and from the third passage 2412 into the mixing assembly flow aperture 2404. The first passage 2408 and the second passage 2410 are separated by a bend (e.g., a right angle, etc.) that is configured to facilitate mixing of the exhaust gas and the reductant within the channel cavity 2402. Similarly, the second passage 2410 and the third passage 2412 are separated by a bend (e.g., a right angle, etc.) that is configured to facilitate mixing of the exhaust gas and the reductant within the channel cavity 2402. The channel cavity 2402 includes the first passage 2408, the second passage 2410, and the third passage 2412.

After flowing out of the distribution cap 300 (e.g., via the distribution cap aperture 302), the exhaust gas may be directed into a fourth passage 2414 (e.g., passageway, channel, etc.) by the channel wall 2400. The fourth passage 2414 extends around the distribution cap 300 and between the channel wall 2400 and the mixing assembly wall 230.

The decomposition chamber 108 also includes a first corner wall 2416 and a second corner wall 2418. The first corner wall 2416 is located proximate a first corner of the mixing assembly wall 230 and the second corner wall 2418 is located proximate a second corner of the mixing assembly wall 230. The first corner wall 2416 is coupled to the mixing collector wall 226 (e.g., such that flow of the exhaust gas between the first corner wall 2416 and the mixing collector wall 226 is substantially prohibited, etc.), the outer housing wall 232 (e.g., such that flow of the exhaust gas between the first corner wall 2416 and the outer housing wall 232 is substantially prohibited, etc.), and the mixing assembly wall 230 (e.g., such that flow of the exhaust gas between the first corner wall 2416 and the mixing assembly wall 230 is substantially prohibited, etc.). The first corner wall 2416 is coupled to the mixing assembly wall 230 at a first end of the first corner wall 2416 and at a second end of the first corner wall 2416, but is separated from the mixing assembly wall 230 between the first end of the first corner wall 2416 and the second end of the first corner wall 2416. The second corner wall 2418 is coupled to the mixing collector wall 226 (e.g., such that flow of the exhaust gas between the second corner wall 2418 and the mixing collector wall 226 is substantially prohibited, etc.), the outer housing wall 232 (e.g., such that flow of the exhaust gas between the second corner wall 2418 and the outer housing wall 232 is substantially prohibited, etc.), and the mixing assembly wall 230 (e.g., such that flow of the exhaust gas between the second corner wall 2418 and the mixing assembly wall 230 is substantially prohibited, etc.). The second corner wall 2418 is coupled to the mixing assembly wall 230 at a first end of the second corner wall 2418 and at a second end of the second corner wall 2418, but is separated from the mixing assembly wall 230 between the first end of the second corner wall 2418 and the second end of the second corner wall 2418.

The first corner wall 2416 is separated from (e.g., spaced apart from, etc.) the mixing assembly wall 230 by a first gap distance. In some embodiments, the first gap distance is constant along the first corner wall 2416. In various embodiments, the first gap distance is less than 10 mm. The first gap distance provides thermal insulation, thereby mitigating heat transfer from the first corner wall 2416 and maintaining the first corner wall 2416 at a relatively high temperature. This relatively high temperature may mitigate formation of reductant deposits and increase the desirability of the decomposition chamber 108.

The second corner wall 2418 is separated from (e.g., spaced apart from, etc.) the mixing assembly wall 230 by a second gap distance. In some embodiments, the second gap distance is constant along the second corner wall 2418. In various embodiments, the second gap distance is less than 10 mm. In some embodiments, the second gap distance is approximately equal to the first gap distance. In some embodiments, the second corner wall 2418 is an identical reflection of the first corner wall 2416. The second gap distance provides thermal insulation, thereby mitigating heat transfer from the second corner wall 2418 and maintaining the second corner wall 2418 at a relatively high temperature. This relatively high temperature may mitigate formation of reductant deposits and increase the desirability of the decomposition chamber 108.

The fourth passage 2414 extends between the first corner wall 2416 and the channel wall 2400 and between the second corner wall 2418 and the channel wall 2400. The fourth passage 2414 may provide the exhaust gas into the mixing assembly flow aperture 2404 or may provide the exhaust gas into the first passage 2408.

### XII. Example Decomposition Chamber Having a Ninth Example Mixing Assembly

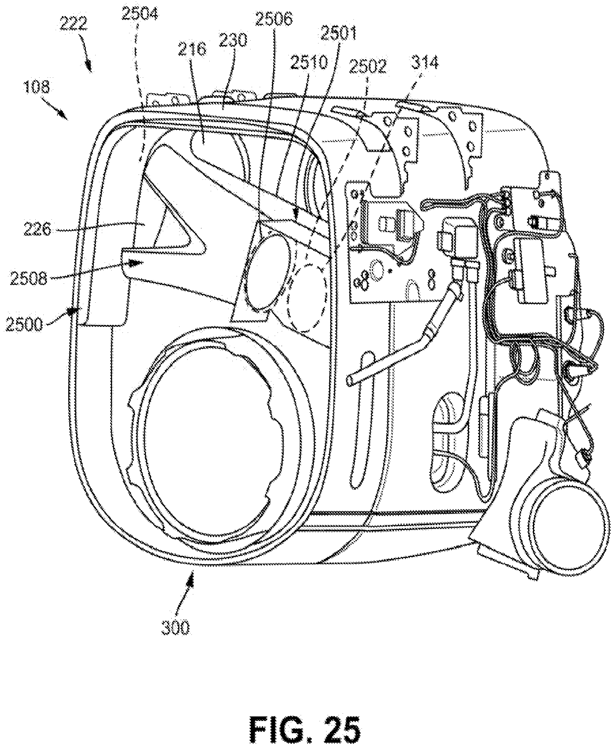

Figure 25 illustrates the decomposition chamber 108 and the mixing assembly 222 according to another example embodiment. The decomposition chamber 108 includes the distribution cap 300 as described herein. The decomposition chamber 108 also includes a channel wall 2500 coupled to the mixing collector wall 226 (e.g., such that flow of the exhaust gas between the channel wall 2500 and the mixing collector wall 226 is substantially prohibited, etc.), the outer housing wall 232 (e.g., such that flow of the exhaust gas between the channel wall 2500 and the outer housing wall 232 is substantially prohibited, etc.), and the mixing assembly wall 230 (e.g., such that flow of the exhaust gas between the channel wall 2500 and the mixing assembly wall 230 is substantially prohibited, etc.). In some embodiments, the channel wall 2500 is additionally coupled to the distribution cap wall 304 (e.g., such that flow of the exhaust gas between the channel wall 2500 and the distribution cap wall 304 is substantially prohibited, etc.).

The decomposition chamber 108 also includes a tube wall 2501. The tube wall 2501 is coupled to the mixing collector wall 226 (e.g., such that flow of the exhaust gas between the tube wall 2501 and the mixing collector wall 226 is substantially prohibited, etc.), the outer housing wall 232 (e.g., such that flow of the exhaust gas between the tube wall 2501 and the outer housing wall 232 is substantially prohibited, etc.), and the mixing assembly wall 230 (e.g., such that flow of the exhaust gas between the tube wall 2501 and the mixing assembly wall 230 is substantially prohibited, etc.). In some embodiments, the tube wall 2501 is additionally coupled to the distribution cap wall 304 (e.g., such that flow of the exhaust gas between the tube wall 2501 and the distribution cap wall 304 is substantially prohibited, etc.).

The channel wall 2500 and the tube wall 2501 collectively form a concentration cavity 2502 and a transfer cavity 2504. The concentration cavity 2502 is defined between the channel wall 2500, the tube wall 2501, the mixing collector wall 226, the outer housing wall 232, the mixing assembly wall 230, and the distribution cap wall 304. The transfer cavity 2504 is defined between the channel wall 2500, the tube wall 2501, the mixing collector wall 226, the outer housing wall 232, and the mixing assembly wall 230.

After flowing out of the distribution cap 300 (e.g., via the distribution cap aperture 302), the exhaust gas enters the concentration cavity 2502. The channel wall 2500 directs the exhaust gas towards a tube wall aperture 2506 (e.g., hole, opening, etc.) in the tube wall 2501. The injector coupler 254 is coupled to the outer housing wall 232 such that the injection region 314 is located immediately upstream of the tube wall aperture 2506.

The decomposition chamber 108 includes a tube 2508 coupled to the tube wall 2501 around the tube wall aperture 2506 (e.g., such that flow of the exhaust gas between the tube 2508 and the tube wall 2501 is substantially prohibited, etc.). The tube 2508 is positioned between the mixing collector wall 226 and the outer housing wall 232 and is configured to receive the exhaust gas from the concentration cavity 2502 and provide the exhaust gas to the transfer cavity 2504. As the exhaust gas flows within the tube 2508, the exhaust gas is caused to swirl, thereby facilitating mixing of the reductant and the exhaust gas.

The exhaust gas flows out of the tube 2508 and into the transfer cavity 2504 and exits the transfer cavity via a mixing assembly flow aperture 2510 (e.g., hole, opening, etc.). The mixing assembly flow aperture 2510 provides the exhaust gas through the mixing collector wall 226 and to the SCR catalyst member 216.

### XIII. Example Decomposition Chamber Having a Tenth Example Mixing Assembly

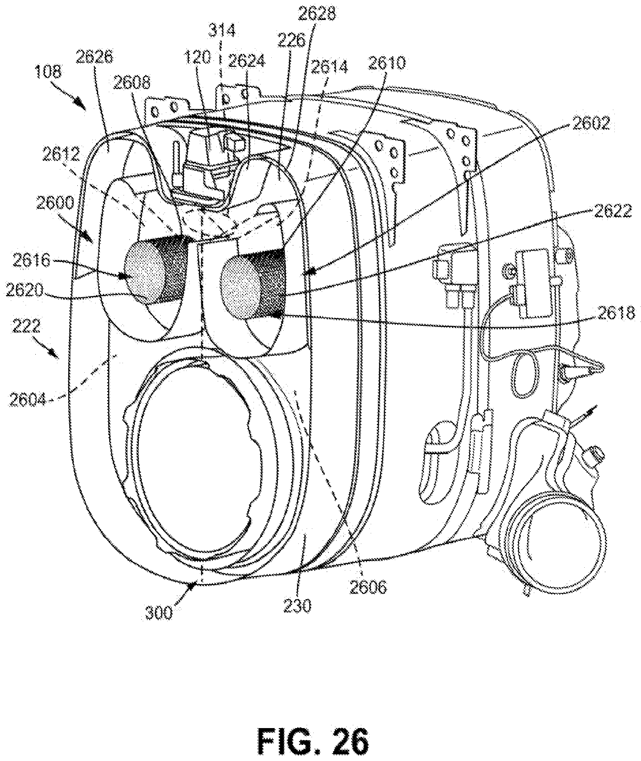

Figure 26 illustrates the decomposition chamber 108 and the mixing assembly 222 according to another example embodiment. The decomposition chamber 108 includes the distribution cap 300 as described herein. The decomposition chamber 108 also includes a first flow guide 2600 and a second flow guide 2602. As is explained in more detail herein, the first flow guide 2600 and the second flow guide 2602 divide the exhaust gas into a first concentration cavity 2604 and a second concentration cavity 2606.

The first flow guide 2600 is coupled to the outer housing wall 232 (e.g., such that flow of the exhaust gas between the first flow guide 2600 and the outer housing wall 232 is substantially prohibited, etc.) and the mixing collector wall 226 (e.g., such that flow of the exhaust gas between the first flow guide 2600 and the mixing collector wall 226 is substantially prohibited, etc.). Similarly, the second flow guide 2602 is coupled to the outer housing wall 232 (e.g., such that flow of the exhaust gas between the second flow guide 2602 and the outer housing wall 232 is substantially prohibited, etc.) and the mixing collector wall 226 (e.g., such that flow of the exhaust gas between the second flow guide 2602 and the mixing collector wall 226 is substantially prohibited, etc.).

After the exhaust gas flows out of the distribution cap aperture 302, the exhaust gas flows into either the first concentration cavity 2604 defined between the first flow guide 2600, the distribution cap wall 304, the mixing collector wall 226, the mixing assembly wall 230, and the outer housing wall 232 or the second concentration cavity 2606 defined between the second flow guide 2602, the distribution cap wall 304, the mixing collector wall 226, the mixing assembly wall 230, and the outer housing wall 232. The first flow guide 2600 and the second flow guide 2602 are each curved (e.g., rounded, convex, etc.) towards the distribution cap 300 such that the exhaust gas is caused to split (e.g., be divided, etc.).

As the exhaust gas flows within the first concentration cavity 2604, the exhaust gas flows along the first flow guide 2600 (e.g., between the first flow guide 2600 and the mixing assembly wall 230, etc.) and towards a first mixing assembly flow aperture 2608 (e.g., hole, opening, etc.) in the mixing collector wall 226. Similarly, as the exhaust gas flows within the second concentration cavity 2606, the exhaust gas flows along the second flow guide 2602 (e.g., between the second flow guide 2602 and the mixing assembly wall 230, etc.) and towards a second mixing assembly flow aperture 2610 (e.g., hole, opening, etc.) in the mixing collector wall 226.

The exhaust gas flows into either a first swirl cavity 2612 defined between the first flow guide 2600, the mixing collector wall 226, and the outer housing wall 232 or a second swirl cavity 2614 defined between the second flow guide 2602, the mixing collector wall 226, and the outer housing wall 232.

As the exhaust gas flows within the first swirl cavity 2612, the exhaust gas flows along the first flow guide 2600 towards the first mixing assembly flow aperture 2608. Similarly, as the exhaust gas flows within the second swirl cavity 2614, the exhaust gas flows along the second flow guide 2602 towards the second mixing assembly flow aperture 2610.

In some embodiments, the first flow guide 2600 is spaced apart from, and not coupled to, the second flow guide 2602. As a result, the exhaust gas may flow from the distribution cap aperture 302 between the first flow guide 2600 and the second flow guide 2602 and into the injection region 314 without flowing through the first swirl cavity 2612 or the second swirl cavity 2614. This exhaust gas disrupts the spray of reductant, increases convective heat transfer to the sprayed reductant, and increases decomposition of the reductant (which correspondingly decreases a likelihood of impingement of the reductant, and increases uniformity index).

In some embodiments, as shown in Figure 26, the decomposition chamber 108 further includes a first perforated cylinder 2616 and a second perforated cylinder 2618. The first perforated cylinder 2616 is coupled to the outer housing wall 232 (e.g., such that flow of the exhaust gas between the first perforated cylinder 2616 and the outer housing wall 232 is substantially prohibited, etc.) and the mixing collector wall 226 around the first mixing assembly flow aperture 2608 (e.g., such that flow of the exhaust gas between the first perforated cylinder 2616 and the mixing collector wall 226 is substantially prohibited, etc.). Similarly, the second perforated cylinder 2618 is coupled to the outer housing wall 232 (e.g., such that flow of the exhaust gas between the second perforated cylinder 2618 and the outer housing wall 232 is substantially prohibited, etc.) and the mixing collector wall 226 around the second mixing assembly flow aperture 2610 (e.g., such that flow of the exhaust gas between the second perforated cylinder 2618 and the mixing collector wall 226 is substantially prohibited, etc.).

The first perforated cylinder 2616 includes a plurality of first perforated cylinder perforations 2620 (e.g., holes, openings, apertures, etc.). In operation, the exhaust gas flows from the first swirl cavity 2612 through the first perforated cylinder perforations 2620 into the first perforated cylinder 2616, and through the first mixing assembly flow aperture 2608. As the exhaust gas flows through the first perforated cylinder perforations 2620, a flow of the exhaust gas is straightened (e.g., turbulence of the exhaust gas is reduced, etc.). As a result, the backpressure of the decomposition chamber 108 may be decreased.

Similarly, the second perforated cylinder 2618 includes a plurality of second perforated cylinder perforations 2622 (e.g., holes, openings, apertures, etc.). In operation, the exhaust gas flows from the second swirl cavity 2614 through the second perforated cylinder perforations 2622 into the second perforated cylinder 2618, and through the second mixing assembly flow aperture 2610. As the exhaust gas flows through the second perforated cylinder perforations 2622, a flow of the exhaust gas is straightened (e.g., turbulence of the exhaust gas is reduced, etc.). As a result, the backpressure of the decomposition chamber 108 may be decreased.

The mixing assembly wall 230 includes an injector coupling recess 2624 that is configured to receive the injector coupler 234. The injector coupler 234 is coupled to the injector coupling recess 2624. The injection region 314 is disposed at a junction between the first concentration cavity 2604, the second concentration cavity 2606, the first swirl cavity 2612, and the second swirl cavity 2614. Due to the relatively high velocity of the exhaust gas within the first concentration cavity 2604, the second concentration cavity 2606, the first swirl cavity 2612, and the second swirl cavity 2614, impingement of the reductant on the first flow guide 2600 and the second flow guide 2602 is minimized.

The injector coupling recess 2624 is configured to receive the injector coupler 234 such that the injector coupler 234 may be coupled to the mixing assembly wall 230 without protruding substantially from the mixing assembly wall 230. In this way, the space claim of the decomposition chamber 108 may be decreased.

The decomposition chamber 108 also includes a first corner wall 2626 and a second corner wall 2628. The first corner wall 2626 is located proximate a first corner of the mixing assembly wall 230 and the second corner wall 2628 is located proximate a second corner of the mixing assembly wall 230. The first corner wall 2626 is coupled to the mixing collector wall 226 (e.g., such that flow of the exhaust gas between the first corner wall 2626 and the mixing collector wall 226 is substantially prohibited, etc.), the outer housing wall 232 (e.g., such that flow of the exhaust gas between the first corner wall 2626 and the outer housing wall 232 is substantially prohibited, etc.), and the mixing assembly wall 230 (e.g., such that flow of the exhaust gas between the first corner wall 2626 and the mixing assembly wall 230 is substantially prohibited, etc.). The first corner wall 2626 is coupled to the mixing assembly wall 230 at a first end of the first corner wall 2626 and at a second end of the first corner wall 2626, but is separated from the mixing assembly wall 230 between the first end of the first corner wall 2626 and the second end of the first corner wall 2626. The second corner wall 2628 is coupled to the mixing collector wall 226 (e.g., such that flow of the exhaust gas between the second corner wall 2628 and the mixing collector wall 226 is substantially prohibited, etc.), the outer housing wall 232 (e.g., such that flow of the exhaust gas between the second corner wall 2628 and the outer housing wall 232 is substantially prohibited, etc.), and the mixing assembly wall 230 (e.g., such that flow of the exhaust gas between the second corner wall 2628 and the mixing assembly wall 230 is substantially prohibited, etc.). The second corner wall 2628 is coupled to the mixing assembly wall 230 at a first end of the second corner wall 2628 and at a second end of the second corner wall 2628, but is separated from the mixing assembly wall 230 between the first end of the second corner wall 2628 and the second end of the second corner wall 2628.

The first corner wall 2626 is separated from (e.g., spaced apart from, etc.) the mixing assembly wall 230 by a first gap distance. In some embodiments, the first gap distance is constant along the first corner wall 2626. In various embodiments, the first gap distance is less than 10 mm. The first gap distance provides thermal insulation, thereby mitigating heat transfer from the first corner wall 2626 and maintaining the first corner wall 2626 at a relatively high temperature. This relatively high temperature may mitigate formation of reductant deposits and increase the desirability of the decomposition chamber 108.

The second corner wall 2628 is separated from (e.g., spaced apart from, etc.) the mixing assembly wall 230 by a second gap distance. In some embodiments, the second gap distance is constant along the second corner wall 2628. In various embodiments, the second gap distance is less than 10 mm. In some embodiments, the second gap distance is approximately equal to the first gap distance. In some embodiments, the second corner wall 2628 is an identical reflection of the first corner wall 2626. The second gap distance provides thermal insulation, thereby mitigating heat transfer from the second corner wall 2628 and maintaining the second corner wall 2628 at a relatively high temperature. This relatively high temperature may mitigate formation of reductant deposits and increase the desirability of the decomposition chamber 108.

### XIV. Example Decomposition Chamber Having an Eleventh Example Mixing Assembly

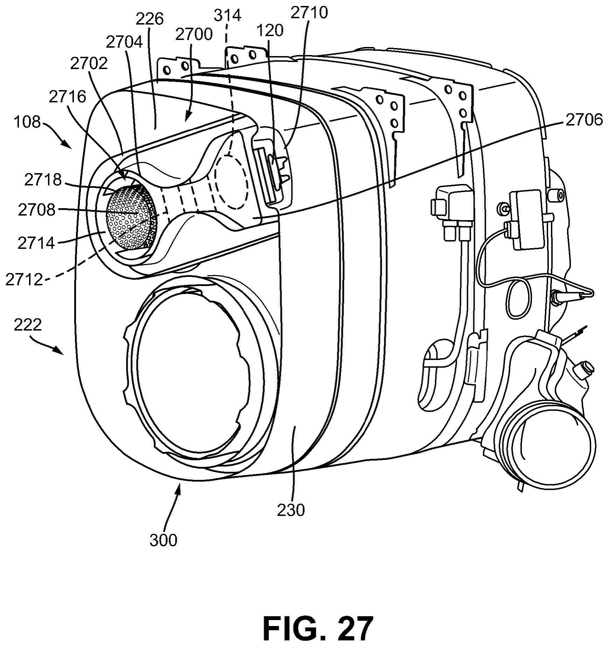

Figure 27 illustrates the decomposition chamber 108 and the mixing assembly 222 according to another example embodiment. The decomposition chamber 108 includes the distribution cap 300 as described herein. The decomposition chamber 108 also includes a plenum 2700. The plenum 2700 includes an plenum outer wall 2702 that is coupled to the outer housing wall 232 (e.g., such that flow of the exhaust gas between the plenum outer wall 2702 and the outer housing wall 232 is substantially prohibited, etc.).

The plenum 2700 also includes an plenum inner wall 2704. The plenum inner wall 2704 is coupled to the plenum outer wall 2702. In some embodiments, the plenum inner wall 2704 is structurally integrated with the plenum outer wall 2702. The plenum 2700 also includes a plenum inlet 2706 and a plenum outlet 2708. The plenum inlet 2706 is configured to receive exhaust gas from outside of the plenum 2700 and provide the exhaust gas into the plenum inner wall 2704. The plenum outlet 2708 is configured to provide the exhaust gas from the plenum inner wall 2704 out of the plenum 2700 and through the mixing collector wall 226 (e.g., such that the exhaust gas can flow to the SCR catalyst member 216.

The mixing assembly wall 230 includes an injector coupling recess 2710 that is configured to receive the injector coupler 234. The injector coupler 234 is coupled to the injector coupling recess 2710. The injection region 314 is disposed proximate the plenum inlet 2706 and within the plenum inner wall 2704.

After the exhaust gas flows out of the distribution cap aperture 302, the exhaust gas flows between the plenum outer wall 2702 and the mixing collector wall 226. The exhaust gas then enters the plenum 2700 via the plenum inlet 2706. The exhaust gas mixes with the reductant within the plenum inner wall 2704 and flows through a throat portion 2712 defined by the plenum inner wall 2704. As the exhaust gas flows through the throat portion 2712, a velocity of the exhaust gas increases. The exhaust gas flows from the throat portion 2712 into a cup 2714 defined by the plenum inner wall 2704. The cup 2714 causes the exhaust gas to swirl around the plenum outlet 2708.

In some embodiments, as shown in Figure 27, the decomposition chamber 108 further includes a perforated cylinder 2716. The perforated cylinder 2716 is coupled to the outer housing wall 232 (e.g., such that flow of the exhaust gas between the perforated cylinder 2716 and the outer housing wall 232 is substantially prohibited, etc.) and the plenum inner wall 2704 around the plenum outlet 2708 (e.g., such that flow of the exhaust gas between the perforated cylinder 2716 and the plenum inner wall 2704 is substantially prohibited, etc.).

The perforated cylinder 2716 includes a plurality of perforated cylinder perforations 2718 (e.g., holes, openings, apertures, etc.). In operation, the exhaust gas flows from the cup 2714 through the perforated cylinder perforations 2718 into the perforated cylinder 2716, and through the plenum outlet 2708. As the exhaust gas flows through the perforated cylinder perforations 2718, a flow of the exhaust gas is straightened (e.g., turbulence of the exhaust gas is reduced, etc.). As a result, the backpressure of the decomposition chamber 108 may be decreased.

### XV. Example Decomposition Chamber Having a Twelfth Example Mixing Assembly

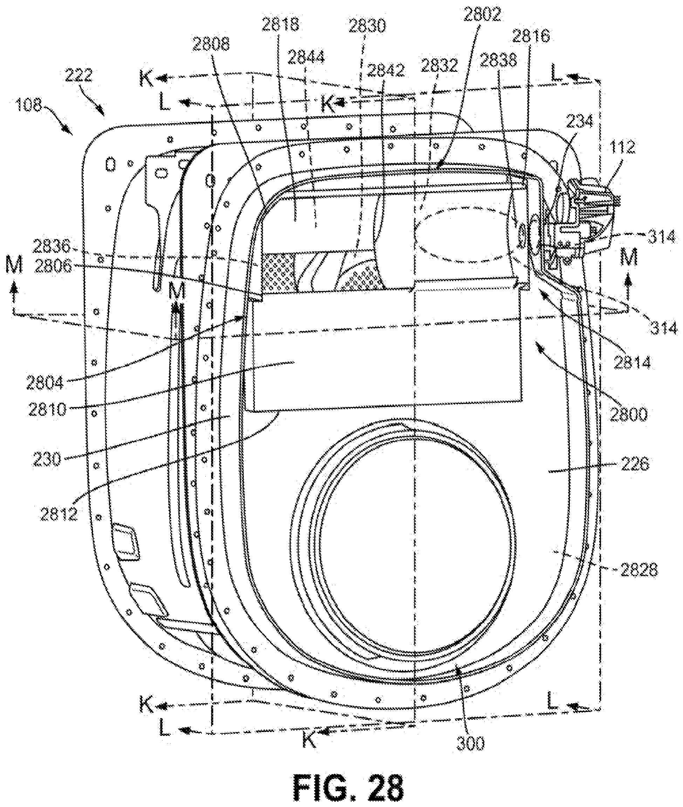

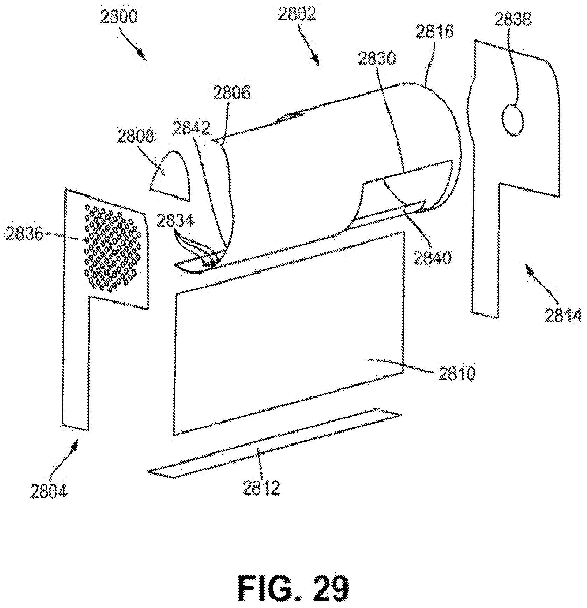

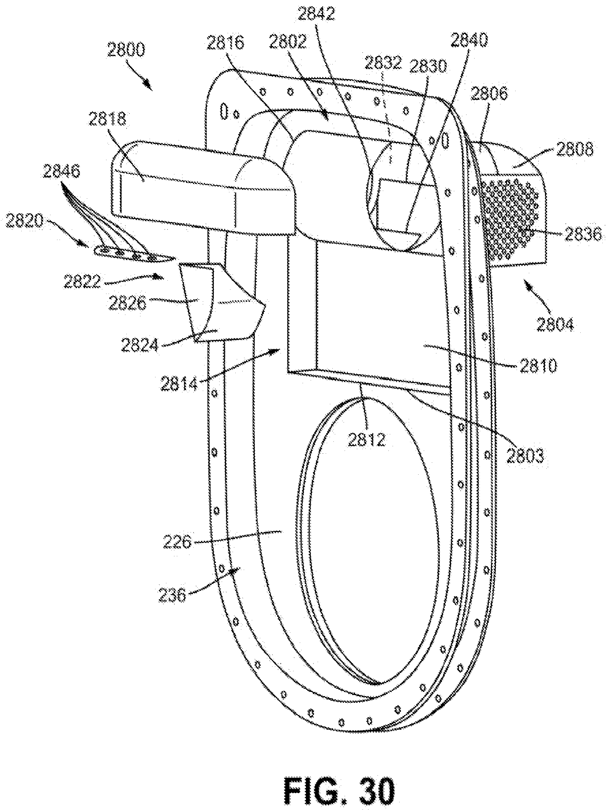

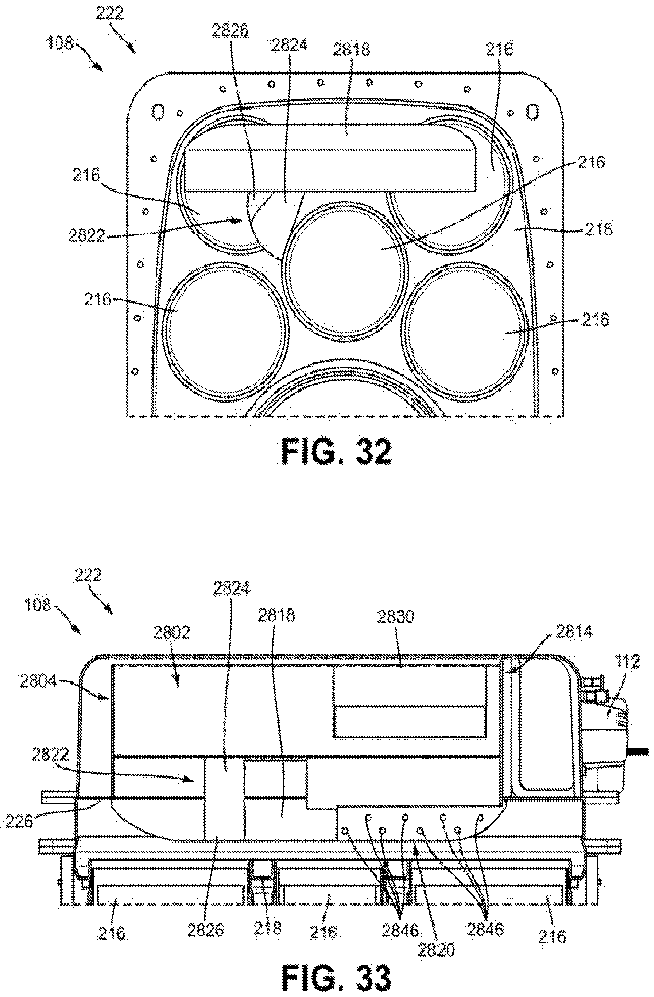

Figures 28-33 illustrate the decomposition chamber 108 and the mixing assembly 222 according to another example embodiment. The decomposition chamber 108 includes the distribution cap 300 as described herein. The decomposition chamber 108 also includes a dividing tube 2800.

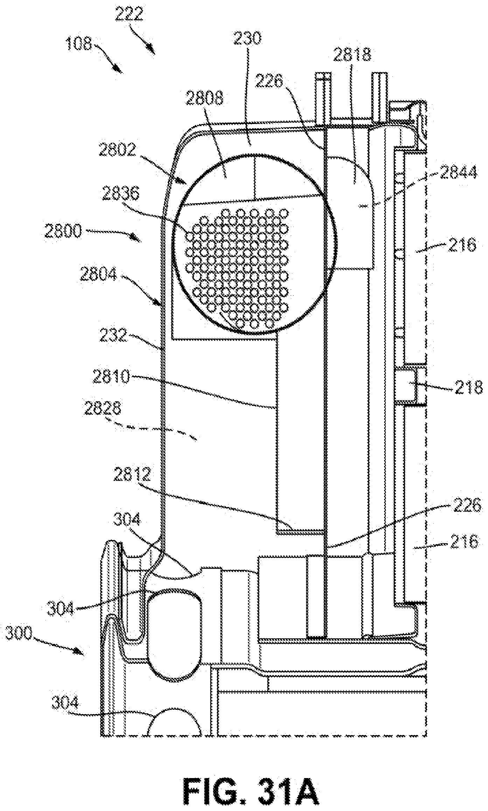

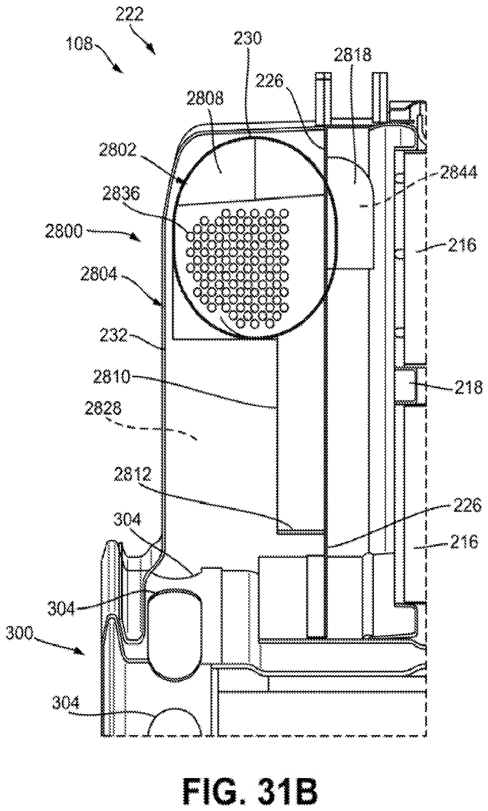

The dividing tube 2800 includes a dividing tube body 2802 (e.g., frame, shell, etc.). The dividing tube body 2802 is generally cylindrical, oval, oblong, or stadium-shaped (e.g., discorectangular, obround, etc.). In Figure 31A, the dividing tube body 2802 is generally cylindrical. In Figure 31B, the dividing tube body 2802 is stadium-shaped. For example, the dividing tube body 2802 may have a major axis that is approximately equal to 1.25 times a minor axis of the dividing tube body 2802. By making the dividing tube body 2802 stadium-shaped, an effective flow area of the dividing tube body 2802 (e.g., through which the exhaust gas may flow, etc.) may be increased, thereby increasing an ability of the decomposition chamber 108 to treat exhaust gas.

In various embodiments, the dividing tube body 2802 is coupled to the mixing assembly wall 230 (e.g., such that flow of the exhaust gas between the dividing tube body 2802 and the mixing assembly wall 230 is substantially prohibited, etc.) and/or the mixing collector wall 226 (e.g., such that flow of the exhaust gas between the dividing tube body 2802 and the mixing collector wall 226 is substantially prohibited, etc.). In various embodiments, the dividing tube body 2802 is separated from the outer housing wall 232 (e.g., such that flow of the exhaust gas between the dividing tube body 2802 and the outer housing wall 232 is facilitated, etc.).

The dividing tube body 2802 is positioned within a dividing tube coupler aperture 2803 (e.g., hole, opening, etc.) in the mixing collector wall 226 (e.g., the mixing collector wall 226 is disposed along a plane which bisects the dividing tube body 2802, etc.). The dividing tube body 2802 is coupled to the mixing collector wall 226 around the dividing tube coupler aperture 2803.

The dividing tube 2800 also includes a first dividing tube flange 2804 (e.g., wall, divider, etc.). The first dividing tube flange 2804 is coupled (e.g., a first portion of the first dividing tube flange 2804 is coupled to, etc.) to a first end 2806 of the dividing tube body 2802 (e.g., such that flow of the exhaust gas between the first end 2806 and the first dividing tube flange 2804 is substantially prohibited, etc.). The first dividing tube flange 2804 is also coupled to the mixing collector wall 226 (e.g., such that flow of the exhaust gas between the mixing collector wall 226 and the first dividing tube flange 2804 is substantially prohibited, etc.).

In various embodiments, the first dividing tube flange 2804 is coupled to the mixing collector wall 226 along the dividing tube coupler aperture 2803 (e.g., along a side of the dividing tube coupler aperture 2803, etc.). In various embodiments, the first dividing tube flange 2804 is not positioned within the dividing tube coupler aperture 2803.

The dividing tube 2800 also includes a dividing tube panel 2810 (e.g., wall, divider, etc.). The dividing tube panel 2810 is coupled to the dividing tube body 2802 (e.g., such that flow of the exhaust gas between the dividing tube body 2802 and the dividing tube panel 2810 is substantially prohibited, etc.). The dividing tube panel 2810 is also coupled to the first dividing tube flange 2804 (e.g., such that flow of the exhaust gas between the first dividing tube flange 2804 and the dividing tube panel 2810 is substantially prohibited, etc.).

The dividing tube 2800 also includes a dividing tube endplate 2812 (e.g., panel, wall, divider, etc.). The dividing tube endplate 2812 is coupled to the dividing tube panel 2810 (e.g., such that flow of the exhaust gas between the dividing tube panel 2810 and the dividing tube endplate 2812 is substantially prohibited, etc.). The dividing tube endplate 2812 is also coupled to the first dividing tube flange 2804 (e.g., such that flow of the exhaust gas between the first dividing tube flange 2804 and the dividing tube endplate 2812 is substantially prohibited, etc.). The dividing tube endplate 2812 is also coupled to the mixing collector wall 226 (e.g., such that flow of the exhaust gas between the mixing collector wall 226 and the dividing tube endplate 2812 is substantially prohibited, etc.).

In various embodiments, the dividing tube endplate 2812 is coupled to the mixing collector wall 226 along the dividing tube coupler aperture 2803 (e.g., along a side of the dividing tube coupler aperture 2803, etc.). In various embodiments, the dividing tube endplate 2812 is not positioned within the dividing tube coupler aperture 2803.

The dividing tube 2800 also includes a second dividing tube flange 2814 (e.g., wall, divider, etc.). The second dividing tube flange 2814 is coupled (e.g., a first portion of the second dividing tube flange 2814 is coupled to, etc.) to a second end 2816 of the dividing tube body 2802 (e.g., such that flow of the exhaust gas between the second end 2816 and the second dividing tube flange 2814 is substantially prohibited, etc.). The second end 2816 is opposite the first end 2806. The second dividing tube flange 2814 is also coupled to the mixing collector wall 226 (e.g., such that flow of the exhaust gas between the mixing collector wall 226 and the second dividing tube flange 2814 is substantially prohibited, etc.).

The first end 2806 may include tabs that are configured to be received within slots within the first dividing tube flange 2804 to facilitate coupling of the dividing tube body 2802 to the first dividing tube flange 2804. The second end 2816 may include tabs that are configured to be received within slots within the second dividing tube flange 2814 to facilitate coupling of the dividing tube body 2802 to the second dividing tube flange 2814.

In various embodiments, the second dividing tube flange 2814 is coupled to the mixing collector wall 226 along the dividing tube coupler aperture 2803 (e.g., along a side of the dividing tube coupler aperture 2803, etc.). In various embodiments, the second dividing tube flange 2814 is not positioned within the dividing tube coupler aperture 2803.

The dividing tube 2800 also includes a dividing tube collector 2818 (e.g., scoop, panel, etc.). The dividing tube collector 2818 is coupled to the mixing collector wall 226 (e.g., such that flow of the exhaust gas between the mixing collector wall 226 and the dividing tube collector 2818 is substantially prohibited, etc.) such that a portion of the dividing tube body 2802 is positioned within and/or adjacent to the dividing tube collector 2818.

In various embodiments, the dividing tube collector 2818 is coupled to the mixing collector wall 226 along the dividing tube coupler aperture 2803 (e.g., along a side of the dividing tube coupler aperture 2803, etc.). In various embodiments, the dividing tube collector 2818 is not positioned within the dividing tube coupler aperture 2803.

The dividing tube 2800 also includes a dividing tube dividing wall 2820 (e.g., flange, divider, etc.). The dividing tube dividing wall 2820 is coupled to the dividing tube body 2802 (e.g., such that flow of the exhaust gas between the dividing tube dividing wall 2820 and the dividing tube body 2802 is substantially prohibited, etc.). The dividing tube dividing wall 2820 is also coupled to the dividing tube collector 2818 (e.g., such that flow of the exhaust gas between the dividing tube dividing wall 2820 and the dividing tube collector 2818 is substantially prohibited, etc.). The dividing tube dividing wall 2820 may be positioned within the dividing tube coupler aperture 2803.

In various embodiments, the dividing tube 2800 also includes a dividing tube guide 2822 (e.g., scoop, vane, etc.). The dividing tube guide 2822 is configured to guide the exhaust gas flowing out of the dividing tube 2800 downstream. The dividing tube guide 2822 includes a dividing tube guide directing wall 2824 (e.g., flange, panel, etc.). The dividing tube guide directing wall 2824 is coupled to the dividing tube dividing wall 2820 (e.g., such that flow of the exhaust gas between the dividing tube guide directing wall 2824 and the dividing tube dividing wall 2820 is substantially prohibited, etc.). In various embodiments, the dividing tube guide directing wall 2824 is additionally coupled to the dividing tube body 2802 (e.g., such that flow of the exhaust gas between the dividing tube guide directing wall 2824 and the dividing tube body 2802 is substantially prohibited, etc.). The dividing tube guide directing wall 2824 may be positioned within the dividing tube coupler aperture 2803. In some embodiments, the dividing tube guide 2822 includes a plurality of dividing tube guide directing walls 2824, such that the exhaust gas may flow between adjacent dividing tube guide directing walls 2824. By including multiple dividing tube guide directing walls 2824, the dividing tube 2800 may provide an increased control over a flow of the exhaust gas.

In various embodiments, the dividing tube guide 2822 also includes a dividing tube guide dividing wall 2826 (e.g., flange, panel, etc.). The dividing tube guide dividing wall 2826 is coupled to the dividing tube guide directing wall 2824 (e.g., such that flow of the exhaust gas between the dividing tube guide directing wall 2824 and the dividing tube guide dividing wall 2826 is substantially prohibited, etc.), the dividing tube dividing wall 2820 (e.g., such that flow of the exhaust gas between the dividing tube dividing wall 2820 and the dividing tube guide dividing wall 2826 is substantially prohibited, etc.). The dividing tube guide dividing wall 2826 may be positioned within the dividing tube coupler aperture 2803. In some embodiments, the dividing tube guide 2822 does not include the dividing tube guide dividing wall 2826. In some embodiments, the dividing tube 2800 does not include the dividing tube guide 2822.

The dividing tube 2800 establishes a concentration cavity 2828. The concentration cavity 2828 is defined between the mixing collector wall 226, the distribution cap wall 304, the outer housing wall 232, the mixing assembly wall 230, the dividing tube body 2802, the first dividing tube flange 2804, the dividing tube panel 2810, the dividing tube endplate 2812, and the second dividing tube flange 2814.

After flowing out of the distribution cap 300 (e.g., via the distribution cap aperture 302), the exhaust gas from the concentration cavity enters the dividing tube body 2802 in one of a variety of different ways.

First, the exhaust gas may enter the dividing tube body 2802 via a dividing tube inlet aperture 2830 (e.g., hole, opening, etc.) formed in the dividing tube body 2802. The dividing tube inlet aperture 2830 is located between the outer housing wall 232 and a location at which the dividing tube panel 2810 couples to the dividing tube body 2802. After flowing through the dividing tube inlet aperture 2830, the exhaust gas enters a dividing tube cavity 2832 defined by the dividing tube body 2802.

Second, the exhaust gas may enter the dividing tube body 2802 via a dividing tube body perforation 2834 (e.g., hole, aperture, opening, etc.) formed in the dividing tube body 2802. The dividing tube body 2802 includes a plurality of the dividing tube body perforations 2834. According to various embodiments, each of the dividing tube body perforations 2834 is positioned between the dividing tube inlet aperture 2830 and the first dividing tube flange 2804. After flowing through the dividing tube body perforation 2834, the exhaust gas enters the dividing tube cavity 2832. In some embodiments, the dividing tube body 2802 does not include any of the dividing tube body perforations 2834.

Third, the exhaust gas may enter the dividing tube body 2802 via a first dividing tube flange perforation 2836 (e.g., hole, aperture, opening, etc.). The first dividing tube flange 2804 includes a plurality of the first dividing tube flange perforations 2836. According to various embodiments, each of the first dividing tube flange perforations 2836 is at least partially circumscribed by (e.g., encircled, bordered by, surrounded by, etc.) the first end 2806. After flowing through the first dividing tube flange perforations 2836, the exhaust gas enters the dividing tube cavity 2832.

Fourth, the exhaust gas may enter the dividing tube body 2802 via a second dividing tube flange aperture 2838 (e.g., hole, opening, etc.). The second dividing tube flange aperture 2838 is at least partially circumscribed by (e.g., encircled, bordered by, surrounded by, etc.) the second end 2816. After flowing through the second dividing tube flange aperture 2838, the exhaust gas enters the dividing tube cavity 2832.

The dividing tube inlet aperture 2830 is sized and positioned so as to provide more exhaust gas into the dividing tube cavity 2832 than the dividing tube body perforations 2834, the first dividing tube flange perforations 2836, and the second dividing tube flange aperture 2838 combined. At least a portion of the dividing tube inlet aperture 2830 is located proximate the outer housing wall 232. As a result, the exhaust gas flowing through the dividing tube inlet aperture 2830 enters the dividing tube cavity 2832 radially (e.g., along a tangent of the dividing tube body 2802, along a line that is parallel to and offset from a tangent of the dividing tube body 2802, etc.). This radial entry causes the exhaust gas to swirl within the dividing tube cavity 2832. The swirl imparted by the dividing tube inlet aperture 2830 facilitates mixing of the exhaust gas and the reductant within the dividing tube cavity 2832 and ensures shear on the dividing tube body 2802 is relatively high, thereby mitigating impingement of the reductant on the dividing tube body 2802.

The mixing assembly wall 230 includes the injector coupler 234. The dividing tube 2800 is positioned such that the injector coupler 234 is aligned with the second dividing tube flange aperture 2838 and spaced from the second dividing tube flange 2814. As a result, the injection region 314 is located within the dividing tube cavity 2832 and the concentration cavity 2828. As a result, the exhaust gas flowing through the second dividing tube flange aperture 2838 propels reductant provided by the dosing module 112 into the dividing tube cavity 2832.

In various embodiments, the dividing tube body 2802 includes a shield 2840 (e.g., wall, projection, etc.). The shield 2840 is contiguous with the dividing tube inlet aperture 2830 and extends into the dividing tube cavity 2832 (e.g., the shield 2840 is bent inward relative to the dividing tube body 2802, etc.). The shield 2840 functions to mitigate non-radial flow of the exhaust gas into the dividing tube cavity 2832 via the dividing tube inlet aperture 2830.

The exhaust gas exits the dividing tube cavity 2832 via a dividing tube outlet aperture 2842 and flows towards the SCR catalyst members 216. The exhaust gas flowing out of the dividing tube outlet aperture 2842 flows between the dividing tube body 2802, the first dividing tube flange 2804, the dividing tube panel 2810, the dividing tube endplate 2812, and the second dividing tube flange 2814 (e.g., into a recess formed by the dividing tube body 2802, the first dividing tube flange 2804, the dividing tube panel 2810, the dividing tube endplate 2812, and the second dividing tube flange 2814 in the mixing collector wall 226). The dividing tube body 2802, the first dividing tube flange 2804, the dividing tube panel 2810, the dividing tube endplate 2812, and the second dividing tube flange 2814 create a volume within which the exhaust gas exiting the dividing tube outlet aperture 2842 can expand, thereby minimizing backpressure of the decomposition chamber 108, facilitating increased UI of the reductant and exhaust gas, and facilitating increased flow distribution index of the exhaust gas.

In some embodiments, the dividing tube body 2802, the first dividing tube flange 2804, the dividing tube panel 2810, the dividing tube endplate 2812, and the second dividing tube flange 2814 are variously shaped, sized, or otherwise configured to direct the exhaust gas towards the SCR catalyst members 216 and/or distribute the exhaust gas between the SCR catalyst members 216 (e.g., with a target distribution profile, etc.). For example, the dividing tube panel 2810 may include features (e.g., protrusions, projections, ribs, flanges, fins, etc.) that extend towards the SCR catalyst members 216 such that the exhaust gas flowing out of the dividing tube outlet aperture 2842 flows against and/or between the features and is directed towards the SCR catalyst members 216 and/or distributed between the SCR catalyst members 216.

As the exhaust gas flows towards the SCR catalyst members 216, a portion of the exhaust gas may flow into a dividing tube collector cavity 2844 defined by the dividing tube collector 2818. A portion of the exhaust gas flowing within the dividing tube collector cavity 2844 is directed by the dividing tube guide 2822 out of the dividing tube collector cavity 2844 towards the SCR catalyst members 216. Another portion of the exhaust gas flowing within the dividing tube collector cavity 2844 flows out of the dividing tube collector cavity 2844 via dividing tube dividing wall perforations 2846 (e.g., holes, openings, etc.) in the dividing tube dividing wall 2820. The additional exit for the exhaust gas from the dividing tube collector cavity 2844 provided by the dividing tube dividing wall perforations 2846 minimizes backpressure of the decomposition chamber 108.

In some embodiments, the outer housing wall 232 is spaced apart from the dividing tube body 2802. As a result, a portion of the exhaust gas flows between the outer housing wall 232 and the dividing tube body 2802, along the dividing tube body 2802, between the dividing tube body 2802 and the mixing assembly wall 230, and into the dividing tube collector cavity 2844. Therefore, exhaust gas may flow into the dividing tube collector cavity 2844 either from the dividing tube outlet aperture 2842 or after flowing around the dividing tube body 2802. As a result, the backpressure of the decomposition chamber 108 may be decreased. The exhaust gas flowing around the dividing tube body 2802 functions to heat the dividing tube body 2802, thereby mitigating impingement of the reductant on the dividing tube body 2802. Furthermore, the exhaust gas flowing around the dividing tube body 2802 causes the exhaust gas within the dividing tube collector cavity 2844 to be propelled out of the dividing tube collector cavity 2844, thereby decreasing the backpressure of the decomposition chamber 108 and increasing the UI of the exhaust gas.

The dividing tube outlet aperture 2842 is positioned proximate the first end 2806. As a result, straight flow (e.g., flow without swirling, etc.) of the exhaust gas from the dividing tube inlet aperture 2830 to the dividing tube outlet aperture 2842 is substantially prevented, thereby ensuring that substantially all of the exhaust gas that exits the dividing tube outlet aperture 2842 is first swirled by the dividing tube body 2802. Furthermore, due to the dividing tube inlet aperture 2830 being positioned proximate the second end 2816 and the dividing tube outlet aperture 2842 being positioned proximate the first end 2806, a distance between the dividing tube inlet aperture 2830 and the dividing tube outlet aperture 2842 may be maximized, thereby increasing the amount of time that the exhaust gas is retained within the dividing tube cavity 2832 which correspondingly increases mixing of the reductant in the exhaust gas and the UI.

The dividing tube body perforations 2834 are disposed on an upstream surface of the dividing tube body 2802 (e.g., adjacent the concentration cavity 2828, etc.). In some embodiments, at least some of the dividing tube body perforations 2834 are aligned with the dividing tube outlet aperture 2842. In operation, the dividing tube body perforations 2834 facilitate passage of the exhaust gas through the dividing tube body 2802 and into the dividing tube cavity 2832 without passing through the dividing tube inlet aperture 2830. As a result, the backpressure of the decomposition chamber 108 may be decreased. Furthermore, the exhaust gas flowing through the dividing tube body perforations 2834 functions to heat the dividing tube body 2802, thereby mitigating impingement of the reductant on the dividing tube body 2802. By aligning at least some of the dividing tube body perforations 2834 with the dividing tube outlet aperture 2842, the exhaust gas flowing within the dividing tube cavity 2832 may be propelled out of the dividing tube outlet aperture 2842, thereby decreasing the backpressure of the decomposition chamber 108 and increasing the UI of the exhaust gas.

The first dividing tube flange perforations 2836 are disposed on a portion of the first dividing tube flange 2804 that is opposite the dividing tube cavity 2832 (e.g., are located opposite the first end 2806, etc.). In operation, the first dividing tube flange perforation 2836 facilitate passage of the exhaust gas (e.g., exhaust gas that has flowed between the mixing assembly wall 230 and the first dividing tube flange 2804, etc.) through the first dividing tube flange 2804 and into the dividing tube cavity 2832 without passing through the dividing tube inlet aperture 2830 or the dividing tube body perforations 2834. As a result, the backpressure of the decomposition chamber 108 may be decreased. Furthermore, the exhaust gas flowing through the first dividing tube flange perforation 2836 functions to heat the first end 2806, thereby mitigating impingement of the reductant on the first end 2806. The exhaust gas flowing through the first dividing tube flange perforation 2836 may also be useful in redirecting the exhaust gas flowing within the dividing tube cavity 2832 towards the dividing tube outlet aperture 2842, thereby decreasing the backpressure of the decomposition chamber 108 and increasing the UI of the exhaust gas.

### XVI. Example Decomposition Chamber Having a Thirteenth Example Mixing Assembly

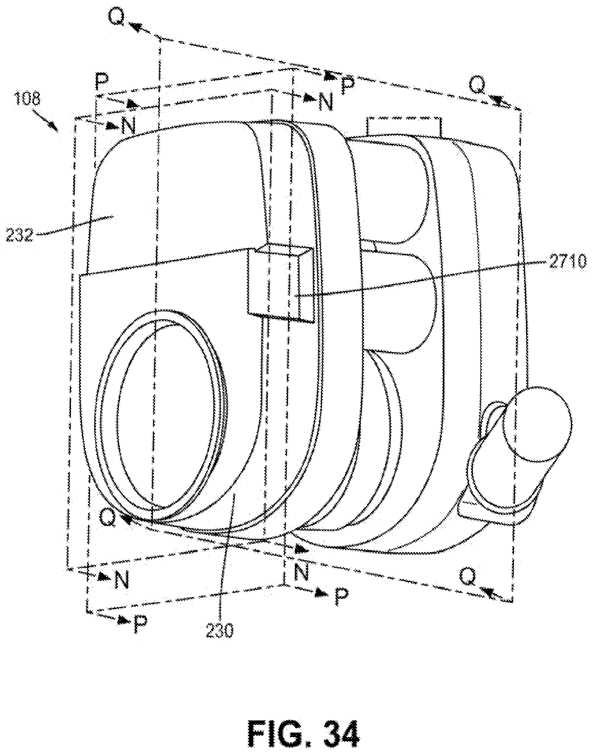

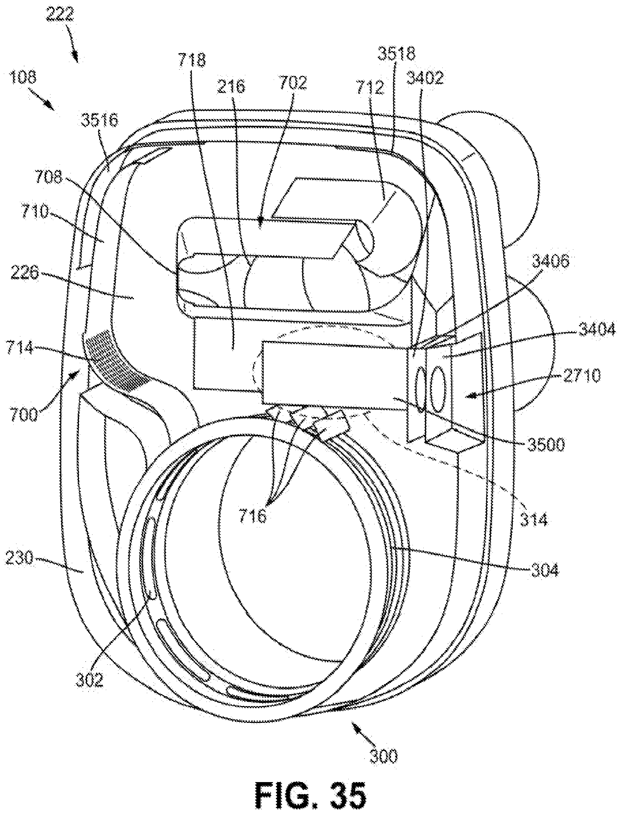

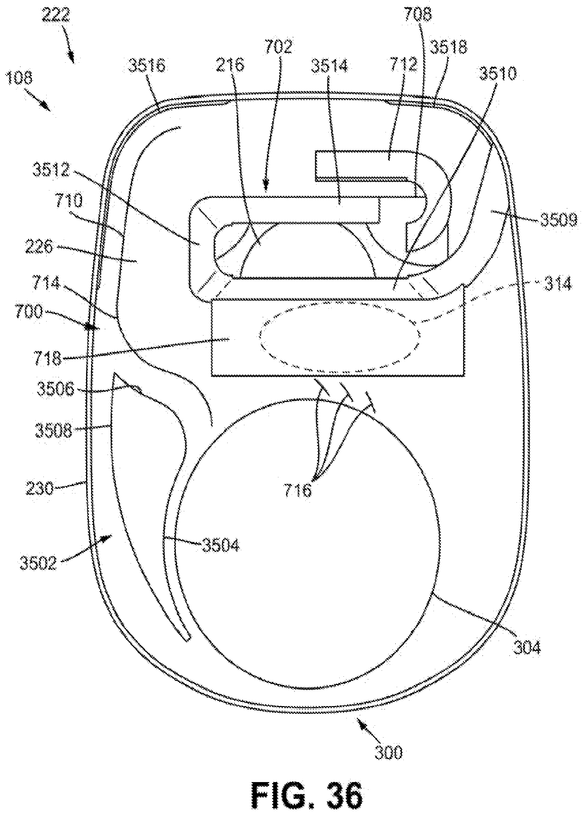

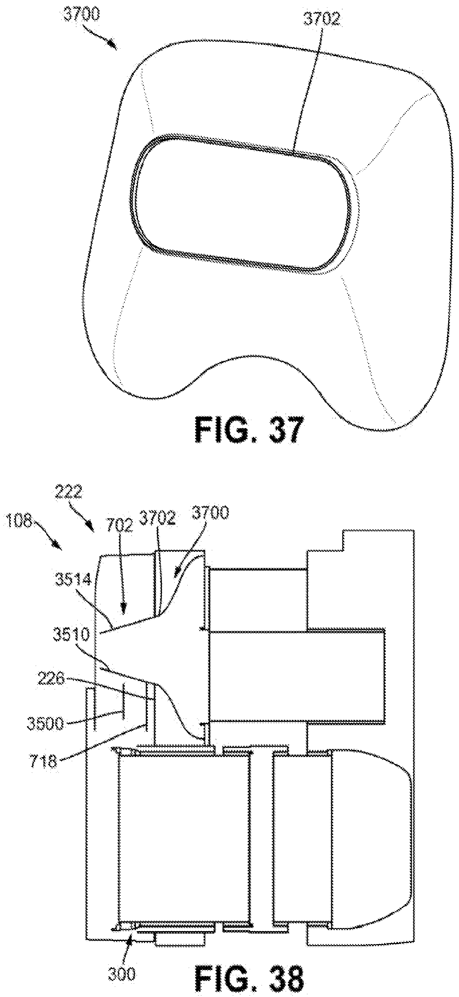

Figures 34-38 illustrate the decomposition chamber 108 and the mixing assembly 222 according to another example embodiment. The decomposition chamber 108 includes the distribution cap 300, the first channel wall 700, the second channel wall 702, the mixing assembly flow aperture 708, the first flow guide 710, the second flow guide 712, the perforations 714, the baffle 716, the third flow guide 718, and the injector coupling recess 2710 as described herein.

The decomposition chamber 108 also includes a fourth flow guide 3500 (e.g., vane, wall, partition, divider, etc.). The fourth flow guide 3500 is coupled to the injector coupling recess 2710 and extends towards the distribution cap wall 304 (e.g., proximate the baffle 716, etc.). The fourth flow guide 3500 is located between the third flow guide 718 and the outer housing wall 232. The fourth flow guide 3500 functions to break up turbulence between the mixing collector wall 226 and the third flow guide 718 and guides the exhaust gas and reductant between the second channel wall 702 and the distribution cap wall 304 towards the first channel wall 700. Additionally, the fourth flow guide 3500 may function to mitigate impingement of the reductant on the mixing collector wall 226. While reductant may contact the fourth flow guide 3500, exhaust gas flows above and below the fourth flow guide 3500. This exhaust gas heats the fourth flow guide 3500, potentially causing the reductant contacting the fourth flow guide 3500 to vaporize, and also biases the reductant off of the fourth flow guide 3500. In various embodiments, the fourth flow guide 3500 is disposed on a plane that is substantially parallel to a plane upon which the mixing collector wall 226 is disposed and/or a plane upon which the third flow guide 718 is disposed. The fourth flow guide 3500 may at least partially bisect the injection region 314. In some embodiments, the decomposition chamber 108 does not include the fourth flow guide 3500. In various embodiments, the fourth flow guide 3500 is not coupled to the second channel wall 702 or the distribution cap wall 304.

The injector coupling recess 2710 includes an inner coupling flange 3402 and an interfacing coupling flange 3404. The injector coupler 234 is coupled to the interfacing coupling flange 3404. The inner coupling flange 3402 is spaced apart from the interfacing coupling flange 3404 by a coupling wall 3406. The fourth flow guide 3500 is coupled to the inner coupling flange 3402.

The decomposition chamber 108 also includes a baffle flange assembly 3502. The baffle flange assembly 3502 is positioned between the distribution cap wall 304, the mixing collector wall 226, the mixing assembly wall 230, the outer housing wall 232, and the first channel wall 700.

The baffle flange assembly 3502 includes a first baffle flange wall 3504. The first baffle flange wall 3504 is coupled to the mixing collector wall 226 (e.g., such that flow of the exhaust gas between the first baffle flange wall 3504 and the mixing collector wall 226 is substantially prohibited, etc.) and the outer housing wall 232 (e.g., such that flow of the exhaust gas between the first baffle flange wall 3504 and the outer housing wall 232 is substantially prohibited, etc.). The first baffle flange wall 3504 is spaced apart from the distribution cap wall 304 such that exhaust gas can flow between the first baffle flange wall 3504 and the distribution cap wall 304 along the first baffle flange wall 3504.

The baffle flange assembly 3502 also includes a second baffle flange wall 3506. The second baffle flange wall 3506 is coupled to the mixing collector wall 226 (e.g., such that flow of the exhaust gas between the second baffle flange wall 3506 and the mixing collector wall 226 is substantially prohibited, etc.) and the outer housing wall 232 (e.g., such that flow of the exhaust gas between the second baffle flange wall 3506 and the outer housing wall 232 is substantially prohibited, etc.). The second baffle flange wall 3506 is spaced apart from the first channel wall 700 (e.g., proximate the perforations 714, etc.) such that exhaust gas can flow between the second baffle flange wall 3506 and the first channel wall 700 along the second baffle flange wall 3506. The second baffle flange wall 3506 is structurally integrated with the first baffle flange wall 3504.

The baffle flange assembly 3502 also includes a third baffle flange wall 3508. The third baffle flange wall 3508 is coupled to the mixing collector wall 226 (e.g., such that flow of the exhaust gas between the third baffle flange wall 3508 and the mixing collector wall 226 is substantially prohibited, etc.) and the outer housing wall 232 (e.g., such that flow of the exhaust gas between the third baffle flange wall 3508 and the outer housing wall 232 is substantially prohibited, etc.). The third baffle flange wall 3508 is spaced apart from the mixing assembly wall 230 such that exhaust gas can flow between the third baffle flange wall 3508 and the mixing assembly wall 230 along the third baffle flange wall 3508. The third baffle flange wall 3508 is structurally integrated with the first baffle flange wall 3504 and the second baffle flange wall 3506.

The second channel wall 702 includes a second channel wall first portion 3509. The second channel wall first portion 3509 is coupled to the mixing collector wall 226 (e.g., such that flow of the exhaust gas between the second channel wall first portion 3509 and the mixing collector wall 226 is substantially prohibited, etc.), and the outer housing wall 232 (e.g., such that flow of the exhaust gas between the second channel wall first portion 3509 and the outer housing wall 232 is substantially prohibited, etc.),. The third flow guide 718 is coupled to the second channel wall first portion 3509 in various embodiments.

The second channel wall 702 also includes a second channel wall second portion 3510. The second channel wall second portion 3510 is coupled to the mixing collector wall 226 (e.g., such that flow of the exhaust gas between the second channel wall second portion 3510 and the mixing collector wall 226 is substantially prohibited, etc.). Unlike the second channel wall first portion 3509, the second channel wall second portion 3510 is not coupled to the outer housing wall 232. As a result, flow of the exhaust gas between the second channel wall second portion 3510 and the outer housing wall 232 is facilitated. In this way, a portion of the exhaust gas may flow through the second channel wall 702 without first flowing around the second channel wall 702 (e.g., between the second channel wall 702 and the first channel wall 700, etc.). In this way, backpressure of the decomposition chamber 108 may be reduced. The second channel wall second portion 3510 is structurally integrated with the second channel wall first portion 3509. The third flow guide 718 is coupled to the second channel wall second portion 3510 in various embodiments. The injection region 314 is located between the second channel wall second portion 3510 and the distribution cap wall 304.

The second channel wall 702 includes a second channel wall third portion 3512. The second channel wall third portion 3512 is coupled to the mixing collector wall 226 (e.g., such that flow of the exhaust gas between the second channel wall third portion 3512 and the mixing collector wall 226 is substantially prohibited, etc.) and the outer housing wall 232 (e.g., such that flow of the exhaust gas between the second channel wall third portion 3512 and the outer housing wall 232 is substantially prohibited, etc.). The second channel wall third portion 3512 is structurally integrated with the second channel wall second portion 3510.

The second channel wall 702 also includes a second channel wall fourth portion 3514. The second channel wall fourth portion 3514 is coupled to the mixing collector wall 226 (e.g., such that flow of the exhaust gas between the second channel wall fourth portion 3514 and the mixing collector wall 226 is substantially prohibited, etc.). Unlike the second channel wall first portion 3509 and the second channel wall third portion 3512, the second channel wall fourth portion 3514 is not coupled to the outer housing wall 232. As a result, flow of the exhaust gas between the second channel wall fourth portion 3514 and the outer housing wall 232 is facilitated. In this way, a portion of the exhaust gas may flow through the second channel wall 702 without first flowing around the second channel wall 702 (e.g., between the second channel wall 702 and the second flow guide 712, etc.). In this way, backpressure of the decomposition chamber 108 may be reduced. The second channel wall fourth portion 3514 is structurally integrated with the second channel wall third portion 3512.

The decomposition chamber 108 also includes a first corner wall 3516 and a second corner wall 3518. The first corner wall 3516 is located proximate a first corner of the mixing assembly wall 230 and the second corner wall 3518 is located proximate a second corner of the mixing assembly wall 230. The first corner wall 3516 is coupled to the mixing collector wall 226 (e.g., such that flow of the exhaust gas between the first corner wall 3516 and the mixing collector wall 226 is substantially prohibited, etc.), the outer housing wall 232 (e.g., such that flow of the exhaust gas between the first corner wall 3516 and the outer housing wall 232 is substantially prohibited, etc.), and the mixing assembly wall 230 (e.g., such that flow of the exhaust gas between the first corner wall 3516 and the mixing assembly wall 230 is substantially prohibited, etc.). The first corner wall 3516 is coupled to the mixing assembly wall 230 at a first end of the first corner wall 3516 and at a second end of the first corner wall 3516, but is separated from the mixing assembly wall 230 between the first end of the first corner wall 3516 and the second end of the first corner wall 3516. The second corner wall 3518 is coupled to the mixing collector wall 226 (e.g., such that flow of the exhaust gas between the second corner wall 3518 and the mixing collector wall 226 is substantially prohibited, etc.), the outer housing wall 232 (e.g., such that flow of the exhaust gas between the second corner wall 3518 and the outer housing wall 232 is substantially prohibited, etc.), and the mixing assembly wall 230 (e.g., such that flow of the exhaust gas between the second corner wall 3518 and the mixing assembly wall 230 is substantially prohibited, etc.). The second corner wall 3518 is coupled to the mixing assembly wall 230 at a first end of the second corner wall 3518 and at a second end of the second corner wall 3518, but is separated from the mixing assembly wall 230 between the first end of the second corner wall 3518 and the second end of the second corner wall 3518.

The first corner wall 3516 is separated from (e.g., spaced apart from, etc.) the mixing assembly wall 230 by a first gap distance. In some embodiments, the first gap distance is constant along the first corner wall 3516. In various embodiments, the first gap distance is less than 10 mm. The first gap distance provides thermal insulation, thereby mitigating heat transfer from the first corner wall 3516 and maintaining the first corner wall 3516 at a relatively high temperature. This relatively high temperature may mitigate formation of reductant deposits and increase the desirability of the decomposition chamber 108.

The second corner wall 3518 is separated from (e.g., spaced apart from, etc.) the mixing assembly wall 230 by a second gap distance. In some embodiments, the second gap distance is constant along the second corner wall 3518. In various embodiments, the second gap distance is less than 10 mm. In some embodiments, the second gap distance is approximately equal to the first gap distance. In some embodiments, the second corner wall 3518 is an identical reflection of the first corner wall 3516. The second gap distance provides thermal insulation, thereby mitigating heat transfer from the second corner wall 3518 and maintaining the second corner wall 3518 at a relatively high temperature. This relatively high temperature may mitigate formation of reductant deposits and increase the desirability of the decomposition chamber 108. The second channel wall first portion 3509 is coupled to the second corner wall 3518 (e.g., such that flow of the exhaust gas between the second channel wall first portion 3509 and the second corner wall 3518 is substantially prohibited, etc.)

In various embodiments, the decomposition chamber 108 further includes a conical flange 3700. The conical flange 3700 includes an annular lip 3702. The annular lip 3702 is positioned within, and coupled to the mixing assembly flow aperture 708. The conical flange 3700 is positioned between the mixing collector wall 226 and the transfer assembly housing wall 218 and functions to distribute the exhaust gas from the mixing assembly flow aperture 708 across the SCR catalyst members 216.

### XVII. Example Decomposition Chamber Having a Fourteenth Example Mixing Assembly

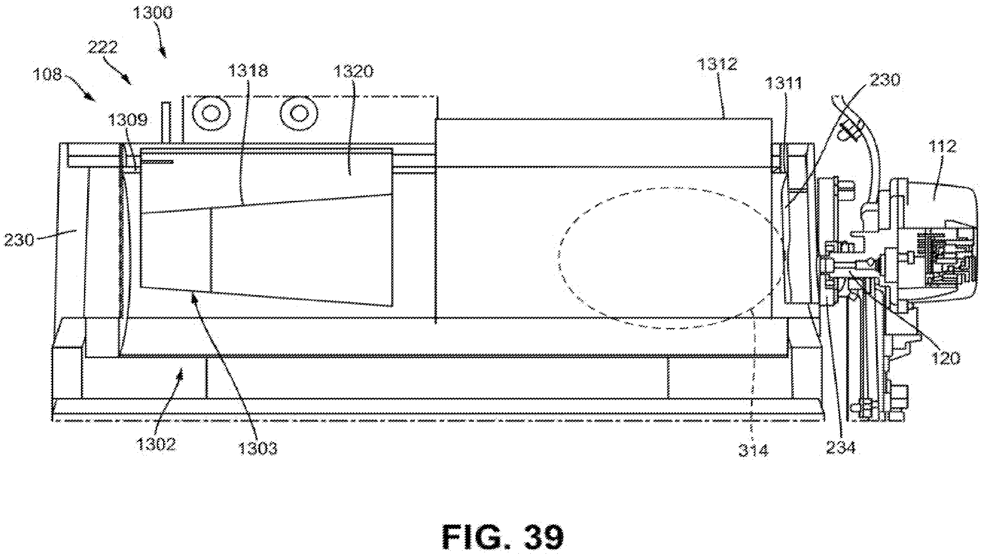

Figure 39 illustrates the decomposition chamber 108 described in Figures 13-17 according to another embodiment. In Figure 39, the dividing tube outlet aperture 1318 is trapezoidal with a larger side positioned proximate the injection region 314 and a smaller side positioned proximate the dividing tube flange 1303. In this way, the dividing tube outlet aperture 1318 gradually decreases in width at gradually greater distances from the injection region 314. By shaping the dividing tube outlet aperture 1318 in this manner, a greater proportion of the exhaust gas can be provided from the dividing tube outlet aperture 1318 to the SCR catalyst members 216 proximate the injection region 314 and a lesser proportion of the exhaust gas can be provided from the dividing tube outlet aperture 1318 to the SCR catalyst members 216 proximate the dividing tube flange 1303. The exhaust gas provided from the dividing tube flange transfer perforations 1334 can supplement the exhaust gas provided from the dividing tube outlet aperture 1318 to the SCR catalyst members 216 proximate the dividing tube flange 1303 such that the amount of exhaust gas provided to each of the SCR catalyst members 216 is substantially the same.

### XVIII. Example Decomposition Chamber Having a Fifteenth Example Mixing Assembly

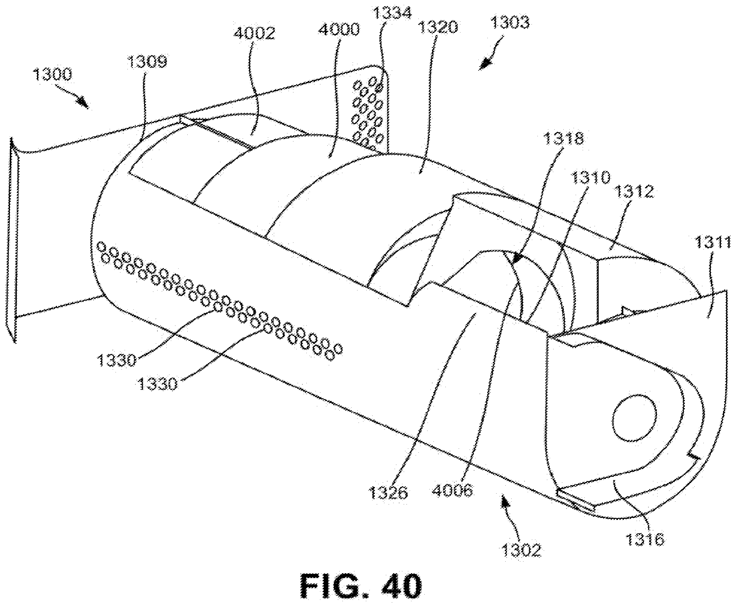

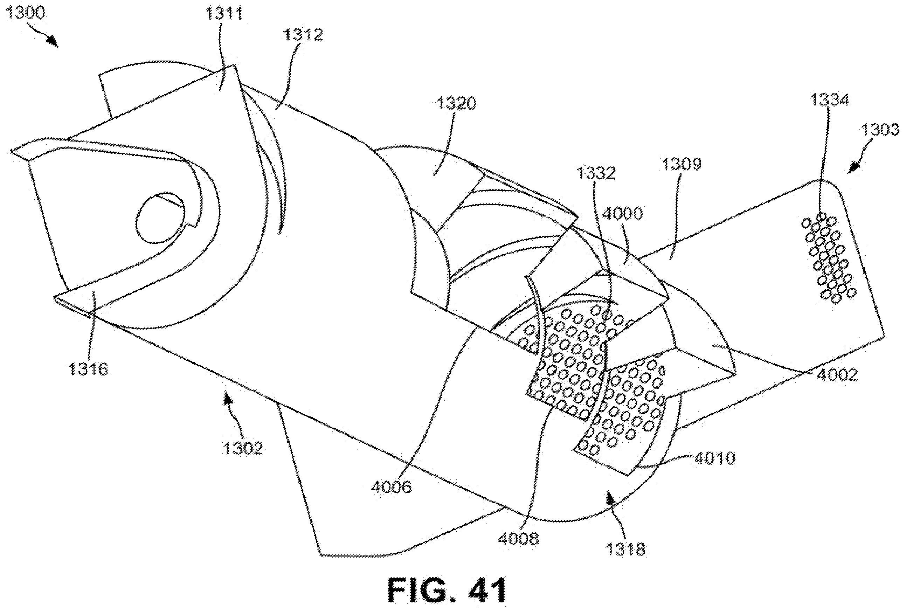

Figures 40-41 illustrate the decomposition chamber 108 described in Figures 13-17 according to another embodiment. In Figures 40-41, the dividing tube body 1302 also includes a fourth duct 4000 (e.g., cowl, hood, etc.) and a fifth duct 4002 (e.g., cowl, hood, etc.), and the dividing tube body 1302 does not include the third duct 1328. The fifth duct 4002 is adjacent the dividing tube flange 1303. The fourth duct 4000 is separated from the dividing tube flange 1303 by the fifth duct 4002 and from the first duct 1312 by the second duct 1320.

The second duct 1320 is contiguous with, and extends over, a dividing tube outlet aperture first portion 4006. Similarly, the fourth duct 4000 is contiguous with, and extends over, a dividing tube outlet aperture second portion 4008 and the fifth duct 4002 is contiguous with, and extends over, a dividing tube outlet aperture third portion 4010. The dividing tube outlet aperture first portion 4006, the dividing tube outlet aperture second portion 4008, and the dividing tube outlet aperture third portion 4010 collectively define the dividing tube outlet aperture 1318. Similar to the second duct 1320, the fourth duct 4000 and the fifth duct 4002 each extends towards the transfer cavity 1306 so as to function to direct the exhaust gas towards the mixing assembly flow aperture 1308. In some embodiments, the fourth duct 4000 and/or the fifth duct 4002 extends over the mixing assembly flow aperture 1308.

The dividing tube outlet aperture first portion 4006 is defined by a first outlet aperture area A₁ (e.g., an area of the dividing tube body 1302 which was removed to form the dividing tube outlet aperture first portion 4006, an opening area of the dividing tube outlet aperture first portion 4006, an effective area of the dividing tube outlet aperture first portion 4006, etc.). The dividing tube outlet aperture second portion 4008 is defined by a second outlet aperture area A₂ (e.g., an area of the dividing tube body 1302 which was removed to form the dividing tube outlet aperture second portion 4008, an opening area of the dividing tube outlet aperture second portion 4008, an effective area of the dividing tube outlet aperture second portion 4008, etc.). The dividing tube outlet aperture third portion 4010 is defined by a third outlet aperture area A₃ (e.g., an area of the dividing tube body 1302 which was removed to form the dividing tube outlet aperture third portion 4010, an opening area of the dividing tube outlet aperture third portion 4010, an effective area of the dividing tube outlet aperture third portion 4010, etc.). In various embodiments, the A₁ is greater than the A₂, and the A₂ is greater than the A₃. This arrangement causes a greater portion of the exhaust gas to flow through the dividing tube outlet aperture first portion 4006 than the dividing tube outlet aperture second portion 4008, and a greater portion of the exhaust gas to flow through the dividing tube outlet aperture second portion 4008 than the dividing tube outlet aperture third portion 4010. Such a division of the exhaust gas flowing from the dividing tube outlet aperture 1318 may be advantageous where the dividing tube outlet aperture first portion 4006 is closest to a larger number of the SCR catalyst members 216 than the numbers of SCR catalyst members 216 that are closest to the dividing tube outlet aperture second portion 4008 and/or the dividing tube outlet aperture third portion 4010.

In various embodiments, the dividing tube outlet aperture first portion 4006, the dividing tube outlet aperture second portion 4008, and the dividing tube outlet aperture third portion 4010 are staggered relative to one another along the dividing tube body 1302 (e.g., angularly offset along the circumference of the dividing tube body 1302, etc.). As a result of this staggering, the dividing tube outlet aperture first portion 4006, the dividing tube outlet aperture second portion 4008, and the dividing tube outlet aperture third portion 4010 are each located differently with respect to the mixing collector wall 226. For example, the dividing tube outlet aperture first portion 4006 may be located such that 80% or more of the dividing tube outlet aperture first portion 4006 is located between the mixing collector wall 226 and the outer housing wall 232 and 20% or less of the dividing tube outlet aperture first portion 4006 is located between the mixing collector wall 226 and the transfer assembly housing wall 218. The dividing tube outlet aperture second portion 4008 may be located such that 50% or more of the dividing tube outlet aperture second portion 4008 is located between the mixing collector wall 226 and the outer housing wall 232 and 50% or less of the dividing tube outlet aperture second portion 4008 is located between the mixing collector wall 226 and the transfer assembly housing wall 218. The dividing tube outlet aperture third portion 4010 may be located such that 20% or more of the dividing tube outlet aperture third portion 4010 is located between the mixing collector wall 226 and the outer housing wall 232 and 80% or less of the dividing tube outlet aperture third portion 4010 is located between the mixing collector wall 226 and the transfer assembly housing wall 218.

In various embodiments, the second duct 1320, the fourth duct 4000, and the fifth duct 4002 are staggered relative to one another along the dividing tube body 1302 (e.g., angularly offset along the circumference of the dividing tube body 1302, etc.). As a result of this staggering, the second duct 1320, the fourth duct 4000, and the fifth duct 4002 are each located differently with respect to the mixing collector wall 226. For example, the second duct 1320 may be located such that 90% or more of the second duct 1320 is located between the mixing collector wall 226 and the outer housing wall 232 and 10% or less of the second duct 1320 is located between the mixing collector wall 226 and the transfer assembly housing wall 218. The fourth duct 4000 may be located such that 80% or more of the fourth duct 4000 is located between the mixing collector wall 226 and the outer housing wall 232 and 20% or less of the fourth duct 4000 is located between the mixing collector wall 226 and the transfer assembly housing wall 218. The fifth duct 4002 may be located such that 60% or more of the fifth duct 4002 is located between the mixing collector wall 226 and the outer housing wall 232 and 40% or less of the fifth duct 4002 is located between the mixing collector wall 226 and the transfer assembly housing wall 218.

By shaping the dividing tube outlet aperture 1318 in this manner, a greater proportion of the exhaust gas can be provided from the dividing tube outlet aperture 1318 to the SCR catalyst members 216 proximate the injection region 314 and a lesser proportion of the exhaust gas can be provided from the dividing tube outlet aperture 1318 to the SCR catalyst members 216 proximate the dividing tube flange 1303. The exhaust gas provided from the dividing tube flange transfer perforations 1334 can supplement the exhaust gas provided from the dividing tube outlet aperture 1318 to the SCR catalyst members 216 proximate the dividing tube flange 1303 such that the amount of exhaust gas provided to each of the SCR catalyst members 216 is substantially the same.

### XIX. Example Decomposition Chamber Having a Sixteenth Example Mixing Assembly

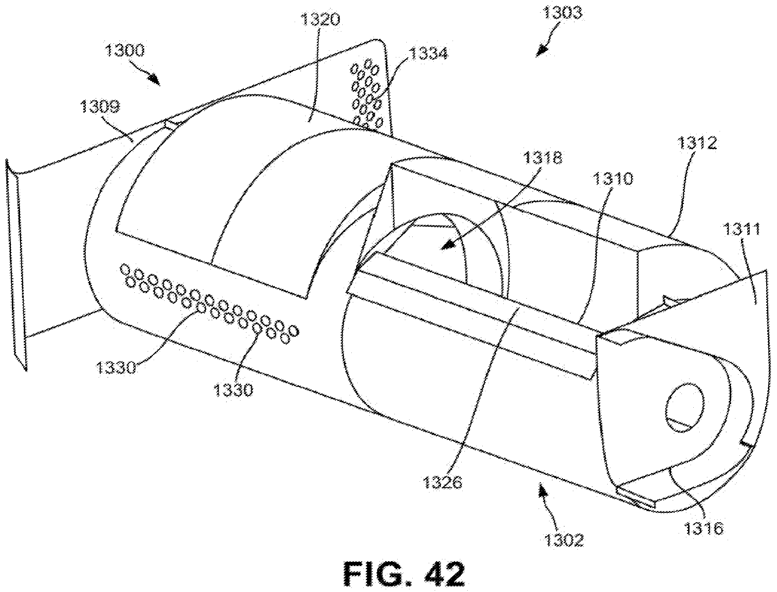

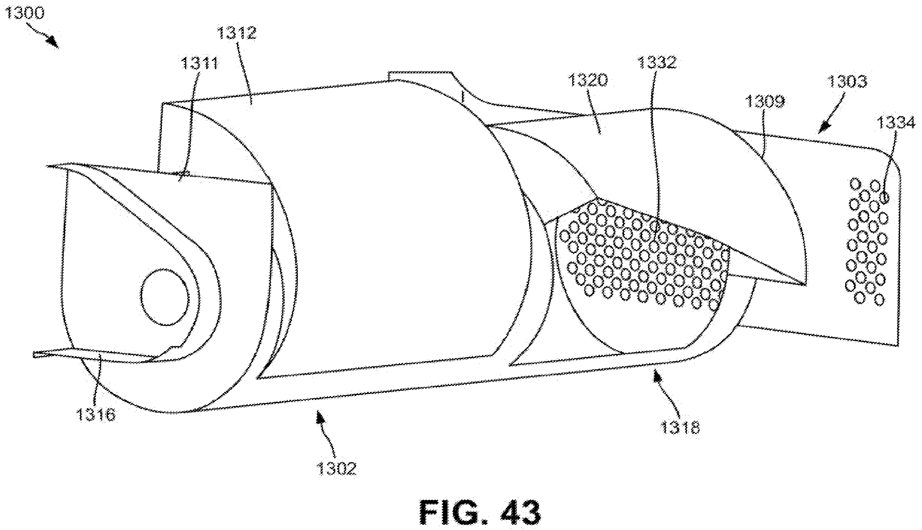

Figures 42-43 illustrate the decomposition chamber 108 described in Figures 13-17 according to another embodiment. In Figures 42-43, the dividing tube body 1302 does not include the third duct 1328. The dividing tube outlet aperture 1318 is trapezoidal with a larger side positioned proximate the injection region 314 and a smaller side positioned proximate the dividing tube flange 1303. In this way, the dividing tube outlet aperture 1318 gradually decreases in width at gradually greater distances from the injection region 314. By shaping the dividing tube outlet aperture 1318 in this manner, a greater proportion of the exhaust gas can be provided from the dividing tube outlet aperture 1318 to the SCR catalyst members 216 proximate the injection region 314 and a lesser proportion of the exhaust gas can be provided from the dividing tube outlet aperture 1318 to the SCR catalyst members 216 proximate the dividing tube flange 1303. The exhaust gas provided from the dividing tube flange transfer perforations 1334 can supplement the exhaust gas provided from the dividing tube outlet aperture 1318 to the SCR catalyst members 216 proximate the dividing tube flange 1303 such that the amount of exhaust gas provided to each of the SCR catalyst members 216 is substantially the same.

### XX. Example Decomposition Chamber Having a Seventeenth Example Mixing Assembly

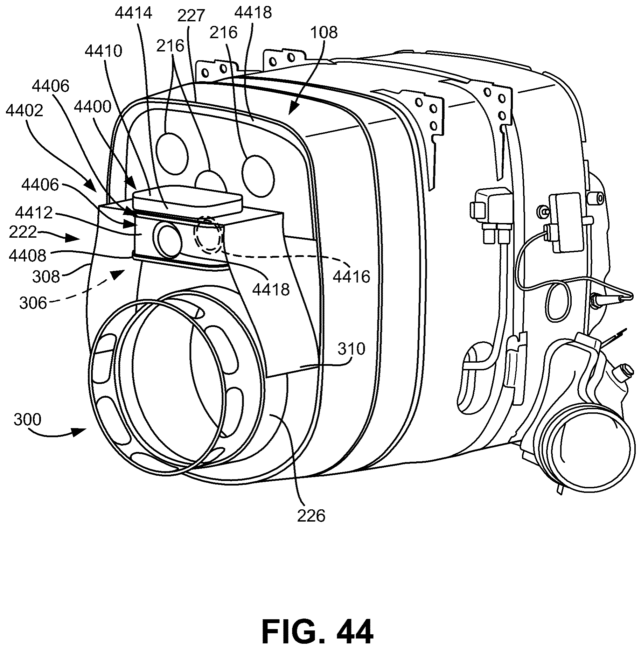

Figure 44 illustrates the decomposition chamber 108 and the mixing assembly 222 according to another example embodiment. The decomposition chamber 108 includes the distribution cap 300 as described herein. The decomposition chamber 108 also includes a manifold 4400 (e.g., plenum, etc.). As is explained in more detail herein, the manifold 4400 is configured to facilitate mixing of the exhaust gas and the reductant and provision of the exhaust gas and the reductant to the SCR catalyst members 216.

The mixing collector 224 also includes a manifold wall 4402 (e.g., panel, body, etc.). The manifold wall 4402 is coupled to the mixing collector wall 226 and the outer housing wall 232. The mixing collector 224 also includes the first concentration wall 308 and the second concentration wall 310 as described herein. The first concentration wall 308 and the second concentration wall 310 are each coupled to the manifold wall 4402. As a result, the concentration cavity 306 is defined between the distribution cap wall 304, the mixing collector wall 226, the mixing assembly wall 230, the outer housing wall 232, the first concentration wall 308, the second concentration wall 310, and the manifold wall 4402.

The manifold wall 4402 includes a manifold wall aperture 4404 (e.g., hole, opening, etc.). The manifold wall aperture 4404 facilitates flow of the exhaust gas and the reductant through the manifold wall 4402. The manifold 4400 includes a manifold body 4406 (e.g., frame, shell, casing, etc.). The manifold body 4406 is disposed within the manifold wall aperture 4404 and is coupled to the manifold wall 4402 around the manifold wall aperture 4404. In some embodiments, the manifold body 4406 is stadium-shaped.

In various embodiments, the manifold wall aperture 4404 is located such that the manifold body 4406 is separated from the mixing collector wall 226, the outer housing wall 232, the first concentration wall 308, and the second concentration wall 310 around an entirety of the manifold body 4406. As a result, the exhaust gas may either flow into the manifold body 4406 or may flow around the manifold body 4406. By flowing around the manifold body 4406, a temperature of the manifold body 4406 may be increased such that formation of deposits on the manifold body 4406 is mitigated.

The manifold body 4406 includes a manifold body inlet 4408 (e.g., aperture, hole, opening, etc.). The manifold body inlet 4408 receives the exhaust gas (e.g., from the distribution cap 300, etc.) and provides the exhaust gas into the manifold body 4406. The manifold body 4406 includes a manifold body outlet 4410 (e.g., aperture, hole, opening, etc.). The manifold body outlet 4410 receives the exhaust gas (e.g., from within the manifold body 4406, etc.) and provides the exhaust gas out of the manifold body 4406 and towards the SCR catalyst members 216.

The manifold body 4406 also includes a manifold body upstream portion 4412. The manifold body upstream portion 4412 is located upstream of the manifold wall 4402 and is separated from the mixing collector wall aperture 227 by the manifold wall 4402. The manifold body 4406 also includes a manifold body downstream portion 4414. The manifold body downstream portion 4414 is located downstream of the manifold wall 4402 and is separated from the distribution cap 300 by the manifold wall 4402. The manifold wall 4402 divides the manifold body 4406 into the manifold body upstream portion 4412 and the manifold body downstream portion 4414. In various embodiments, the manifold body upstream portion 4412 is larger than the manifold body downstream portion 4414. For example, a distance between a leading edge of the manifold body upstream portion 4412 and the manifold wall 4402 may be larger than a distance between a trailing edge of the manifold body downstream portion 4414 and the manifold wall 4402.

The manifold body 4406 also includes a manifold body mixing assembly housing aperture 4416 (e.g., hole, opening, etc.). The manifold body mixing assembly housing aperture 4416 is disposed in the manifold body upstream portion 4412 and is in confronting relation with the mixing collector wall 226. The manifold body mixing assembly housing aperture 4416 facilitates flow of the exhaust gas into the manifold body 4406 independent of the manifold body inlet 4408. As a result, exhaust gas flowing between the manifold body upstream portion 4412 and the mixing collector wall 226 (e.g., exhaust gas that did not flow into the manifold body inlet 4408, etc.) may flow into the manifold body 4406 via the manifold body mixing assembly housing aperture 4416. In this way, the manifold body mixing assembly housing aperture 4416 may decrease a backpressure of the decomposition chamber 108.

The manifold body 4406 also includes a manifold body outer housing aperture 4418 (e.g., hole, opening, etc.). The manifold body outer housing aperture 4418 is disposed in the manifold body upstream portion 4412 and is in confronting relation with the outer housing wall 232. In various embodiments, a diameter of the manifold body outer housing aperture 4418 is equal to a diameter of the manifold body mixing assembly housing aperture 4416.

Rather than being coupled to the mixing assembly wall 230, as in other embodiments, the injector coupler 234 is coupled to the outer housing wall 232. The injector coupler 234 is aligned with the manifold body outer housing aperture 4418 such that reductant from the injector 120 and/or the dosing module 112 is provided into the manifold body 4406 via the manifold body outer housing aperture 4418.

The manifold body mixing assembly housing aperture 4416 may be aligned with the manifold body outer housing aperture 4418. In this way, reductant provided from the injector 120 and/or the dosing module 112 may be provided towards the manifold body mixing assembly housing aperture 4416. The exhaust gas entering the manifold body 4406 via the manifold body mixing assembly housing aperture 4416 may mitigate formation of deposits on the manifold body 4406 (e.g., by flowing against the reductant provided by the injector 120 and/or the dosing module 112, etc.).

In some embodiments, the exhaust gas does not flow into the manifold body 4406 via the manifold body outer housing aperture 4418. Instead, only reductant flows into the manifold body 4406 via the manifold body outer housing aperture 4418. In these embodiments, the injector 120 and/or the dosing module 112 may be coupled to the manifold body upstream portion 4412 around the manifold body outer housing aperture 4418. The exhaust gas flowing into the manifold body 4406 via the manifold body mixing assembly housing aperture 4416 may mitigate deposit formation on the manifold body 4406.

In some embodiments, the exhaust gas flows into the manifold body 4406 via the manifold body outer housing aperture 4418 and the reductant flows into the manifold body 4406 via the manifold body outer housing aperture 4418. In these embodiments, the manifold body outer housing aperture 4418 facilitates flow of the exhaust gas into the manifold body 4406 independent of the manifold body inlet 4408. As a result, exhaust gas flowing between the manifold body upstream portion 4412 and the outer housing wall 232 (e.g., exhaust gas that did not flow into the manifold body inlet 4408 or the manifold body outer housing aperture 4418, etc.) may flow into the manifold body 4406 via the manifold body outer housing aperture 4418. In this way, the manifold body outer housing aperture 4418 may decrease a backpressure of the decomposition chamber 108. The exhaust gas flowing into the manifold body 4406 via the manifold body outer housing aperture 4418 may assist (e.g., propel, guide, etc.) the reductant in flowing into the manifold body 4406 via the manifold body outer housing aperture 4418. For example, the decomposition chamber 108 may also include an exhaust assist guide (e.g., cone, etc.) which is coupled to the manifold body upstream portion 4412 around the manifold body outer housing aperture 4418 and which includes apertures (e.g., perforations, openings, louvers, etc.) which facilitate flow of the exhaust gas into the exhaust assist guide for propelling the reductant into the manifold body 4406.

The decomposition chamber 108 also includes a concentrating flange 4420. The concentrating flange 4420 is coupled to the housing body 236 and/or the mixing collector wall 226. The concentrating flange extends around at least a portion of the mixing collector wall aperture 227 and is configured to direct the exhaust gas flowing from the manifold body outlet 4410 towards the SCR catalyst members 216. The concentrating flange 4420 is rounded and/or tapered away from the housing body 236 and towards the SCR catalyst members 216. In this way, formation of deposits downstream of the manifold body outlet 4410 and upstream of the SCR catalyst members 216 (e.g., on the housing body 236, etc.) is mitigated.

### XXI. Example Decomposition Chamber Having an Eighteenth Example Mixing Assembly

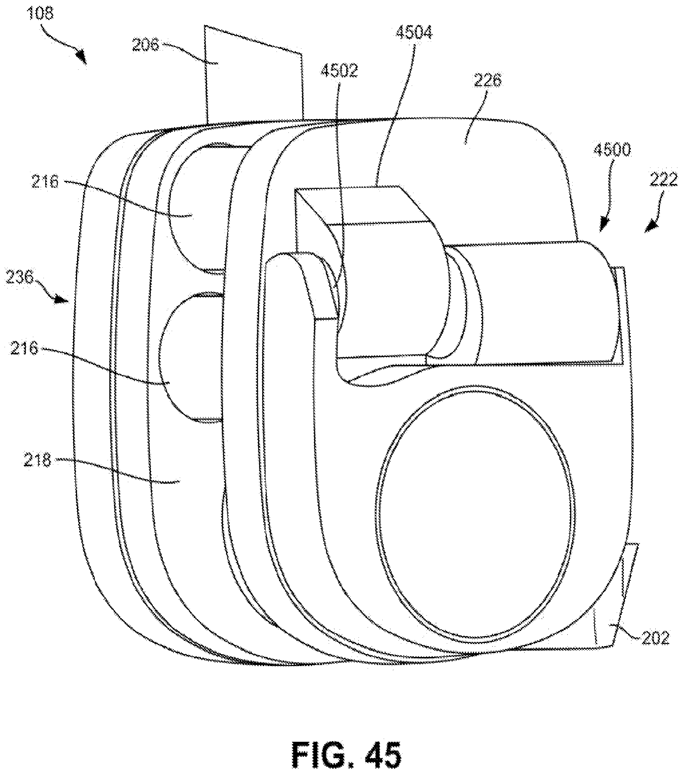

Figure 45 illustrates the decomposition chamber 108 and the mixing assembly 222 according to another example embodiment. The decomposition chamber 108 includes the distribution cap 300 as described herein. The decomposition chamber 108 also includes a dividing tube 4500. The dividing tube 4500 may be similar to, for example, the dividing tube 2800 as previously described. The dividing tube 4500 includes a first end 4502 that receives all of the exhaust gas and a second end 4504 that provides all of the exhaust gas to the SCR catalyst members 216.

### XXII. Example Decomposition Chamber Having a Nineteenth Example Mixing Assembly

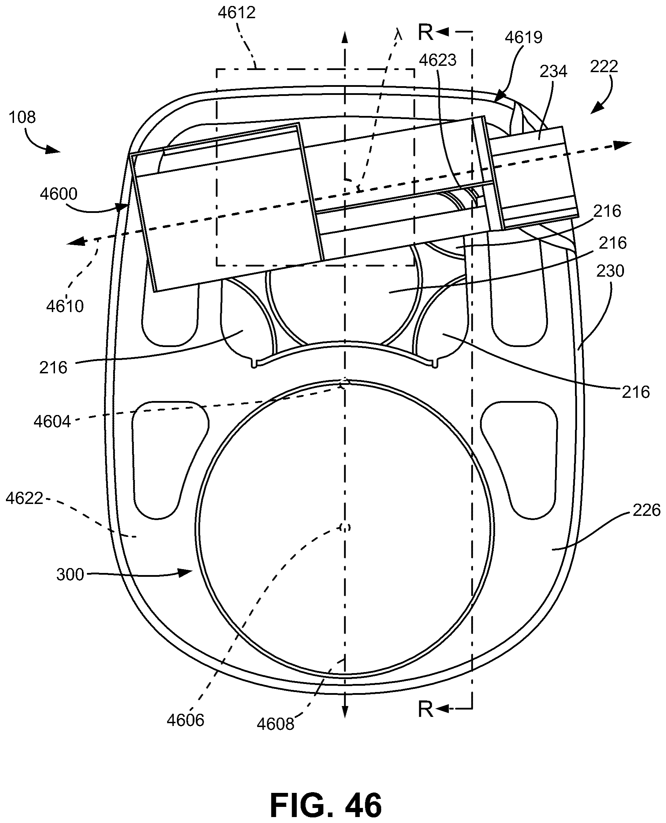

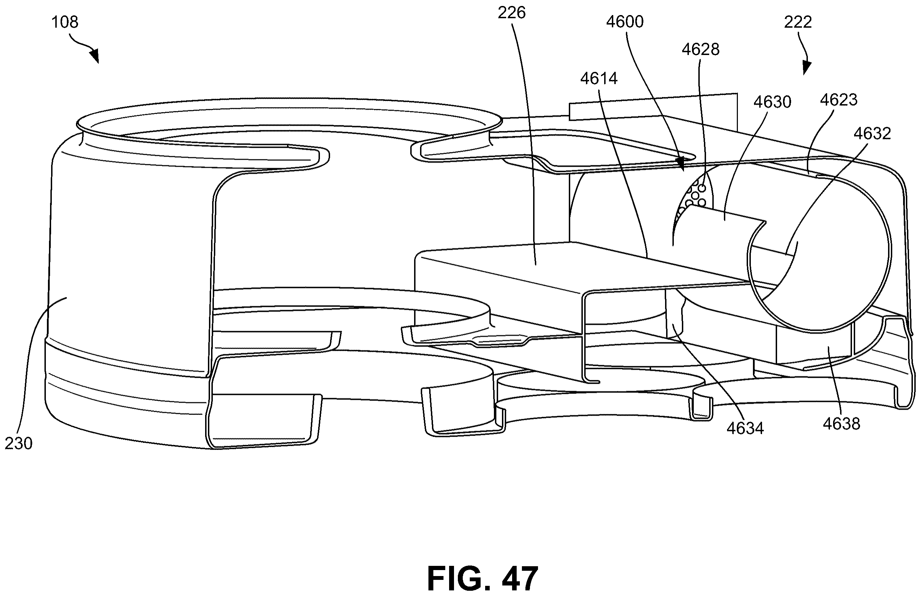

Figures 46 and 47 illustrate the decomposition chamber 108 and the mixing assembly 222 according to another example embodiment. The decomposition chamber 108 includes the distribution cap 300 as described herein. The decomposition chamber 108 also includes a dividing tube 4600. The dividing tube 4600 may be similar to, for example, the dividing tube 2800 as previously described. For example, the dividing tube 4600 may also include the dividing tube dividing wall 2820 and/or the dividing tube guide 2822.

The dividing tube 4600 includes a dividing tube body 4602 (e.g., frame, shell, etc.). The dividing tube body 4602 is generally cylindrical, oval, or oblong. In various embodiments, the dividing tube body 4602 is coupled to the mixing assembly wall 230 (e.g., such that flow of the exhaust gas between the dividing tube body 4602 and the mixing assembly wall 230 is substantially prohibited, etc.) and/or the mixing collector wall 226 (e.g., such that flow of the exhaust gas between the dividing tube body 4602 and the mixing collector wall 226 is substantially prohibited, etc.). In various embodiments, the dividing tube body 4602 is separated from the outer housing wall 232 (e.g., such that flow of the exhaust gas between the dividing tube body 4602 and the outer housing wall 232 is facilitated, etc.).

The decomposition chamber 108 is centered on a decomposition chamber axis 4604 (e.g., center axis, etc.). The exhaust gas flowing within the decomposition chamber 108 may travel within the decomposition chamber 108 along a direction that is approximately parallel to (e.g., within 5% of parallel to, parallel to, etc.) the decomposition chamber axis 4604. The decomposition chamber axis 4604 extends through the communication assembly housing wall 212, the housing body 236, the transfer assembly housing wall 218, the mixing collector wall 226, and the outer housing wall 232.

The distribution cap 300 is centered on a distribution cap axis 4606 (e.g., center axis, etc.). The distribution cap axis 4606 extends through the communication assembly housing wall 212, the housing body 236, the transfer assembly housing wall 218, the mixing collector wall 226, and the outer housing wall 232. The distribution cap axis 4606 and the decomposition chamber axis 4604 extend along a decomposition chamber plane 4608. The decomposition chamber plane 4608 bisects the decomposition chamber 108.

The dividing tube body 4602 is centered on a dividing tube body axis 4610 (e.g., center axis, etc.). The exhaust gas flowing within the dividing tube body 4602 may travel within the dividing tube body 4602 along a direction that is approximately parallel to the dividing tube body axis 4610. In various embodiments, the dividing tube body axis 4610 extends through the mixing assembly wall 230. In some embodiments, the dividing tube body axis 4610 extends through the housing body 236.

The dividing tube body axis 4610 intersects the decomposition chamber plane 4608. The dividing tube body axis 4610 and the decomposition chamber plane 4608 extend along a dividing tube plane 4612. In various embodiments, at least one of the decomposition chamber axis 4604 or the distribution cap axis 4606 is orthogonal to the dividing tube plane 4612. When measured on the dividing tube plane 4612, the dividing tube body axis 4610 is separated from the decomposition chamber plane 4608 by an angular separation λ. In various embodiments, the angular separation λ is not equal to 90 degrees (°). In various embodiments, the angular separation λ is equal to between approximately 5° and 30°, inclusive (e.g., 4.5°, 5°, 10°, 15°, 20°, 25°, 30°, 32°, etc.).

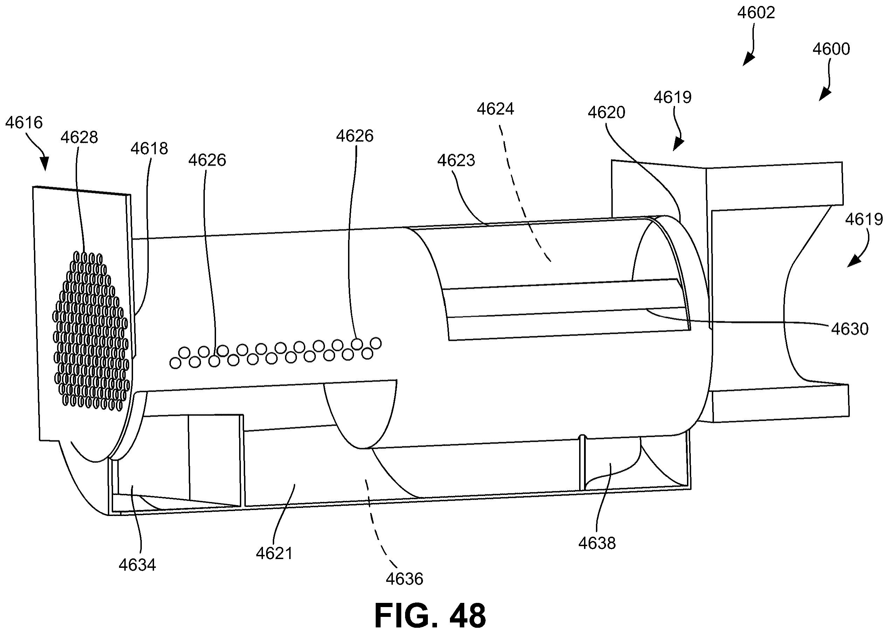

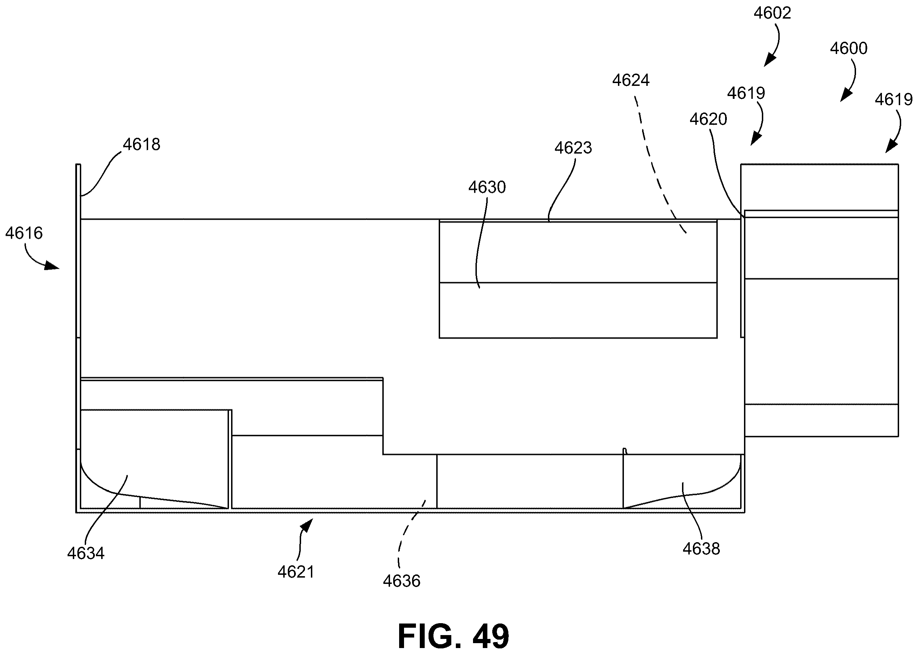

The dividing tube 4600 is shown in more detail in Figures 48 and 49. The dividing tube body 4602 may be positioned within a dividing tube coupler aperture 4614 (e.g., hole, opening, etc.) in the mixing collector wall 226 (e.g., the mixing collector wall 226 is disposed along a plane which bisects the dividing tube body 4602, etc.). The dividing tube body 4602 may be coupled to the mixing collector wall 226 around the dividing tube coupler aperture 4614.

The dividing tube 4600 also includes a first dividing tube flange 4616 (e.g., wall, divider, etc.). The first dividing tube flange 4616 is coupled (e.g., a first portion of the first dividing tube flange 4616 is coupled to, etc.) to a first end 4618 of the dividing tube body 4602 (e.g., such that flow of the exhaust gas between the first end 4618 and the first dividing tube flange 4616 is substantially prohibited, etc.). The first dividing tube flange 4616 is also coupled to the mixing collector wall 226 (e.g., such that flow of the exhaust gas between the mixing collector wall 226 and the first dividing tube flange 4616 is substantially prohibited, etc.).

In various embodiments, the first dividing tube flange 4616 is coupled to the mixing collector wall 226 along the dividing tube coupler aperture 4614 (e.g., along a side of the dividing tube coupler aperture 4614, etc.). In various embodiments, the first dividing tube flange 4616 is not positioned within the dividing tube coupler aperture 4614.

The dividing tube 4600 also includes a second dividing tube flange 4619 (e.g., wall, divider, etc.). The second dividing tube flange 4619 is coupled (e.g., a first portion of the second dividing tube flange 4619 is coupled to, etc.) to a second end 4620 of the dividing tube body 4602 (e.g., such that flow of the exhaust gas between the second end 4620 and the second dividing tube flange 4619 is substantially prohibited, etc.). The second end 4620 is opposite the first end 4618. The second dividing tube flange 4619 is also coupled to the mixing collector wall 226 (e.g., such that flow of the exhaust gas between the mixing collector wall 226 and the second dividing tube flange 4619 is substantially prohibited, etc.).

The first end 4618 may include tabs that are configured to be received within slots within the first dividing tube flange 4616 to facilitate coupling of the dividing tube body 4602 to the first dividing tube flange 4616. The second end 4620 may include tabs that are configured to be received within slots within the second dividing tube flange 4619 to facilitate coupling of the dividing tube body 4602 to the second dividing tube flange 4619.

In various embodiments, the second dividing tube flange 4619 is coupled to the mixing collector wall 226 along the dividing tube coupler aperture 4614 (e.g., along a side of the dividing tube coupler aperture 4614, etc.). In various embodiments, the second dividing tube flange 4619 is not positioned within the dividing tube coupler aperture 4614.

The dividing tube 4600 also includes a dividing tube collector 4621 (e.g., scoop, panel, etc.). The dividing tube collector 4621 is coupled to the mixing collector wall 226 (e.g., such that flow of the exhaust gas between the mixing collector wall 226 and the dividing tube collector 4621 is substantially prohibited, etc.) such that a portion of the dividing tube body 4602 is positioned within and/or adjacent to the dividing tube collector 4621.

In various embodiments, the dividing tube collector 4621 is coupled to the mixing collector wall 226 along the dividing tube coupler aperture 4614 (e.g., along a side of the dividing tube coupler aperture 4614, etc.). In various embodiments, the dividing tube collector 4621 is not positioned within the dividing tube coupler aperture 4614.

The dividing tube 4600 establishes a concentration cavity 4622. The concentration cavity 4622 is defined between the mixing collector wall 226, the distribution cap wall 304, the outer housing wall 232, the mixing assembly wall 230, the dividing tube body 4602, the first dividing tube flange 4616, the dividing tube endplate 2812, and the second dividing tube flange 4619.

After flowing out of the distribution cap 300 (e.g., via the distribution cap aperture 302), the exhaust gas enters the dividing tube body 4602 in one of a variety of different ways.

First, the exhaust gas may enter the dividing tube body 4602 via a dividing tube inlet aperture 4623 (e.g., hole, opening, etc.) formed in the dividing tube body 4602. After flowing through the dividing tube inlet aperture 4623, the exhaust gas enters a dividing tube cavity 4624 defined by the dividing tube body 4602.

Second, the exhaust gas may enter the dividing tube body 4602 via a dividing tube body perforation 4626 (e.g., hole, aperture, opening, etc.) formed in the dividing tube body 4602. The dividing tube body 4602 includes a plurality of the dividing tube body perforations 4626. According to various embodiments, each of the dividing tube body perforations 4626 is positioned between the dividing tube inlet aperture 4623 and the first dividing tube flange 4616. After flowing through the dividing tube body perforation 4626, the exhaust gas enters the dividing tube cavity 4624.

Third, the exhaust gas may enter the dividing tube body 4602 via a first dividing tube flange perforation 4628 (e.g., hole, aperture, opening, etc.). The first dividing tube flange 4616 includes a plurality of the first dividing tube flange perforations 4628. According to various embodiments, each of the first dividing tube flange perforations 4628 is at least partially circumscribed by (e.g., encircled, bordered by, surrounded by, etc.) the first end 4618. After flowing through the first dividing tube flange perforations 4628, the exhaust gas enters the dividing tube cavity 4624.

Fourth, the exhaust gas may enter the dividing tube body 4602 via a second dividing tube flange aperture (e.g., hole, opening, etc.). The second dividing tube flange aperture is at least partially circumscribed by (e.g., encircled, bordered by, surrounded by, etc.) the second end 4620. After flowing through the second dividing tube flange aperture, the exhaust gas enters the dividing tube cavity 4624.

The dividing tube inlet aperture 4623 is sized and positioned so as to provide more exhaust gas into the dividing tube cavity 4624 than the dividing tube body perforations 4626, the first dividing tube flange perforations 4628, and the second dividing tube flange aperture combined. At least a portion of the dividing tube inlet aperture 4623 is located proximate the outer housing wall 232. As a result, the exhaust gas flowing through the dividing tube inlet aperture 4623 enters the dividing tube cavity 4624 radially (e.g., along a tangent of the dividing tube body 4602, along a line that is parallel to and offset from a tangent of the dividing tube body 4602, etc.). This radial entry causes the exhaust gas to swirl within the dividing tube cavity 4624. The swirl imparted by the dividing tube inlet aperture 4623 facilitates mixing of the exhaust gas and the reductant within the dividing tube cavity 4624 and ensures shear on the dividing tube body 4602 is relatively high, thereby mitigating impingement of the reductant on the dividing tube body 4602.

The mixing assembly wall 230 includes the injector coupler 234. The dividing tube 4600 is positioned such that the injector coupler 234 is aligned with the second dividing tube flange aperture and spaced from the second dividing tube flange 4619. As a result, the injection region 314 is located within the dividing tube cavity 4624 and the concentration cavity 4622. As a result, the exhaust gas flowing through the second dividing tube flange aperture propels reductant provided by the dosing module 112 into the dividing tube cavity 4624.

In various embodiments, the dividing tube body 4602 includes a shield 4630 (e.g., wall, projection, etc.). The shield 4630 is contiguous with the dividing tube inlet aperture 4623 and extends into the dividing tube cavity 4624 (e.g., the shield 4630 is bent inward relative to the dividing tube body 4602, etc.). The shield 4630 functions to mitigate non-radial flow of the exhaust gas into the dividing tube cavity 4624 via the dividing tube inlet aperture 4623.

The exhaust gas exits the dividing tube cavity 4624 via a dividing tube outlet aperture 4632 and flows towards the SCR catalyst members 216. The exhaust gas flowing out of the dividing tube outlet aperture 4632 flows between the dividing tube body 4602, the first dividing tube flange 4616, and the second dividing tube flange 4619 (e.g., into a recess formed by the dividing tube body 4602, the first dividing tube flange 4616, and the second dividing tube flange 4619 in the mixing collector wall 226). The dividing tube body 4602, the first dividing tube flange 4616, and the second dividing tube flange 4619 create a volume within which the exhaust gas exiting the dividing tube outlet aperture 4632 can expand, thereby minimizing backpressure of the decomposition chamber 108, facilitating increased UI of the reductant and exhaust gas, and facilitating increased flow distribution index of the exhaust gas.

In some embodiments, the dividing tube body 4602, the first dividing tube flange 4616, and the second dividing tube flange 4619 are variously shaped, sized, or otherwise configured to direct the exhaust gas towards the SCR catalyst members 216 and/or distribute the exhaust gas between the SCR catalyst members 216 (e.g., with a target distribution profile, etc.).

The dividing tube collector 4621 includes a first dividing tube collector vane 4634 (e.g., guide, etc.). The first dividing tube collector vane 4634 is disposed proximate the first end 4618. The first dividing tube collector vane 4634 is configured to direct the exhaust gas from a dividing tube collector cavity 4636 defined by the dividing tube collector 4621. Specifically, the first dividing tube collector vane 4634 is configured to direct the exhaust gas away from the first end 4618.

The dividing tube collector 4621 also includes a second dividing tube collector vane 4638 (e.g., guide, etc.). The second dividing tube collector vane 4638 is disposed proximate the second end 4620. The second dividing tube collector vane 4638 is configured to direct the exhaust gas from the dividing tube collector cavity 4636. Specifically, the second dividing tube collector vane 4638 is configured to direct the exhaust gas away from the second end 4620.

The dividing tube outlet aperture 4632 is positioned proximate the first end 4618. As a result, straight flow (e.g., flow without swirling, etc.) of the exhaust gas from the dividing tube inlet aperture 4623 to the dividing tube outlet aperture 4632 is substantially prevented, thereby ensuring that substantially all of the exhaust gas that exits the dividing tube outlet aperture 4632 is first swirled by the dividing tube body 4602. Furthermore, due to the dividing tube inlet aperture 4623 being positioned proximate the second end 4620 and the dividing tube outlet aperture 4632 being positioned proximate the first end 4618, a distance between the dividing tube inlet aperture 4623 and the dividing tube outlet aperture 4632 may be maximized, thereby increasing the amount of time that the exhaust gas is retained within the dividing tube cavity 4624 which correspondingly increases mixing of the reductant in the exhaust gas and the UI.

The dividing tube body perforations 4626 are disposed on an upstream surface of the dividing tube body 4602 (e.g., adjacent the concentration cavity 4622, etc.). In some embodiments, at least some of the dividing tube body perforations 4626 are aligned with the dividing tube outlet aperture 4632. In operation, the dividing tube body perforations 4626 facilitate passage of the exhaust gas through the dividing tube body 4602 and into the dividing tube cavity 4624 without passing through the dividing tube inlet aperture 4623. As a result, the backpressure of the decomposition chamber 108 may be decreased. Furthermore, the exhaust gas flowing through the dividing tube body perforations 4626 functions to heat the dividing tube body 4602, thereby mitigating impingement of the reductant on the dividing tube body 4602. By aligning at least some of the dividing tube body perforations 4626 with the dividing tube outlet aperture 4632, the exhaust gas flowing within the dividing tube cavity 4624 may be propelled out of the dividing tube outlet aperture 4632, thereby decreasing the backpressure of the decomposition chamber 108 and increasing the UI of the exhaust gas.

The first dividing tube flange perforations 4628 are disposed on a portion of the first dividing tube flange 4616 that is opposite the dividing tube cavity 4624 (e.g., are located opposite the first end 4618, etc.). In operation, the first dividing tube flange perforation 4628 facilitate passage of the exhaust gas (e.g., exhaust gas that has flowed between the mixing assembly wall 230 and the first dividing tube flange 4616, etc.) through the first dividing tube flange 4616 and into the dividing tube cavity 4624 without passing through the dividing tube inlet aperture 4623 or the dividing tube body perforations 4626. As a result, the backpressure of the decomposition chamber 108 may be decreased. Furthermore, the exhaust gas flowing through the first dividing tube flange perforation 4628 functions to heat the first end 4618, thereby mitigating impingement of the reductant on the first end 4618. The exhaust gas flowing through the first dividing tube flange perforation 4628 may also be useful in redirecting the exhaust gas flowing within the dividing tube cavity 4624 towards the dividing tube outlet aperture 4632, thereby decreasing the backpressure of the decomposition chamber 108 and increasing the UI of the exhaust gas.

### XXIII. Example Decomposition Chamber Having a Twentieth Example Mixing Assembly

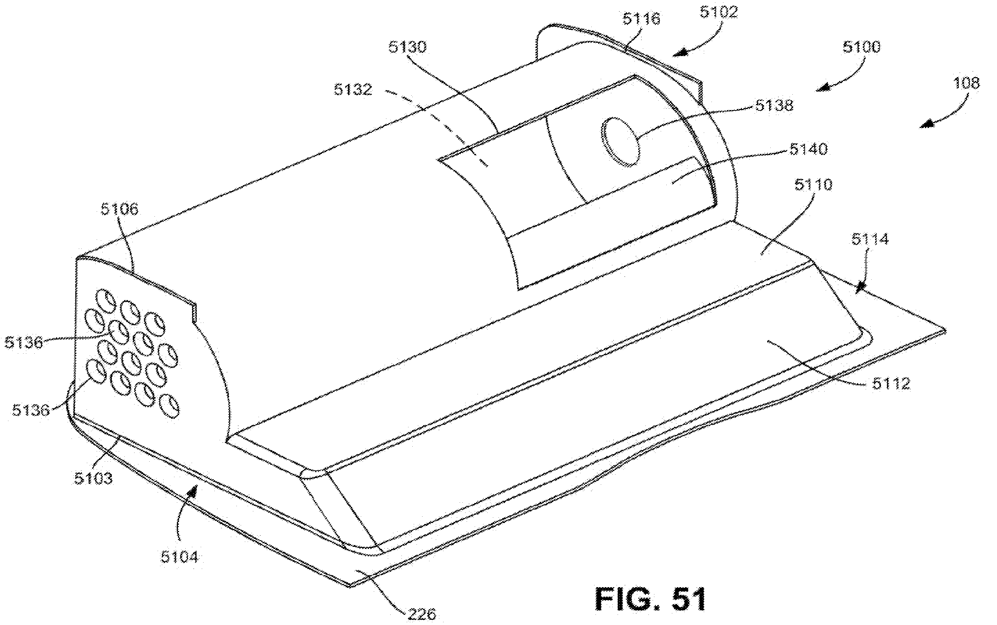

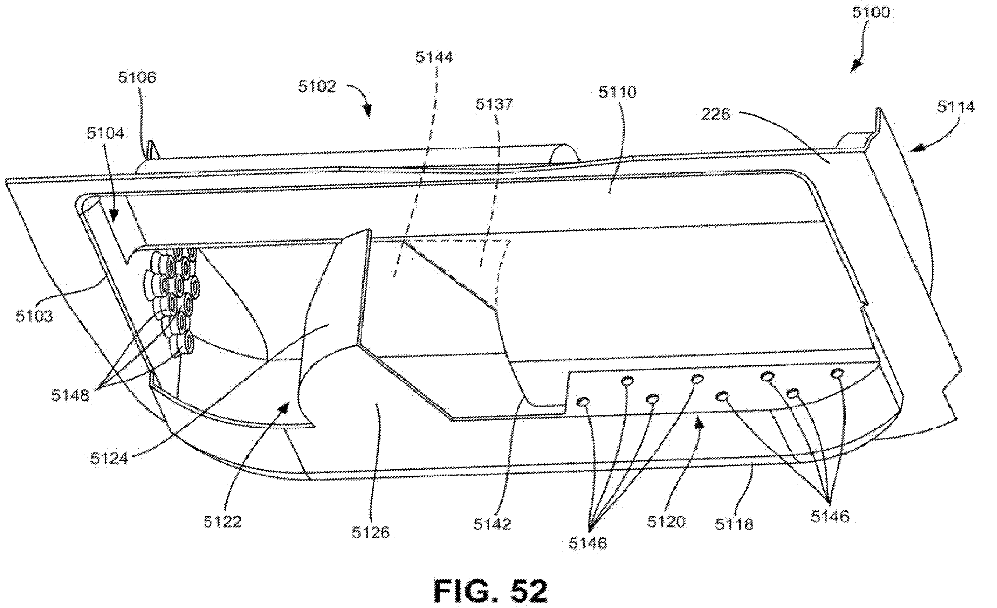

Figures 51 and 52 illustrate a dividing tube 5100 for the decomposition chamber 108 according to various embodiments. The dividing tube 5100 may be implemented in the decomposition chamber 108 in place of any of the dividing tubes previously described, such as the dividing tube 800, the dividing tube 1300, the dividing tube 2800, the dividing tube 4500, or the dividing tube 4600.

The dividing tube 5100 includes a dividing tube body 5102 (e.g., frame, shell, etc.). The dividing tube body 5102 is generally cylindrical, oval, or oblong. In various embodiments, the dividing tube body 5102 is coupled to the mixing assembly wall 230 (e.g., such that flow of the exhaust gas between the dividing tube body 5102 and the mixing assembly wall 230 is substantially prohibited, etc.) and/or the mixing collector wall 226 (e.g., such that flow of the exhaust gas between the dividing tube body 5102 and the mixing collector wall 226 is substantially prohibited, etc.). In various embodiments, the dividing tube body 5102 is separated from the outer housing wall 232 (e.g., such that flow of the exhaust gas between the dividing tube body 5102 and the outer housing wall 232 is facilitated, etc.).

The dividing tube body 5102 is coupled to the mixing collector wall 226 around a dividing tube coupler aperture 5103 (e.g., hole, opening, etc.) in the mixing collector wall 226. In some embodiments, the dividing tube body 5102 is positioned within the dividing tube coupler aperture 5103 (e.g., the mixing collector wall 226 is disposed along a plane which bisects the dividing tube body 5102, etc.). In other embodiments, the dividing tube body 5102 is in confronting relation with the dividing tube coupler aperture 5103.

The dividing tube 5100 also includes a first dividing tube flange 5104 (e.g., wall, divider, etc.). The first dividing tube flange 5104 is coupled (e.g., a first portion of the first dividing tube flange 5104 is coupled to, etc.) to a first end 5106 of the dividing tube body 5102 (e.g., such that flow of the exhaust gas between the first end 5106 and the first dividing tube flange 5104 is substantially prohibited, etc.). The first dividing tube flange 5104 is also coupled to the mixing collector wall 226 (e.g., such that flow of the exhaust gas between the mixing collector wall 226 and the first dividing tube flange 5104 is substantially prohibited, etc.).

In various embodiments, the first dividing tube flange 5104 is coupled to the mixing collector wall 226 along the dividing tube coupler aperture 5103 (e.g., along a side of the dividing tube coupler aperture 5103, etc.). In various embodiments, the first dividing tube flange 5104 is not positioned within the dividing tube coupler aperture 5103.

In some embodiments, the dividing tube 5100 also includes a cap (e.g., panel, wall, divider, etc.). The cap is coupled to the first end 5106 (e.g., such that flow of the exhaust gas between the first end 5106 and the cap 5108 is substantially prohibited, etc.). The cap is also coupled to the first dividing tube flange 5104 (e.g., such that flow of the exhaust gas between the first dividing tube flange 5104 and the cap is substantially prohibited, etc.).

The dividing tube 5100 also includes a dividing tube panel 5110 (e.g., wall, divider, etc.). The dividing tube panel 5110 is coupled to the dividing tube body 5102 (e.g., such that flow of the exhaust gas between the dividing tube body 5102 and the dividing tube panel 5110 is substantially prohibited, etc.). The dividing tube panel 5110 is also coupled to the first dividing tube flange 5104 (e.g., such that flow of the exhaust gas between the first dividing tube flange 5104 and the dividing tube panel 5110 is substantially prohibited, etc.).

The dividing tube 5100 also includes a dividing tube endplate 5112 (e.g., panel, wall, divider, etc.). The dividing tube endplate 5112 is coupled to the dividing tube panel 5110 (e.g., such that flow of the exhaust gas between the dividing tube panel 5110 and the dividing tube endplate 5112 is substantially prohibited, etc.). In various embodiments, an edge between the dividing tube panel 5110 and the dividing tube endplate 5112 is rounded. As a result, recirculation zones may be decreased.

The dividing tube endplate 5112 is also coupled to the first dividing tube flange 5104 (e.g., such that flow of the exhaust gas between the first dividing tube flange 5104 and the dividing tube endplate 5112 is substantially prohibited, etc.). In various embodiments, an edge between the dividing tube endplate 5112 and the first dividing tube flange 5104 is rounded. As a result, recirculation zones may be decreased.

The dividing tube endplate 5112 is also coupled to the mixing collector wall 226 (e.g., such that flow of the exhaust gas between the mixing collector wall 226 and the dividing tube endplate 5112 is substantially prohibited, etc.). In various embodiments, an edge between the dividing tube endplate 5112 and the mixing collector wall 226 is rounded. As a result, recirculation zones may be decreased.

In various embodiments, the dividing tube endplate 5112 is disposed along a first plane and the dividing tube panel 5110 is disposed along a second plane that is separated from the first plane by an angular separation that is not equal to 90°. In various embodiments, the angular separation is equal to between approximately 20° and 70°, inclusive (e.g., 19°, 20°, 21°, 30°, 40°, 45°, 50°, 60°, 67°, 70°, 73°, etc.). In other embodiments, the angular separation is approximately equal to 90°.

In various embodiments, the dividing tube endplate 5112 is coupled to the mixing collector wall 226 along the dividing tube coupler aperture 5103 (e.g., along a side of the dividing tube coupler aperture 5103, etc.). In various embodiments, the dividing tube endplate 5112 is not positioned within the dividing tube coupler aperture 5103.

The dividing tube 5100 also includes a second dividing tube flange 5114 (e.g., wall, divider, etc.). The second dividing tube flange 5114 is coupled (e.g., a first portion of the second dividing tube flange 5114 is coupled to, etc.) to a second end 5116 of the dividing tube body 5102 (e.g., such that flow of the exhaust gas between the second end 5116 and the second dividing tube flange 5114 is substantially prohibited, etc.). The second end 5116 is opposite the first end 5106.

The second dividing tube flange 5114 is also coupled to the dividing tube panel 5110 (e.g., such that flow of the exhaust gas between the dividing tube panel 5110 and the second dividing tube flange 5114 is substantially prohibited, etc.). In various embodiments, an edge between the dividing tube panel 5110 and the second dividing tube flange 5114 is rounded. As a result, recirculation zones may be decreased.

The second dividing tube flange 5114 is also coupled to the mixing collector wall 226 (e.g., such that flow of the exhaust gas between the mixing collector wall 226 and the second dividing tube flange 5114 is substantially prohibited, etc.). In various embodiments, an edge between the mixing collector wall 226 and the second dividing tube flange 5114 is rounded. As a result, recirculation zones may be decreased.

The first end 5106 may include tabs that are configured to be received within slots within the first dividing tube flange 5104 to facilitate coupling of the dividing tube body 5102 to the first dividing tube flange 5104. The second end 5116 may include tabs that are configured to be received within slots within the second dividing tube flange 5114 to facilitate coupling of the dividing tube body 5102 to the second dividing tube flange 5114.

In various embodiments, the second dividing tube flange 5114 is coupled to the mixing collector wall 226 along the dividing tube coupler aperture 5103 (e.g., along a side of the dividing tube coupler aperture 5103, etc.). In various embodiments, the second dividing tube flange 5114 is not positioned within the dividing tube coupler aperture 5103.

The dividing tube 5100 also includes a dividing tube collector 5118 (e.g., scoop, panel, etc.). The dividing tube collector 5118 is coupled to the mixing collector wall 226 (e.g., such that flow of the exhaust gas between the mixing collector wall 226 and the dividing tube collector 5118 is substantially prohibited, etc.). In some embodiments, the dividing tube collector 5118 is coupled to the mixing collector wall 226 such that a portion of the dividing tube body 5102 is positioned within and/or adjacent to the dividing tube collector 5118.

In various embodiments, the dividing tube collector 5118 is coupled to the mixing collector wall 226 along the dividing tube coupler aperture 5103 (e.g., along a side of the dividing tube coupler aperture 5103, etc.). In various embodiments, the dividing tube collector 5118 is not positioned within the dividing tube coupler aperture 5103.

The dividing tube 5100 also includes a dividing tube dividing wall 5120 (e.g., flange, divider, etc.). The dividing tube dividing wall 5120 is coupled to the dividing tube body 5102 (e.g., such that flow of the exhaust gas between the dividing tube dividing wall 5120 and the dividing tube body 5102 is substantially prohibited, etc.). The dividing tube dividing wall 5120 is also coupled to the dividing tube collector 5118 (e.g., such that flow of the exhaust gas between the dividing tube dividing wall 5120 and the dividing tube collector 5118 is substantially prohibited, etc.). The dividing tube dividing wall 5120 may be positioned within the dividing tube coupler aperture 5103.

In various embodiments, the dividing tube 5100 also includes a dividing tube guide 5122 (e.g., scoop, vane, etc.). The dividing tube guide 5122 is configured to guide the exhaust gas flowing out of the dividing tube 5100 downstream. The dividing tube guide 5122 includes a dividing tube guide directing wall 5124 (e.g., flange, panel, etc.). The dividing tube guide directing wall 5124 is coupled to the dividing tube dividing wall 5120 (e.g., such that flow of the exhaust gas between the dividing tube guide directing wall 5124 and the dividing tube dividing wall 5120 is substantially prohibited, etc.). In various embodiments, the dividing tube guide directing wall 5124 is additionally coupled to the dividing tube body 5102 (e.g., such that flow of the exhaust gas between the dividing tube guide directing wall 5124 and the dividing tube body 5102 is substantially prohibited, etc.). The dividing tube guide directing wall 5124 may be positioned within the dividing tube coupler aperture 5103. In some embodiments, the dividing tube guide 5122 includes a plurality of dividing tube guide directing walls 5124, such that the exhaust gas may flow between adjacent dividing tube guide directing walls 5124. By including multiple dividing tube guide directing walls 5124, the dividing tube 5100 may provide an increased control over a flow of the exhaust gas.

In various embodiments, the dividing tube guide 5122 also includes a dividing tube guide dividing wall 5126 (e.g., flange, panel, etc.). The dividing tube guide dividing wall 5126 is coupled to the dividing tube guide directing wall 5124 (e.g., such that flow of the exhaust gas between the dividing tube guide directing wall 5124 and the dividing tube guide dividing wall 5126 is substantially prohibited, etc.). The dividing tube guide dividing wall 5126 may be positioned within the dividing tube coupler aperture 5103. In some embodiments, the dividing tube guide 5122 does not include the dividing tube guide dividing wall 5126. In some embodiments, the dividing tube 5100 does not include the dividing tube guide 5122.

The dividing tube 5100 establishes a concentration cavity. The concentration cavity is defined between the mixing collector wall 226, the distribution cap wall 304, the outer housing wall 232, the mixing assembly wall 230, the dividing tube body 5102, the first dividing tube flange 5104, the dividing tube panel 5110, the dividing tube endplate 5112, and the second dividing tube flange 5114.

After flowing out of the distribution cap 300 (e.g., via the distribution cap aperture 302), the exhaust gas enters the dividing tube body 5102 in one of a variety of different ways.

First, the exhaust gas may enter the dividing tube body 5102 via a dividing tube inlet aperture 5130 (e.g., hole, opening, etc.) formed in the dividing tube body 5102. The dividing tube inlet aperture 5130 is located between the outer housing wall 232 and a location at which the dividing tube panel 5110 couples to the dividing tube body 5102. After flowing through the dividing tube inlet aperture 5130, the exhaust gas enters a dividing tube cavity 5132 defined by the dividing tube body 5102.

Second, the exhaust gas may enter the dividing tube body 5102 via a first dividing tube flange opening 5136 (e.g., hole, aperture, opening, etc.). The first dividing tube flange 5104 includes a plurality of the first dividing tube flange openings 5136. According to various embodiments, each of the first dividing tube flange openings 5136 is at least partially circumscribed by (e.g., encircled, bordered by, surrounded by, etc.) the first end 5106. After flowing through the first dividing tube flange openings 5136, the exhaust gas enters the dividing tube cavity 5132.

Additionally, the reductant (e.g., via the injector 120, via the dosing module 112, etc.) may enter the dividing tube body 5102 via a second dividing tube flange aperture 5138 (e.g., hole, opening, etc.). The second dividing tube flange aperture 5138 is at least partially circumscribed by (e.g., encircled, bordered by, surrounded by, etc.) the second end 5116. After flowing through the second dividing tube flange aperture 5138, the reductant enters the dividing tube cavity 5132.

In some embodiments, the exhaust gas may enter the dividing tube body 5102 via a dividing tube body perforation (e.g., hole, aperture, opening, etc.) formed in the dividing tube body 5102. The dividing tube body 5102 may include a plurality of the dividing tube body perforations. According to various embodiments, each of the dividing tube body perforations is positioned between the dividing tube inlet aperture 5130 and the first dividing tube flange 5104. After flowing through the dividing tube body perforation, the exhaust gas enters the dividing tube cavity 5132.

The dividing tube inlet aperture 5130 is sized and positioned so as to provide more exhaust gas into the dividing tube cavity 5132 than the first dividing tube flange openings 5136 and the second dividing tube flange aperture 5138 combined. At least a portion of the dividing tube inlet aperture 5130 is located proximate the outer housing wall 232. As a result, the exhaust gas flowing through the dividing tube inlet aperture 5130 enters the dividing tube cavity 5132 radially (e.g., along a tangent of the dividing tube body 5102, along a line that is parallel to and offset from a tangent of the dividing tube body 5102, etc.). This radial entry causes the exhaust gas to swirl within the dividing tube cavity 5132. The swirl imparted by the dividing tube inlet aperture 5130 facilitates mixing of the exhaust gas and the reductant within the dividing tube cavity 5132 and ensures shear on the dividing tube body 5102 is relatively high, thereby mitigating impingement of the reductant on the dividing tube body 5102.

The dividing tube 5100 is positioned such that the injector coupler 234 is aligned with the second dividing tube flange aperture 5138 and spaced from the second dividing tube flange 5114. As a result, the injection region 314 is located within the dividing tube cavity 5132 and the concentration cavity. As a result, the reductant provided by the dosing module 112 and/or the injector 120 flows into into the dividing tube cavity 5132.

In various embodiments, the dividing tube body 5102 includes a shield 5140 (e.g., wall, projection, etc.). The shield 5140 is contiguous with the dividing tube inlet aperture 5130 and extends into the dividing tube cavity 5132 (e.g., the shield 5140 is bent inward relative to the dividing tube body 5102, etc.). The shield 5140 functions to mitigate non-radial flow of the exhaust gas into the dividing tube cavity 5132 via the dividing tube inlet aperture 5130.

The exhaust gas exits the dividing tube cavity 5132 via a dividing tube outlet aperture 5142 and flows towards the SCR catalyst members 216. The exhaust gas flowing out of the dividing tube outlet aperture 5142 flows between the dividing tube body 5102, the first dividing tube flange 5104, the dividing tube panel 5110, the dividing tube endplate 5112, and the second dividing tube flange 5114 (e.g., into a recess formed by the dividing tube body 5102, the first dividing tube flange 5104, the dividing tube panel 5110, the dividing tube endplate 5112, and the second dividing tube flange 5114 in the mixing collector wall 226). The dividing tube body 5102, the first dividing tube flange 5104, the dividing tube panel 5110, the dividing tube endplate 5112, and the second dividing tube flange 5114 create a volume within which the exhaust gas exiting the dividing tube outlet aperture 5142 can expand, thereby minimizing backpressure of the decomposition chamber 108, facilitating increased UI of the reductant and exhaust gas, and facilitating increased flow distribution index of the exhaust gas.

In some embodiments, the dividing tube body 5102, the first dividing tube flange 5104, the dividing tube panel 5110, the dividing tube endplate 5112, and the second dividing tube flange 5114 are variously shaped, sized, or otherwise configured to direct the exhaust gas towards the SCR catalyst members 216 and/or distribute the exhaust gas between the SCR catalyst members 216 (e.g., with a target distribution profile, etc.). For example, the dividing tube panel 5110 may include features (e.g., protrusions, projections, ribs, flanges, fins, etc.) that extend towards the SCR catalyst members 216 such that the exhaust gas flowing out of the dividing tube outlet aperture 5142 flows against and/or between the features and is directed towards the SCR catalyst members 216 and/or distributed between the SCR catalyst members 216.

As the exhaust gas flows towards the SCR catalyst members 216, a portion of the exhaust gas may flow into a dividing tube collector cavity 5144 defined by the dividing tube collector 5118. A portion of the exhaust gas flowing within the dividing tube collector cavity 5144 is directed by the dividing tube guide 5122 out of the dividing tube collector cavity 5144 towards the SCR catalyst members 216. Another portion of the exhaust gas flowing within the dividing tube collector cavity 5144 flows out of the dividing tube collector cavity 5144 via dividing tube dividing wall perforations 5146 (e.g., holes, openings, etc.) in the dividing tube dividing wall 5120. The additional exit for the exhaust gas from the dividing tube collector cavity 5144 provided by the dividing tube dividing wall perforations 5146 minimizes backpressure of the decomposition chamber 108.

In some embodiments, the outer housing wall 232 is spaced apart from the dividing tube body 5102. As a result, a portion of the exhaust gas flows between the outer housing wall 232 and the dividing tube body 5102, along the dividing tube body 5102, between the dividing tube body 5102 and the mixing assembly wall 230, and into the dividing tube collector cavity 5144. Therefore, exhaust gas may flow into the dividing tube collector cavity 5144 either from the dividing tube outlet aperture 5142 or after flowing around the dividing tube body 5102. As a result, the backpressure of the decomposition chamber 108 may be decreased. The exhaust gas flowing around the dividing tube body 5102 functions to heat the dividing tube body 5102, thereby mitigating impingement of the reductant on the dividing tube body 5102. Further, the exhaust gas flowing around the dividing tube body 5102 causes the exhaust gas within the dividing tube collector cavity 5144 to be propelled out of the dividing tube collector cavity 5144, thereby decreasing the backpressure of the decomposition chamber 108 and increasing the UI of the exhaust gas.

The dividing tube outlet aperture 5142 is positioned proximate the first end 5106. As a result, straight flow (e.g., flow without swirling, etc.) of the exhaust gas from the dividing tube inlet aperture 5130 to the dividing tube outlet aperture 5142 is substantially prevented, thereby ensuring that substantially all of the exhaust gas that exits the dividing tube outlet aperture 5142 is first swirled by the dividing tube body 5102. Furthermore, due to the dividing tube inlet aperture 5130 being positioned proximate the second end 5116 and the dividing tube outlet aperture 5142 being positioned proximate the first end 5106, a distance between the dividing tube inlet aperture 5130 and the dividing tube outlet aperture 5142 may be maximized, thereby increasing the amount of time that the exhaust gas is retained within the dividing tube cavity 5132 which correspondingly increases mixing of the reductant in the exhaust gas and the UI.

In various embodiments, the dividing tube 5100 also includes a blocking panel 5137. The blocking panel 5137 is contiguous with the dividing tube outlet aperture 5142 and extends from the dividing tube body 5102 towards the dividing tube guide directing wall 5124. The blocking panel 5137 may facilitate additional swirling of the exhaust gas prior to the exhaust gas flowing towards the dividing tube guide 5122.

The first dividing tube flange openings 5136 are disposed on a portion of the first dividing tube flange 5104 that is opposite the dividing tube cavity 5132 (e.g., are located opposite the first end 5106, etc.). In operation, the first dividing tube flange opening 5136 facilitate passage of the exhaust gas (e.g., exhaust gas that has flowed between the mixing assembly wall 230 and the first dividing tube flange 5104, etc.) through the first dividing tube flange 5104 and into the dividing tube cavity 5132 without passing through the dividing tube inlet aperture 5130. As a result, the backpressure of the decomposition chamber 108 may be decreased. Furthermore, the exhaust gas flowing through the first dividing tube flange opening 5136 functions to heat the first end 5106, thereby mitigating impingement of the reductant on the first end 5106. The exhaust gas flowing through the first dividing tube flange opening 5136 may also be useful in redirecting the exhaust gas flowing within the dividing tube cavity 5132 towards the dividing tube outlet aperture 5142, thereby decreasing the backpressure of the decomposition chamber 108 and increasing the UI of the exhaust gas.

In various embodiments, the first dividing tube flange 5104 includes a plurality of nozzles 5148 (e.g., concentrators, jets, etc.). Each of the nozzles 5148 extends around one of the first dividing tube flange openings 5136 and projects from the first dividing tube flange 5104 into the dividing tube cavity 5132. The nozzles 5148 function to increase momentum and/or velocity of the exhaust gas propelled through the first dividing tube flange openings 5136. In this way, the first dividing tube flange openings 5136 may assist in directing the exhaust gas and the reductant out of the dividing tube cavity 5132 and mitigate formation of deposits on the first dividing tube flange 5104.

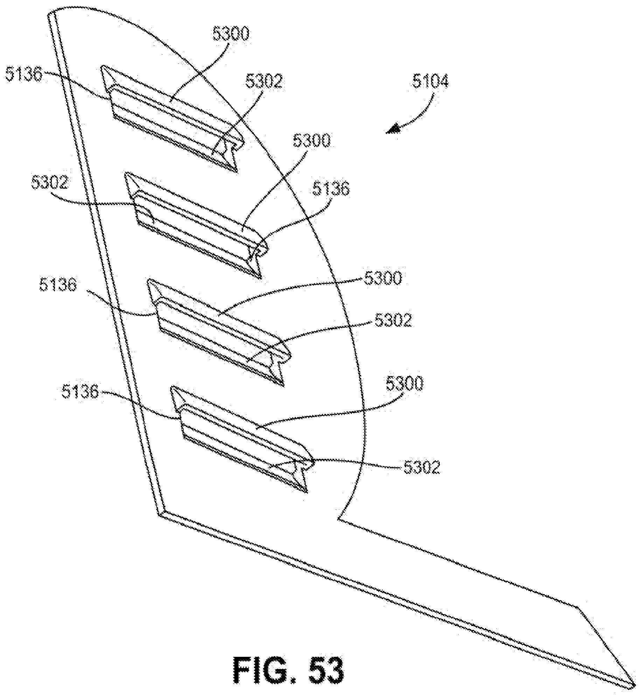

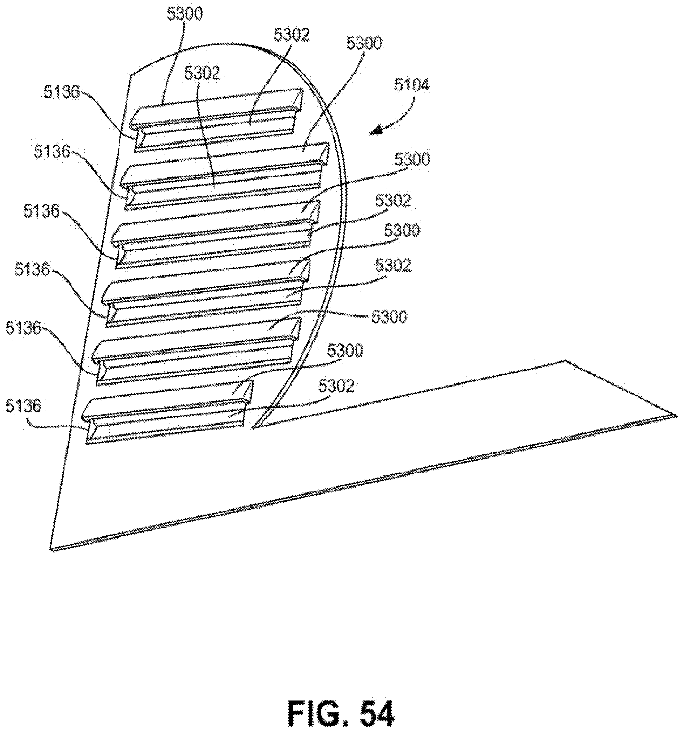

Figures 53 and 54 illustrate the first dividing tube flange 5104 according to various embodiments. Rather than including the nozzles 5148, the first dividing tube flange 5104 includes a plurality of exterior louvers 5300 (e.g., flaps, guides, toughs, etc.). Each of the exterior louvers 5300 extends along at least one of the first dividing tube flange openings 5136 and extends away from the dividing tube cavity 5132. As a result, each of the exterior louvers 5300 functions to direct the exhaust gas into the dividing tube cavity 5132 in a target direction (e.g., along the exterior louver 5300, etc.). In some embodiments, at least one of the exterior louvers 5300 is parallel to another of the exterior louvers 5300 (e.g., a first exterior louver 5300 is disposed along a first axis and a second exterior louver 5300 is disposed along a second axis that is parallel to the first axis, etc.).

In some embodiments, the first dividing tube flange 5104 also includes a plurality of interior louvers 5302 (e.g., flaps, guides, toughs, etc.). Each of the interior louvers 5302 extends along at least one of the first dividing tube flange openings 5136 and extends into the dividing tube cavity 5132. As a result, each of the interior louvers 5302 functions to direct the exhaust gas into the dividing tube cavity 5132 in a target direction (e.g., along the interior louver 5302, etc.). In some embodiments, at least one of the interior louvers 5302 is parallel to another of the interior louvers 5302 (e.g., a first interior louver 5302 is disposed along a first axis and a second interior louver 5302 is disposed along a second axis that is parallel to the first axis, etc.).

Each of the exterior louvers 5300 may extend along a first edge (e.g., top edge, bottom edge, front edge, rear edge, etc.) of one of the first dividing tube flange openings 5136 and each of the interior louvers 5302 may extend along a second edge (e.g., bottom edge, top edge, rear edge, front edge, etc.) of one of the first dividing tube flange openings 5136 that is opposite to the first edge. For example, the exterior louvers 5300 may each extend along a top edge of one of the first dividing tube flange openings 5136, and the interior louvers 5302 may each extend along a bottom edge of one of the first dividing tube flange openings 5136. In this way, pairs of the exterior louver 5300 and the interior louver 5302 may cooperate to direct the exhaust gas through the first dividing tube flange 5104 in a target direction.

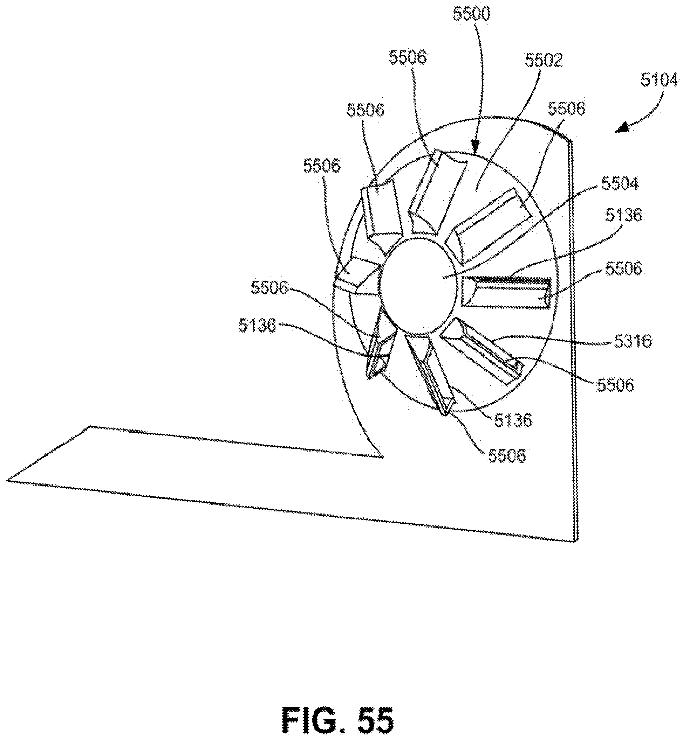

Figure 55 illustrates the first dividing tube flange 5104 according to various embodiments. The first dividing tube flange 5104 includes a recess 5500 (e.g., depression, etc.). In some embodiments, at least a portion of the recess 5500 is frustoconical. The recess 5500 extends towards the dividing tube cavity 5132 and each of the first dividing tube flange openings 5136 extends through the recess 5500.

In some embodiments, the recess 5500 includes a recess curved surface 5502 surrounding (e.g., extending around, circumscribing, etc.) a recess hub 5504. The recess hub 5504 may be flat (e.g., relative to the recess curved surface 5502, etc.). The first dividing tube flange openings 5136 may be disposed within the recess curved surface 5502. For example, each of the first dividing tube flange openings 5136 may be separated from an adjacent first dividing tube flange openings 5136 by the same angular separation. In one example, each of the first dividing tube flange openings 5136 is separated from an adjacent first dividing tube flange openings 5136 by 45°.

The first dividing tube flange 5104 also includes a plurality of interior louvers 5506 (e.g., flaps, guides, toughs, etc.). Each of the interior louvers 5506 extends along at least one of the first dividing tube flange openings 5136 and extends into the dividing tube cavity 5132. As a result, each of the interior louvers 5506 functions to direct the exhaust gas into the dividing tube cavity 5132 in a target direction (e.g., along the interior louver 5506, etc.). The interior louvers 5506 may be disposed within the recess curved surface 5502. For example, each of the interior louvers 5506 may be separated from an adjacent interior louver 5506 by the same angular separation. In one example, each of the interior louvers 5506 is separated from an adjacent interior louver 5506 by 45°.

In some embodiments, the interior louvers 5506 and the first dividing tube flange openings 5136 are configured (e.g., via location on the recess curved surface 5502, via angular separation, etc.) to cause the exhaust gas flowing through the first dividing tube flange openings 5136 to swirl in a first direction that is opposite (e.g., counter, etc.) to a second direction that the exhaust gas flowing from the dividing tube inlet aperture 5130 is caused to swirl. In this way, mixing of the reductant and the exhaust gas may be enhanced.

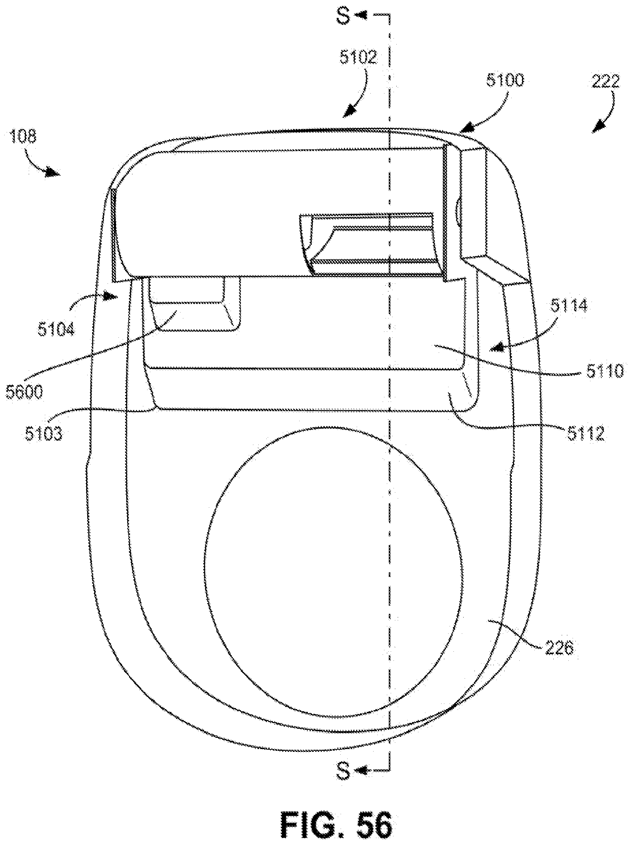

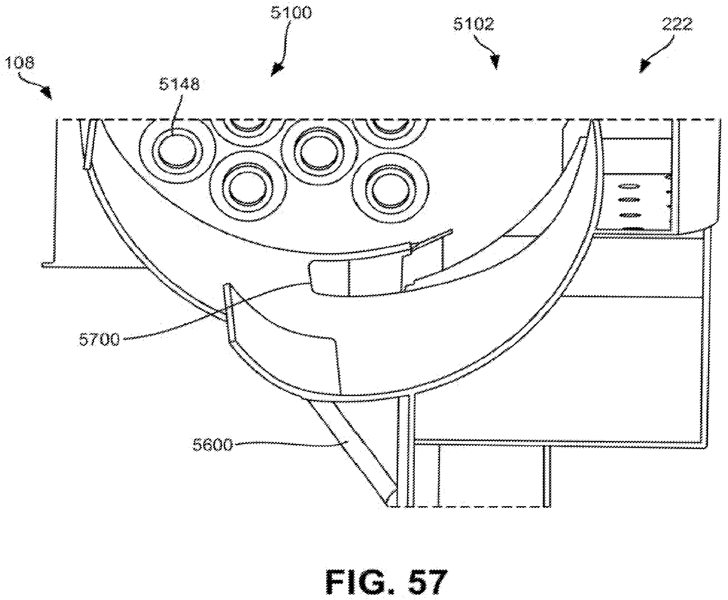

In some embodiments, such as is shown in Figures 56 and 57, the dividing tube 5100 also includes a dividing tube panel pocket 5600 (e.g., expansion, etc.). The dividing tube panel pocket 5600 is disposed in the dividing tube panel 5110 and is contiguous with the dividing tube body 5102. The dividing tube panel pocket 5600 extends away from the mixing collector wall 226. In these embodiments, the dividing tube body 5102 also includes a dividing tube body cutout 5700 (e.g., opening, window, etc.). The dividing tube body 5102 is coupled to the dividing tube panel 5110 such that the dividing tube panel pocket 5600 is aligned with the dividing tube body cutout 5700. The dividing tube body cutout 5700 facilitates draining of reductant within the dividing tube body 5102 into the dividing tube panel pocket 5600, thereby decreasing pooling of the reductant. In this way, the dividing tube panel pocket 5600 and the dividing tube body cutout 5700 mitigate formation of deposits. Additionally, the dividing tube body cutout 5700 provides additional exhaust gas and reductant from the dividing tube body 5102, thus decreasing a pressure drop of the dividing tube 5100.

### XXIV. Example Decomposition Chamber Having a Twenty-First Example Mixing Assembly

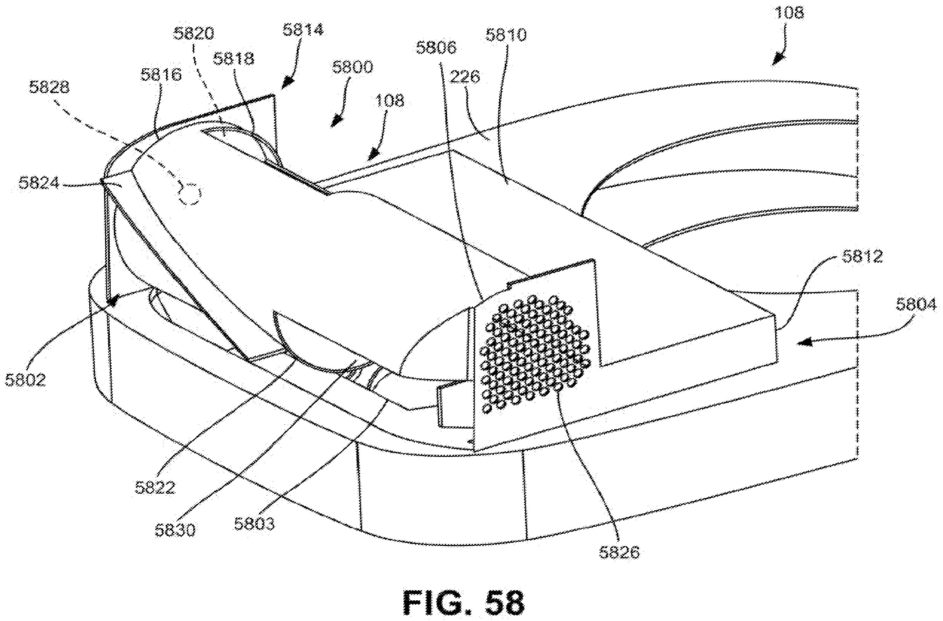

Figure 58 illustrates the decomposition chamber 108 and the mixing assembly 222 according to another example embodiment. The decomposition chamber 108 includes the distribution cap 300 as described herein. The decomposition chamber 108 also includes a dividing tube 5800.

The dividing tube 5800 includes a dividing tube body 5802 (e.g., frame, shell, etc.). The dividing tube body 5802 is generally cylindrical, oval, oblong, or stadium-shaped. The dividing tube body 5802 is separated from the outer housing wall 232 (e.g., such that flow of the exhaust gas between the dividing tube body 5802 and the outer housing wall 232 is facilitated, etc.).

The dividing tube body 5802 is positioned within a dividing tube coupler aperture 5803 (e.g., hole, opening, etc.) in the mixing collector wall 226 (e.g., the mixing collector wall 226 is disposed along a plane which bisects the dividing tube body 5802, etc.). The dividing tube body 5802 is coupled to the mixing collector wall 226 around the dividing tube coupler aperture 5803.

The dividing tube 5800 also includes a first dividing tube flange 5804 (e.g., wall, divider, etc.). The first dividing tube flange 5804 is coupled (e.g., a first portion of the first dividing tube flange 5804 is coupled to, etc.) to a first end 5806 of the dividing tube body 5802 (e.g., such that flow of the exhaust gas between the first end 5806 and the first dividing tube flange 5804 is substantially prohibited, etc.). The first dividing tube flange 5804 is also coupled to the mixing collector wall 226 (e.g., such that flow of the exhaust gas between the mixing collector wall 226 and the first dividing tube flange 5804 is substantially prohibited, etc.).

In various embodiments, the first dividing tube flange 5804 is coupled to the mixing collector wall 226 along the dividing tube coupler aperture 5803 (e.g., along a side of the dividing tube coupler aperture 5803, etc.). In various embodiments, the first dividing tube flange 5804 is not positioned within the dividing tube coupler aperture 5803.

The dividing tube 5800 also includes a dividing tube panel 5810 (e.g., wall, divider, etc.). The dividing tube panel 5810 is coupled to the dividing tube body 5802 (e.g., such that flow of the exhaust gas between the dividing tube body 5802 and the dividing tube panel 5810 is substantially prohibited, etc.). The dividing tube panel 5810 is also coupled to the first dividing tube flange 5804 (e.g., such that flow of the exhaust gas between the first dividing tube flange 5804 and the dividing tube panel 5810 is substantially prohibited, etc.).

The dividing tube 5800 also includes a dividing tube endplate 5812 (e.g., panel, wall, divider, etc.). The dividing tube endplate 5812 is coupled to the dividing tube panel 5810 (e.g., such that flow of the exhaust gas between the dividing tube panel 5810 and the dividing tube endplate 5812 is substantially prohibited, etc.). The dividing tube endplate 5812 is also coupled to the first dividing tube flange 5804 (e.g., such that flow of the exhaust gas between the first dividing tube flange 5804 and the dividing tube endplate 5812 is substantially prohibited, etc.). The dividing tube endplate 5812 is also coupled to the mixing collector wall 226 (e.g., such that flow of the exhaust gas between the mixing collector wall 226 and the dividing tube endplate 5812 is substantially prohibited, etc.).

In various embodiments, the dividing tube endplate 5812 is coupled to the mixing collector wall 226 along the dividing tube coupler aperture 5803 (e.g., along a side of the dividing tube coupler aperture 5803, etc.). In various embodiments, the dividing tube endplate 5812 is not positioned within the dividing tube coupler aperture 5803.

The dividing tube 5800 also includes a second dividing tube flange 5814 (e.g., wall, divider, etc.). The second dividing tube flange 5814 is coupled (e.g., a first portion of the second dividing tube flange 5814 is coupled to, etc.) to a second end 5816 of the dividing tube body 5802 (e.g., such that flow of the exhaust gas between the second end 5816 and the second dividing tube flange 5814 is substantially prohibited, etc.). The second end 5816 is opposite the first end 5806. The second dividing tube flange 5814 is also coupled to the mixing collector wall 226 (e.g., such that flow of the exhaust gas between the mixing collector wall 226 and the second dividing tube flange 5814 is substantially prohibited, etc.).

The first end 5806 may include tabs that are configured to be received within slots within the first dividing tube flange 5804 to facilitate coupling of the dividing tube body 5802 to the first dividing tube flange 5804. The second end 5816 may include tabs that are configured to be received within slots within the second dividing tube flange 5814 to facilitate coupling of the dividing tube body 5802 to the second dividing tube flange 5814.

In various embodiments, the second dividing tube flange 5814 is coupled to the mixing collector wall 226 along the dividing tube coupler aperture 5803 (e.g., along a side of the dividing tube coupler aperture 5803, etc.). In various embodiments, the second dividing tube flange 5814 is not positioned within the dividing tube coupler aperture 5803.

The dividing tube 5800 establishes a concentration cavity. The concentration cavity is defined between the mixing collector wall 226, the distribution cap wall 304, the outer housing wall 232, the mixing assembly wall 230, the dividing tube body 5802, the first dividing tube flange 5804, the dividing tube panel 5810, the dividing tube endplate 5812, and the second dividing tube flange 5814.

After flowing out of the distribution cap 300 (e.g., via the distribution cap aperture 302), the exhaust gas enters the dividing tube body 5802 in one of a variety of different ways.

First, the exhaust gas may enter the dividing tube body 5802 via a dividing tube inlet aperture 5818 (e.g., hole, opening, etc.) formed in the dividing tube body 5802. The dividing tube inlet aperture 5818 is located between the outer housing wall 232 and a location at which the dividing tube panel 5810 couples to the dividing tube body 5802. After flowing through the dividing tube inlet aperture 5818, the exhaust gas enters a dividing tube cavity 5820 defined by the dividing tube body 5802.

Second, the exhaust gas may enter the dividing tube body 5802 via a dividing tube body bypass opening 5822 (e.g., window, etc.). The dividing tube body bypass opening 5822 is disposed proximate the second end 5816 and enables a portion of the exhaust gas to flow into the dividing tube cavity 5820 downstream of the dividing tube inlet aperture 5818.

The dividing tube 5800 also includes a dividing tube bypass ramp 5824 (e.g., rib, flange, etc.). The dividing tube bypass ramp 5824 is coupled to the mixing assembly wall 230 (e.g., such that flow of the exhaust gas between the mixing assembly wall 230 and the dividing tube bypass ramp 5824 is substantially prohibited, etc.). Additionally, the dividing tube bypass ramp 5824 is coupled to the dividing tube body 5802 (e.g., such that flow of the exhaust gas between the dividing tube body 5802 and the dividing tube bypass ramp 5824 is substantially prohibited, etc.). The dividing tube bypass ramp 5824 is coupled to the dividing tube body 5802 proximate the dividing tube body bypass opening 5822. At least a portion of the exhaust gas flowing between the dividing tube body 5802 and the mixing assembly wall 230 may flow against the dividing tube bypass ramp 5824 and be directed by the dividing tube bypass ramp 5824 into the dividing tube body bypass opening 5822. This exhaust gas may be relatively hot (e.g., compared to exhaust gas that entered the dividing tube body 5802 via the dividing tube inlet aperture 5818, etc.) and therefore may heat various portions of the dividing tube 5800 which mitigates formation of deposits on the dividing tube 5800.

Third, the exhaust gas may enter the dividing tube body 5802 via a first dividing tube flange perforation 5826 (e.g., hole, aperture, opening, etc.). The first dividing tube flange 5804 includes a plurality of the first dividing tube flange perforations 5826. According to various embodiments, each of the first dividing tube flange perforations 5826 is at least partially circumscribed by (e.g., encircled, bordered by, surrounded by, etc.) the first end 5806. After flowing through the first dividing tube flange perforations 5826, the exhaust gas enters the dividing tube cavity 5820.

Additionally, the reductant (e.g., via the injector 120, via the dosing module 112, etc.) may enter the dividing tube body 5802 via a second dividing tube flange aperture 5828 (e.g., hole, opening, etc.). The second dividing tube flange aperture 5828 is at least partially circumscribed by (e.g., encircled, bordered by, surrounded by, etc.) the second end 5816. After flowing through the second dividing tube flange aperture 5828, the reductant enters the dividing tube cavity 5820.

In various embodiments, the dividing tube inlet aperture 5818 is sized and positioned so as to provide more exhaust gas into the dividing tube cavity 5820 than the first dividing tube flange perforations 5826 and the dividing tube body bypass opening 5822 combined. At least a portion of the dividing tube inlet aperture 5818 is located proximate the outer housing wall 232. As a result, the exhaust gas flowing through the dividing tube inlet aperture 5818 enters the dividing tube cavity 5820 radially (e.g., along a tangent of the dividing tube body 5802, along a line that is parallel to and offset from a tangent of the dividing tube body 5802, etc.). This radial entry causes the exhaust gas to swirl within the dividing tube cavity 5820. The swirl imparted by the dividing tube inlet aperture 5818 facilitates mixing of the exhaust gas and the reductant within the dividing tube cavity 5820 and ensures shear on the dividing tube body 5802 is relatively high, thereby mitigating impingement of the reductant on the dividing tube body 5802.

The mixing assembly wall 230 includes the injector coupler 234. The dividing tube 5800 is positioned such that the injector coupler 234 is aligned with the second dividing tube flange aperture 5828 and spaced from the second dividing tube flange 5814. As a result, the injection region 314 is located within the dividing tube cavity 5820 and the concentration cavity.

The exhaust gas exits the dividing tube cavity 5820 via a dividing tube outlet aperture 5830 and flows towards the SCR catalyst members 216. The exhaust gas flowing out of the dividing tube outlet aperture 5830 flows between the dividing tube body 5802, the first dividing tube flange 5804, the dividing tube panel 5810, the dividing tube endplate 5812, and the second dividing tube flange 5814 (e.g., into a recess formed by the dividing tube body 5802, the first dividing tube flange 5804, the dividing tube panel 5810, the dividing tube endplate 5812, and the second dividing tube flange 5814 in the mixing collector wall 226). The dividing tube body 5802, the first dividing tube flange 5804, the dividing tube panel 5810, the dividing tube endplate 5812, and the second dividing tube flange 5814 create a volume within which the exhaust gas exiting the dividing tube outlet aperture 5830 can expand, thereby minimizing backpressure of the decomposition chamber 108, facilitating increased UI of the reductant and exhaust gas, and facilitating increased flow distribution index of the exhaust gas.

In some embodiments, the dividing tube body 5802, the first dividing tube flange 5804, the dividing tube panel 5810, the dividing tube endplate 5812, and the second dividing tube flange 5814 are variously shaped, sized, or otherwise configured to direct the exhaust gas towards the SCR catalyst members 216 and/or distribute the exhaust gas between the SCR catalyst members 216 (e.g., with a target distribution profile, etc.). For example, the dividing tube panel 5810 may include features (e.g., protrusions, projections, ribs, flanges, fins, etc.) that extend towards the SCR catalyst members 216 such that the exhaust gas flowing out of the dividing tube outlet aperture 5830 flows against and/or between the features and is directed towards the SCR catalyst members 216 and/or distributed between the SCR catalyst members 216.

The dividing tube outlet aperture 5830 is positioned proximate the first end 5806. As a result, straight flow (e.g., flow without swirling, etc.) of the exhaust gas from the dividing tube inlet aperture 5818 to the dividing tube outlet aperture 5830 is substantially prevented, thereby ensuring that substantially all of the exhaust gas that exits the dividing tube outlet aperture 5830 is first swirled by the dividing tube body 5802. Furthermore, due to the dividing tube inlet aperture 5818 being positioned proximate the second end and the dividing tube outlet aperture 5830 being positioned proximate the first end 5806, a distance between the dividing tube inlet aperture 5818 and the dividing tube outlet aperture 5830 may be maximized, thereby increasing the amount of time that the exhaust gas is retained within the dividing tube cavity 5820 which correspondingly increases mixing of the reductant in the exhaust gas and the UI.

The first dividing tube flange perforations 5826 are disposed on a portion of the first dividing tube flange 5804 that is opposite the dividing tube cavity 5820 (e.g., are located opposite the first end 5806, etc.). In operation, the first dividing tube flange perforation 5826 facilitate passage of the exhaust gas (e.g., exhaust gas that has flowed between the mixing assembly wall 230 and the first dividing tube flange 5804, etc.) through the first dividing tube flange 5804 and into the dividing tube cavity 5820 without passing through the dividing tube inlet aperture 5818. As a result, the backpressure of the decomposition chamber 108 may be decreased. Furthermore, the exhaust gas flowing through the first dividing tube flange perforation 5826 functions to heat the first end 5806, thereby mitigating impingement of the reductant on the first end 5806. The exhaust gas flowing through the first dividing tube flange perforation 5826 may also be useful in redirecting the exhaust gas flowing within the dividing tube cavity 5820 towards the dividing tube outlet aperture 5830, thereby decreasing the backpressure of the decomposition chamber 108 and increasing the UI of the exhaust gas.

### XXV. Example Decomposition Chamber Having a Twenty-Second Example Mixing Assembly

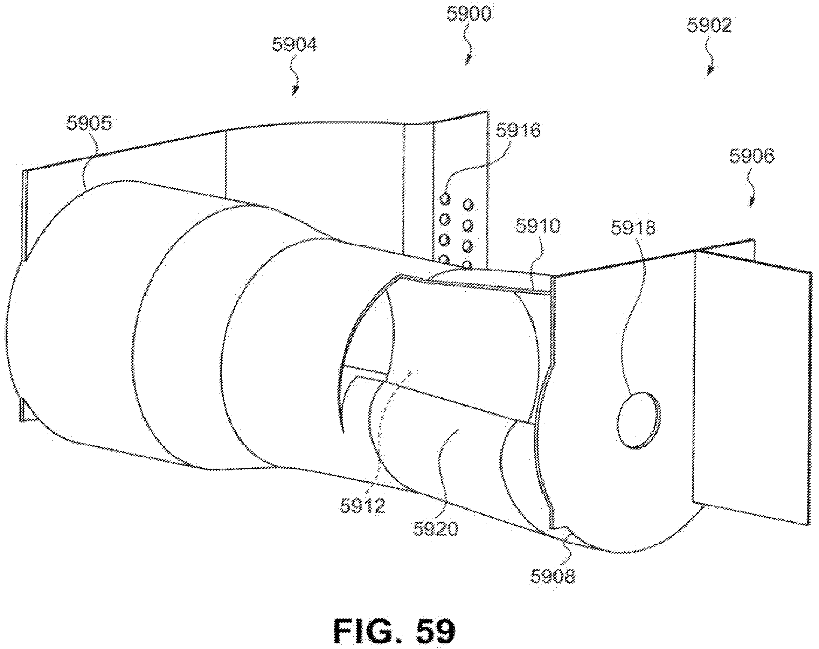

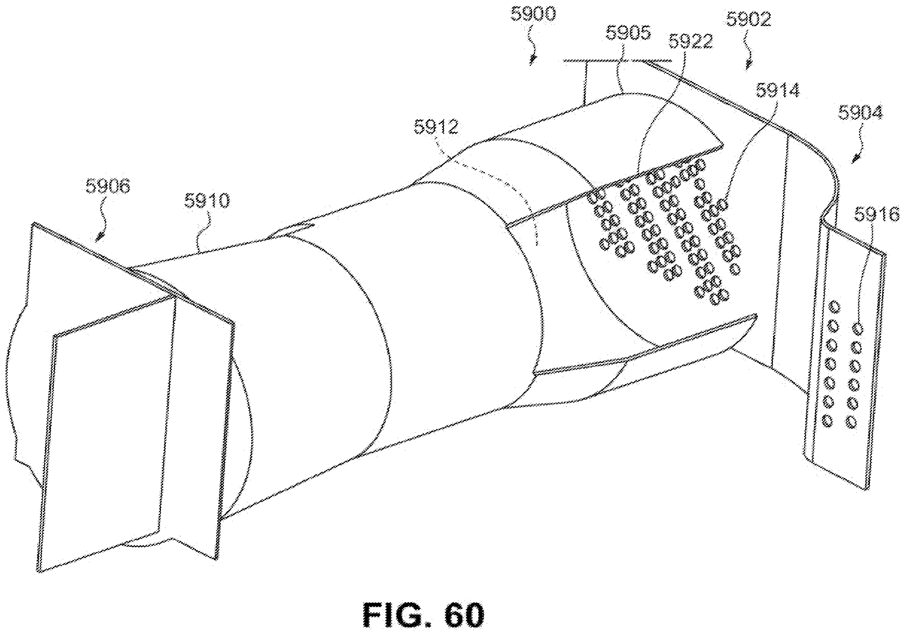

Figures 59 and 60 illustrate a dividing tube 5900 for the decomposition chamber 108 according to various embodiments. The dividing tube 5900 may be implemented in the decomposition chamber 108 in place of any of the dividing tubes previously described, such as the dividing tube 800, the dividing tube 1300, the dividing tube 2800, or the dividing tube 4600, or the dividing tube 5100.

The dividing tube 5900 includes a dividing tube body 5902 (e.g., frame, shell, etc.). The dividing tube body 5902 is tapered and includes several cylindrical portions of different diameters. In various embodiments, the dividing tube body 5902 is configured to be positioned within a dividing tube coupler aperture (e.g., hole, opening, etc.) in the mixing collector wall 226 (e.g., the mixing collector wall 226 is disposed along a plane which bisects the dividing tube body 5902, etc.).

The dividing tube 5900 also includes a first dividing tube flange 5904 (e.g., wall, divider, etc.). The first dividing tube flange 5904 is coupled (e.g., a first portion of the first dividing tube flange 5904 is coupled to, etc.) to a first end 5905 of the dividing tube body 5902 (e.g., such that flow of the exhaust gas between the first end 5905 and the first dividing tube flange 5904 is substantially prohibited, etc.). The dividing tube 5900 also includes a second dividing tube flange 5906 (e.g., wall, divider, etc.). The second dividing tube flange 5906 is coupled (e.g., a first portion of the second dividing tube flange 5906 is coupled to, etc.) to a second end 5908 of the dividing tube body 5902 (e.g., such that flow of the exhaust gas between the second end 5908 and the second dividing tube flange 5906 is substantially prohibited, etc.). The second end 5908 is opposite the first end 5905.

The first end 5905 may include tabs that are configured to be received within slots within the first dividing tube flange 5904 to facilitate coupling of the dividing tube body 5902 to the first dividing tube flange 5904. The second end 5908 may include tabs that are configured to be received within slots within the second dividing tube flange 5906 to facilitate coupling of the dividing tube body 5902 to the second dividing tube flange 5906.

After flowing out of the distribution cap 300 (e.g., via the distribution cap aperture 302), the exhaust gas enters the dividing tube body 5902 in one of a variety of different ways.

First, the exhaust gas may enter the dividing tube body 5902 via a dividing tube inlet aperture 5910 (e.g., hole, opening, etc.) formed in the dividing tube body 5902. The dividing tube inlet aperture 5910 is configured to be located between the outer housing wall 232 and a location at which the dividing tube panel couples to the dividing tube body 5902. After flowing through the dividing tube inlet aperture 5910, the exhaust gas enters a dividing tube cavity 5912 defined by the dividing tube body 5902.

The exhaust gas flowing through the dividing tube inlet aperture 5910 enters the dividing tube cavity 5912 radially (e.g., along a tangent of the dividing tube body 5902, along a line that is parallel to and offset from a tangent of the dividing tube body 5902, etc.). This radial entry causes the exhaust gas to swirl within the dividing tube cavity 5912. The swirl imparted by the dividing tube inlet aperture 5910 facilitates mixing of the exhaust gas and the reductant within the dividing tube cavity 5912 and ensures shear on the dividing tube body 5902 is relatively high, thereby mitigating impingement of the reductant on the dividing tube body 5902.

Second, the exhaust gas may enter the dividing tube body 5902 via a first dividing tube flange perforation 5914 (e.g., hole, aperture, opening, etc.). The first dividing tube flange 5904 includes a plurality of the first dividing tube flange perforations 5914. According to various embodiments, each of the first dividing tube flange perforations 5914 is at least partially circumscribed by (e.g., encircled, bordered by, surrounded by, etc.) the first end 5905. After flowing through the first dividing tube flange perforations 5914, the exhaust gas enters the dividing tube cavity 5912.

Third, the exhaust gas may enter the dividing tube body 5902 via a first dividing tube flange transfer perforation 5916 (e.g., hole, aperture, opening, etc.). The first dividing tube flange 5904 includes a plurality of the first dividing tube flange transfer perforation 5916. The first dividing tube flange transfer perforations 5916 are disposed on a portion of the first dividing tube flange 5904 that is not opposite the dividing tube cavity 5912 (e.g., are located downstream of the dividing tube body 5902, etc.). Instead, the dividing tube flange transfer perforations 5916 are disposed on a portion of the first dividing tube flange 5904 that is opposite the transfer cavity (e.g., downstream of the dividing tube body 5902, etc.). In operation, the dividing tube flange transfer perforations 5916 facilitate passage of the exhaust gas (e.g., exhaust gas that has flowed between the mixing assembly wall 230 and the first dividing tube flange 5904, etc.) through the first dividing tube flange 5904 and into the transfer cavity without passing through the dividing tube body 5902. As a result, the backpressure of the decomposition chamber 108 may be decreased. Furthermore, the exhaust gas flowing through the dividing tube flange transfer perforations 5916 functions to heat the first dividing tube flange 5904, thereby mitigating impingement of the reductant on the first dividing tube flange 5904. The exhaust gas flowing through the dividing tube flange transfer perforations 5916 may also be useful in redirecting the exhaust gas flowing within the transfer cavity towards a mixing assembly flow aperture, thereby decreasing the backpressure of the decomposition chamber 108 and increasing the UI of the exhaust gas.

Additionally, the reductant (e.g., via the injector 120, via the dosing module 112, etc.) may enter the dividing tube body 5902 via a second dividing tube flange aperture 5918 (e.g., hole, opening, etc.). The second dividing tube flange aperture 5918 is at least partially circumscribed by (e.g., encircled, bordered by, surrounded by, etc.) the second end 5908. After flowing through the second dividing tube flange aperture 5918, the reductant enters the dividing tube cavity 5912.

In various embodiments, the dividing tube inlet aperture 5910 is sized and positioned so as to provide more exhaust gas into the dividing tube cavity 5912 than the first dividing tube flange perforations 5914, and the dividing tube flange transfer perforations 5916 combined.

In various embodiments, the dividing tube body 5902 includes a shield 5920 (e.g., wall, projection, etc.). The shield 5920 is contiguous with the dividing tube inlet aperture 5910 and extends into the dividing tube cavity 5912 (e.g., the shield 5920 is bent inward relative to the dividing tube body 5902, etc.). The shield 5920 functions to mitigate non-radial flow of the exhaust gas into the dividing tube cavity 5912 via the dividing tube inlet aperture 5910.

The exhaust gas exits the dividing tube cavity 5912 via a dividing tube outlet aperture 5922 and flows towards the SCR catalyst members 216.

In some embodiments, the dividing tube body 5902, the first dividing tube flange 5904, and the second dividing tube flange 5906 are variously shaped, sized, or otherwise configured to direct the exhaust gas towards the SCR catalyst members 216 and/or distribute the exhaust gas between the SCR catalyst members 216 (e.g., with a target distribution profile, etc.). For example, the first dividing tube flange 5904 may include features (e.g., protrusions, projections, ribs, flanges, fins, etc.) that extend towards the SCR catalyst members 216 such that the exhaust gas flowing out of the dividing tube outlet aperture 5922 flows against and/or between the features and is directed towards the SCR catalyst members 216 and/or distributed between the SCR catalyst members 216.

The dividing tube outlet aperture 5922 is positioned proximate the first end 5905. As a result, straight flow (e.g., flow without swirling, etc.) of the exhaust gas from the dividing tube inlet aperture 5910 to the dividing tube outlet aperture 5922 is substantially prevented, thereby ensuring that substantially all of the exhaust gas that exits the dividing tube outlet aperture 5922 is first swirled by the dividing tube body 5902. Furthermore, due to the dividing tube inlet aperture 5910 being positioned proximate the second end and the dividing tube outlet aperture 5922 being positioned proximate the first end 5905, a distance between the dividing tube inlet aperture 5910 and the dividing tube outlet aperture 5922 may be maximized, thereby increasing the amount of time that the exhaust gas is retained within the dividing tube cavity 5912 which correspondingly increases mixing of the reductant in the exhaust gas and the UI.

The first dividing tube flange perforations 5914 are disposed on a portion of the first dividing tube flange 5904 that is opposite the dividing tube cavity 5912 (e.g., are located opposite the first end 5905, etc.). In operation, the first dividing tube flange perforation 5914 facilitate passage of the exhaust gas (e.g., exhaust gas that has flowed between the mixing assembly wall 230 and the first dividing tube flange 5904, etc.) through the first dividing tube flange 5904 and into the dividing tube cavity 5912 without passing through the dividing tube inlet aperture 5910. As a result, the backpressure of the decomposition chamber 108 may be decreased. Furthermore, the exhaust gas flowing through the first dividing tube flange perforation 5914 functions to heat the first end 5905, thereby mitigating impingement of the reductant on the first end 5905. The exhaust gas flowing through the first dividing tube flange perforation 5914 may also be useful in redirecting the exhaust gas flowing within the dividing tube cavity 5912 towards the dividing tube outlet aperture 5922, thereby decreasing the backpressure of the decomposition chamber 108 and increasing the UI of the exhaust gas.

Due to the tapering of the dividing tube body 5902, the dividing tube body 5902 may function to increase velocity of the exhaust gas at locations where impingement is more likely, such as downstream of the second dividing tube flange aperture 5918 and upstream of the dividing tube outlet aperture 5922. This tapering of the dividing tube body 5902 may also facilitate enhanced reduction of NOₓ emissions.

Additionally, the tapering of the dividing tube body 5902 may facilitate passage of the exhaust gas between the dividing tube body 5902 and the outer housing wall 232. This exhaust gas may heat the dividing tube 5900 and mitigate formation of deposits on the dividing tube 5900.

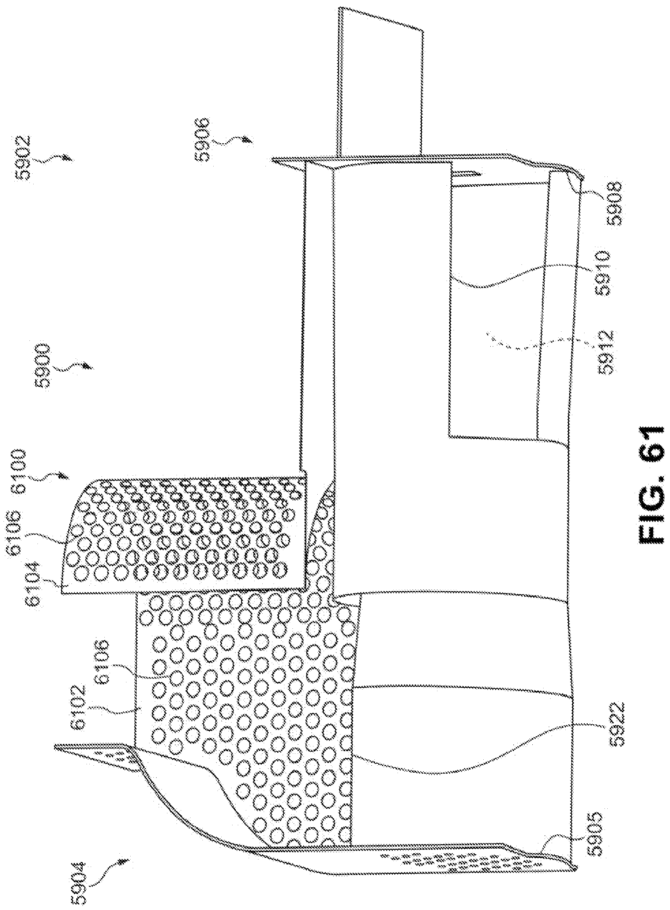

Figure 61 illustrates the dividing tube body 5902 according to various embodiments. In these embodiments, the dividing tube body 5902 also includes an outlet lip 6100. The outlet lip 6100 is coupled to the first dividing tube flange 5904 and the dividing tube body 5902. The outlet lip 6100 is configured to facilitate enhanced mixing of the exhaust gas and the reductant downstream of the dividing tube outlet aperture 5922.

The outlet lip 6100 includes an outlet lip planar portion 6102. The outlet lip planar portion 6102 is configured to be in confronting relation with the mixing collector wall 226. The outlet lip 6100 also includes an outlet lip curved portion 6104. The outlet lip curved portion 6104 is configured to curve away from the mixing collector wall 226 and towards the outer housing wall 232. The outlet lip curved portion 6104 is contiguous with the outlet lip planar portion 6102 and is separated from the first dividing tube flange 5904 by the outlet lip planar portion 6102.

The outlet lip 6100 also includes a plurality of outlet lip perforations 6106 (e.g., openings, holes, etc.). Each of the outlet lip perforations 6106 is configured to facilitate passage of the exhaust gas through the outlet lip 6100. In this way, the outlet lip may enhance mixing of the exhaust gas and reductant, decrease the backpressure of the decomposition chamber 108, and/or increase the UI of the exhaust gas.

### XXVI. Example Decomposition Chamber Having a Twenty-Third Example Mixing Assembly

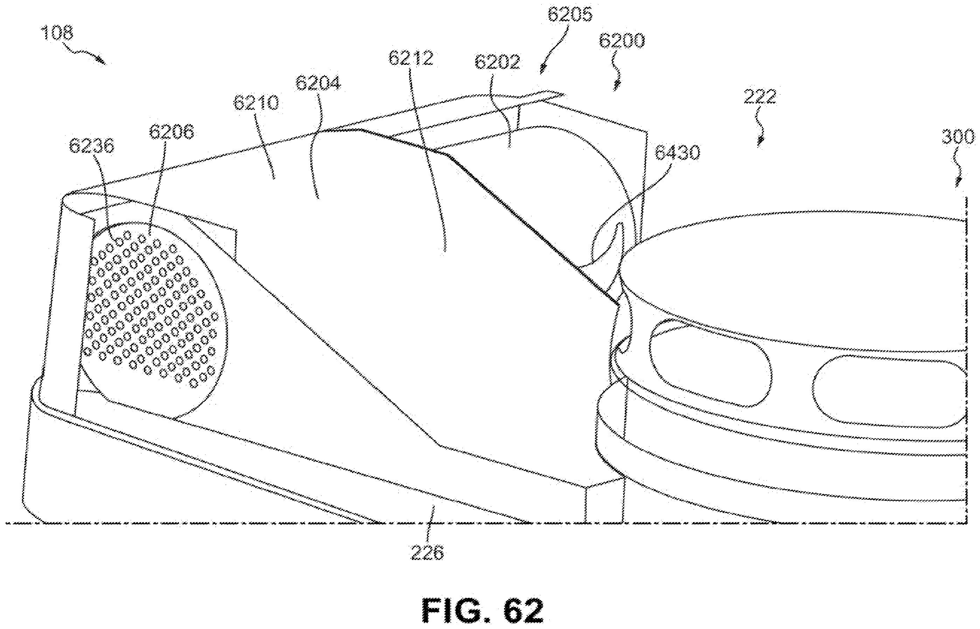

Figures 62-63C illustrate the decomposition chamber 108 and the mixing assembly 222 according to another example embodiment. The decomposition chamber 108 includes the distribution cap 300 as described herein. The decomposition chamber 108 also includes a dividing tube 6200.

As is explained in more detail below, the dividing tube 6200 includes a first portion 6202 that receives a portion of the exhaust gas and a second portion 6204 that provides all of the exhaust gas to the SCR catalyst members 216. The dividing tube 6200 may be implemented in the decomposition chamber 108 in place of any of the dividing tubes previously described, such as the dividing tube 800, the dividing tube 1300, the dividing tube 2800, the dividing tube 4500, the dividing tube 4600, the dividing tube 5100, the dividing tube 5800, or the dividing tube 5900.

The dividing tube 6200 includes a dividing tube body 6205 (e.g., frame, shell, etc.). The dividing tube body 6205 is generally cylindrical, oval, or oblong. Rather than the dividing tube body 6205 being coupled to the mixing assembly wall 230 about an aperture, the dividing tube body 6205 is integrally formed with the mixing assembly wall 230. For example, the mixing assembly wall 230 may be variously bent and formed so as to create the dividing tube body 6205 (e.g., using a punch, etc.).

The dividing tube 6200 also includes a first dividing tube flange 6206 (e.g., wall, divider, etc.). The first dividing tube flange 6206 is coupled (e.g., a first portion of the first dividing tube flange 6206 is coupled to, etc.) to a first end 6207 of the dividing tube body 6205 (e.g., such that flow of the exhaust gas between the first end 6207 and the first dividing tube flange 6206 is substantially prohibited, etc.). The first dividing tube flange 6206 is also coupled to the mixing collector wall 226 (e.g., such that flow of the exhaust gas between the mixing collector wall 226 and the first dividing tube flange 6206 is substantially prohibited, etc.).

In some embodiments, the dividing tube 6200 also includes a cap (e.g., panel, wall, divider, etc.). The cap is coupled to the first end 6207 (e.g., such that flow of the exhaust gas between the first end 6207 and the cap is substantially prohibited, etc.). The cap is also coupled to the first dividing tube flange 6206 (e.g., such that flow of the exhaust gas between the first dividing tube flange 6206 and the cap is substantially prohibited, etc.).

The dividing tube 6200 also includes a dividing tube panel 6210 (e.g., wall, divider, etc.). The dividing tube panel 6210 is integrally formed with the dividing tube body 6205. The dividing tube panel 6210 is coupled to the first dividing tube flange 6206 (e.g., such that flow of the exhaust gas between the first dividing tube flange 6206 and the dividing tube panel 6210 is substantially prohibited, etc.).

The dividing tube 6200 also includes a dividing tube endplate 6212 (e.g., panel, wall, divider, etc.). The dividing tube endplate 6212 is integrally formed with the dividing tube panel 6210. In various embodiments, an edge between the dividing tube panel 6210 and the dividing tube endplate 6212 is rounded. As a result, recirculation zones may be decreased.

The dividing tube endplate 6212 is also coupled to the first dividing tube flange 6206 (e.g., such that flow of the exhaust gas between the first dividing tube flange 6206 and the dividing tube endplate 6212 is substantially prohibited, etc.). In various embodiments, an edge between the dividing tube endplate 6212 and the first dividing tube flange 6206 is rounded. As a result, recirculation zones may be decreased.

The dividing tube endplate 6212 is also integrally formed with the mixing collector wall 226. In various embodiments, an edge between the dividing tube endplate 6212 and the mixing collector wall 226 is rounded. As a result, recirculation zones may be decreased.

In various embodiments, the dividing tube endplate 6212 is disposed along a first plane and the dividing tube panel 6210 is disposed along a second plane that is separated from the first plane by an angular separation that is not equal to 90°. In various embodiments, the angular separation is equal to between approximately 20° and 70°, inclusive (e.g., 19°, 20°, 21°, 30°, 40°, 45°, 50°, 60°, 67°, 70°, 73°, etc.). In other embodiments, the angular separation is approximately equal to 90°.

The dividing tube 6200 also includes a second dividing tube flange 6214 (e.g., wall, divider, etc.). The second dividing tube flange 6214 is coupled (e.g., a first portion of the second dividing tube flange 6214 is coupled to, etc.) to a second end 6216 of the dividing tube body 6205 (e.g., such that flow of the exhaust gas between the second end 6216 and the second dividing tube flange 6214 is substantially prohibited, etc.). The second end 6216 is opposite the first end 6207.

The second dividing tube flange 6214 is also coupled to the dividing tube panel 6210 (e.g., such that flow of the exhaust gas between the dividing tube panel 6210 and the second dividing tube flange 6214 is substantially prohibited, etc.). In various embodiments, an edge between the dividing tube panel 6210 and the second dividing tube flange 6214 is rounded. As a result, recirculation zones may be decreased.

The second dividing tube flange 6214 is also coupled to the mixing collector wall 226 (e.g., such that flow of the exhaust gas between the mixing collector wall 226 and the second dividing tube flange 6214 is substantially prohibited, etc.). In various embodiments, an edge between the mixing collector wall 226 and the second dividing tube flange 6214 is rounded. As a result, recirculation zones may be decreased.

The first end 6207 may include tabs that are configured to be received within slots within the first dividing tube flange 6206 to facilitate coupling of the dividing tube body 6205 to the first dividing tube flange 6206. The second end 6216 may include tabs that are configured to be received within slots within the second dividing tube flange 6214 to facilitate coupling of the dividing tube body 6205 to the second dividing tube flange 6214.

The dividing tube 6200 establishes a concentration cavity. The concentration cavity is defined between the mixing collector wall 226, the distribution cap wall 304, the outer housing wall 232, the mixing assembly wall 230, the dividing tube body 6205, the first dividing tube flange 6206, the dividing tube panel 6210, the dividing tube endplate 6212, and the second dividing tube flange 6214.

After flowing out of the distribution cap 300 (e.g., via the distribution cap aperture 302), the exhaust gas enters the dividing tube body 6205 in one of a variety of different ways.

First, the exhaust gas may enter the dividing tube body 6205 via a dividing tube inlet aperture 6230 (e.g., hole, opening, etc.) formed in the dividing tube body 6205. The dividing tube inlet aperture 6230 is located between the outer housing wall 232 and a location at which the dividing tube panel 6210 couples to the dividing tube body 6205. After flowing through the dividing tube inlet aperture 6230, the exhaust gas enters a dividing tube cavity 6232 defined by the dividing tube body 6205.

Second, the exhaust gas may enter the dividing tube body 6205 via a first dividing tube flange opening 6236 (e.g., hole, aperture, opening, etc.). The first dividing tube flange 6206 may include a plurality of the first dividing tube flange openings 6236. According to various embodiments, each of the first dividing tube flange openings 6236 is at least partially circumscribed by (e.g., encircled, bordered by, surrounded by, etc.) the first end 6207. After flowing through the first dividing tube flange openings 6236, the exhaust gas enters the dividing tube cavity 6232.

Additionally, the reductant (e.g., via the injector 120, via the dosing module 112, etc.) may enter the dividing tube body 6205 via a second dividing tube flange aperture 6238 (e.g., hole, opening, etc.). The second dividing tube flange aperture 6238 is at least partially circumscribed by (e.g., encircled, bordered by, surrounded by, etc.) the second end 6216. After flowing through the second dividing tube flange aperture 6238, the reductant enters the dividing tube cavity 6232.

In some embodiments, the exhaust gas may enter the dividing tube body 6205 via a dividing tube body perforation (e.g., hole, aperture, opening, etc.) formed in the dividing tube body 6205. The dividing tube body 6205 may include a plurality of the dividing tube body perforations. According to various embodiments, each of the dividing tube body perforations is positioned between the dividing tube inlet aperture 6230 and the first dividing tube flange 6206. After flowing through the dividing tube body perforation, the exhaust gas enters the dividing tube cavity 6232.

The dividing tube inlet aperture 6230 is sized and positioned so as to provide more exhaust gas into the dividing tube cavity 6232 than the first dividing tube flange openings 6236. At least a portion of the dividing tube inlet aperture 6230 is located proximate the outer housing wall 232. As a result, the exhaust gas flowing through the dividing tube inlet aperture 6230 enters the dividing tube cavity 6232 radially (e.g., along a tangent of the dividing tube body 6205, along a line that is parallel to and offset from a tangent of the dividing tube body 6205, etc.). This radial entry causes the exhaust gas to swirl within the dividing tube cavity 6232. The swirl imparted by the dividing tube inlet aperture 6230 facilitates mixing of the exhaust gas and the reductant within the dividing tube cavity 6232 and ensures shear on the dividing tube body 6205 is relatively high, thereby mitigating impingement of the reductant on the dividing tube body 6205.

The dividing tube 6200 is positioned such that the injector coupler 234 is aligned with the second dividing tube flange aperture 6238 and spaced from the second dividing tube flange 6214. As a result, the injection region 314 is located within the dividing tube cavity 6232 and the concentration cavity.

In various embodiments, the dividing tube body 6205 includes a shield 6240 (e.g., wall, projection, etc.). The shield 6240 is contiguous with the dividing tube inlet aperture 6230 and extends into the dividing tube cavity 6232 (e.g., the shield 6240 is bent inward relative to the dividing tube body 6205, etc.). The shield 6240 functions to mitigate non-radial flow of the exhaust gas into the dividing tube cavity 6232 via the dividing tube inlet aperture 6230.

The exhaust gas exits the dividing tube cavity 6232 via a dividing tube outlet aperture 6242 and flows towards the SCR catalyst members 216. The exhaust gas flowing out of the dividing tube outlet aperture 6242 flows between the dividing tube body 6205, the first dividing tube flange 6206, the dividing tube panel 6210, the dividing tube endplate 6212, and the second dividing tube flange 6214 (e.g., into a recess formed by the dividing tube body 6205, the first dividing tube flange 6206, the dividing tube panel 6210, the dividing tube endplate 6212, and the second dividing tube flange 6214 in the mixing collector wall 226). The dividing tube body 6205, the first dividing tube flange 6206, the dividing tube panel 6210, the dividing tube endplate 6212, and the second dividing tube flange 6214 create a volume within which the exhaust gas exiting the dividing tube outlet aperture 6242 can expand, thereby minimizing backpressure of the decomposition chamber 108, facilitating increased UI of the reductant and exhaust gas, and facilitating increased flow distribution index of the exhaust gas.

In some embodiments, the dividing tube body 6205, the first dividing tube flange 6206, the dividing tube panel 6210, the dividing tube endplate 6212, and the second dividing tube flange 6214 are variously shaped, sized, or otherwise configured to direct the exhaust gas towards the SCR catalyst members 216 and/or distribute the exhaust gas between the SCR catalyst members 216 (e.g., with a target distribution profile, etc.). For example, the dividing tube panel 6210 may include features (e.g., protrusions, projections, ribs, flanges, fins, etc.) that extend towards the SCR catalyst members 216 such that the exhaust gas flowing out of the dividing tube outlet aperture 6242 flows against and/or between the features and is directed towards the SCR catalyst members 216 and/or distributed between the SCR catalyst members 216.

The dividing tube outlet aperture 6242 is positioned proximate the first end 6207. As a result, straight flow (e.g., flow without swirling, etc.) of the exhaust gas from the dividing tube inlet aperture 6230 to the dividing tube outlet aperture 6242 is substantially prevented, thereby ensuring that substantially all of the exhaust gas that exits the dividing tube outlet aperture 6242 is first swirled by the dividing tube body 6205. Furthermore, due to the dividing tube inlet aperture 6230 being positioned proximate the second end 6216 and the dividing tube outlet aperture 6242 being positioned proximate the first end 6207, a distance between the dividing tube inlet aperture 6230 and the dividing tube outlet aperture 6242 may be maximized, thereby increasing the amount of time that the exhaust gas is retained within the dividing tube cavity 6232 which correspondingly increases mixing of the reductant in the exhaust gas and the UI.

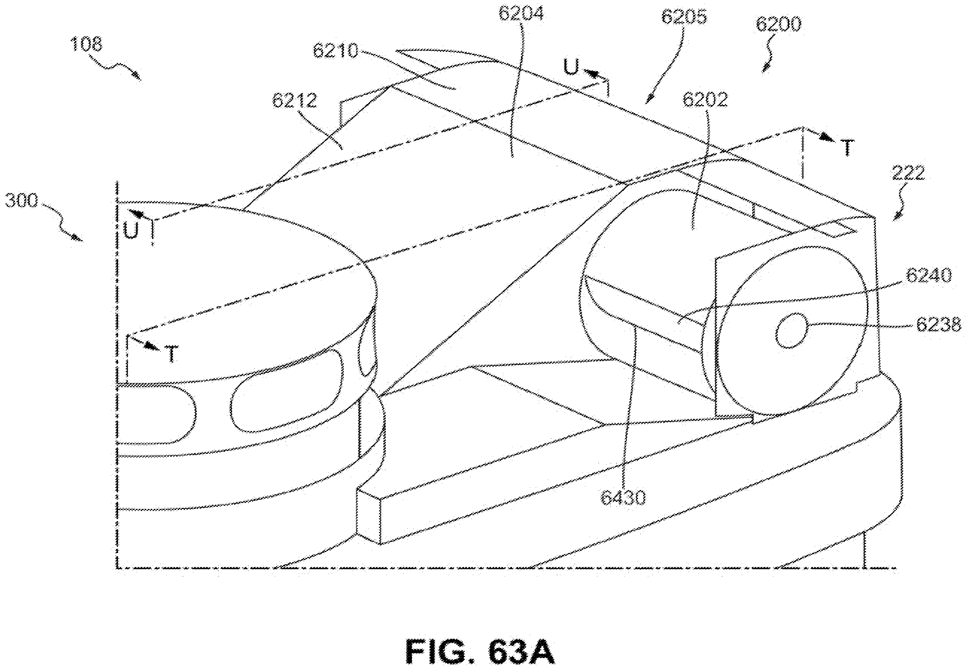

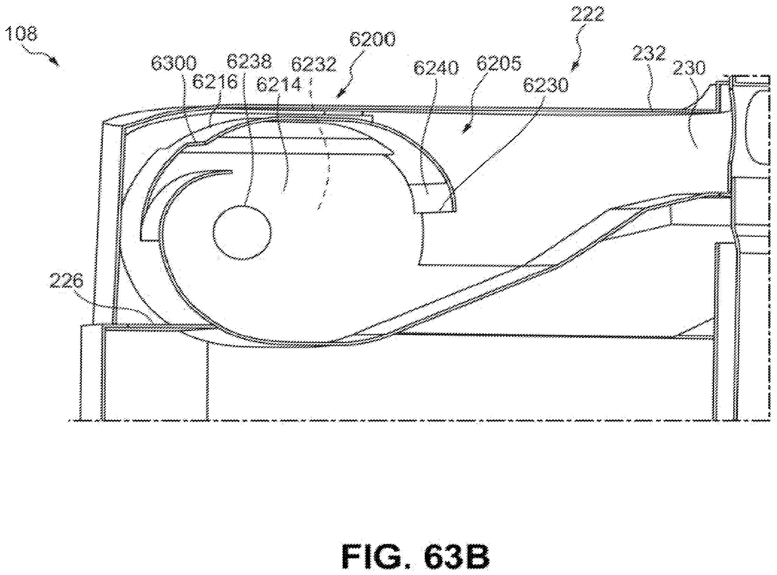

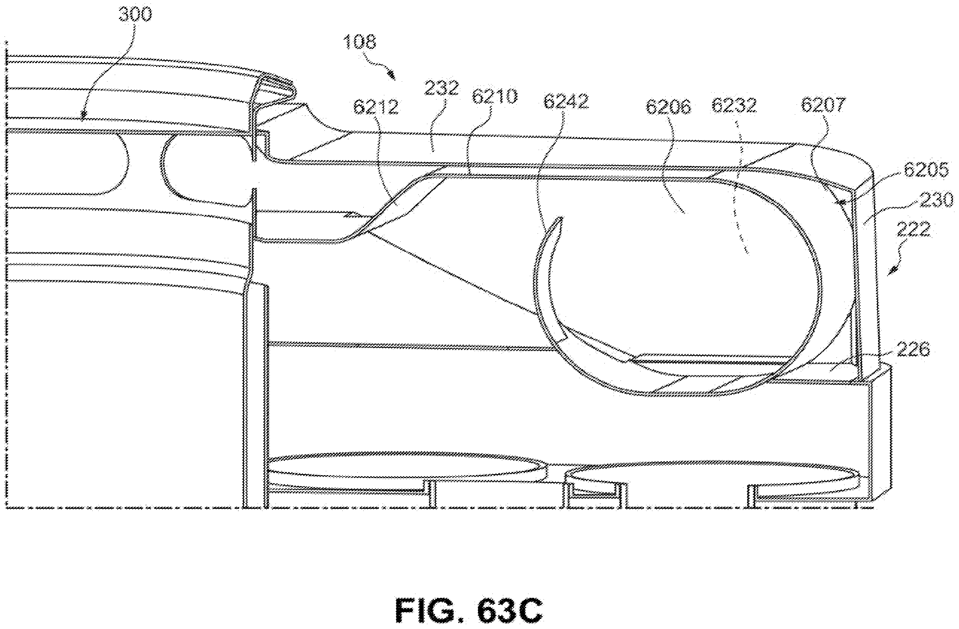

In various embodiments, such as is shown in Figure 63B, the exhaust gas may enter the dividing tube body 6205 via a dividing tube body bypass opening 6300 (e.g., window, etc.). The dividing tube body bypass opening 6300 is disposed proximate the second end 6216 and enables a portion of the exhaust gas to flow into the dividing tube cavity 6232 downstream of the dividing tube inlet aperture 6230. For example, exhaust gas may flow across the dividing tube body 6205, between the dividing tube body 6205 and the outer housing wall 232, between the dividing tube body 6205 and the mixing assembly wall 230, and through the dividing tube body 6205 via the dividing tube body bypass opening 6300.

### XXVII. Example Decomposition Chamber Having a Twenty-Fourth Example Mixing Assembly

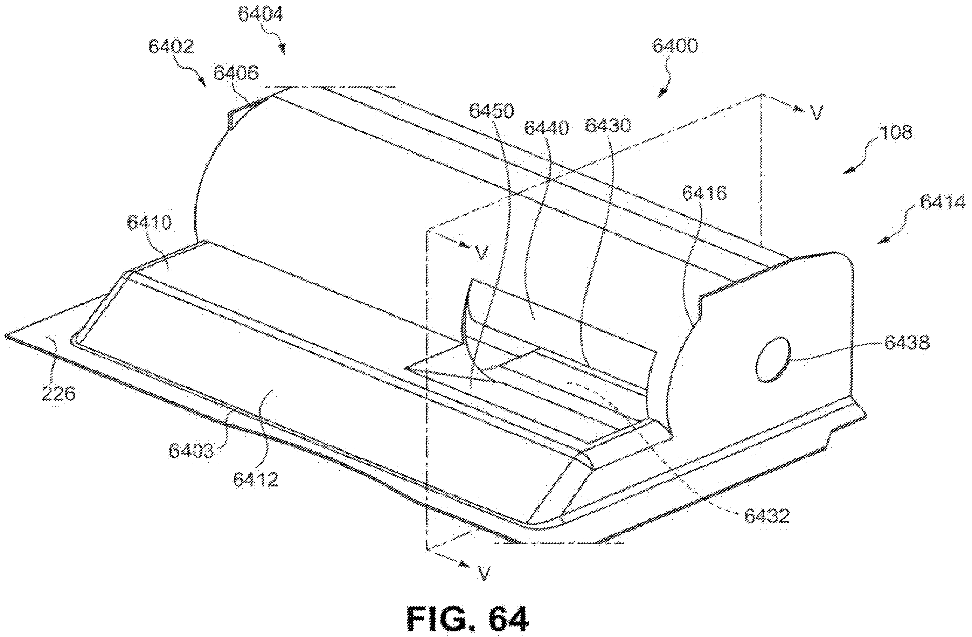

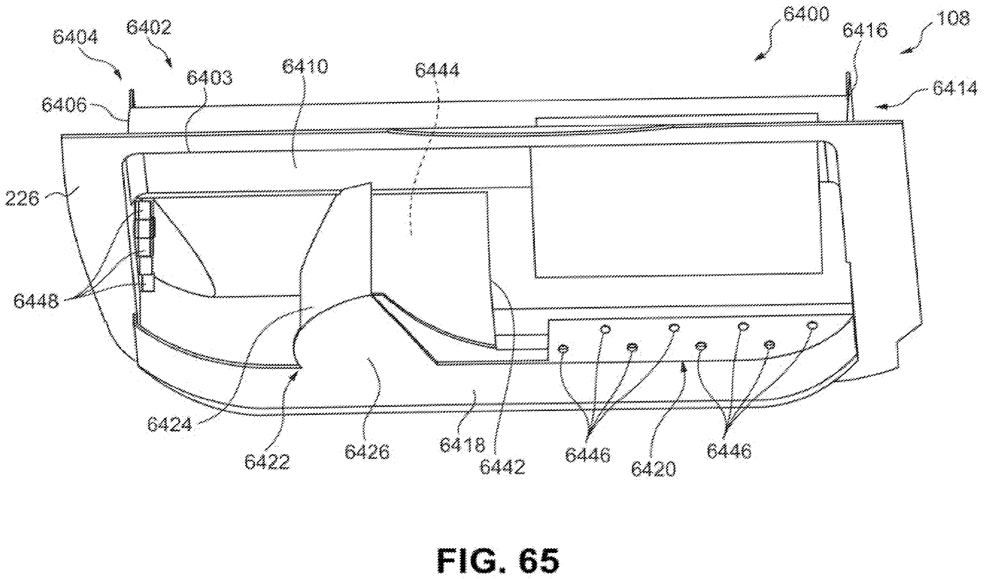

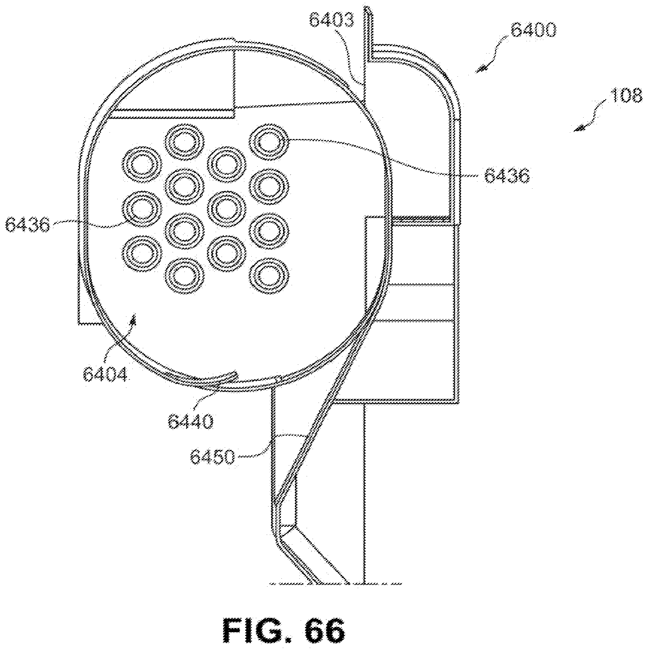

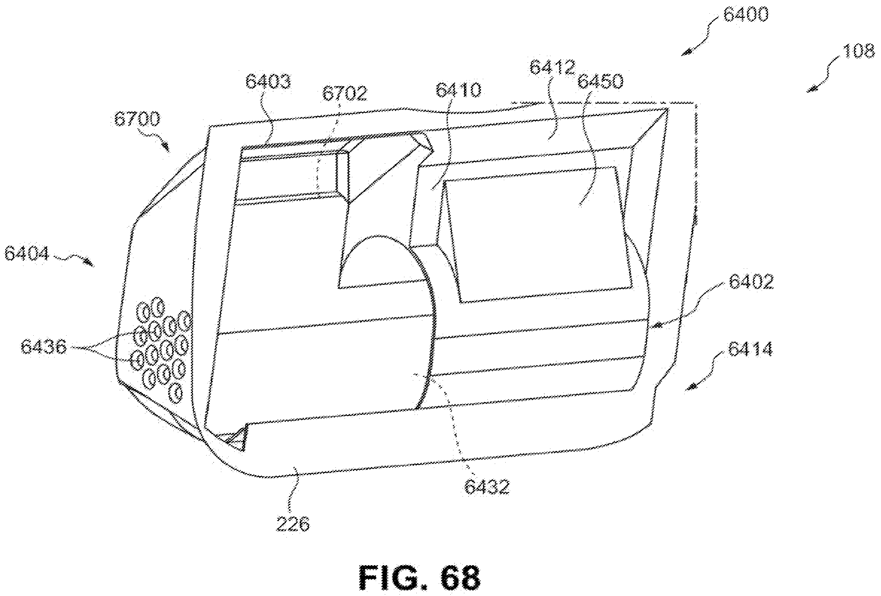

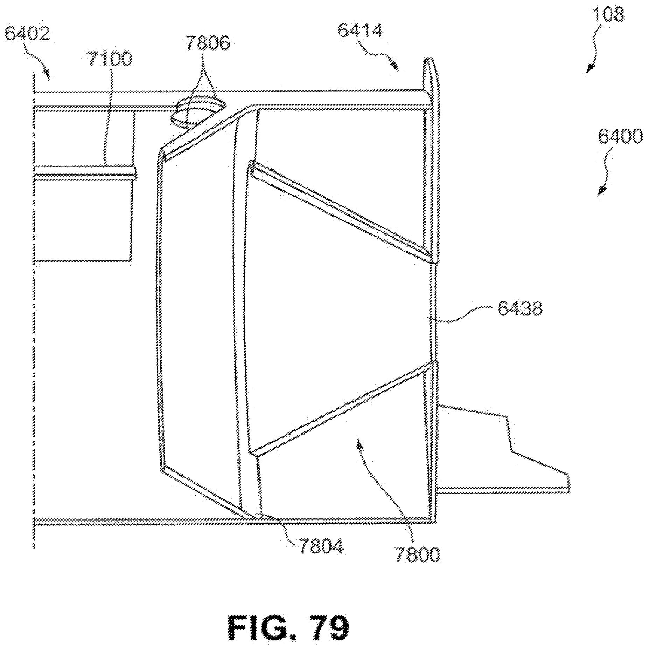

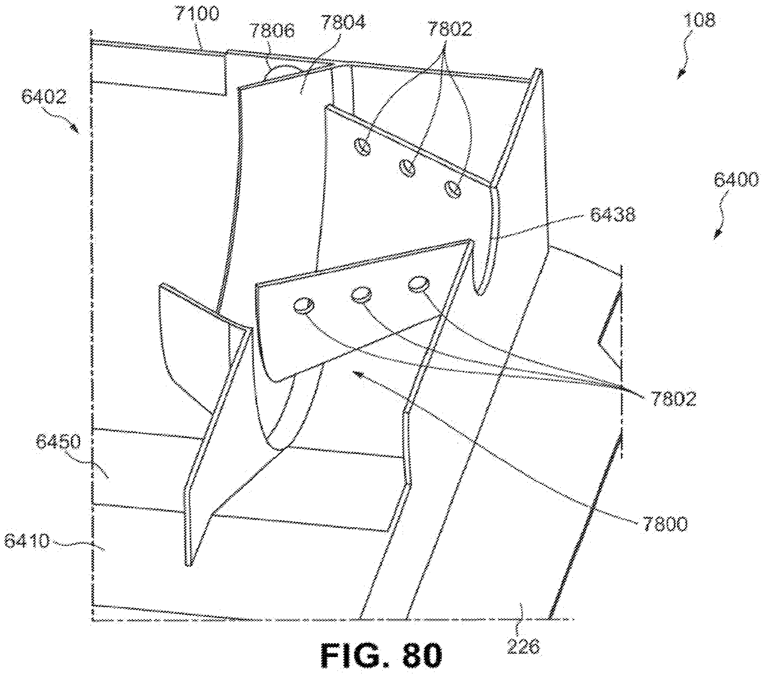

Figures 64-80 illustrate a dividing tube 6400 for the decomposition chamber 108 according to various embodiments. The dividing tube 6400 may be implemented in the decomposition chamber 108 in place of any of the dividing tubes previously described, such as the dividing tube 800, the dividing tube 1300, the dividing tube 2800, the dividing tube 4500, the dividing tube 4600, the dividing tube 5100, the dividing tube 5800, the dividing tube 5900, or the dividing tube 6200.

The dividing tube 6400 includes a dividing tube body 6402 (e.g., frame, shell, etc.). The dividing tube body 6402 is generally cylindrical, oval, or oblong. In various embodiments, the dividing tube body 6402 is coupled to the mixing assembly wall 230 (e.g., such that flow of the exhaust gas between the dividing tube body 6402 and the mixing assembly wall 230 is substantially prohibited, etc.) and/or the mixing collector wall 226 (e.g., such that flow of the exhaust gas between the dividing tube body 6402 and the mixing collector wall 226 is substantially prohibited, etc.). In various embodiments, the dividing tube body 6402 is separated from the outer housing wall 232 (e.g., such that flow of the exhaust gas between the dividing tube body 6402 and the outer housing wall 232 is facilitated, etc.).

The dividing tube body 6402 is coupled to the mixing collector wall 226 around a dividing tube coupler aperture 6403 (e.g., hole, opening, etc.) in the mixing collector wall 226. In some embodiments, the dividing tube body 6402 is positioned within the dividing tube coupler aperture 6403 (e.g., the mixing collector wall 226 is disposed along a plane which bisects the dividing tube body 6402, etc.). In other embodiments, the dividing tube body 6402 is in confronting relation with the dividing tube coupler aperture 6403.

The dividing tube 6400 also includes a first dividing tube flange 6404 (e.g., wall, divider, etc.). The first dividing tube flange 6404 is coupled (e.g., a first portion of the first dividing tube flange 6404 is coupled to, etc.) to a first end 6406 of the dividing tube body 6402 (e.g., such that flow of the exhaust gas between the first end 6406 and the first dividing tube flange 6404 is substantially prohibited, etc.). The first dividing tube flange 6404 is also coupled to the mixing collector wall 226 (e.g., such that flow of the exhaust gas between the mixing collector wall 226 and the first dividing tube flange 6404 is substantially prohibited, etc.).

In various embodiments, the first dividing tube flange 6404 is coupled to the mixing collector wall 226 along the dividing tube coupler aperture 6403 (e.g., along a side of the dividing tube coupler aperture 6403, etc.). In various embodiments, the first dividing tube flange 6404 is not positioned within the dividing tube coupler aperture 6403.

In some embodiments, the dividing tube 6400 also includes a cap (e.g., panel, wall, divider, etc.). The cap is coupled to the first end 6406 (e.g., such that flow of the exhaust gas between the first end 6406 and the cap is substantially prohibited, etc.). The cap is also coupled to the first dividing tube flange 6404 (e.g., such that flow of the exhaust gas between the first dividing tube flange 6404 and the cap is substantially prohibited, etc.).

The dividing tube 6400 also includes a dividing tube panel 6410 (e.g., wall, divider, etc.). The dividing tube panel 6410 is coupled to the dividing tube body 6402 (e.g., such that flow of the exhaust gas between the dividing tube body 6402 and the dividing tube panel 6410 is substantially prohibited, etc.). The dividing tube panel 6410 is also coupled to the first dividing tube flange 6404 (e.g., such that flow of the exhaust gas between the first dividing tube flange 6404 and the dividing tube panel 6410 is substantially prohibited, etc.).

The dividing tube 6400 also includes a dividing tube endplate 6412 (e.g., panel, wall, divider, etc.). The dividing tube endplate 6412 is coupled to the dividing tube panel 6410 (e.g., such that flow of the exhaust gas between the dividing tube panel 6410 and the dividing tube endplate 6412 is substantially prohibited, etc.). In various embodiments, an edge between the dividing tube panel 6410 and the dividing tube endplate 6412 is rounded. As a result, recirculation zones may be decreased.

The dividing tube endplate 6412 is also coupled to the first dividing tube flange 6404 (e.g., such that flow of the exhaust gas between the first dividing tube flange 6404 and the dividing tube endplate 6412 is substantially prohibited, etc.). In various embodiments, an edge between the dividing tube endplate 6412 and the first dividing tube flange 6404 is rounded. As a result, recirculation zones may be decreased.

The dividing tube endplate 6412 is also coupled to the mixing collector wall 226 (e.g., such that flow of the exhaust gas between the mixing collector wall 226 and the dividing tube endplate 6412 is substantially prohibited, etc.). In various embodiments, an edge between the dividing tube endplate 6412 and the mixing collector wall 226 is rounded. As a result, recirculation zones may be decreased.

In various embodiments, the dividing tube endplate 6412 is disposed along a first plane and the dividing tube panel 6410 is disposed along a second plane that is separated from the first plane by an angular separation that is not equal to 90°. In various embodiments, the angular separation is equal to between approximately 20° and 70°, inclusive (e.g., 19°, 20°, 21°, 30°, 40°, 45°, 50°, 60°, 67°, 70°, 73°, etc.). In other embodiments, the angular separation is approximately equal to 90°.

In various embodiments, the dividing tube endplate 6412 is coupled to the mixing collector wall 226 along the dividing tube coupler aperture 6403 (e.g., along a side of the dividing tube coupler aperture 6403, etc.). In various embodiments, the dividing tube endplate 6412 is not positioned within the dividing tube coupler aperture 6403.

The dividing tube 6400 also includes a second dividing tube flange 6414 (e.g., wall, divider, etc.). The second dividing tube flange 6414 is coupled (e.g., a first portion of the second dividing tube flange 6414 is coupled to, etc.) to a second end 6416 of the dividing tube body 6402 (e.g., such that flow of the exhaust gas between the second end 6416 and the second dividing tube flange 6414 is substantially prohibited, etc.). The second end 6416 is opposite the first end 6406.

The second dividing tube flange 6414 is also coupled to the dividing tube panel 6410 (e.g., such that flow of the exhaust gas between the dividing tube panel 6410 and the second dividing tube flange 6414 is substantially prohibited, etc.). In various embodiments, an edge between the dividing tube panel 6410 and the second dividing tube flange 6414 is rounded. As a result, recirculation zones may be decreased.

The second dividing tube flange 6414 is also coupled to the mixing collector wall 226 (e.g., such that flow of the exhaust gas between the mixing collector wall 226 and the second dividing tube flange 6414 is substantially prohibited, etc.). In various embodiments, an edge between the mixing collector wall 226 and the second dividing tube flange 6414 is rounded. As a result, recirculation zones may be decreased.

The first end 6406 may include tabs that are configured to be received within slots within the first dividing tube flange 6404 to facilitate coupling of the dividing tube body 6402 to the first dividing tube flange 6404. The second end 6416 may include tabs that are configured to be received within slots within the second dividing tube flange 6414 to facilitate coupling of the dividing tube body 6402 to the second dividing tube flange 6414.

In various embodiments, the second dividing tube flange 6414 is coupled to the mixing collector wall 226 along the dividing tube coupler aperture 6403 (e.g., along a side of the dividing tube coupler aperture 6403, etc.). In various embodiments, the second dividing tube flange 6414 is not positioned within the dividing tube coupler aperture 6403.

The dividing tube 6400 also includes a dividing tube collector 6418 (e.g., scoop, panel, etc.). The dividing tube collector 6418 is coupled to the mixing collector wall 226 (e.g., such that flow of the exhaust gas between the mixing collector wall 226 and the dividing tube collector 6418 is substantially prohibited, etc.). In some embodiments, the dividing tube collector 6418 is coupled to the mixing collector wall 226 such that a portion of the dividing tube body 6402 is positioned within and/or adjacent to the dividing tube collector 6418.

In various embodiments, the dividing tube collector 6418 is coupled to the mixing collector wall 226 along the dividing tube coupler aperture 6403 (e.g., along a side of the dividing tube coupler aperture 6403, etc.). In various embodiments, the dividing tube collector 6418 is not positioned within the dividing tube coupler aperture 6403.

The dividing tube 6400 also includes a dividing tube dividing wall 6420 (e.g., flange, divider, etc.). The dividing tube dividing wall 6420 is coupled to the dividing tube body 6402 (e.g., such that flow of the exhaust gas between the dividing tube dividing wall 6420 and the dividing tube body 6402 is substantially prohibited, etc.). The dividing tube dividing wall 6420 is also coupled to the dividing tube collector 6418 (e.g., such that flow of the exhaust gas between the dividing tube dividing wall 6420 and the dividing tube collector 6418 is substantially prohibited, etc.). The dividing tube dividing wall 6420 may be positioned within the dividing tube coupler aperture 6403.

In various embodiments, the dividing tube 6400 also includes a dividing tube guide 6422 (e.g., scoop, vane, etc.). The dividing tube guide 6422 is configured to guide the exhaust gas flowing out of the dividing tube 6400 downstream. The dividing tube guide 6422 includes a dividing tube guide directing wall 6424 (e.g., flange, panel, etc.). The dividing tube guide directing wall 6424 is coupled to the dividing tube dividing wall 6420 (e.g., such that flow of the exhaust gas between the dividing tube guide directing wall 6424 and the dividing tube dividing wall 6420 is substantially prohibited, etc.). In various embodiments, the dividing tube guide directing wall 6424 is additionally coupled to the dividing tube body 6402 (e.g., such that flow of the exhaust gas between the dividing tube guide directing wall 6424 and the dividing tube body 6402 is substantially prohibited, etc.). The dividing tube guide directing wall 6424 may be positioned within the dividing tube coupler aperture 6403. In some embodiments, the dividing tube guide 6422 includes a plurality of dividing tube guide directing walls 6424, such that the exhaust gas may flow between adjacent dividing tube guide directing walls 6424. By including multiple dividing tube guide directing walls 6424, the dividing tube 6400 may provide an increased control over a flow of the exhaust gas.

In various embodiments, the dividing tube guide 6422 also includes a dividing tube guide dividing wall 6426 (e.g., flange, panel, etc.). The dividing tube guide dividing wall 6426 is coupled to the dividing tube guide directing wall 6424 (e.g., such that flow of the exhaust gas between the dividing tube guide directing wall 6424 and the dividing tube guide dividing wall 6426 is substantially prohibited, etc.). The dividing tube guide dividing wall 6426 may be positioned within the dividing tube coupler aperture 6403. In some embodiments, the dividing tube guide 6422 does not include the dividing tube guide dividing wall 6426. In some embodiments, the dividing tube 6400 does not include the dividing tube guide 6422.

The dividing tube 6400 establishes a concentration cavity. The concentration cavity is defined between the mixing collector wall 226, the distribution cap wall 304, the outer housing wall 232, the mixing assembly wall 230, the dividing tube body 6402, the first dividing tube flange 6404, the dividing tube panel 6410, the dividing tube endplate 6412, and the second dividing tube flange 6414.

After flowing out of the distribution cap 300 (e.g., via the distribution cap aperture 302), the exhaust gas enters the dividing tube body 6402 in one of a variety of different ways.

First, the exhaust gas may enter the dividing tube body 6402 via a dividing tube inlet aperture 6430 (e.g., hole, opening, etc.) formed in the dividing tube body 6402. The dividing tube inlet aperture 6430 is located between the outer housing wall 232 and a location at which the dividing tube panel 6410 couples to the dividing tube body 6402. After flowing through the dividing tube inlet aperture 6430, the exhaust gas enters a dividing tube cavity 6432 defined by the dividing tube body 6402.

Second, the exhaust gas may enter the dividing tube body 6402 via a first dividing tube flange opening 6436 (e.g., hole, aperture, opening, etc.). The first dividing tube flange 6404 includes a plurality of the first dividing tube flange openings 6436. According to various embodiments, each of the first dividing tube flange openings 6436 is at least partially circumscribed by (e.g., encircled, bordered by, surrounded by, etc.) the first end 6406. After flowing through the first dividing tube flange openings 6436, the exhaust gas enters the dividing tube cavity 6432.

Additionally, the reductant (e.g., via the injector 120, via the dosing module 112, etc.) may enter the dividing tube body 6402 via a second dividing tube flange aperture 6438 (e.g., hole, opening, etc.). The second dividing tube flange aperture 6438 is at least partially circumscribed by (e.g., encircled, bordered by, surrounded by, etc.) the second end 6416. After flowing through the second dividing tube flange aperture 6438, the reductant enters the dividing tube cavity 6432.

In some embodiments, the exhaust gas may enter the dividing tube body 6402 via a dividing tube body perforation (e.g., hole, aperture, opening, etc.) formed in the dividing tube body 6402. The dividing tube body 6402 may include a plurality of the dividing tube body perforations. According to various embodiments, each of the dividing tube body perforations is positioned between the dividing tube inlet aperture 6430 and the first dividing tube flange 6404. After flowing through the dividing tube body perforation, the exhaust gas enters the dividing tube cavity 6432.

The dividing tube inlet aperture 6430 is sized and positioned so as to provide more exhaust gas into the dividing tube cavity 6432 than the first dividing tube flange openings 6436. At least a portion of the dividing tube inlet aperture 6430 is located proximate the outer housing wall 232. As a result, the exhaust gas flowing through the dividing tube inlet aperture 6430 enters the dividing tube cavity 6432 radially (e.g., along a tangent of the dividing tube body 6402, along a line that is parallel to and offset from a tangent of the dividing tube body 6402, etc.). This radial entry causes the exhaust gas to swirl within the dividing tube cavity 6432. The swirl imparted by the dividing tube inlet aperture 6430 facilitates mixing of the exhaust gas and the reductant within the dividing tube cavity 6432 and ensures shear on the dividing tube body 6402 is relatively high, thereby mitigating impingement of the reductant on the dividing tube body 6402.

The dividing tube 6400 is positioned such that the injector coupler 234 is aligned with the second dividing tube flange aperture 6438 and spaced from the second dividing tube flange 6414. As a result, the injection region 314 is located within the dividing tube cavity 6432 and the concentration cavity.

In various embodiments, the dividing tube body 6402 includes a shield 6440 (e.g., wall, projection, etc.). The shield 6440 is contiguous with the dividing tube inlet aperture 6430 and extends into the dividing tube cavity 6432 (e.g., the shield 6440 is bent inward relative to the dividing tube body 6402, etc.). The shield 6440 functions to mitigate non-radial flow of the exhaust gas into the dividing tube cavity 6432 via the dividing tube inlet aperture 6430.

The exhaust gas exits the dividing tube cavity 6432 via a dividing tube outlet aperture 6442 and flows towards the SCR catalyst members 216. The exhaust gas flowing out of the dividing tube outlet aperture 6442 flows between the dividing tube body 6402, the first dividing tube flange 6404, the dividing tube panel 6410, the dividing tube endplate 6412, and the second dividing tube flange 6414 (e.g., into a recess formed by the dividing tube body 6402, the first dividing tube flange 6404, the dividing tube panel 6410, the dividing tube endplate 6412, and the second dividing tube flange 6414 in the mixing collector wall 226). The dividing tube body 6402, the first dividing tube flange 6404, the dividing tube panel 6410, the dividing tube endplate 6412, and the second dividing tube flange 6414 create a volume within which the exhaust gas exiting the dividing tube outlet aperture 6442 can expand, thereby minimizing backpressure of the decomposition chamber 108, facilitating increased UI of the reductant and exhaust gas, and facilitating increased flow distribution index of the exhaust gas.

In some embodiments, the dividing tube body 6402, the first dividing tube flange 6404, the dividing tube panel 6410, the dividing tube endplate 6412, and the second dividing tube flange 6414 are variously shaped, sized, or otherwise configured to direct the exhaust gas towards the SCR catalyst members 216 and/or distribute the exhaust gas between the SCR catalyst members 216 (e.g., with a target distribution profile, etc.). For example, the dividing tube panel 6410 may include features (e.g., protrusions, projections, ribs, flanges, fins, etc.) that extend towards the SCR catalyst members 216 such that the exhaust gas flowing out of the dividing tube outlet aperture 6442 flows against and/or between the features and is directed towards the SCR catalyst members 216 and/or distributed between the SCR catalyst members 216.

As the exhaust gas flows towards the SCR catalyst members 216, a portion of the exhaust gas may flow into a dividing tube collector cavity 6444 defined by the dividing tube collector 6418. A portion of the exhaust gas flowing within the dividing tube collector cavity 6444 is directed by the dividing tube guide 6422 out of the dividing tube collector cavity 6444 towards the SCR catalyst members 216. Another portion of the exhaust gas flowing within the dividing tube collector cavity 6444 flows out of the dividing tube collector cavity 6444 via dividing tube dividing wall perforations 6446 (e.g., holes, openings, etc.) in the dividing tube dividing wall 6420. The additional exit for the exhaust gas from the dividing tube collector cavity 6444 provided by the dividing tube dividing wall perforations 6446 minimizes backpressure of the decomposition chamber 108.

In some embodiments, the outer housing wall 232 is spaced apart from the dividing tube body 6402. As a result, a portion of the exhaust gas flows between the outer housing wall 232 and the dividing tube body 6402, along the dividing tube body 6402, between the dividing tube body 6402 and the mixing assembly wall 230, and into the dividing tube collector cavity 6444. Therefore, exhaust gas may flow into the dividing tube collector cavity 6444 either from the dividing tube outlet aperture 6442 or after flowing around the dividing tube body 6402. As a result, the backpressure of the decomposition chamber 108 may be decreased. The exhaust gas flowing around the dividing tube body 6402 functions to heat the dividing tube body 6402, thereby mitigating impingement of the reductant on the dividing tube body 6402. Further, the exhaust gas flowing around the dividing tube body 6402 causes the exhaust gas within the dividing tube collector cavity 6444 to be propelled out of the dividing tube collector cavity 6444, thereby decreasing the backpressure of the decomposition chamber 108 and increasing the UI of the exhaust gas.

The dividing tube outlet aperture 6442 is positioned proximate the first end 6406. As a result, straight flow (e.g., flow without swirling, etc.) of the exhaust gas from the dividing tube inlet aperture 6430 to the dividing tube outlet aperture 6442 is substantially prevented, thereby ensuring that substantially all of the exhaust gas that exits the dividing tube outlet aperture 6442 is first swirled by the dividing tube body 6402. Furthermore, due to the dividing tube inlet aperture 6430 being positioned proximate the second end 6416 and the dividing tube outlet aperture 6442 being positioned proximate the first end 6406, a distance between the dividing tube inlet aperture 6430 and the dividing tube outlet aperture 6442 may be maximized, thereby increasing the amount of time that the exhaust gas is retained within the dividing tube cavity 6432 which correspondingly increases mixing of the reductant in the exhaust gas and the UI.

The first dividing tube flange openings 6436 are disposed on a portion of the first dividing tube flange 6404 that is opposite the dividing tube cavity 6432 (e.g., are located opposite the first end 6406, etc.). In operation, the first dividing tube flange opening 6436 facilitate passage of the exhaust gas (e.g., exhaust gas that has flowed between the mixing assembly wall 230 and the first dividing tube flange 6404, etc.) through the first dividing tube flange 6404 and into the dividing tube cavity 6432 without passing through the dividing tube inlet aperture 6430. As a result, the backpressure of the decomposition chamber 108 may be decreased. Furthermore, the exhaust gas flowing through the first dividing tube flange opening 6436 functions to heat the first end 6406, thereby mitigating impingement of the reductant on the first end 6406. The exhaust gas flowing through the first dividing tube flange opening 6436 may also be useful in redirecting the exhaust gas flowing within the dividing tube cavity 6432 towards the dividing tube outlet aperture 6442, thereby decreasing the backpressure of the decomposition chamber 108 and increasing the UI of the exhaust gas.

In various embodiments, the first dividing tube flange 6404 includes a plurality of nozzles 6448 (e.g., concentrators, jets, etc.). Each of the nozzles 6448 extends around one of the first dividing tube flange openings 6436 and projects from the first dividing tube flange 6404 into the dividing tube cavity 6432. The nozzles 6448 function to increase momentum and/or velocity of the exhaust gas propelled through the first dividing tube flange openings 6436. In this way, the first dividing tube flange openings 6436 may assist in directing the exhaust gas and the reductant out of the dividing tube cavity 6432 and mitigate formation of deposits on the first dividing tube flange 6404.

In some embodiments, the first dividing tube flange 6404 does not include any of the first dividing tube flange openings 6436 or any of the nozzles 6448. As a result, all of the exhaust gas that flow through the dividing tube cavity 6432 enters via the dividing tube inlet aperture 6430.

The dividing tube 6400 also includes a recessed inlet 6450 (e.g., ramp, etc.). The recessed inlet 6450 is disposed within the dividing tube panel 6410 and is aligned with the dividing tube inlet aperture 6430. The recessed inlet 6450 is configured to direct the exhaust gas into the dividing tube inlet aperture 6430.

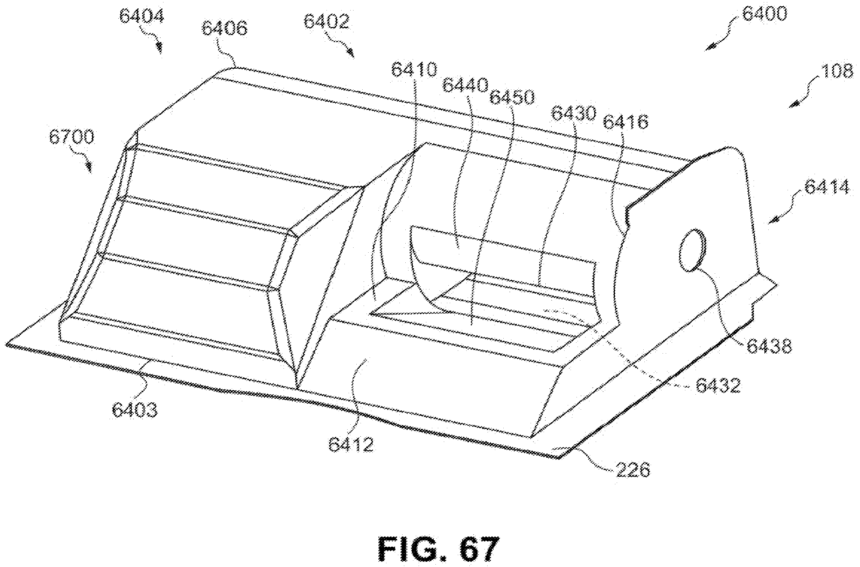

Figures 67-71 illustrate the dividing tube 6400 according to various embodiments. In these embodiments, the dividing tube 6400 includes an outlet shell 6700. The outlet shell 6700 is coupled to the dividing tube body 6402. The outlet shell 6700 provides an outlet shell cavity 6702 that is contiguous with the dividing tube cavity 6432. The exhaust gas may flow from the dividing tube inlet aperture 6430 into the outlet shell cavity 6702 and from the first dividing tube flange openings 6436 into the outlet shell cavity 6702. The exhaust gas provided by the dividing tube outlet aperture 6442 may flow from the outlet shell cavity 6702. The outlet shell cavity 6702 may provide an increased volume for the exhaust gas to swirl within the dividing tube 6400. In this way, the outlet shell 6700 may facilitate enhanced mixing of the reductant and the exhaust gas.

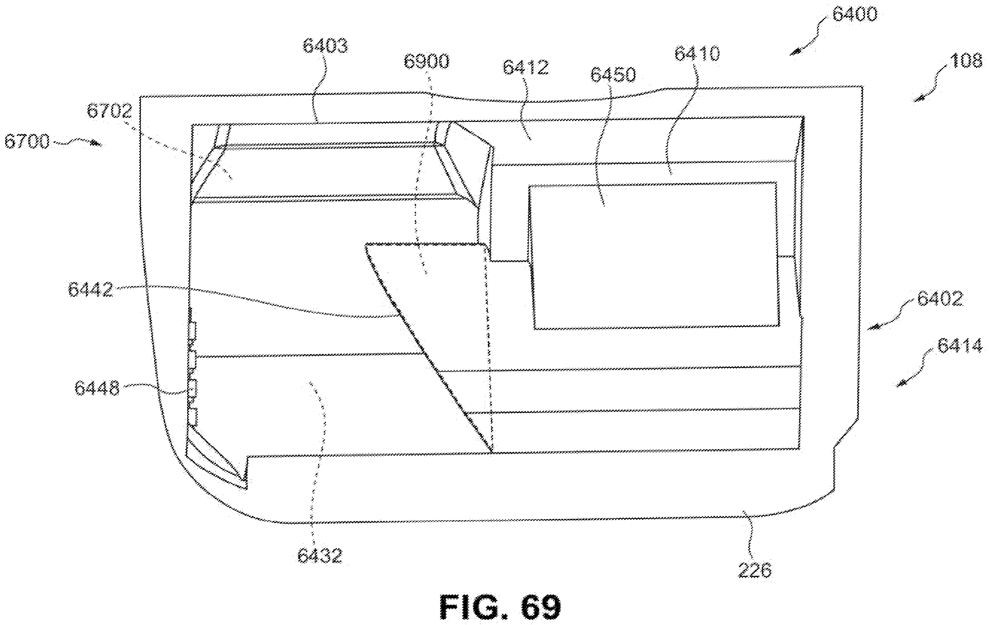

In various embodiments, such as is shown in Figure 69, the dividing tube 6400 also includes a blocking panel 6900. The blocking panel 6900 is contiguous with the dividing tube outlet aperture 6442 and extends from the dividing tube body 6402 towards the first dividing tube flange 6404. The blocking panel 6900 may provide additional swirling to the exhaust gas.

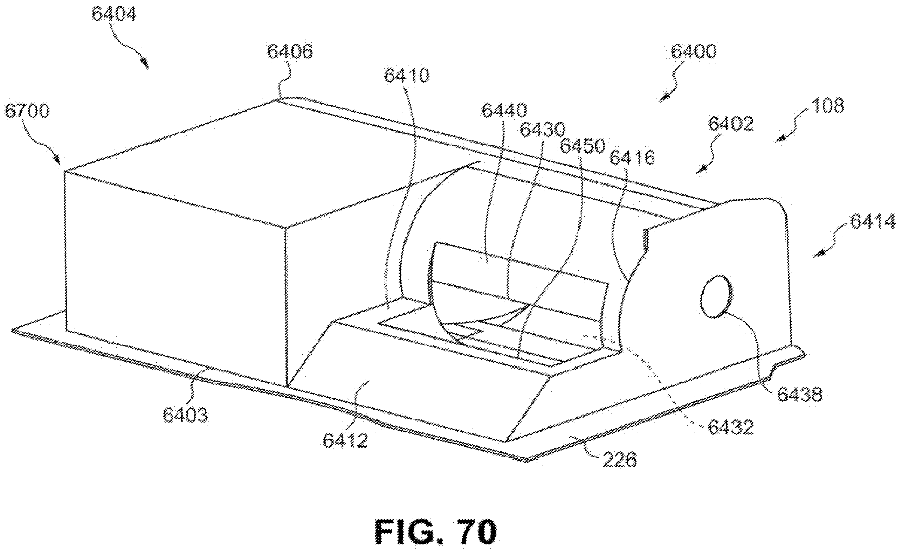

In some embodiments, such as is shown in Figures 67-69, the outlet shell 6700 forms at least part of a trapezoid. In other embodiments, such as is shown in Figures 70-72, the outlet shell forms at least part of a cuboid.

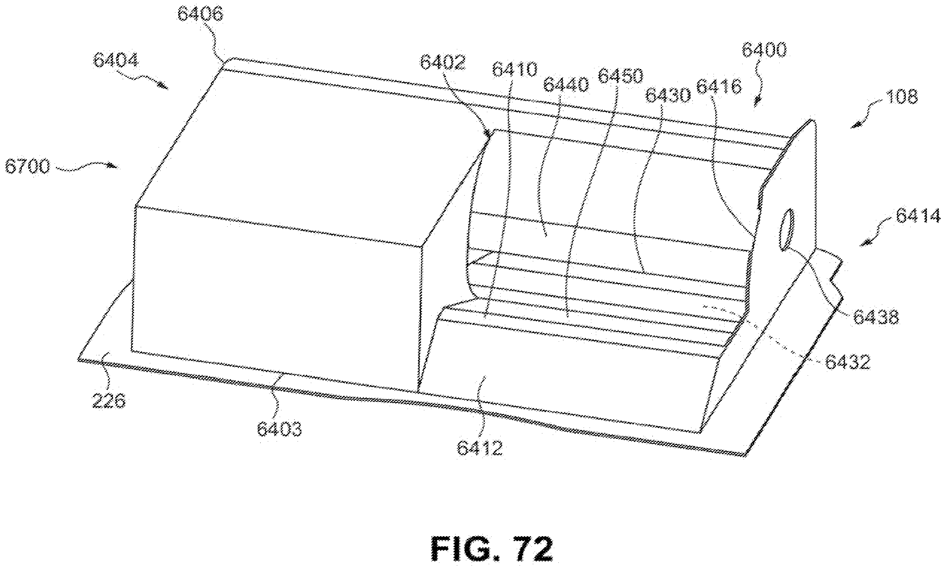

In some embodiments, such as shown in Figure 70, the dividing tube panel 6410 extends along more than one side of the recessed inlet 6450. In other embodiments, such as shown in Figure 72, the dividing tube panel 6410 extends along only one side of the recessed inlet 6450.

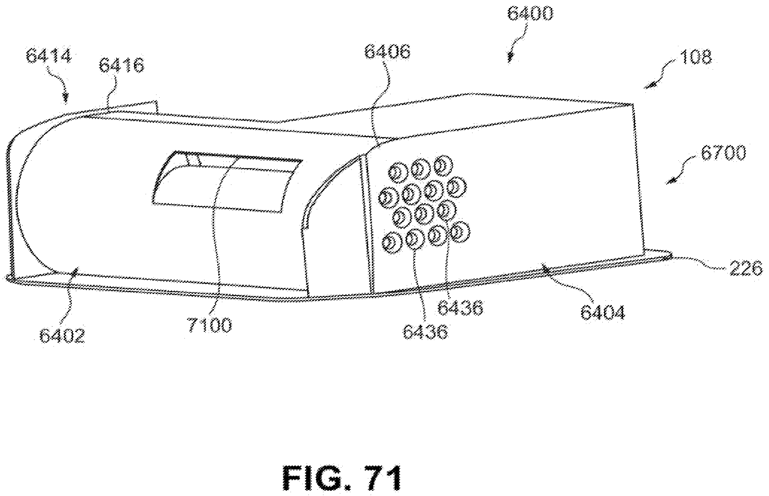

In some embodiments, such as is shown in Figure 71, the exhaust gas may enter the dividing tube body 6402 via a dividing tube body bypass opening 7100 (e.g., window, etc.). The dividing tube body bypass opening 7100 is disposed proximate the first end 6406 and enables a portion of the exhaust gas to flow into the dividing tube cavity 6432 downstream of the dividing tube inlet aperture 6430.

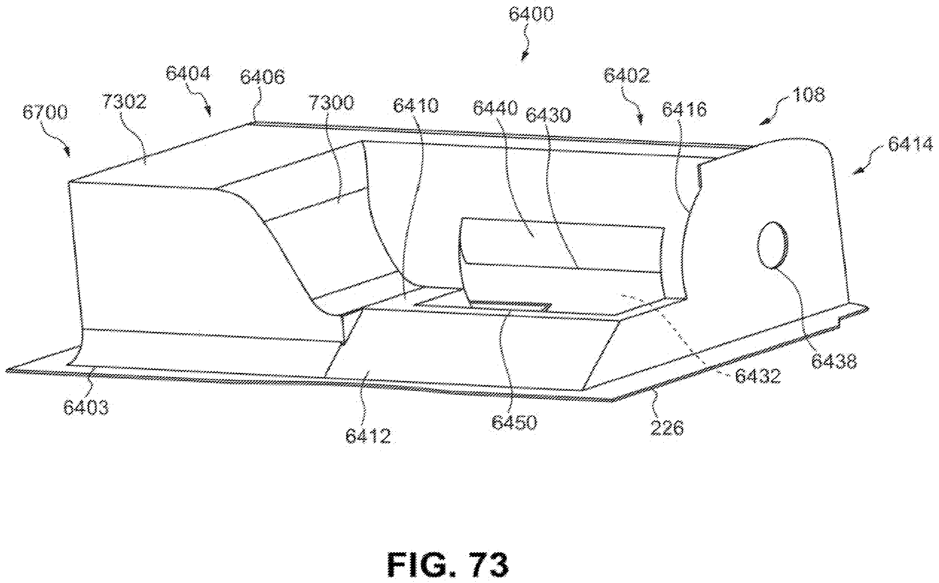

In various embodiments, such as is shown in Figures 73, 74, and 76, the blocking panel 6900 includes a sloped surface 7300. The sloped surface 7300 is contiguous with the dividing tube body 6802, the dividing tube panel 6410, and a blocking panel outer housing surface 7302 of the blocking panel 6900. The blocking panel outer housing surface 7302 is in confronting relation with the outer housing wall 232. The sloped surface 7300 slopes from the blocking panel outer housing surface 7302 to the dividing tube panel 6410. The sloped surface 7300 directs a portion of the exhaust gas away from some of the SCR catalyst members 216 and towards others of the SCR catalyst members 216. In this way, the sloped surface 7300 may be used to, for example, balance the exhaust gas being provided to all of the SCR catalyst members 216.

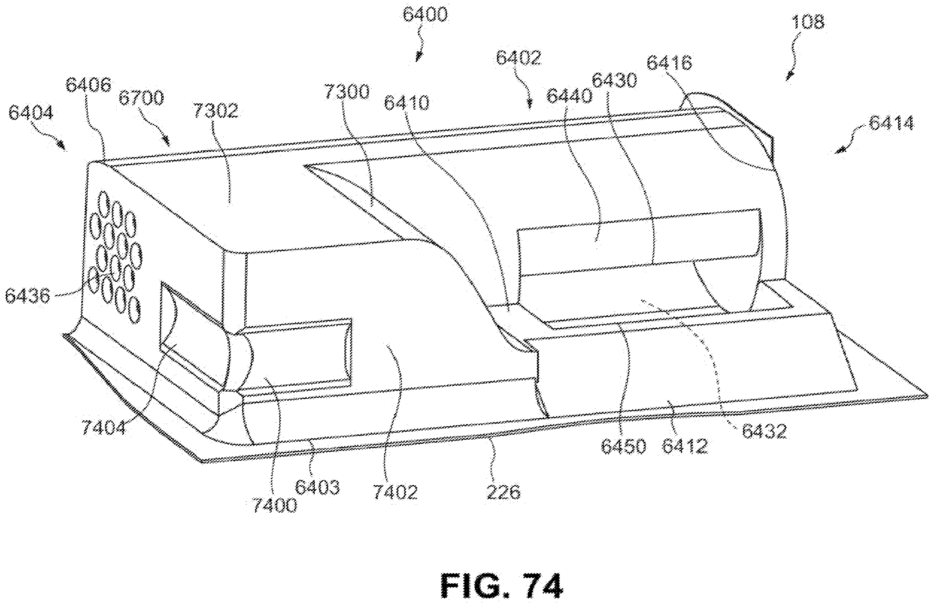

In various embodiments, such as is shown in Figure 74, the blocking panel 6900 includes a blocking panel trough 7400 (e.g., recession, etc.). The blocking panel trough 7400 extends towards the dividing tube body 6402. The blocking panel trough 7400 is disposed within a blocking panel upstream surface 7402 of the blocking panel 6900. The blocking panel upstream surface 7402 is contiguous with the mixing collector wall 226, the blocking panel outer housing surface 7302, and the sloped surface 7300. The blocking panel trough 7400 causes the exhaust gas flow to be redirected (e.g., within the dividing tube cavity 6432, etc.). In this way, the blocking panel trough 7400 may be used to, for example, balance the exhaust gas being provided to all of the SCR catalyst members 216.

In some embodiments, such as is shown in Figure 74, the first dividing tube flange 6404 includes a first dividing tube flange trough 7404 (e.g., recession, etc.). The first dividing tube flange trough 7404 extends towards the second end 6416. The first dividing tube flange trough 7404 causes the exhaust gas flow to be redirected (e.g., within the dividing tube cavity 6432, etc.). In this way, the first dividing tube flange trough 7404 may be used to, for example, balance the exhaust gas being provided to all of the SCR catalyst members 216. In some embodiments, the first dividing tube flange trough 7404 is aligned with the blocking panel trough 7400 (e.g., a center axis of the first dividing tube flange trough 7404 is disposed along the same plane along which a center axis of the blocking panel trough 7400 extends, etc.).

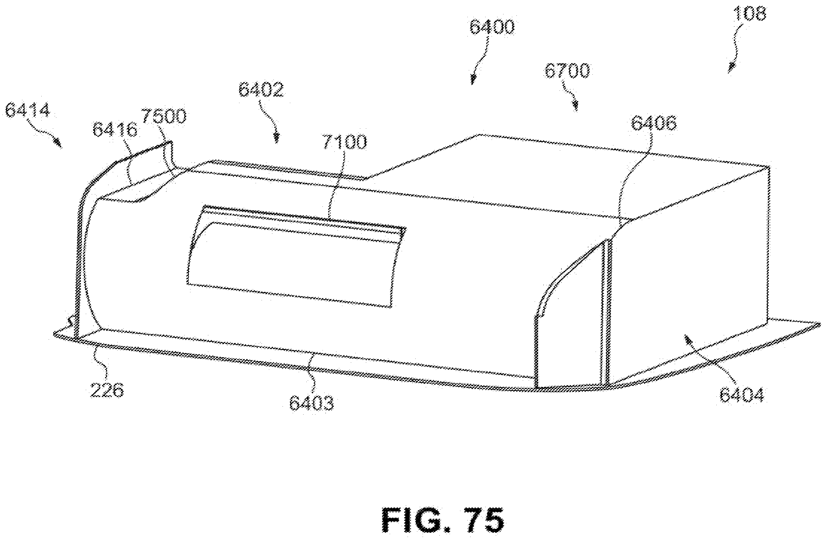

In some embodiments, such as is shown in Figures 75-78D, the dividing tube body 6402 includes a second dividing tube flange trough 7500 (e.g., recession, etc.). The second dividing tube flange trough 7500 extends across the dividing tube body 6402 proximate the second dividing tube flange 6414. As a result, the second dividing tube flange trough 7500 provides a pathway for the exhaust gas to flow between the dividing tube body 6402, the second dividing tube flange 6414, and the outer housing wall 232. In this way, the second dividing tube flange trough 7500 may decrease a backpressure of the decomposition chamber 108.

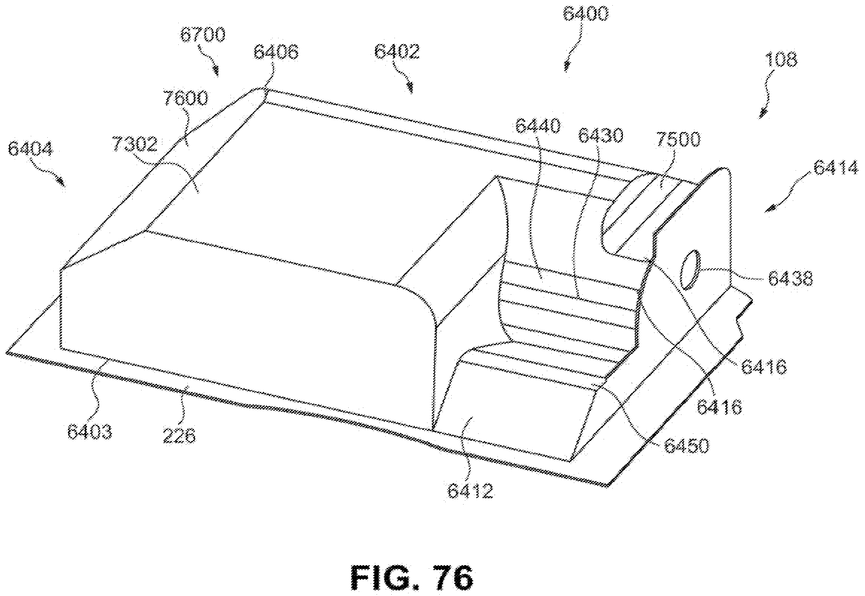

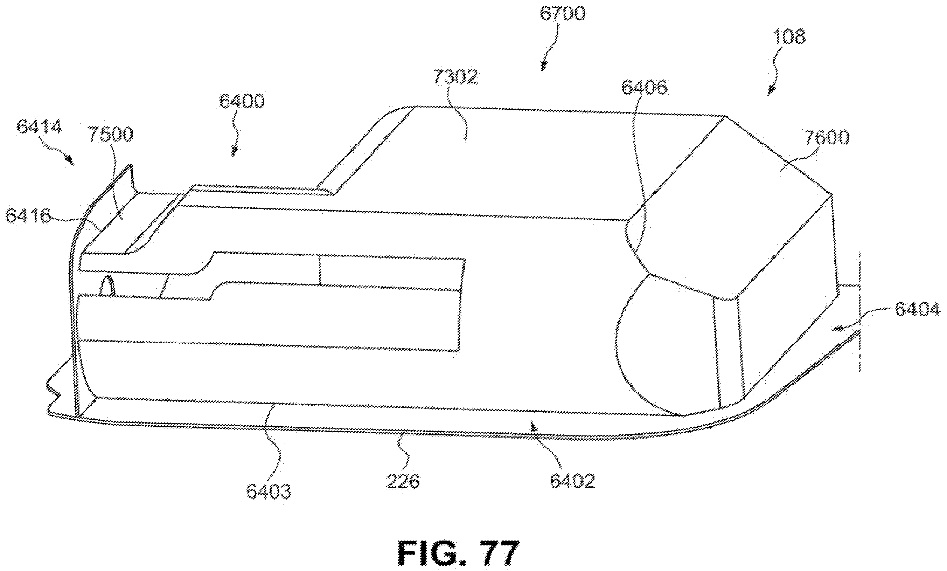

In some embodiments, such as is shown in Figures 76 and 77, the dividing tube body 6402 includes a first dividing tube flange trough 7600 (e.g., recession, etc.). The first dividing tube flange trough 7600 extends across the dividing tube body 6402 proximate the first dividing tube flange 6404. As a result, the first dividing tube flange trough 7600 provides a pathway for the exhaust gas to flow between the dividing tube body 6402, the first dividing tube flange 6404, and the outer housing wall 232. In this way, the first dividing tube flange trough 7600 may decrease a backpressure of the decomposition chamber 108.

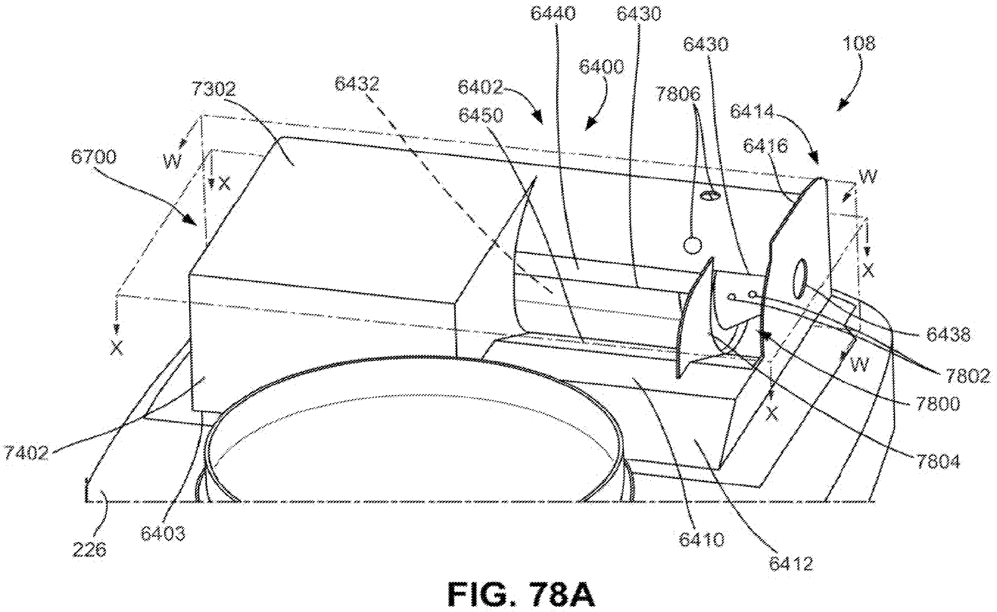

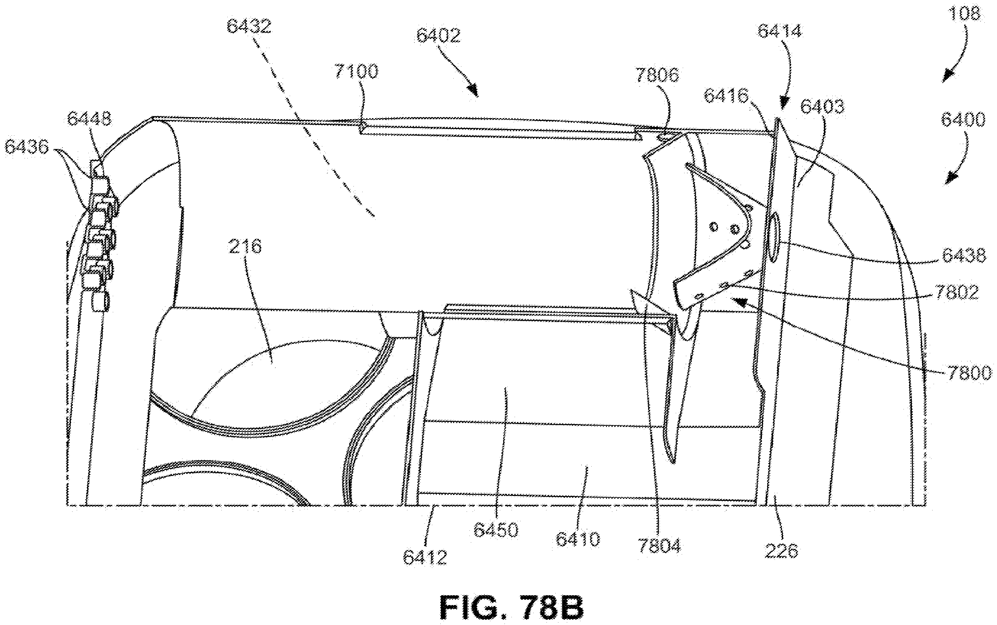

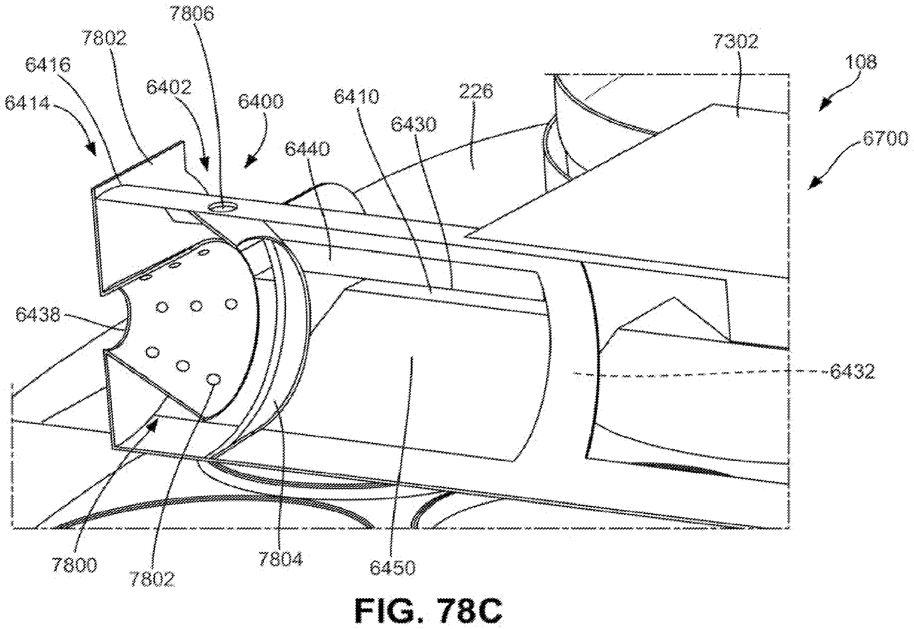

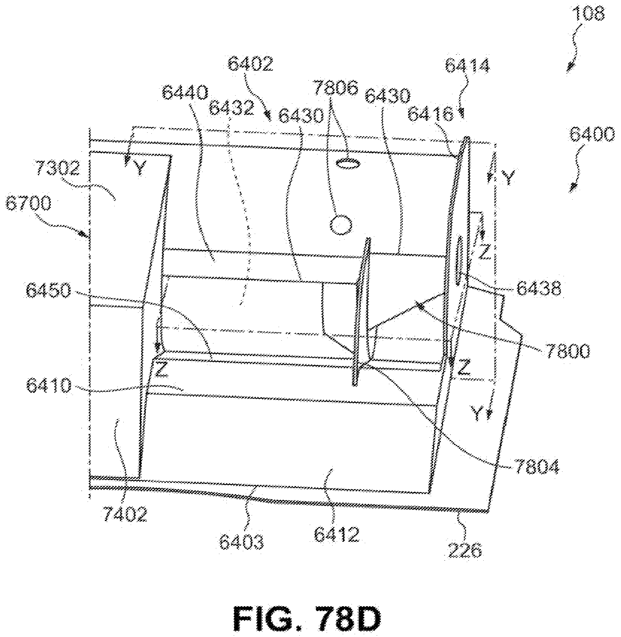

In various embodiments, such as is shown in Figures 78A-80, the dividing tube 6400 also includes an exhaust assist cone 7800 (e.g., exhaust guide, exhaust cone, etc.). The exhaust assist cone 7800 is coupled to the second dividing tube flange 6414 around the second dividing tube flange aperture 6438. The exhaust assist cone 7800 extends from the second dividing tube flange 6414 into the dividing tube cavity 6432. As is explained in more detail herein, the exhaust assist cone 7800 is configured to facilitate propulsion of the reductant into the dividing tube cavity 6432 so as to facilitate desirable mixing of the reductant and the exhaust gas within the dividing tub cavity 6432.

The exhaust assist cone 7800 includes at least one exhaust assist aperture 7802 (e.g., opening, hole, etc.), in some embodiments. The exhaust assist apertures 7802 are configured to facilitate passage of exhaust gas into the exhaust assist cone 7800. The exhaust gas provided into the exhaust assist cone 7800 may be used to propel the reductant out of the exhaust assist cone 7800 and into the dividing tube cavity 6432. In some embodiments, each of the exhaust assist apertures 7802 is circular and has a diameter that is approximately equal to 5mm.

The dividing tube 6400 may also include a splash plate 7804 (e.g., flange, wall, etc.). The splash plate 7804 is coupled to the dividing tube body 6402 downstream of the exhaust assist cone 7800. The splash plate 7804 extends across the dividing tube inlet aperture 6430. As a result, a first portion of the exhaust gas entering the dividing tube inlet aperture 6430 flows between the splash plate 7804 and the second dividing tube flange 6414 (e.g., for provision into the exhaust assist cone 7800 via the exhaust assist apertures 7802, etc.) and a second portion of the exhaust gas entering the dividing tube inlet aperture 6430 flows between the splash plate 7804 and the outlet shell 6700 (e.g., for provision into the dividing tube cavity 6432, etc.). The splash plate 7804, the exhaust assist cone 7800, and the dividing tube body 6402 may be configured such that the portion of the exhaust gas flowing between the splash plate 7804 and the second dividing tube flange 6414 is caused to swirl around the exhaust assist cone 7800. As a result, this swirling may be impacted to the reductant flowing out of the exhaust assist cone 7800. The splash plate 7804 may be configured to mitigate formation of deposits on the dividing tube body 6402.

In various embodiments, the dividing tube body 6402 includes a plurality of dividing tube body apertures 7806 (e.g., holes, windows, etc.). Each of the dividing tube body apertures 7806 is aligned with the splash plate 7804 and is configured to direct exhaust gas into the dividing tube body 6402 proximate the splash plate 7804. This exhaust gas may flow from between the dividing tube body 6402 and the outer housing wall 232 and may function to heat the splash plate 7804 and mitigate formation of deposits on the splash plate 7804.

### XXVIII. Example Decomposition Chamber Having a Twenty-Fifth Example Mixing Assembly

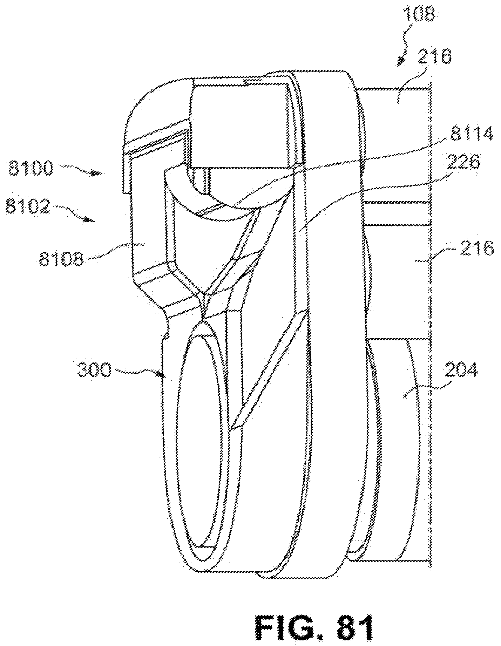

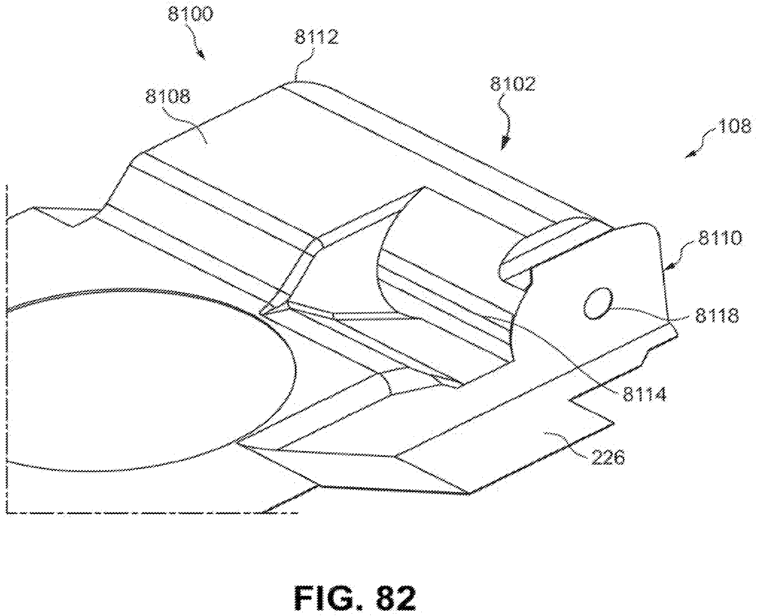

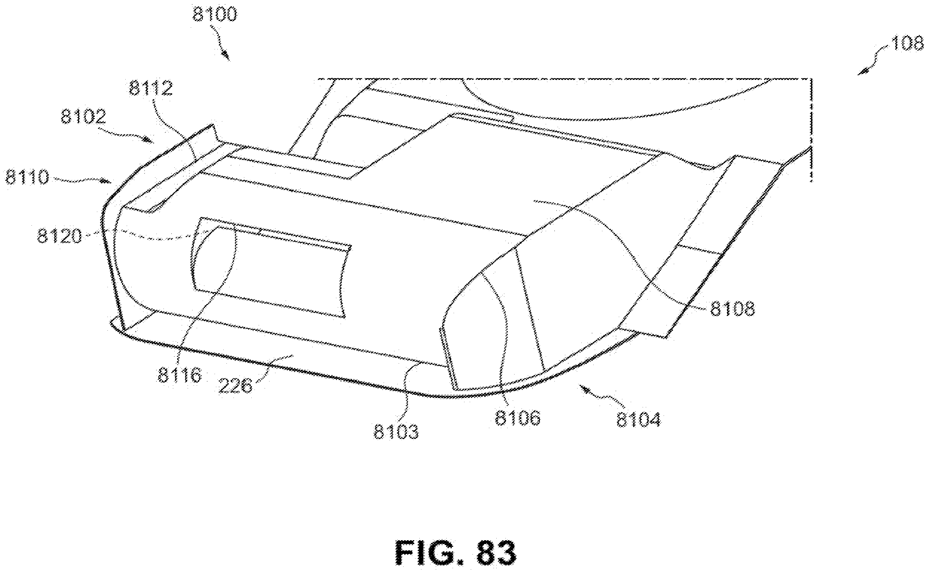

Figures 81-83 illustrate the decomposition chamber 108 and the mixing assembly 222 according to another example embodiment. The decomposition chamber 108 includes the distribution cap 300 as described herein. The decomposition chamber 108 also includes a dividing tube 8100.

The dividing tube 8100 includes a dividing tube body 8102 (e.g., frame, shell, etc.). The dividing tube body 8102 is generally cylindrical, oval, oblong, or stadium-shaped. The dividing tube body 8102 is separated from the outer housing wall 232 (e.g., such that flow of the exhaust gas between the dividing tube body 8102 and the outer housing wall 232 is facilitated, etc.).

The dividing tube body 8102 is positioned over or within a dividing tube coupler aperture 8103 (e.g., hole, opening, etc.) in the mixing collector wall 226 (e.g., the mixing collector wall 226 is disposed along a plane which bisects the dividing tube body 8102, etc.). The dividing tube body 8102 is coupled to the mixing collector wall 226 around the dividing tube coupler aperture 8103.

The dividing tube 8100 also includes a first dividing tube flange 8104 (e.g., wall, divider, etc.). The first dividing tube flange 8104 is coupled (e.g., a first portion of the first dividing tube flange 8104 is coupled to, etc.) to a first end 8106 of the dividing tube body 8102 (e.g., such that flow of the exhaust gas between the first end 8106 and the first dividing tube flange 8104 is substantially prohibited, etc.). The first dividing tube flange 8104 is also coupled to the mixing collector wall 226 (e.g., such that flow of the exhaust gas between the mixing collector wall 226 and the first dividing tube flange 8104 is substantially prohibited, etc.).

In various embodiments, the first dividing tube flange 8104 is coupled to the mixing collector wall 226 along the dividing tube coupler aperture 8103 (e.g., along a side of the dividing tube coupler aperture 8103, etc.). In various embodiments, the first dividing tube flange 8104 is not positioned within the dividing tube coupler aperture 8103.

The dividing tube 8100 also includes a blocking panel 8108. The blocking panel 8108 extends from the dividing tube body 8102 towards the distribution cap 300. The blocking panel 8108 may provide additional swirling to the exhaust gas. The blocking panel 8108 is contiguous with the first dividing tube flange 8104 and extends away from the first dividing tube flange 8104.

The dividing tube 8100 also includes a second dividing tube flange 8110 (e.g., wall, divider, etc.). The second dividing tube flange 8110 is coupled (e.g., a first portion of the second dividing tube flange 8110 is coupled to, etc.) to a second end 8112 of the dividing tube body 8102 (e.g., such that flow of the exhaust gas between the second end 8112 and the second dividing tube flange 8110 is substantially prohibited, etc.). The second end 8112 is opposite the first end 8106. The second dividing tube flange 8110 is also coupled to the mixing collector wall 226 (e.g., such that flow of the exhaust gas between the mixing collector wall 226 and the second dividing tube flange 8110 is substantially prohibited, etc.).

The first end 8106 may include tabs that are configured to be received within slots within the first dividing tube flange 8104 to facilitate coupling of the dividing tube body 8102 to the first dividing tube flange 8104. The second end 8112 may include tabs that are configured to be received within slots within the second dividing tube flange 8110 to facilitate coupling of the dividing tube body 8102 to the second dividing tube flange 8110.

In various embodiments, the second dividing tube flange 8110 is coupled to the mixing collector wall 226 along the dividing tube coupler aperture 8103 (e.g., along a side of the dividing tube coupler aperture 8103, etc.). In various embodiments, the second dividing tube flange 8110 is not positioned within the dividing tube coupler aperture 8103.

The dividing tube 8100 establishes a concentration cavity. The concentration cavity is defined between the mixing collector wall 226, the distribution cap wall 304, the outer housing wall 232, the mixing assembly wall 230, the dividing tube body 8102, the first dividing tube flange 8104, and the second dividing tube flange 8110.

After flowing out of the distribution cap 300 (e.g., via the distribution cap aperture 302), the exhaust gas enters the dividing tube body 8102 in one of a variety of different ways.

First, the exhaust gas may enter the dividing tube body 8102 via a dividing tube inlet aperture 8114 (e.g., hole, opening, etc.) formed in the dividing tube body 8102. After flowing through the dividing tube inlet aperture 8114, the exhaust gas enters a dividing tube cavity 8120 defined by the dividing tube body 8102.

The exhaust gas flowing through the dividing tube inlet aperture 8114 enters the dividing tube cavity 8120 radially (e.g., along a tangent of the dividing tube body 8102, along a line that is parallel to and offset from a tangent of the dividing tube body 8102, etc.). This radial entry causes the exhaust gas to swirl within the dividing tube cavity 8120. The swirl imparted by the dividing tube inlet aperture 8114 facilitates mixing of the exhaust gas and the reductant within the dividing tube cavity 8120 and ensures shear on the dividing tube body 8102 is relatively high, thereby mitigating impingement of the reductant on the dividing tube body 8102.

Second, the exhaust gas may enter the dividing tube body 8102 via a dividing tube body bypass opening 8116 (e.g., window, etc.). The dividing tube body bypass opening 8116 is disposed proximate the second end 8112 and enables a portion of the exhaust gas to flow into the dividing tube cavity 8120 downstream of the dividing tube inlet aperture 8114. At least a portion of the exhaust gas flowing between the dividing tube body 8102 and the mixing assembly wall 230 may be directed into the dividing tube body bypass opening 8116. This exhaust gas may be relatively hot (e.g., compared to exhaust gas that entered the dividing tube body 8102 via the dividing tube inlet aperture 8114, etc.) and therefore may heat various portions of the dividing tube 8100 which mitigates formation of deposits on the dividing tube 8100.

The exhaust gas flowing through the dividing tube body bypass opening 8116 enters the dividing tube cavity 8120 radially (e.g., along a tangent of the dividing tube body 8102, along a line that is parallel to and offset from a tangent of the dividing tube body 8102, etc.). This radial entry causes the exhaust gas to swirl within the dividing tube cavity 8120. The swirl imparted by the dividing tube body bypass opening 8116 facilitates mixing of the exhaust gas and the reductant within the dividing tube cavity 8120 and ensures shear on the dividing tube body 8102 is relatively high, thereby mitigating impingement of the reductant on the dividing tube body 8102. In various embodiments, the dividing tube body bypass opening 8116 and the dividing tube inlet aperture 8114 are configured to cause swirling of the exhaust gas in the same direction (e.g., clockwise, counterclockwise, etc.).

Additionally, the reductant (e.g., via the injector 120, via the dosing module 112, etc.) may enter the dividing tube body 8102 via a second dividing tube flange aperture 8118 (e.g., hole, opening, etc.). The second dividing tube flange aperture 8118 is at least partially circumscribed by (e.g., encircled, bordered by, surrounded by, etc.) the second end 8112. After flowing through the second dividing tube flange aperture 8118, the reductant enters the dividing tube cavity 8120.

The mixing assembly wall 230 includes the injector coupler 234. The dividing tube 8100 is positioned such that the injector coupler 234 is aligned with the second dividing tube flange aperture 8118 and spaced from the second dividing tube flange 8110. As a result, the injection region 314 is located within the dividing tube cavity 8120 and the concentration cavity.

### XXIX. Example Decomposition Chamber Having a Twenty-Sixth Example Mixing Assembly

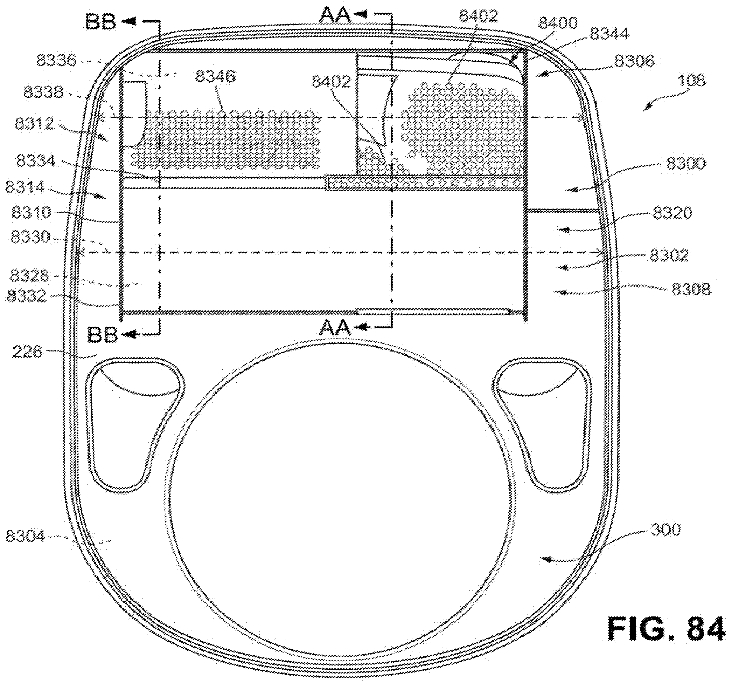

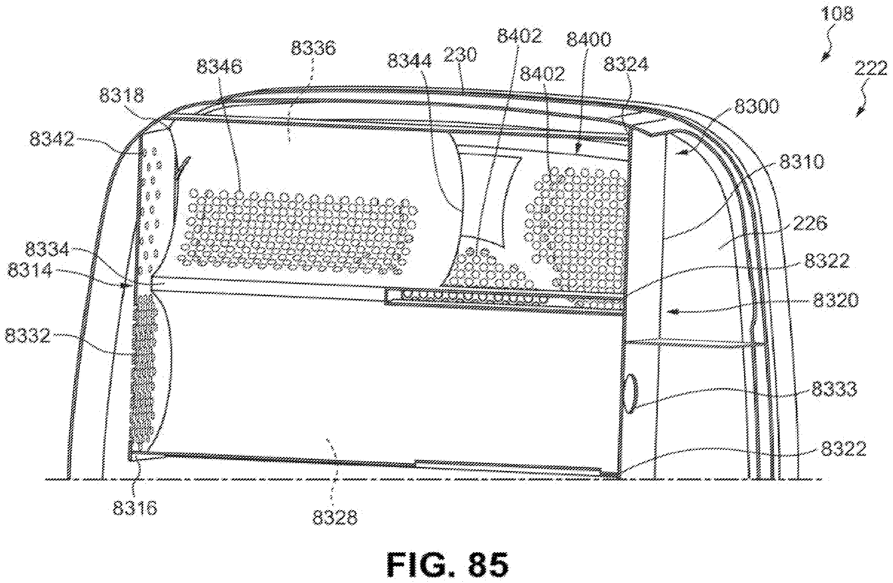

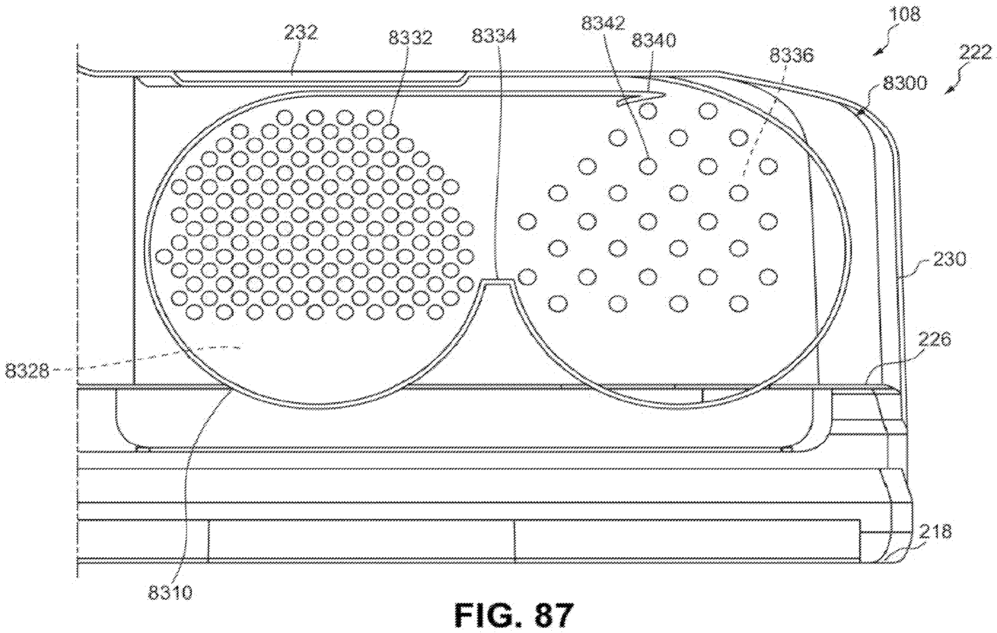

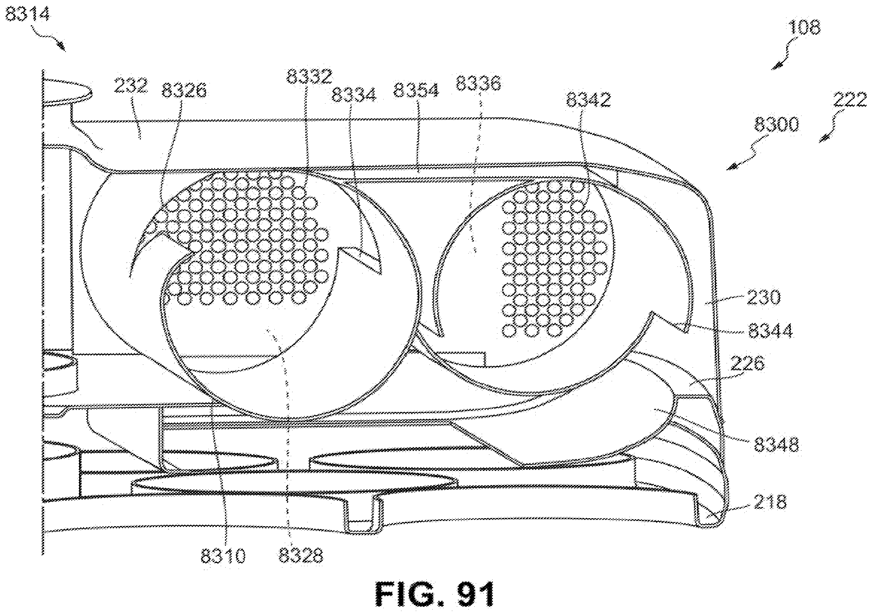

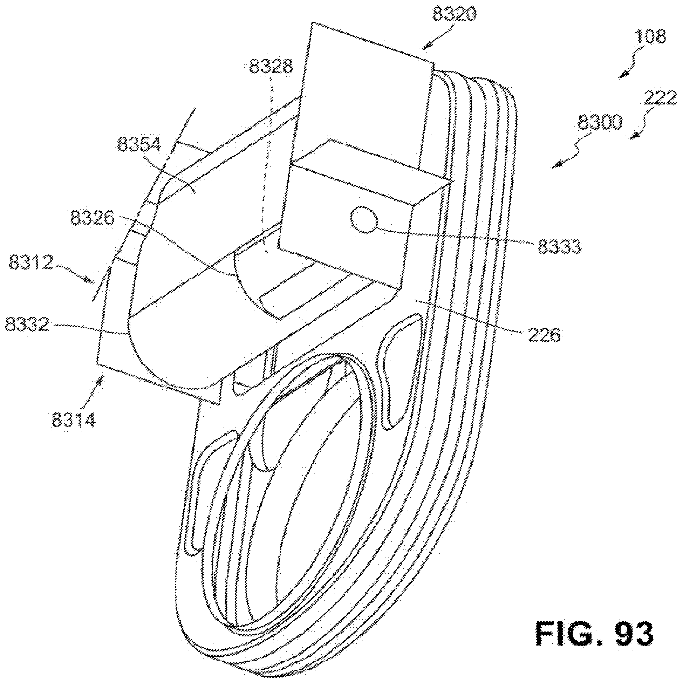

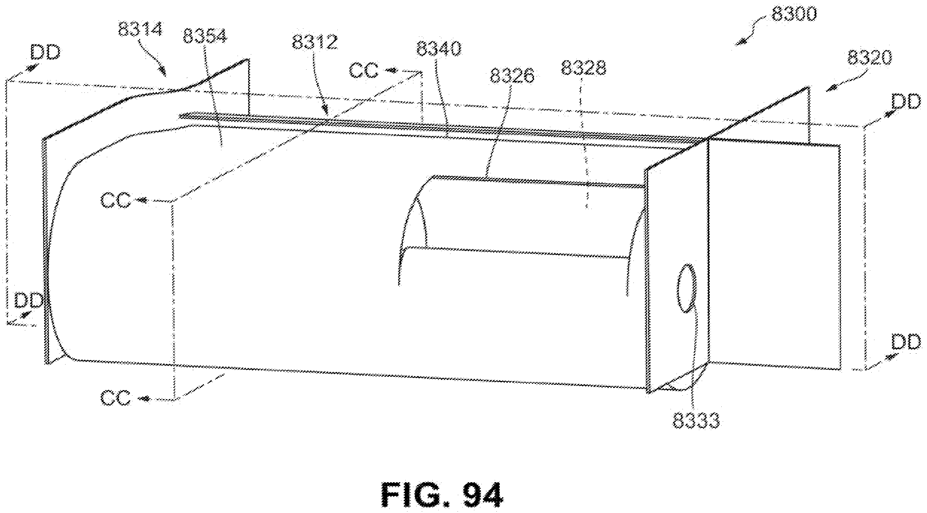

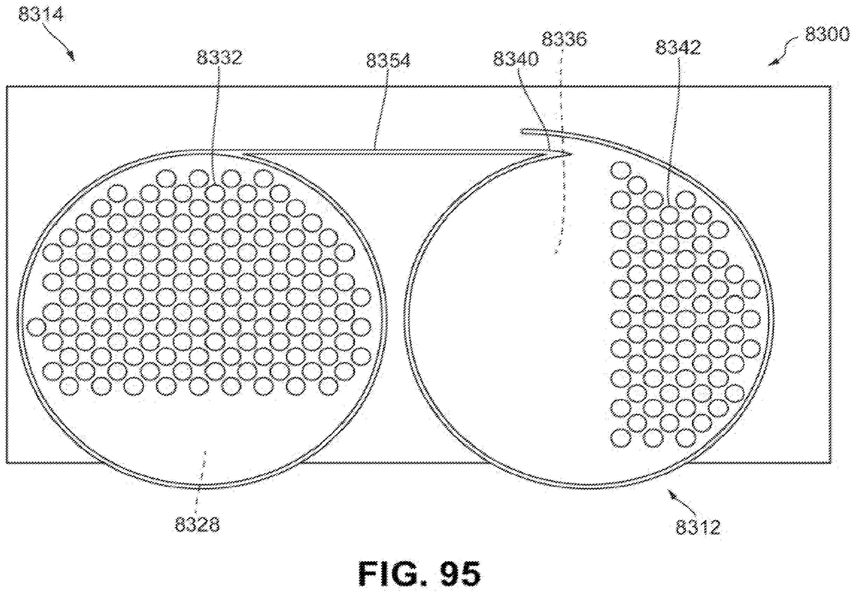

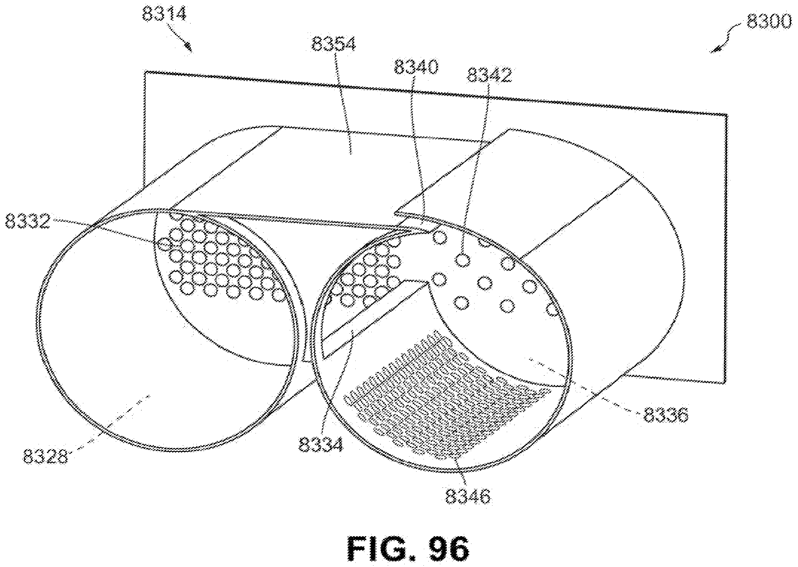

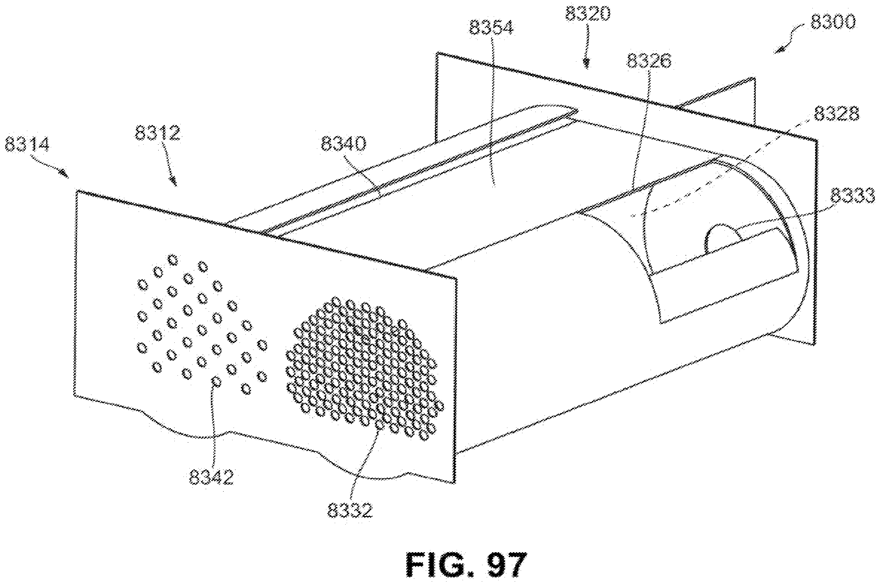

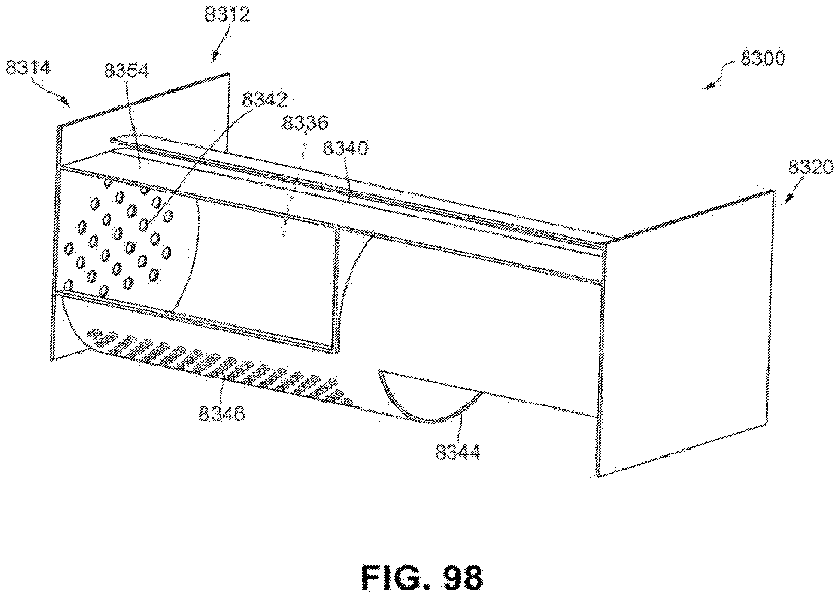

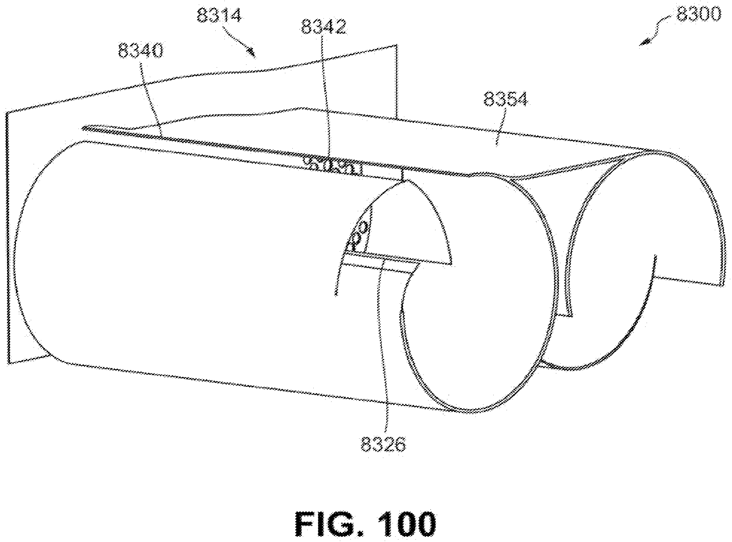

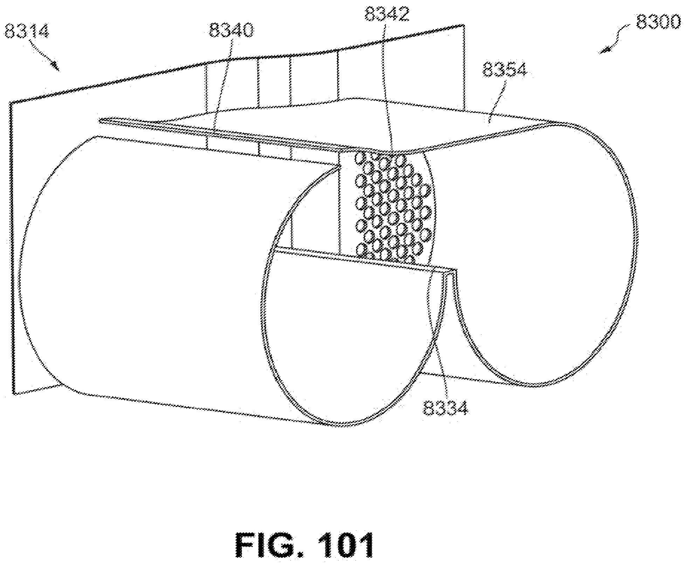

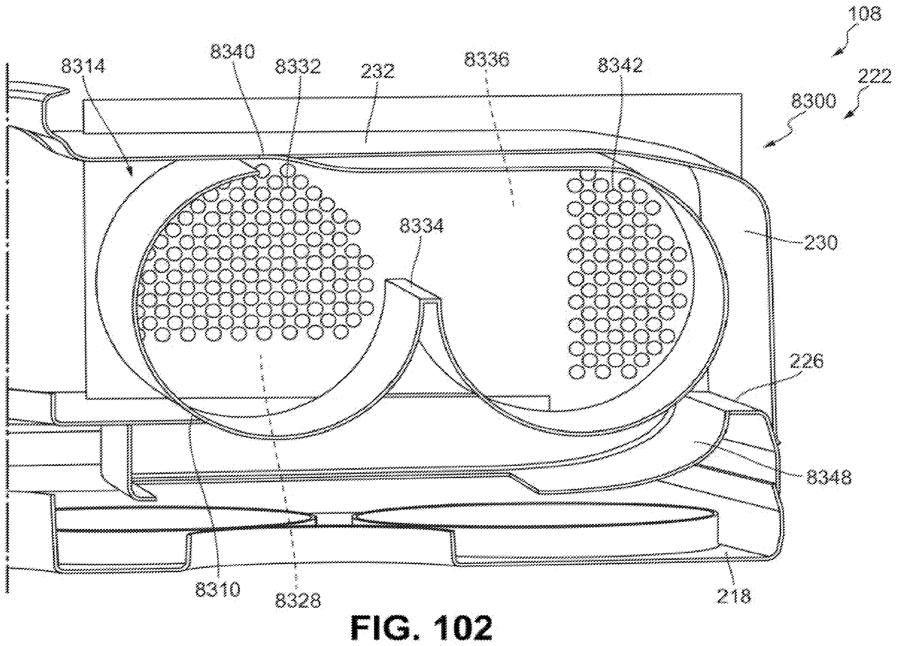

Figures 84-102 illustrate the decomposition chamber 108 and the mixing assembly 222 according to another example embodiment. The decomposition chamber 108 includes the distribution cap 300 as described herein. The decomposition chamber 108 also includes a dividing tube assembly 8300. The dividing tube assembly 8300 includes an inlet dividing tube 8302. The inlet dividing tube 8302 is configured to receive the exhaust gas from within a concentration cavity 8304 established by the dividing tube assembly 8300. The dividing tube assembly 8300 also includes an outlet dividing tube 8306. The outlet dividing tube 8306 is coupled to the inlet dividing tube 8302 and is configured to receive the exhaust gas from the inlet dividing tube 8302 and to provide the exhaust gas to the SCR catalyst members 216.

The inlet dividing tube 8302 includes an inlet dividing tube body 8308 (e.g., frame, shell, etc.). The inlet dividing tube body 8308 is generally cylindrical, oval, oblong, or stadium-shaped. The inlet dividing tube body 8308 is separated from the outer housing wall 232 (e.g., such that flow of the exhaust gas between the inlet dividing tube body 8308 and the outer housing wall 232 is facilitated, etc.).

The inlet dividing tube body 8308 is positioned within a dividing tube coupler aperture 8310 (e.g., hole, opening, etc.) in the mixing collector wall 226 (e.g., the mixing collector wall 226 is disposed along a plane which bisects the inlet dividing tube body 8308, etc.). The inlet dividing tube body 8308 is coupled to the mixing collector wall 226 around the dividing tube coupler aperture 8310.

The outlet dividing tube 8306 includes an outlet dividing tube body 8312 (e.g., frame, shell, etc.). The outlet dividing tube body 8312 is generally cylindrical, oval, oblong, or stadium-shaped. The outlet dividing tube body 8312 is positioned within the dividing tube coupler aperture 8310 (e.g., the mixing collector wall 226 is disposed along a plane which bisects the outlet dividing tube body 8312, etc.). In some embodiments, the outlet dividing tube body 8312 is coupled to the mixing collector wall 226 around the dividing tube coupler aperture 8310.

The dividing tube assembly 8300 also includes a first dividing tube assembly flange 8314 (e.g., wall, divider, etc.). The first dividing tube assembly flange 8314 is coupled (e.g., a first portion of the first dividing tube assembly flange 8314 is coupled to, etc.) to an inlet dividing tube first end 8316 of the inlet dividing tube body 8308 (e.g., such that flow of the exhaust gas between the inlet dividing tube first end 8316 and the first dividing tube assembly flange 8314 is substantially prohibited, etc.). The first dividing tube assembly flange 8314 is also coupled (e.g., a second portion of the first dividing tube assembly flange 8314 is coupled to, etc.) to an outlet dividing tube first end 8318 of the outlet dividing tube body 8312 (e.g., such that flow of the exhaust gas between the outlet dividing tube first end 8318 and the first dividing tube assembly flange 8314 is substantially prohibited, etc.). The first dividing tube assembly flange 8314 is also coupled to the mixing collector wall 226 (e.g., such that flow of the exhaust gas between the mixing collector wall 226 and the first dividing tube assembly flange 8314 is substantially prohibited, etc.).

In some embodiments, the first dividing tube assembly flange 8314 is entirely planar. In other words, the first dividing tube assembly flange 8314 does not include a bend between two portions of the first dividing tube assembly flange 8314. These embodiments may provide a significant cost savings compared to other flanges which include a bend. As a result, the decomposition chamber 108 may be more desirable than other systems which use flanges which include a bend.

In various embodiments, the first dividing tube assembly flange 8314 is coupled to the mixing collector wall 226 along the dividing tube coupler aperture 8310 (e.g., along a side of the dividing tube coupler aperture 8310, etc.). In various embodiments, the first dividing tube assembly flange 8314 is not positioned within the dividing tube coupler aperture 8310.

The dividing tube assembly 8300 also includes a second dividing tube assembly flange 8320 (e.g., wall, divider, etc.). The second dividing tube assembly flange 8320 is coupled (e.g., a first portion of the second dividing tube assembly flange 8320 is coupled to, etc.) to an inlet dividing tube second end 8322 of the inlet dividing tube body 8308 (e.g., such that flow of the exhaust gas between the inlet dividing tube second end 8322 and the second dividing tube assembly flange 8320 is substantially prohibited, etc.). The second dividing tube assembly flange 8320 is also coupled (e.g., a second portion of the second dividing tube assembly flange 8320 is coupled to, etc.) to an outlet dividing tube second end 8324 of the outlet dividing tube body 8312 (e.g., such that flow of the exhaust gas between the outlet dividing tube second end 8324 and the second dividing tube assembly flange 8320 is substantially prohibited, etc.). The second dividing tube assembly flange 8320 is also coupled to the mixing collector wall 226 (e.g., such that flow of the exhaust gas between the mixing collector wall 226 and the second dividing tube assembly flange 8320 is substantially prohibited, etc.).

In some embodiments, the second dividing tube assembly flange 8320 is entirely planar. In other words, the second dividing tube assembly flange 8320 does not include a bend between two portions of the second dividing tube assembly flange 8320. These embodiments may provide a significant cost savings compared to other flanges which include a bend. As a result, the decomposition chamber 108 may be more desirable than other systems which use flanges which include a bend.

In various embodiments, the second dividing tube assembly flange 8320 is coupled to the mixing collector wall 226 along the dividing tube coupler aperture 8310 (e.g., along a side of the dividing tube coupler aperture 8310, etc.). In various embodiments, the second dividing tube assembly flange 8320 is not positioned within the dividing tube coupler aperture 8310.

After flowing out of the distribution cap 300 (e.g., via the distribution cap aperture 302), the exhaust gas enters the dividing tube assembly 8300 in one of a variety of different ways.

First, the exhaust gas may enter the inlet dividing tube body 8308 via an inlet dividing tube inlet aperture 8326 (e.g., hole, opening, etc.) formed in the inlet dividing tube body 8308. The inlet dividing tube inlet aperture 8326 is located between the outer housing wall 232 and a location at which the dividing tube panel couples to the inlet dividing tube body 8308.

After flowing through the inlet dividing tube inlet aperture 8326, the exhaust gas enters an inlet dividing tube cavity 8328 defined by the inlet dividing tube body 8308. The inlet dividing tube body 8308 is centered on an inlet dividing tube body axis 8330. The exhaust gas flowing through the inlet dividing tube cavity 8328 may flow in a direction parallel to the inlet dividing tube body axis 8330.

At least a portion of the inlet dividing tube inlet aperture 8326 is located proximate the outer housing wall 232. As a result, the exhaust gas flowing through the inlet dividing tube inlet aperture 8326 enters the inlet dividing tube cavity 8328 radially (e.g., along a tangent of the inlet dividing tube body 8308, along a line that is parallel to and offset from a tangent of the inlet dividing tube body 8308, etc.). This radial entry causes the exhaust gas to swirl within the inlet dividing tube cavity 8328. The swirl imparted by the inlet dividing tube inlet aperture 8326 facilitates mixing of the exhaust gas and the reductant within the inlet dividing tube cavity 8328 and ensures shear on the inlet dividing tube body 8308 is relatively high, thereby mitigating impingement of the reductant on the inlet dividing tube body 8308.

Second, the exhaust gas may enter the inlet dividing tube body 8308 via a first flange inlet body perforation 8332 (e.g., hole, aperture, opening, etc.). The first dividing tube assembly flange 8314 includes a plurality of the first flange inlet body perforations 8332. According to various embodiments, each of the first flange inlet body perforations 8332 is at least partially circumscribed by (e.g., encircled, bordered by, surrounded by, etc.) the inlet dividing tube first end 8316. After flowing through the first flange inlet body perforation 8332, the exhaust gas enters the inlet dividing tube cavity 8328.

The first flange inlet body perforations 8332 are disposed on a portion of the first dividing tube assembly flange 8314 that is opposite the inlet dividing tube cavity 8328. In operation, the first flange inlet body perforations 8332 facilitate passage of the exhaust gas (e.g., exhaust gas that has flowed between the mixing assembly wall 230 and the first dividing tube assembly flange 8314, etc.) through the first dividing tube assembly flange 8314 and into the inlet dividing tube cavity 8328 without passing through the inlet dividing tube inlet aperture 8326. As a result, the backpressure of the decomposition chamber 108 may be decreased. Furthermore, the exhaust gas flowing through the first flange inlet body perforations 8332 functions to heat the first dividing tube assembly flange 8314, thereby mitigating impingement of the reductant on the first dividing tube assembly flange 8314. The exhaust gas flowing through the first flange inlet body perforations 8332 may also be useful in redirecting the exhaust gas flowing within the inlet dividing tube cavity 8328 towards the outlet dividing tube body 8312, thereby decreasing the backpressure of the decomposition chamber 108 and increasing the UI of the exhaust gas.

Additionally, the reductant (e.g., via the injector 120, via the dosing module 112, etc.) may enter the inlet dividing tube body 8308 via a second dividing tube assembly flange aperture 8333 (e.g., hole, opening, etc.). The second dividing tube assembly flange aperture 8333 is at least partially circumscribed by (e.g., encircled, bordered by, surrounded by, etc.) the inlet dividing tube second end 8322. After flowing through the second dividing tube assembly flange aperture 8333, the reductant enters the inlet dividing tube cavity 8328.

The dividing tube assembly 8300 also includes a transfer opening 8334 (e.g., hole, aperture, window, etc.). The transfer opening 8334 is defined by the inlet dividing tube body 8308 and/or the outlet dividing tube body 8312. The exhaust gas within the inlet dividing tube cavity 8328 flows through the transfer opening 8334 and enters an outlet dividing tube cavity 8336 defined by the outlet dividing tube body 8312. The outlet dividing tube body 8312 is centered on an outlet dividing tube body axis 8338. The exhaust gas flowing through the outlet dividing tube cavity 8336 may flow in a direction parallel to the outlet dividing tube body axis 8338. In some embodiments, the dividing tube assembly 8300 is configured such that the outlet dividing tube body axis 8338 is approximately parallel to (e.g., within 5% of parallel to, etc.) the inlet dividing tube body axis 8330.

Fourth, the exhaust gas may enter the outlet dividing tube body 8312 via a dividing tube body bypass opening 8340 (e.g., window, etc.) included in the outlet dividing tube body 8312. This exhaust gas may be relatively hot (e.g., compared to exhaust gas that entered the inlet dividing tube body 8308 via the inlet dividing tube inlet aperture 8326, etc.) and therefore may heat various portions of the dividing tube assembly 8300 which mitigates formation of deposits on the dividing tube assembly 8300.

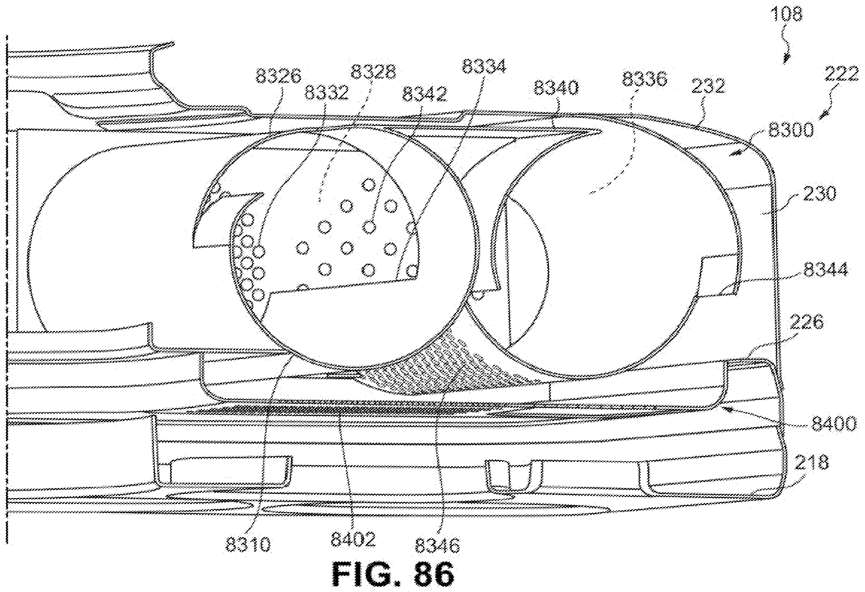

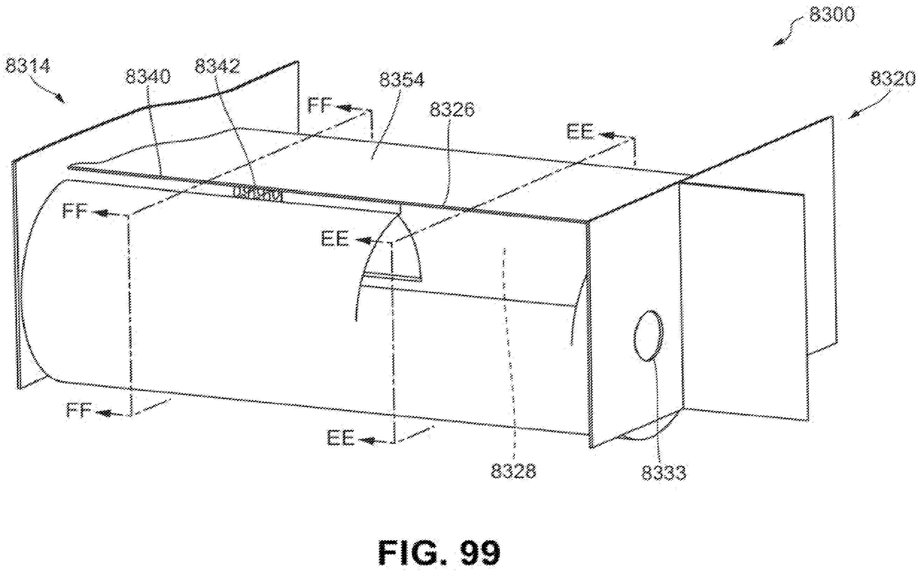

In various embodiments, such as is shown in Figures 86, 87, 90, and 94-98, the dividing tube body bypass opening 8340 is disposed over the outlet dividing tube cavity 8336. As a result, the exhaust gas flows through the dividing tube body bypass opening 8340 and directly into the outlet dividing tube cavity 8336. In other embodiments, such as is shown in Figures 99-102, the dividing tube body bypass opening 8340 is disposed over the inlet dividing tube cavity 8328. As a result, the exhaust gas flows through the dividing tube body bypass opening 8340 and directly into the inlet dividing tube cavity 8328. In other embodiments, the outlet dividing tube body 8312 does not include the dividing tube body bypass opening 8340.

Fifth, the exhaust gas may enter the outlet dividing tube body 8312 via a first flange outlet body perforation 8342 (e.g., hole, aperture, opening, etc.). The first dividing tube assembly flange 8314 includes a plurality of the first flange outlet body perforations 8342. According to various embodiments, each of the first flange outlet body perforations 8342 is at least partially circumscribed by (e.g., encircled, bordered by, surrounded by, etc.) the outlet dividing tube first end 8318. After flowing through the first flange outlet body perforation 8342, the exhaust gas enters the outlet dividing tube cavity 8336.

The first flange outlet body perforation 8342 are disposed on a portion of the first dividing tube assembly flange 8314 that is opposite the outlet dividing tube cavity 8336. In operation, the first flange outlet body perforations 8342 facilitate passage of the exhaust gas (e.g., exhaust gas that has flowed between the mixing assembly wall 230 and the first dividing tube assembly flange 8314, etc.) through the first dividing tube assembly flange 8314 and into the outlet dividing tube cavity 8336 without passing through the inlet dividing tube inlet aperture 8326, the first flange inlet body perforations 8332, or the dividing tube body bypass opening 8340. As a result, the backpressure of the decomposition chamber 108 may be decreased. Furthermore, the exhaust gas flowing through the first flange outlet body perforation 8342 functions to heat the first dividing tube assembly flange 8314, thereby mitigating impingement of the reductant on the first dividing tube assembly flange 8314. The exhaust gas flowing through the first flange outlet body perforation 8342 may also be useful in redirecting the exhaust gas flowing within the outlet dividing tube cavity 8336 (e.g., towards the outlet dividing tube body axis 8338, etc.), thereby decreasing the backpressure of the decomposition chamber 108 and increasing the UI of the exhaust gas.

A portion of the exhaust gas exits the outlet dividing tube cavity 8336 via an outlet dividing tube outlet aperture 8344 and flows towards the SCR catalyst members 216. The exhaust gas flowing through the outlet dividing tube outlet aperture 8344 exits the outlet dividing tube cavity 8336 radially (e.g., along a tangent of the outlet dividing tube body 8312, along a line that is parallel to and offset from a tangent of the outlet dividing tube body 8312, etc.). This radial exit causes the exhaust gas to swirl downstream of the dividing tube assembly 8300. The swirl imparted by the outlet dividing tube outlet aperture 8344 facilitates mixing of the exhaust gas and the reductant downstream of the dividing tube assembly 8300 and ensures shear downstream of the dividing tube assembly 8300 is relatively high, thereby mitigating impingement of the reductant and formation of deposits (e.g., on the mixing collector wall 226, on the outer housing wall 232, etc.).

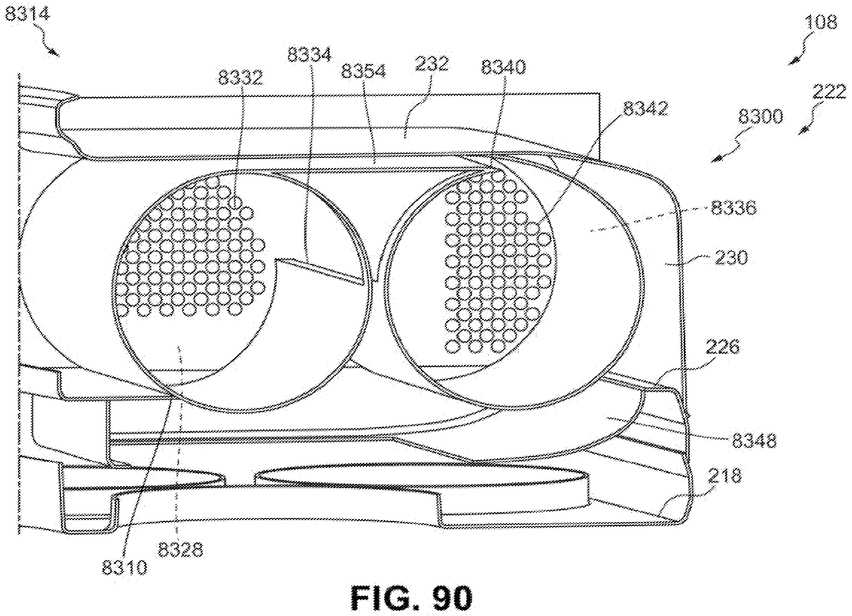

Another portion of the exhaust gas exits the outlet dividing tube cavity 8336 via an outlet dividing tube perforation 8346 (e.g., hole, aperture, opening, etc.). The outlet dividing tube body 8312 includes a plurality of the outlet dividing tube perforations 8346. According to various embodiments, each of the outlet dividing tube perforations 8346 is oriented towards one or more of the SCR catalyst members 216. In operation, the outlet dividing tube perforations 8346 facilitate passage of the exhaust gas (e.g., exhaust gas within the outlet dividing tube cavity 8336, etc.) through the outlet dividing tube body 8312 without passing through the outlet dividing tube outlet aperture 8344. As a result, the backpressure of the decomposition chamber 108 may be decreased. Furthermore, the exhaust gas flowing through the outlet dividing tube perforations 8346 may be useful in redirecting the exhaust gas flowing within the outlet dividing tube cavity 8336 (e.g., towards the outlet dividing tube body axis 8338, towards the outlet dividing tube outlet aperture 8344, etc.), thereby decreasing the backpressure of the decomposition chamber 108 and increasing the UI of the exhaust gas. In some embodiments, such as shown in Figures 90, 91, 101, and 102, the outlet dividing tube body 8312 does not includes any of the outlet dividing tube perforations 8346.

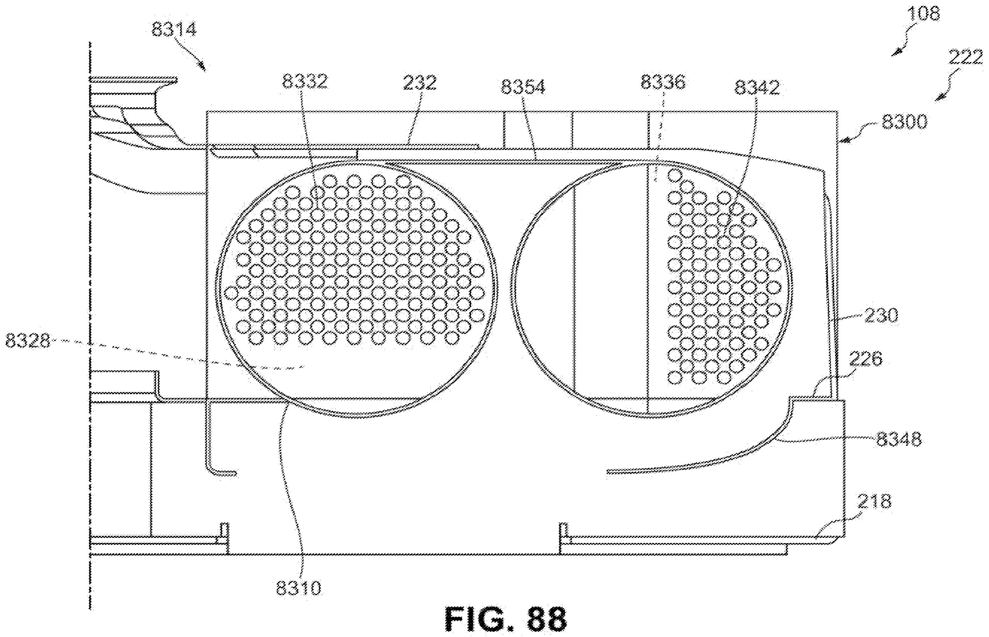

In some embodiments, such as shown in Figures 88-92 and 102, the mixing assembly 222 also includes a dividing tube collector 8348 (e.g., scoop, panel, etc.). The dividing tube collector 8348 is coupled to the mixing collector wall 226 (e.g., such that flow of the exhaust gas between the mixing collector wall 226 and the dividing tube collector 8348 is substantially prohibited, etc.). In some embodiments, the dividing tube collector 8348 is coupled to the mixing collector wall 226 such that a portion of the dividing tube assembly 8300 is positioned within and/or adjacent to the dividing tube collector 8348.

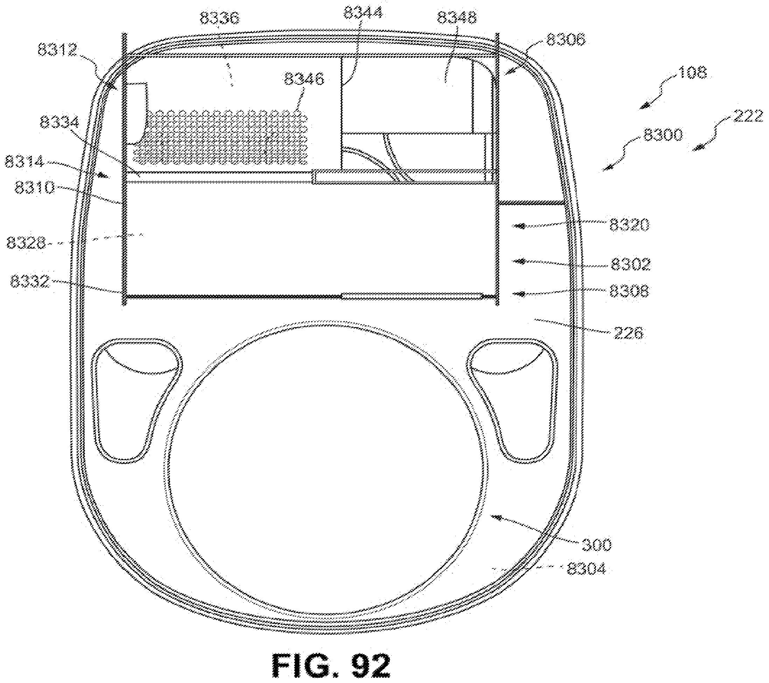

As shown in Figures 84-86, the decomposition chamber 108 also includes a perforated panel 8400 (e.g., wall, plate, etc.). The perforated panel 8400 extends between the SCR catalyst members 216 and the dividing tube 8300. The perforated panel 8400 includes a plurality of the perforated panel perforations 8402 (e.g., holes, apertures, openings, etc.). According to various embodiments, each of the perforated panel perforations 8402 is aligned with one or more of the SCR catalyst members 216. In operation, the perforated panel perforations 8402 facilitate passage of the exhaust gas (e.g., exhaust gas within the outlet dividing tube cavity 8336, etc.) through the perforated panel 8400. As a result, flow of the exhaust gas towards the SCR catalyst members 216 may be straightened. This may increase the UI of the exhaust gas. In some embodiments, such as shown in Figure 92, the decomposition chamber 108 does not include the perforated panel 8400.

In various embodiments, the dividing tube collector 8348 is coupled to the mixing collector wall 226 along the dividing tube coupler aperture 8310 (e.g., along a side of the dividing tube coupler aperture 8310, etc.). In various embodiments, the dividing tube collector 8348 is not positioned within the dividing tube coupler aperture 8310.

The dividing tube collector 8348 defines a dividing tube collector cavity 8350. The exhaust gas flows out of the dividing tube collector cavity 8350 via dividing tube collector perforations 8352 (e.g., holes, openings, etc.) in the dividing tube collector 8348. The dividing tube collector perforations 8352 may be arranged over the SCR catalyst members 216.

The dividing tube assembly 8300 also includes a dividing tube assembly outer housing wall 8354. The dividing tube assembly outer housing wall 8354 is contiguous with both the inlet dividing tube body 8308 and the outlet dividing tube body 8312 and extends between the inlet dividing tube body 8308 and the outlet dividing tube body 8312. The dividing tube assembly outer housing wall 8354 is in confronting relation with the outer housing wall 232.

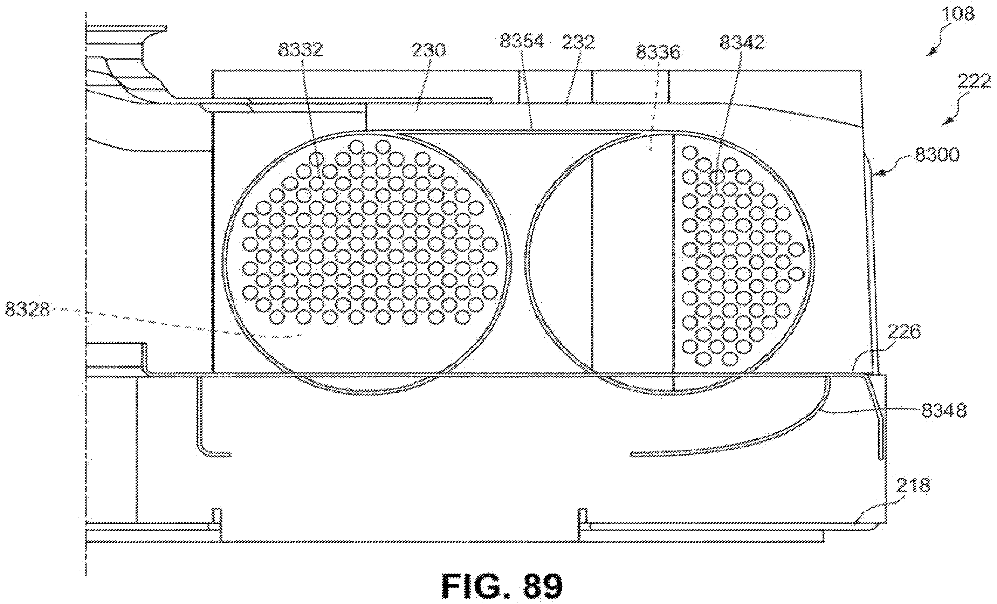

In various embodiments, the dividing tube assembly outer housing wall 8354 is spaced apart from the outer housing wall 232 by a target spacing. In some embodiments, such as is shown in Figure 88, the target spacing is 6mm. In other embodiments, such as is shown in Figure 89, the target spacing in 12mm. Where the dividing tube assembly outer housing wall 8354 is spaced apart from the outer housing wall 232, a portion of the exhaust gas flows between the outer housing wall 232 and the inlet dividing tube body 8308, along the dividing tube assembly outer housing wall 8354, between the outer housing wall 232 and the outlet dividing tube body 8312, and into the dividing tube collector cavity 8350. Therefore, exhaust gas may flow into the dividing tube collector cavity 8350 either from the outlet dividing tube outlet aperture 8344 or after flowing around the divider tube assembly 8300. As a result, the backpressure of the decomposition chamber 108 may be decreased. The exhaust gas flowing around the divider tube assembly 8300 functions to heat the divider tube assembly 8300, thereby mitigating impingement of the reductant on the divider tube assembly 8300. Further, the exhaust gas flowing around the divider tube assembly 8300 causes the exhaust gas within the dividing tube collector cavity 8350 to be propelled out of the dividing tube collector cavity 8350, thereby decreasing the backpressure of the decomposition chamber 108 and increasing the UI of the exhaust gas.

### XXX. Example Decomposition Chamber Having a Twenty-Seventh Example Mixing Assembly

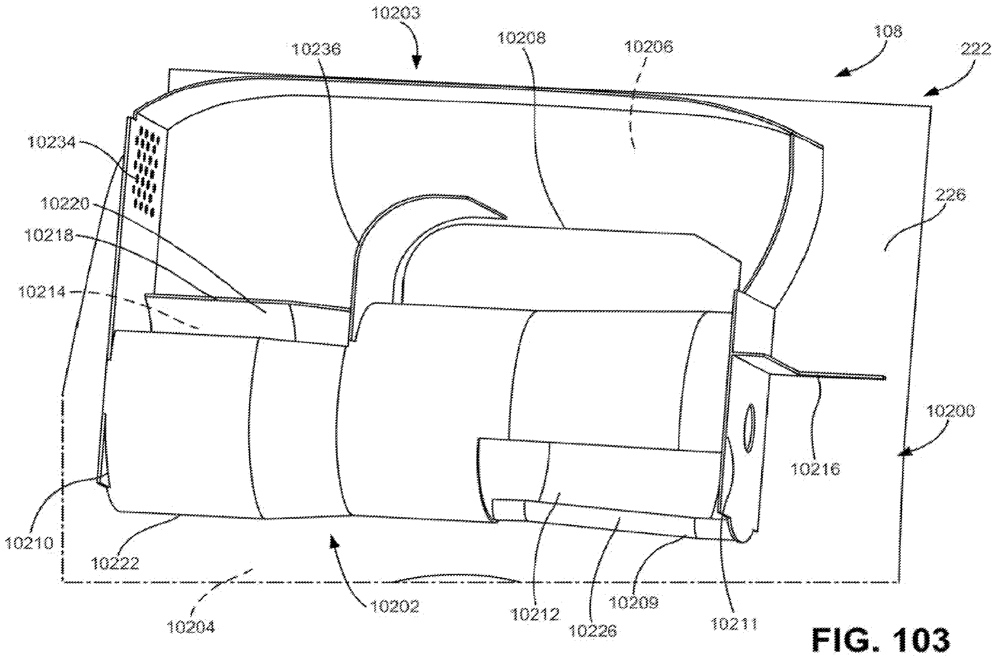

Figure 103 illustrates the decomposition chamber 108 and the mixing assembly 222 according to another example embodiment. The decomposition chamber 108 includes the distribution cap 300 as described herein. The decomposition chamber 108 also includes a dividing tube 10200. The dividing tube 10200 includes a dividing tube body 10202 (e.g., frame, shell, etc.) and a dividing tube flange 10203 (e.g., wall, divider, etc.). The dividing tube body 10202 is generally cylindrical. In some embodiments, the dividing tube body 10202 is tapered.

In various embodiments, the dividing tube body 10202 is coupled to the mixing assembly wall 230 (e.g., such that flow of the exhaust gas between the dividing tube body 10202 and the mixing assembly wall 230 is substantially prohibited, etc.), the mixing collector wall 226 (e.g., such that flow of the exhaust gas between the dividing tube body 10202 and the mixing collector wall 226 is substantially prohibited, etc.), and the outer housing wall 232 (e.g., such that flow of the exhaust gas between the dividing tube body 10202 and the outer housing wall 232 is substantially prohibited, etc.).

The dividing tube 10200 separates a concentration cavity 10204 from a transfer cavity 10206. The concentration cavity 10204 is defined between the mixing collector wall 226, the distribution cap wall 304, the outer housing wall 232, the mixing assembly wall 230, the dividing tube body 10202, and the dividing tube flange 10203. The transfer cavity 10206 is defined between the mixing collector wall 226, the outer housing wall 232, the mixing assembly wall 230, the dividing tube body 10202, the dividing tube flange 10203, and a mixing assembly flow aperture 10208 (e.g., hole, opening, etc.) in the mixing collector wall 226. The mixing assembly flow aperture 10208 functions as the mixing collector wall aperture 227.

After flowing out of the distribution cap 300 (e.g., via the distribution cap aperture 302), the exhaust gas enters the concentration cavity 10204 and enters the dividing tube 10200 via a dividing tube inlet aperture 10209 (e.g., hole, opening, etc.). The dividing tube body 10202 includes a first end 10210 and a second end 10211 opposite the first end 10210. The first end 10210 interfaces with and/or is coupled to the dividing tube flange 10203. The second end 10211 interfaces with and/or is coupled to the dividing tube flange 10203. The dividing tube inlet aperture 10209 is located proximate the second end 10211. The first end 10210 may include tabs that are configured to be received within slots within the dividing tube flange 10203 to facilitate coupling of the dividing tube 10200 to the dividing tube flange 10203. The second end 10211 may include tabs that are configured to be received within slots within the mixing assembly wall 230 to facilitate coupling of the dividing tube 10200 to the mixing assembly wall 230.

The dividing tube body 10202 also includes a first duct 10212 (e.g., cowl, hood, etc.). The first duct 10212 is contiguous with, and extends over, the dividing tube inlet aperture 10209. The first duct 10212 extends towards the concentration cavity 10204 such that the first duct 10212 functions to direct the exhaust gas into the dividing tube inlet aperture 10209.

After flowing through the dividing tube inlet aperture 10209, the exhaust gas enters a dividing tube cavity 10214. At least a portion of the dividing tube inlet aperture 10209 and at least a portion of the first duct 10212 are located proximate the outer housing wall 232. As a result, the exhaust gas enters the dividing tube cavity 10214 radially (e.g., along a tangent of the dividing tube body 10202, along a line that is parallel to and offset from a tangent of the dividing tube body 10202, etc.) after flowing through the dividing tube inlet aperture 10209. This radial entry causes the exhaust gas to swirl within the dividing tube cavity 10214. The swirl imparted by the dividing tube inlet aperture 10209 and the first duct 10212 facilitates mixing of the exhaust gas and the reductant within the dividing tube cavity 10214 and ensures shear on the dividing tube body 10202 is relatively high, thereby mitigating impingement of the reductant on the dividing tube body 10202.

The mixing assembly wall 230 includes the injector coupler 234. The dividing tube 10200 is positioned such that the injector coupler 234 is received in an injector mount receiver 10216 in the second end 10211. As a result, the injection region 314 is located within the dividing tube cavity 10214.

The exhaust gas exits the dividing tube cavity 10214 via a dividing tube outlet aperture 10218 and flows into the transfer cavity 10206. From the transfer cavity 10206, the exhaust gas flows through the mixing assembly flow aperture 10208 and towards the SCR catalyst member 216. In various embodiments, the mixing assembly flow aperture 10208 is substantially centered relative to the SCR catalyst member 216. For example, the mixing assembly flow aperture 10208 may be located on the mixing collector wall 226 so as to have a center (e.g., center point, etc.) that is centered relative to centers of each SCR catalyst member 216. In this way, the mixing assembly flow aperture 10208 may increase the FDI and the UI of the exhaust gas.

The dividing tube outlet aperture 10218 is positioned proximate the first end 10210. As a result, straight flow (e.g., flow without swirling, etc.) of the exhaust gas from the dividing tube inlet aperture 10209 to the dividing tube outlet aperture 10218 is substantially prevented, thereby ensuring that substantially all of the exhaust gas that exits the dividing tube outlet aperture 10218 is first swirled by the dividing tube body 10202. Furthermore, due to the dividing tube inlet aperture 10209 being positioned proximate the second end 10211 and the dividing tube outlet aperture 10218 being positioned proximate the first end 10210, a distance between the dividing tube inlet aperture 10209 and the dividing tube outlet aperture 10218 may be maximized, thereby increasing the amount of time that the exhaust gas is retained within the dividing tube cavity 10214 which correspondingly increases mixing of the reductant in the exhaust gas and the UI.

The dividing tube body 10202 also includes a second duct 10220 (e.g., cowl, hood, etc.). The second duct 10220 is contiguous with, and extends over, the dividing tube outlet aperture 10218. The second duct 10220 extends towards the transfer cavity 10206 such that the second duct 10220 functions to direct the exhaust gas towards the mixing assembly flow aperture 10208. In some embodiments, the second duct 10220 extends over the mixing assembly flow aperture 10208. The exhaust gas exits the dividing tube cavity 10214 radially after flowing through the dividing tube outlet aperture 10218. This radial exit propels the exhaust gas into the mixing assembly flow aperture 10208, thereby minimizing backpressure of the decomposition chamber 108.

In various embodiments, the mixing collector wall 226 also includes a dividing tube coupling aperture 10222 (e.g., hole, opening, etc.). The dividing tube coupling aperture 10222 is configured to receive a portion of the dividing tube body 10202. The dividing tube body 10202 is coupled to the mixing collector wall 226 around the dividing tube coupling aperture 10222 (e.g., such that flow of the exhaust gas between the dividing tube body 10202 and the mixing collector wall 226 is substantially prohibited, etc.). As a result, a plane along which the mixing collector wall 226 is disposed bisects the dividing tube cavity 10214 such that a first portion of the dividing tube cavity 10214 is located on one side of the mixing collector wall 226 and a second portion of the dividing tube cavity 10214 is located on another side of the mixing collector wall 226. As a result of this arrangement, a diameter of the dividing tube 10200 can be increased without increasing a distance between the mixing collector wall 226 and the outer housing wall 232, thereby enabling a space claim of the decomposition chamber 108 to be minimized. By increasing the diameter of the dividing tube 10200, the UI of the exhaust gas can be increased.

In various embodiments, the dividing tube body 10202 includes a shield 10226 (e.g., wall, projection, etc.). The shield 10226 is contiguous with the dividing tube inlet aperture 10209 and extends into the dividing tube cavity 10214 and towards the transfer cavity 10206 (e.g., the shield 10226 is bent inward relative to the dividing tube body 10202, etc.). The shield 10226 functions to mitigate non-radial flow of the exhaust gas into the dividing tube cavity 10214 via the dividing tube inlet aperture 10209.

In various embodiments, the dividing tube body 10202 also includes a plurality of dividing tube body perforations (e.g., apertures, holes, etc.). The dividing tube body perforations are disposed on an upstream surface of the dividing tube body 10202 (e.g., adjacent the concentration cavity 10204, etc.). In some embodiments, at least some of the dividing tube body perforations are aligned with the dividing tube outlet aperture 10218. In operation, the dividing tube body perforations facilitate passage of the exhaust gas through the dividing tube body 10202 and into the dividing tube cavity 10214 without passing through the dividing tube inlet aperture 10209. As a result, the backpressure of the decomposition chamber 108 may be decreased. Furthermore, the exhaust gas flowing through the dividing tube body perforations functions to heat the dividing tube body 10202, thereby mitigating impingement of the reductant on the dividing tube body 10202. By aligning at least some of the dividing tube body perforations with the dividing tube outlet aperture 10218, the exhaust gas flowing within the dividing tube cavity 10214 may be propelled out of the dividing tube outlet aperture 10218, thereby decreasing the backpressure of the decomposition chamber 108 and increasing the UI of the exhaust gas.

In various embodiments, the dividing tube flange 10203 includes a plurality of dividing tube flange tube perforations (e.g., apertures, holes, etc.). The dividing tube flange tube perforations are disposed on a portion of the dividing tube flange 10203 that is opposite the dividing tube cavity 10214 (e.g., are located opposite the first end 10210, etc.). In operation, the dividing tube flange tube perforations facilitate passage of the exhaust gas (e.g., exhaust gas that has flowed between the mixing assembly wall 230 and the dividing tube flange 10203, etc.) through the dividing tube flange 10203 and into the dividing tube cavity 10214 without passing through the dividing tube inlet aperture 10209 or the dividing tube body perforations. As a result, the backpressure of the decomposition chamber 108 may be decreased. Furthermore, the exhaust gas flowing through the dividing tube flange tube perforations functions to heat the first end 10210, thereby mitigating impingement of the reductant on the first end 10210. The exhaust gas flowing through the dividing tube flange tube perforations may also be useful in redirecting the exhaust gas flowing within the dividing tube cavity 10214 towards the dividing tube outlet aperture 10218, thereby decreasing the backpressure of the decomposition chamber 108 and increasing the UI of the exhaust gas.

In various embodiments, the dividing tube flange 10203 includes a plurality of dividing tube flange transfer perforations 10234 (e.g., apertures, holes, etc.). The dividing tube flange transfer perforations 10234 are disposed on a portion of the dividing tube flange 10203 that is not opposite the dividing tube cavity 10214 (e.g., are located downstream of the dividing tube body 10202, etc.). Instead, the dividing tube flange transfer perforations 10234 are disposed on a portion of the dividing tube flange 10203 that is opposite the transfer cavity 10206 (e.g., that is opposite the mixing assembly flow aperture 10208, etc.). In operation, the dividing tube flange transfer perforations 10234 facilitate passage of the exhaust gas (e.g., exhaust gas that has flowed between the mixing assembly wall 230 and the dividing tube flange 10203, etc.) through the dividing tube flange 10203 and into the transfer cavity 10206 without passing through the dividing tube body 10202. As a result, the backpressure of the decomposition chamber 108 may be decreased. Furthermore, the exhaust gas flowing through the dividing tube flange transfer perforations 10234 functions to heat the dividing tube flange 10203, thereby mitigating impingement of the reductant on the dividing tube flange 10203 (e.g., the portion of the dividing tube flange 10203 that is downstream of the dividing tube outlet aperture 10218, etc.). The exhaust gas flowing through the dividing tube flange transfer perforations 10234 may also be useful in redirecting the exhaust gas flowing within the transfer cavity 10206 towards the mixing assembly flow aperture 10208, thereby decreasing the backpressure of the decomposition chamber 108 and increasing the UI of the exhaust gas.

The decomposition chamber 108 also includes a channel wall 10236 (e.g., vane, wall, partition, divider, etc.) coupled to the mixing collector wall 226 (e.g., such that flow of the exhaust gas between the channel wall 10236 and the mixing collector wall 226 is substantially prohibited, etc.), the outer housing wall 232 (e.g., such that flow of the exhaust gas between the channel wall 10236 and the outer housing wall 232 is substantially prohibited, etc.), and the dividing tube body 10202 (e.g., such that flow of the exhaust gas between the dividing tube body 10202 and the outer housing wall 232 is substantially prohibited, etc.). The channel wall 10236 extends along at least a portion of the mixing assembly flow aperture 10208. In various embodiments, the channel wall 10236 is coupled to the dividing tube body 10202 such that the channel wall 10236 is in confronting relation with the dividing tube outlet aperture 10218 and/or the second duct 10220.

### XXXI. Example Decomposition Chamber Having a Twenty-Eighth Example Mixing Assembly

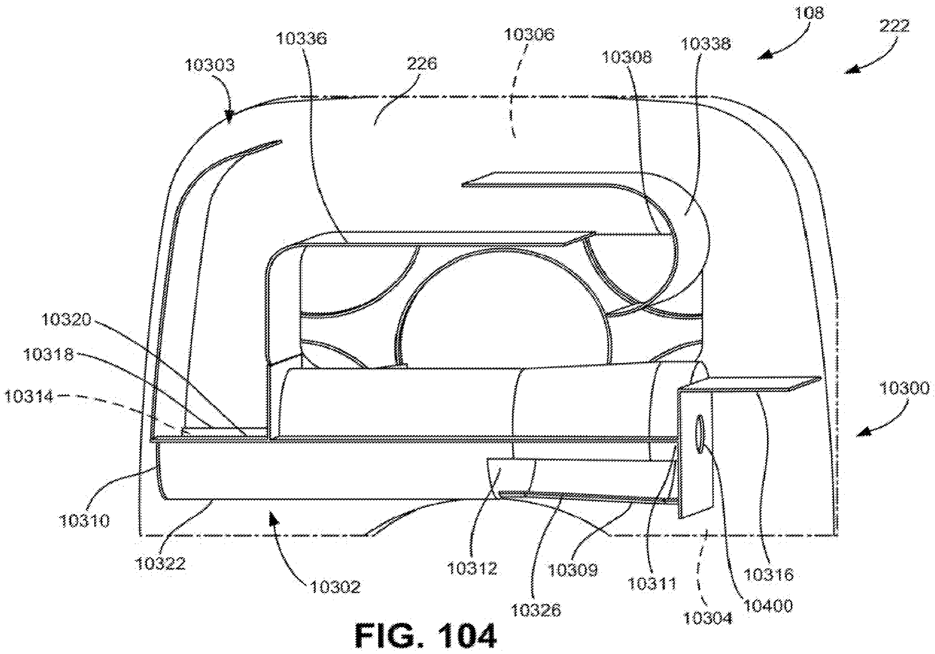

Figures 104-106 illustrate the decomposition chamber 108 and the mixing assembly 222 according to another example embodiment. The decomposition chamber 108 includes the distribution cap 300 as described herein. The decomposition chamber 108 also includes a dividing tube 10300. The dividing tube 10300 includes a dividing tube body 10302 (e.g., frame, shell, etc.) and a dividing tube flange 10303 (e.g., wall, divider, etc.). The dividing tube body 10302 is generally cylindrical. In some embodiments, the dividing tube body 10302 is tapered.

In various embodiments, the dividing tube body 10302 is coupled to the mixing assembly wall 230 (e.g., such that flow of the exhaust gas between the dividing tube body 10302 and the mixing assembly wall 230 is substantially prohibited, etc.), the mixing collector wall 226 (e.g., such that flow of the exhaust gas between the dividing tube body 10302 and the mixing collector wall 226 is substantially prohibited, etc.), and the outer housing wall 232 (e.g., such that flow of the exhaust gas between the dividing tube body 10302 and the outer housing wall 232 is substantially prohibited, etc.).

The dividing tube 10300 separates a concentration cavity 10304 from a transfer cavity 10306. The concentration cavity 10304 is defined between the mixing collector wall 226, the distribution cap wall 304, the outer housing wall 232, the mixing assembly wall 230, the dividing tube body 10302, and the dividing tube flange 10303. The transfer cavity 10306 is defined between the mixing collector wall 226, the outer housing wall 232, the mixing assembly wall 230, the dividing tube body 10302, the dividing tube flange 10303, and a mixing assembly flow aperture 10308 (e.g., hole, opening, etc.) in the mixing collector wall 226. The mixing assembly flow aperture 10308 functions as the mixing collector wall aperture 227.

After flowing out of the distribution cap 300 (e.g., via the distribution cap aperture 302), the exhaust gas enters the concentration cavity 10304 and enters the dividing tube 10300 via a dividing tube inlet aperture 10309 (e.g., hole, opening, etc.). The dividing tube body 10302 includes a first end 10310 and a second end 10311 opposite the first end 10310. The first end 10310 interfaces with and/or is coupled to the dividing tube flange 10303. The dividing tube inlet aperture 10309 is located proximate the second end 10311. The first end 10310 may include tabs that are configured to be received within slots within the dividing tube flange 10303 to facilitate coupling of the dividing tube 10300 to the dividing tube flange 10303. The second end 10311 may include tabs that are configured to be received within slots within the mixing assembly wall 230 to facilitate coupling of the dividing tube 10300 to the mixing assembly wall 230.

Exhaust gas may flow between the dividing tube flange 10303 and the mixing assembly wall 230 because the dividing tube flange 10303 is not coupled to the mixing assembly wall 230. Any exhaust gas that flows between the dividing tube flange 10303 and the mixing assembly wall 230 bypasses the dividing tube 10300. By bypassing the dividing tube 10300, a backpressure of the decomposition chamber 108 may be decreased.

The dividing tube body 10302 also includes a first duct 10312 (e.g., cowl, hood, etc.). The first duct 10312 is contiguous with, and extends over, the dividing tube inlet aperture 10309. The first duct 10312 extends towards the concentration cavity 10304 such that the first duct 10312 functions to direct the exhaust gas into the dividing tube inlet aperture 10309.

After flowing through the dividing tube inlet aperture 10309, the exhaust gas enters a dividing tube cavity 10314. At least a portion of the dividing tube inlet aperture 10309 and at least a portion of the first duct 10312 are located proximate the outer housing wall 232. As a result, the exhaust gas enters the dividing tube cavity 10314 radially (e.g., along a tangent of the dividing tube body 10302, along a line that is parallel to and offset from a tangent of the dividing tube body 10302, etc.) after flowing through the dividing tube inlet aperture 10309. This radial entry causes the exhaust gas to swirl within the dividing tube cavity 10314. The swirl imparted by the dividing tube inlet aperture 10309 and the first duct 10312 facilitates mixing of the exhaust gas and the reductant within the dividing tube cavity 10314 and ensures shear on the dividing tube body 10302 is relatively high, thereby mitigating impingement of the reductant on the dividing tube body 10302.

The mixing assembly wall 230 includes the injector coupler 234. The dividing tube 10300 is positioned such that the injector coupler 234 is received in an injector mount receiver 10316 in the second end 10311. As a result, the injection region 314 is located within the dividing tube cavity 10314.

The exhaust gas exits the dividing tube cavity 10314 via a dividing tube outlet aperture 10318 and flows into the transfer cavity 10306. From the transfer cavity 10306, the exhaust gas flows through the mixing assembly flow aperture 10308 and towards the SCR catalyst member 216. In various embodiments, the mixing assembly flow aperture 10308 is substantially centered relative to the SCR catalyst member 216. For example, the mixing assembly flow aperture 10308 may be located on the mixing collector wall 226 so as to have a center (e.g., center point, etc.) that is centered relative to centers of each SCR catalyst member 216. In this way, the mixing assembly flow aperture 10308 may increase the FDI and the UI of the exhaust gas.

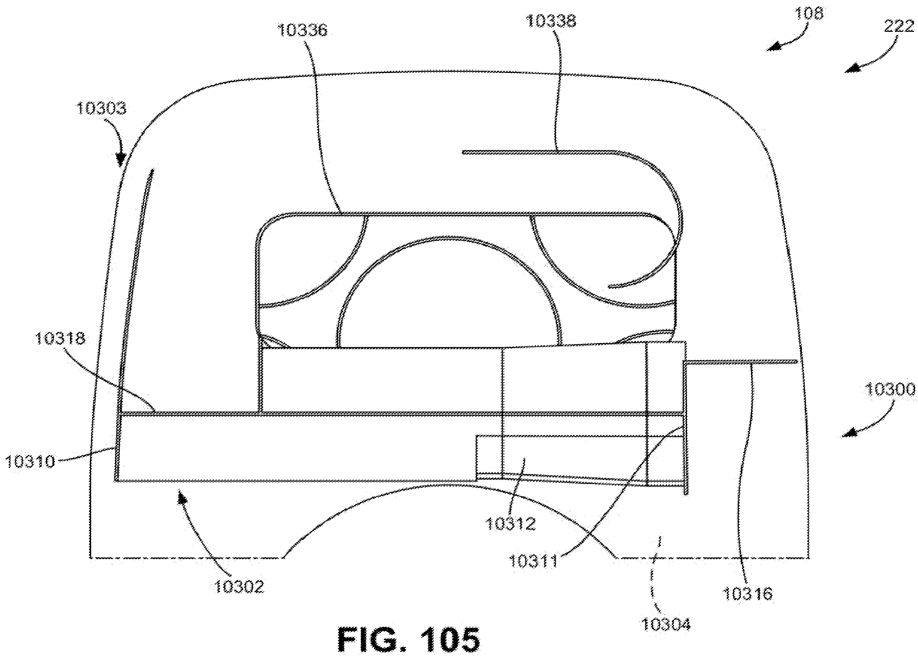

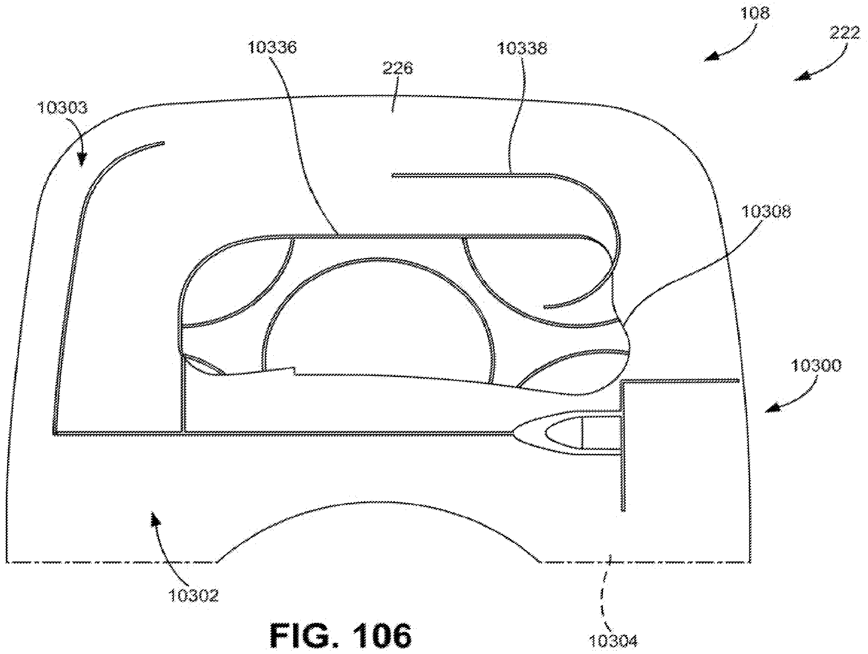

A shape and size of the mixing assembly flow aperture 10308 may be selected so that the decomposition chamber 108 is tailored for a target application. For example, as shown in Figures 104 and 105, the mixing assembly flow aperture 10308 may be generally rectangular. However, in other applications, such as is shown in Figure 106, the mixing assembly flow aperture 10308 may include a lobed shape to increase a size of the mixing assembly flow aperture 10308 which may increase the desirability of the decomposition chamber 108.

The dividing tube outlet aperture 10318 is positioned proximate the first end 10310. As a result, straight flow (e.g., flow without swirling, etc.) of the exhaust gas from the dividing tube inlet aperture 10309 to the dividing tube outlet aperture 10318 is substantially prevented, thereby ensuring that substantially all of the exhaust gas that exits the dividing tube outlet aperture 10318 is first swirled by the dividing tube body 10302. Furthermore, due to the dividing tube inlet aperture 10309 being positioned proximate the second end 10311 and the dividing tube outlet aperture 10318 being positioned proximate the first end 10310, a distance between the dividing tube inlet aperture 10309 and the dividing tube outlet aperture 10318 may be maximized, thereby increasing the amount of time that the exhaust gas is retained within the dividing tube cavity 10314 which correspondingly increases mixing of the reductant in the exhaust gas and the UI.

The dividing tube body 10302 also includes a second duct 10320 (e.g., cowl, hood, etc.). The second duct 10320 is contiguous with, and extends over, the dividing tube outlet aperture 10318. The second duct 10320 extends towards the transfer cavity 10306 such that the second duct 10320 functions to direct the exhaust gas towards the mixing assembly flow aperture 10308. In some embodiments, the second duct 10320 extends over the mixing assembly flow aperture 10308. The exhaust gas exits the dividing tube cavity 10314 radially after flowing through the dividing tube outlet aperture 10318. This radial exit propels the exhaust gas into the mixing assembly flow aperture 10308, thereby minimizing backpressure of the decomposition chamber 108.

In various embodiments, the mixing collector wall 226 also includes a dividing tube coupling aperture 10322 (e.g., hole, opening, etc.). The dividing tube coupling aperture 10322 is configured to receive a portion of the dividing tube body 10302. The dividing tube body 10302 is coupled to the mixing collector wall 226 around the dividing tube coupling aperture 10322 (e.g., such that flow of the exhaust gas between the dividing tube body 10302 and the mixing collector wall 226 is substantially prohibited, etc.). As a result, a plane along which the mixing collector wall 226 is disposed bisects the dividing tube cavity 10314 such that a first portion of the dividing tube cavity 10314 is located on one side of the mixing collector wall 226 and a second portion of the dividing tube cavity 10314 is located on another side of the mixing collector wall 226. As a result of this arrangement, a diameter of the dividing tube 10300 can be increased without increasing a distance between the mixing collector wall 226 and the outer housing wall 232, thereby enabling a space claim of the decomposition chamber 108 to be minimized. By increasing the diameter of the dividing tube 10300, the UI of the exhaust gas can be increased.

In various embodiments, the dividing tube body 10302 includes a shield 10326 (e.g., wall, projection, etc.). The shield 10326 is contiguous with the dividing tube inlet aperture 10309 and extends into the dividing tube cavity 10314 and towards the transfer cavity 10306 (e.g., the shield 10326 is bent inward relative to the dividing tube body 10302, etc.). The shield 10326 functions to mitigate non-radial flow of the exhaust gas into the dividing tube cavity 10314 via the dividing tube inlet aperture 10309.

In various embodiments, the dividing tube body 10302 also includes a plurality of dividing tube body perforations (e.g., apertures, holes, etc.). The dividing tube body perforations are disposed on an upstream surface of the dividing tube body 10302 (e.g., adjacent the concentration cavity 10304, etc.). In some embodiments, at least some of the dividing tube body perforations are aligned with the dividing tube outlet aperture 10318. In operation, the dividing tube body perforations facilitate passage of the exhaust gas through the dividing tube body 10302 and into the dividing tube cavity 10314 without passing through the dividing tube inlet aperture 10309. As a result, the backpressure of the decomposition chamber 108 may be decreased. Furthermore, the exhaust gas flowing through the dividing tube body perforations functions to heat the dividing tube body 10302, thereby mitigating impingement of the reductant on the dividing tube body 10302. By aligning at least some of the dividing tube body perforations with the dividing tube outlet aperture 10318, the exhaust gas flowing within the dividing tube cavity 10314 may be propelled out of the dividing tube outlet aperture 10318, thereby decreasing the backpressure of the decomposition chamber 108 and increasing the UI of the exhaust gas.

In various embodiments, the dividing tube flange 10303 includes a plurality of dividing tube flange tube perforations (e.g., apertures, holes, etc.). The dividing tube flange tube perforations are disposed on a portion of the dividing tube flange 10303 that is opposite the dividing tube cavity 10314 (e.g., are located opposite the first end 10310, etc.). In operation, the dividing tube flange tube perforations facilitate passage of the exhaust gas (e.g., exhaust gas that has flowed between the mixing assembly wall 230 and the dividing tube flange 10303, etc.) through the dividing tube flange 10303 and into the dividing tube cavity 10314 without passing through the dividing tube inlet aperture 10309 or the dividing tube body perforations. As a result, the backpressure of the decomposition chamber 108 may be decreased. Furthermore, the exhaust gas flowing through the dividing tube flange tube perforations functions to heat the first end 10310, thereby mitigating impingement of the reductant on the first end 10310. The exhaust gas flowing through the dividing tube flange tube perforations may also be useful in redirecting the exhaust gas flowing within the dividing tube cavity 10314 towards the dividing tube outlet aperture 10318, thereby decreasing the backpressure of the decomposition chamber 108 and increasing the UI of the exhaust gas.

In various embodiments, the dividing tube flange 10303 includes a plurality of dividing tube flange transfer perforations (e.g., apertures, holes, etc.). The dividing tube flange transfer perforations are disposed on a portion of the dividing tube flange 10303 that is not opposite the dividing tube cavity 10314 (e.g., are located downstream of the dividing tube body 10302, etc.). Instead, the dividing tube flange transfer perforations are disposed on a portion of the dividing tube flange 10303 that is opposite the transfer cavity 10306 (e.g., that is opposite the mixing assembly flow aperture 10308, etc.). In operation, the dividing tube flange transfer perforations facilitate passage of the exhaust gas (e.g., exhaust gas that has flowed between the mixing assembly wall 230 and the dividing tube flange 10303, etc.) through the dividing tube flange 10303 and into the transfer cavity 10306 without passing through the dividing tube body 10302. As a result, the backpressure of the decomposition chamber 108 may be decreased. Furthermore, the exhaust gas flowing through the dividing tube flange transfer perforations functions to heat the dividing tube flange 10303, thereby mitigating impingement of the reductant on the dividing tube flange 10303 (e.g., the portion of the dividing tube flange 10303 that is downstream of the dividing tube outlet aperture 10318, etc.). The exhaust gas flowing through the dividing tube flange transfer perforations may also be useful in redirecting the exhaust gas flowing within the transfer cavity 10306 towards the mixing assembly flow aperture 10308, thereby decreasing the backpressure of the decomposition chamber 108 and increasing the UI of the exhaust gas.

The decomposition chamber 108 also includes a channel wall 10336 (e.g., vane, wall, partition, divider, etc.) coupled to the mixing collector wall 226 (e.g., such that flow of the exhaust gas between the channel wall 10336 and the mixing collector wall 226 is substantially prohibited, etc.), the outer housing wall 232 (e.g., such that flow of the exhaust gas between the channel wall 10336 and the outer housing wall 232 is substantially prohibited, etc.), and the dividing tube body 10302 (e.g., such that flow of the exhaust gas between the dividing tube body 10302 and the outer housing wall 232 is substantially prohibited, etc.). The channel wall 10336 extends along at least a portion of the mixing assembly flow aperture 10308. In various embodiments, the channel wall 10336 is coupled to the dividing tube body 10302 such that the channel wall 10336 is in confronting relation with the dividing tube outlet aperture 10318 and/or the second duct 10320.

The decomposition chamber 108 also includes a flow guide 10338 (e.g., vane, wall, partition, divider, etc.) coupled to the mixing collector wall 226 (e.g., such that flow of the exhaust gas between the flow guide 10338 and the mixing collector wall 226 is substantially prohibited, etc.) and the outer housing wall 232 (e.g., such that flow of the exhaust gas between the flow guide 10338 and the outer housing wall 232 is substantially prohibited, etc.). After flowing past the dividing tube flange 10303 and/or flowing past the channel wall 10336, the exhaust gas interfaces with the flow guide 10338. For example, the exhaust gas may flow between the channel wall 10336 and the flow guide 10338. The channel wall 10336 and the flow guide 10338 cooperate to reduce turbulence of the exhaust gas, reduce backpressure of the decomposition chamber 108, and to increase the FDI and the UI of the exhaust gas.

Additionally, the reductant (e.g., via the injector 120, via the dosing module 112, etc.) may enter the dividing tube body 10302 via a second dividing tube assembly flange aperture 10400 (e.g., hole, opening, etc.). The second dividing tube assembly flange aperture 10400 is at least partially circumscribed by (e.g., encircled, bordered by, surrounded by, etc.) the second end 10311. After flowing through the second dividing tube assembly flange aperture 10400, the reductant enters the dividing tube cavity 10314.

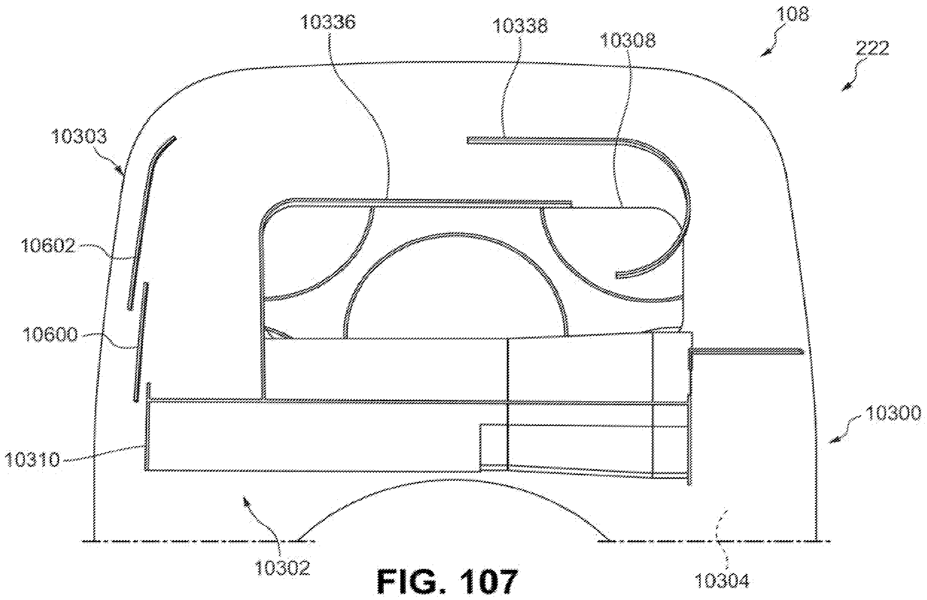

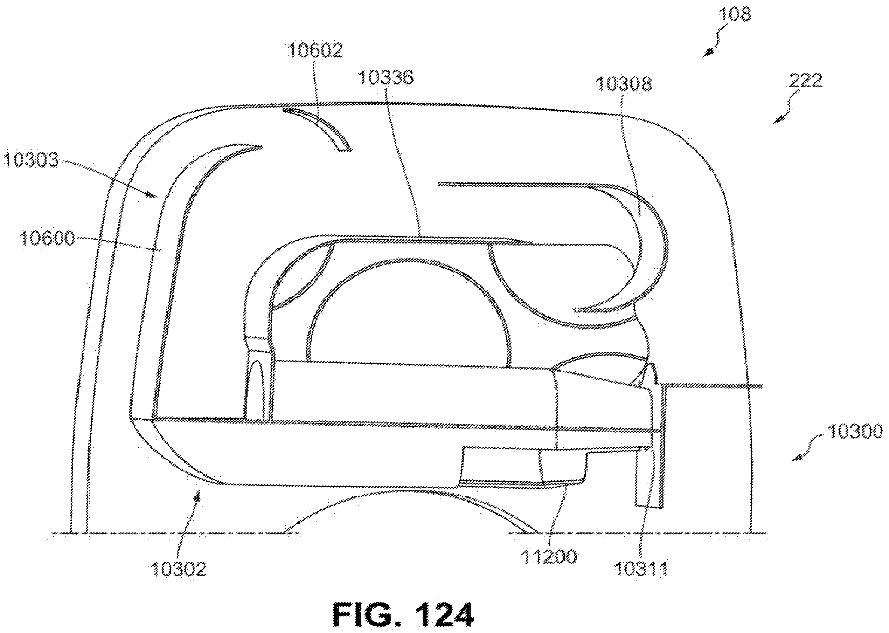

In various embodiments, such as is shown in Figures 107, 119, and 124, the dividing tube flange 10303 includes a first dividing tube flange segment 10600 and a second dividing tube flange segment 10602. Each of the first end 10310, the first dividing tube flange segment 10600, and the second dividing tube flange segment 10602 are separated from the mixing assembly wall 230. As a result, the exhaust gas flows between the first end 10310 and the mixing assembly wall 230, between the first dividing tube flange segment 10600 and the mixing assembly wall 230, and between the second dividing tube flange segment 10602 and the mixing assembly wall 230. Additionally, the second dividing tube flange segment 10602 is separated from the first dividing tube flange segment 10600. As a result, the exhaust gas may flow between the first dividing tube flange segment 10600 and the second dividing tube flange segment 10602.

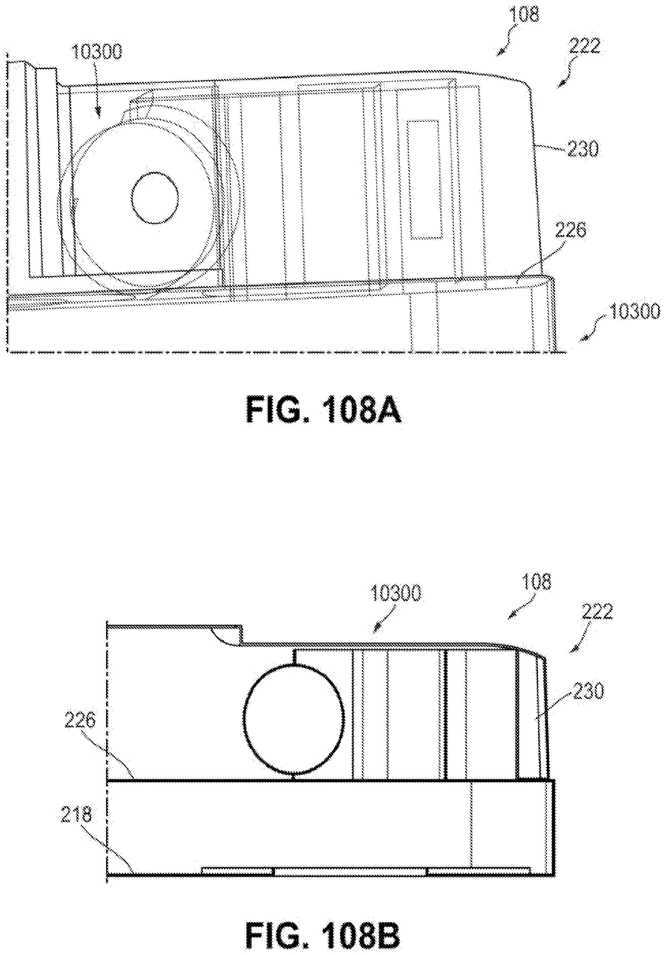

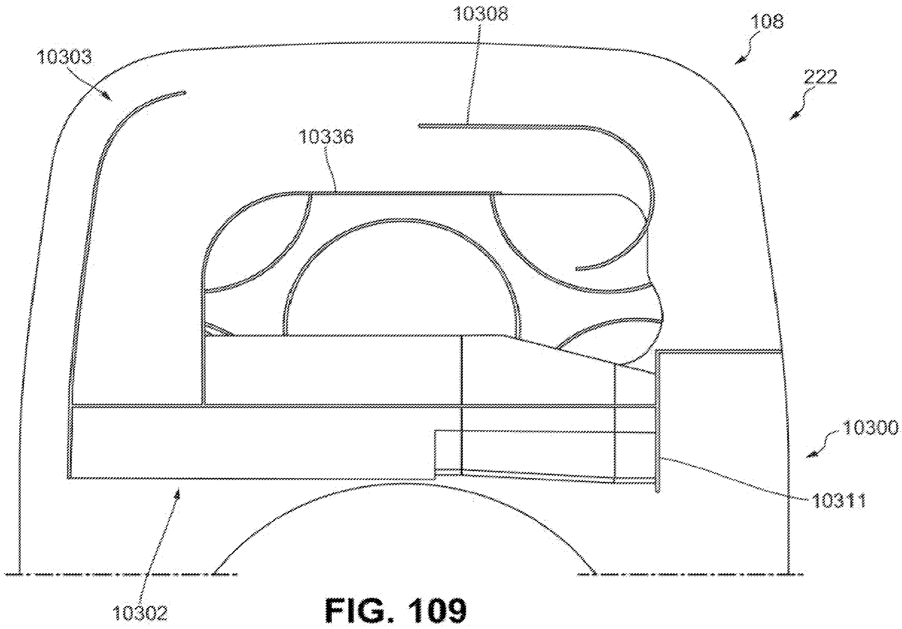

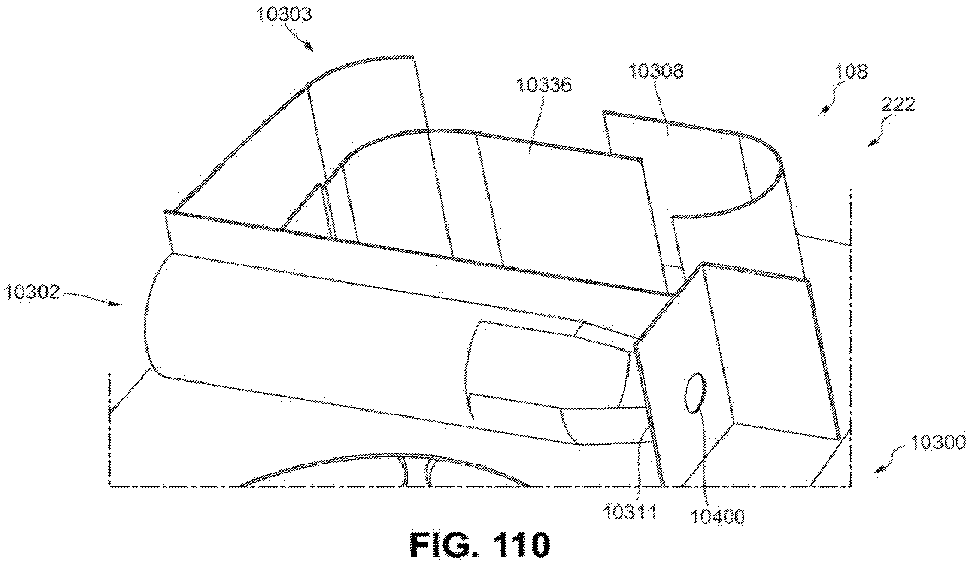

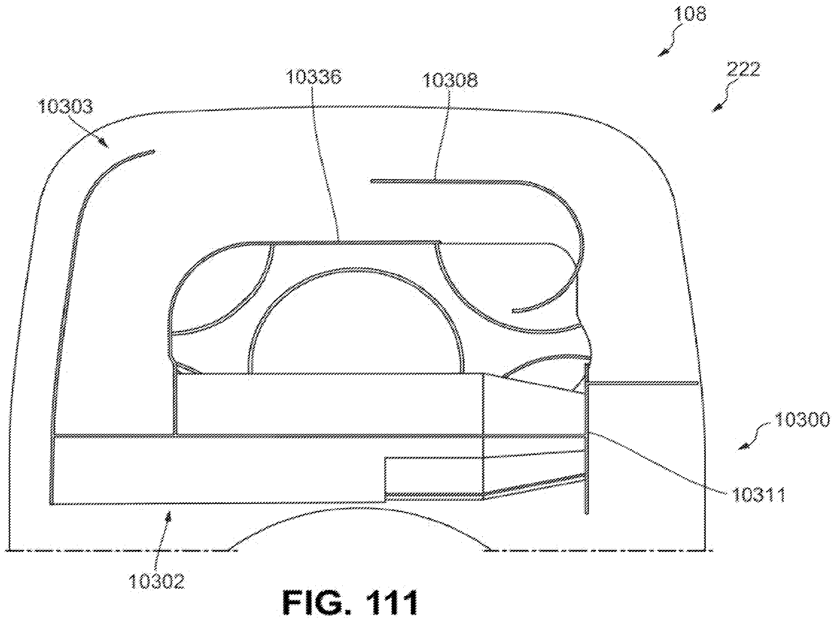

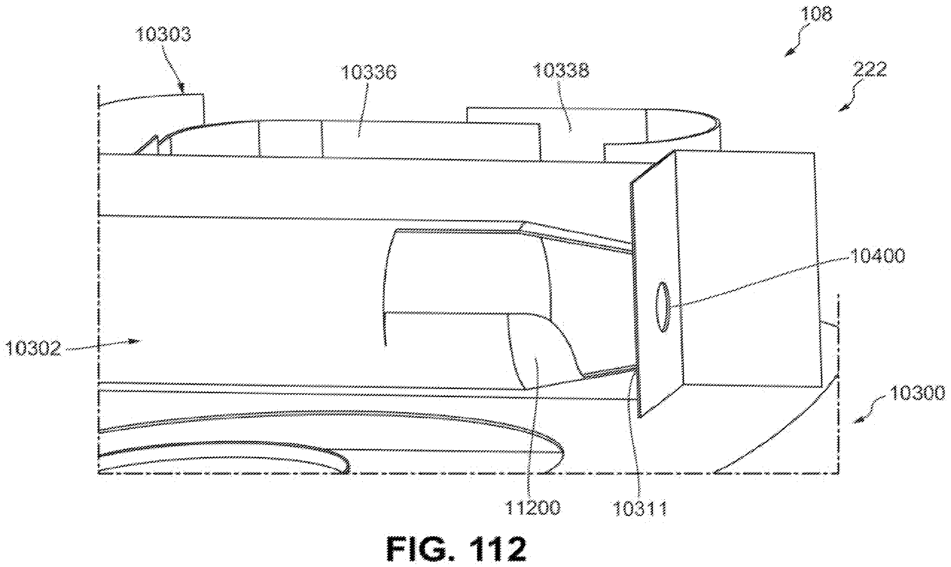

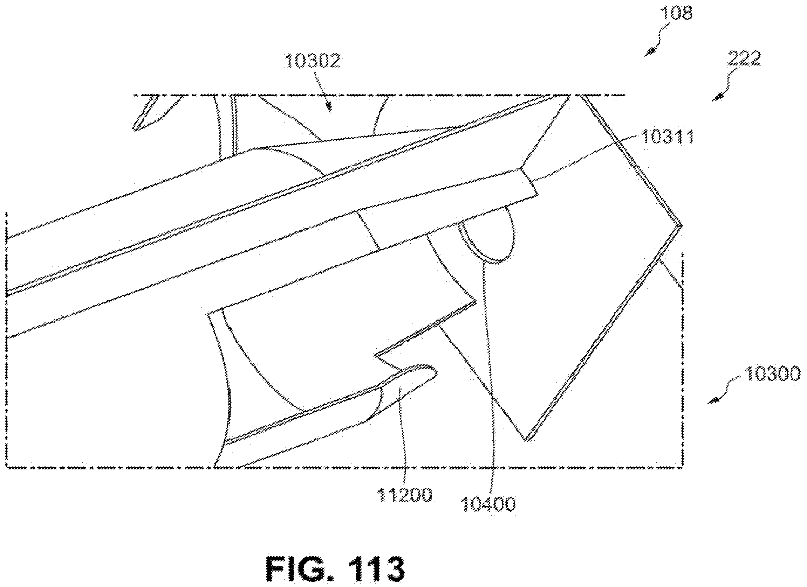

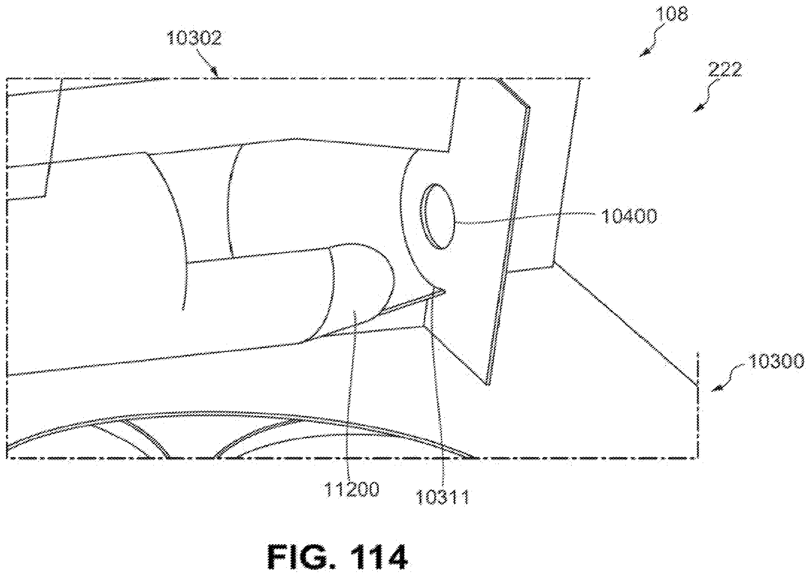

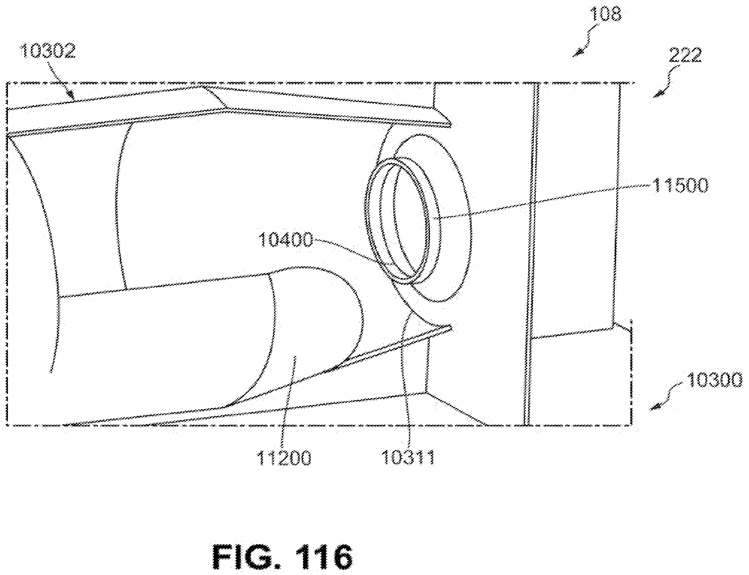

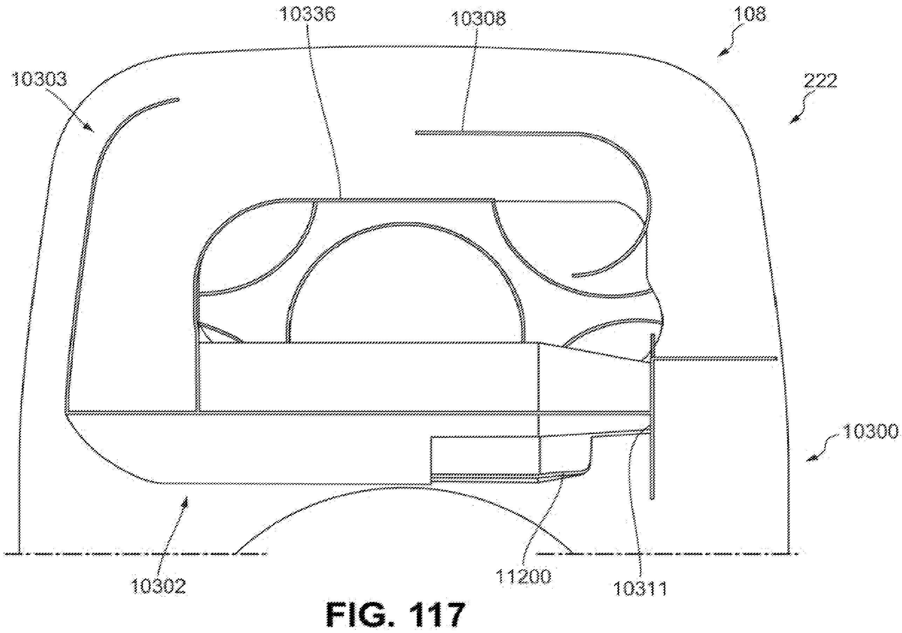

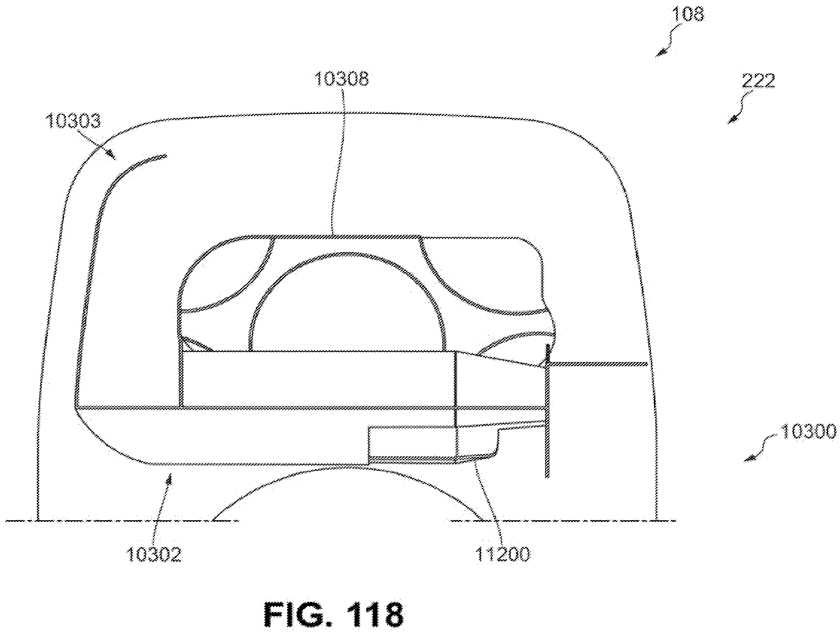

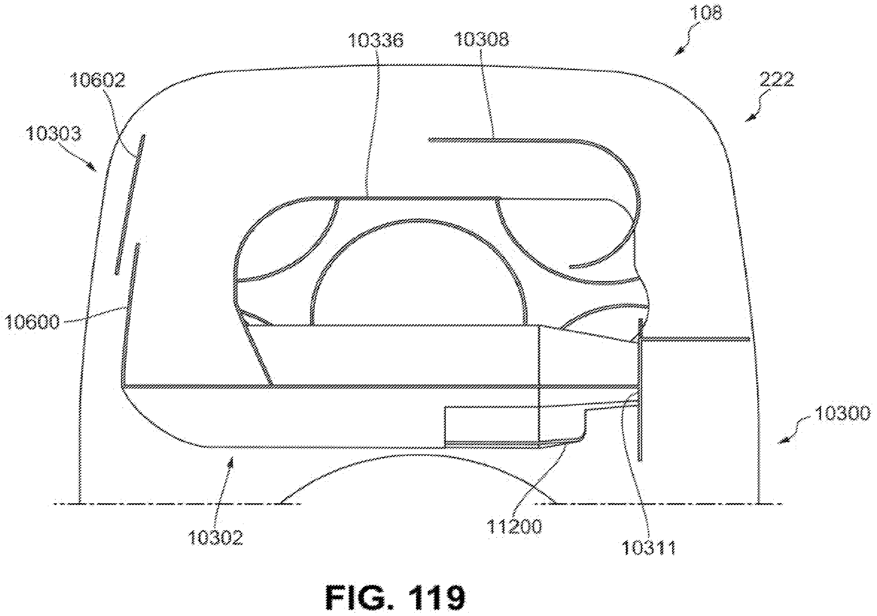

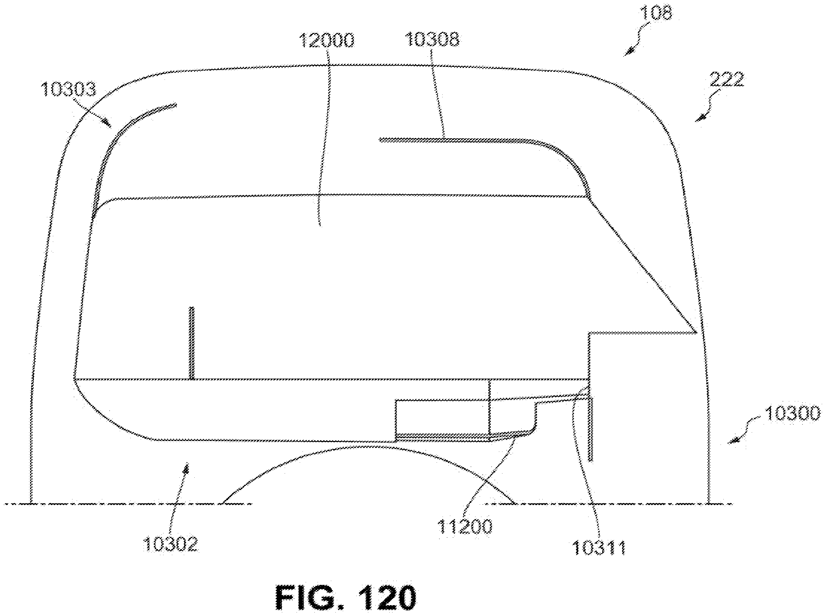

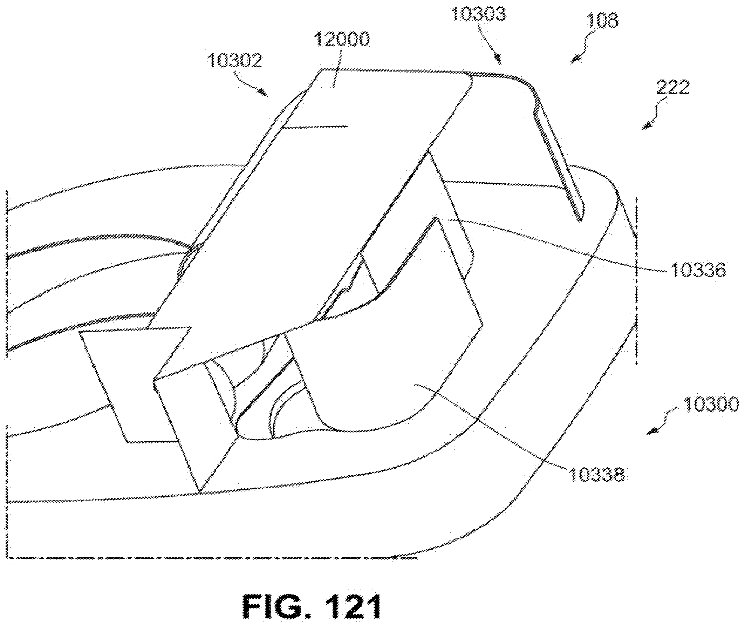

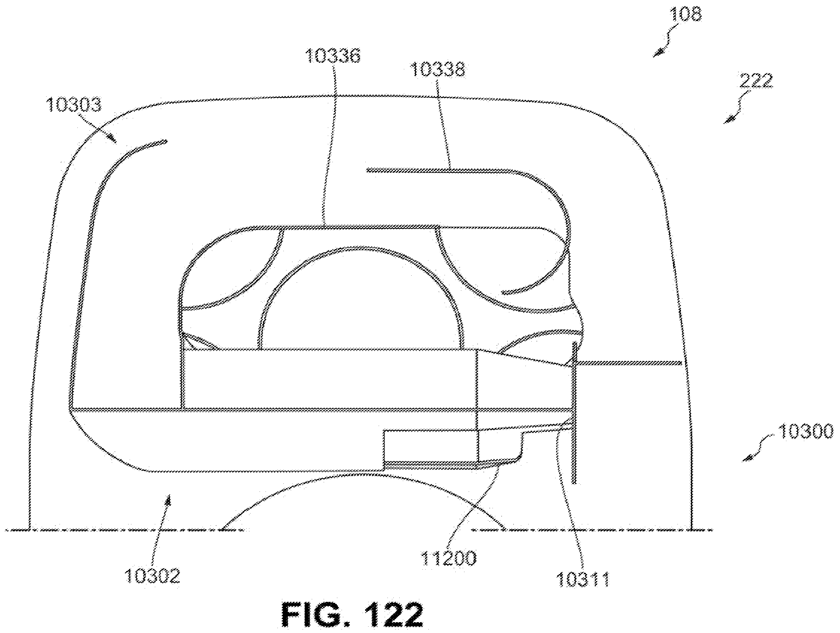

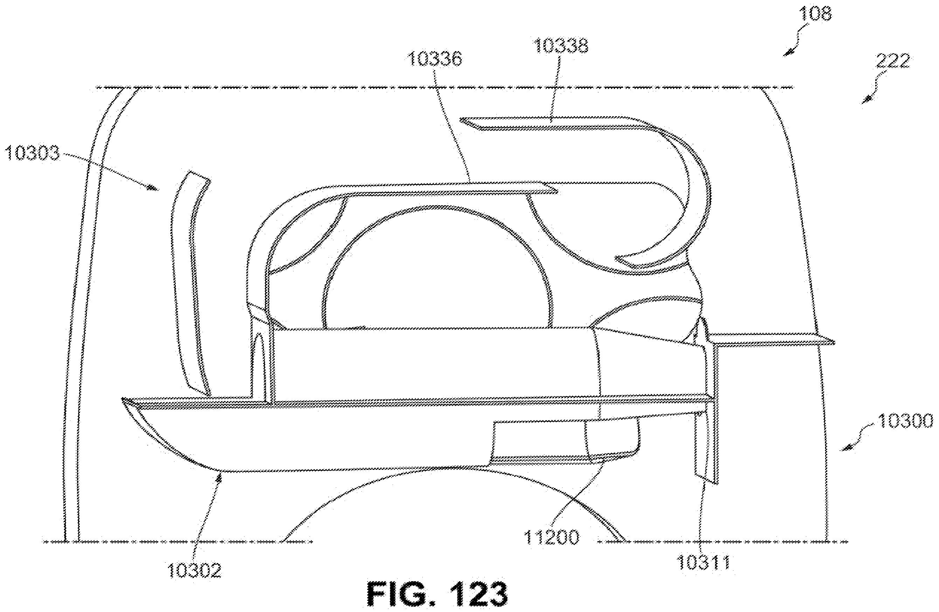

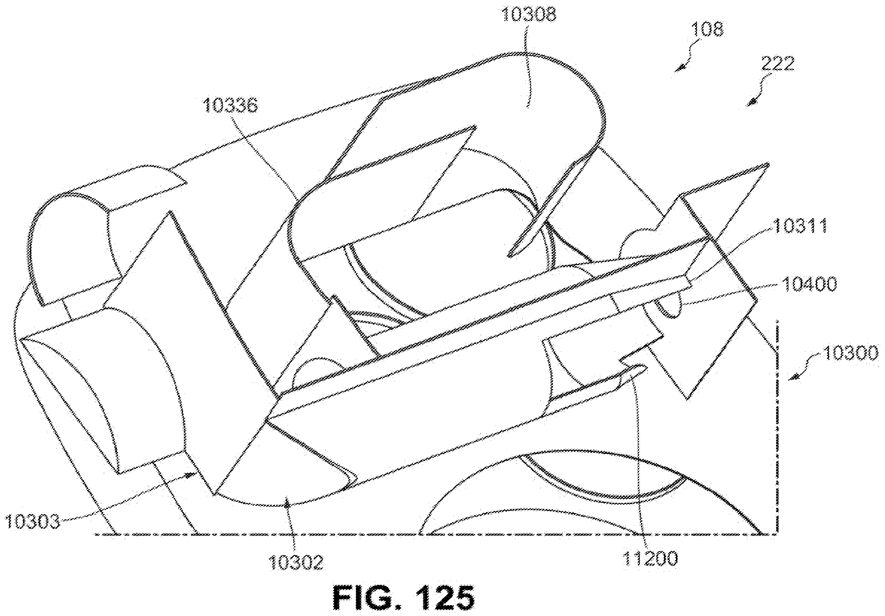

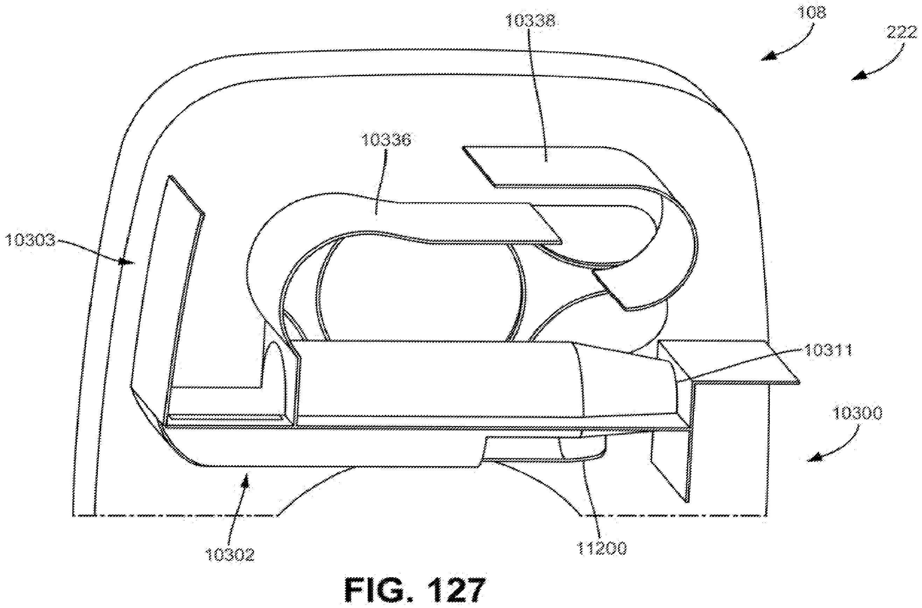

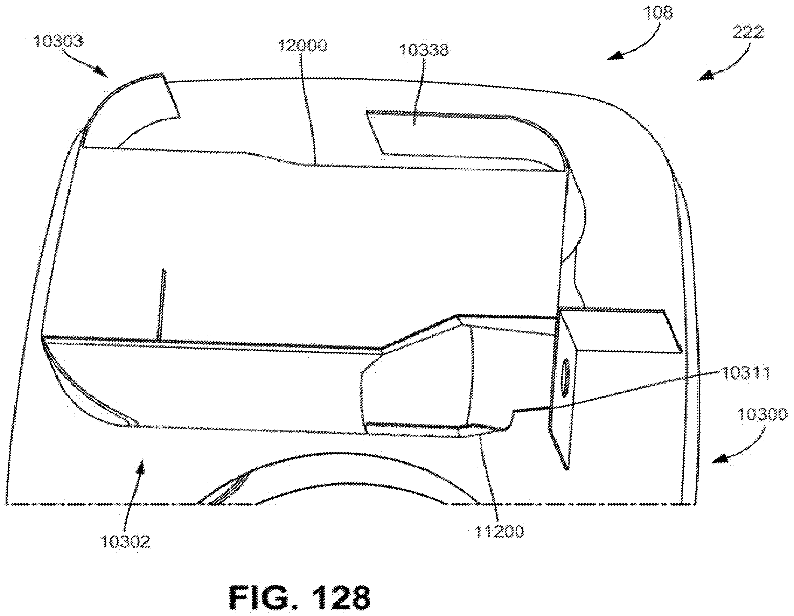

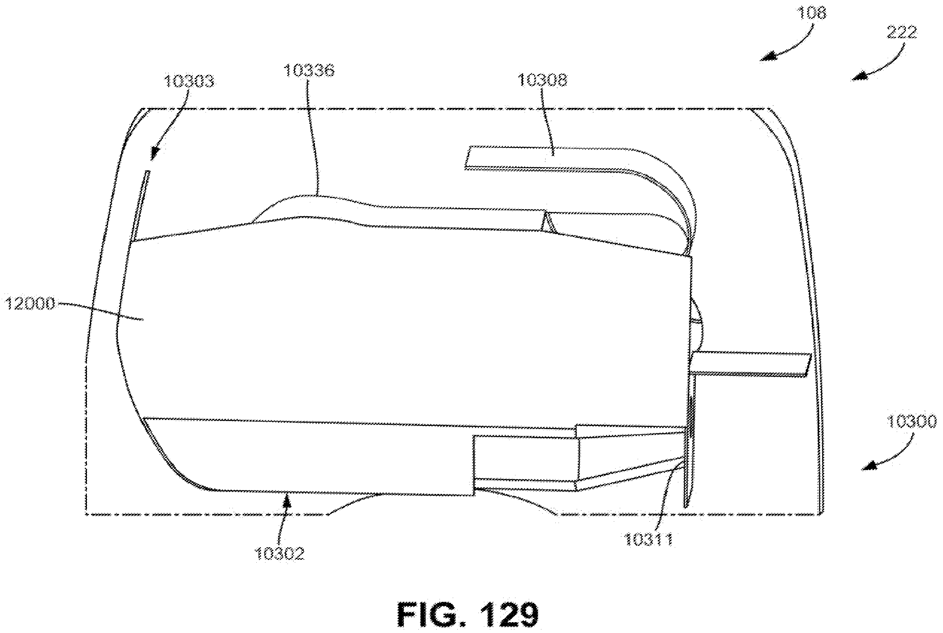

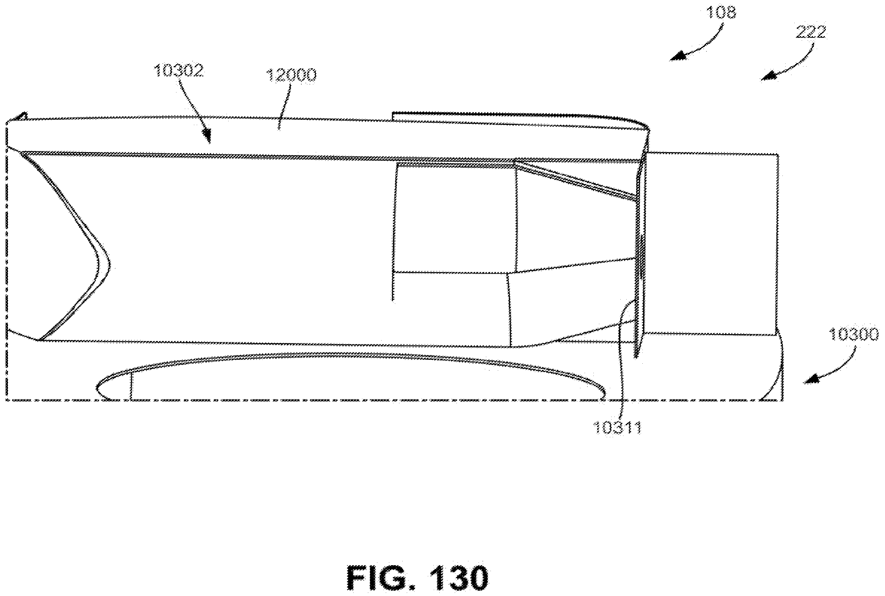

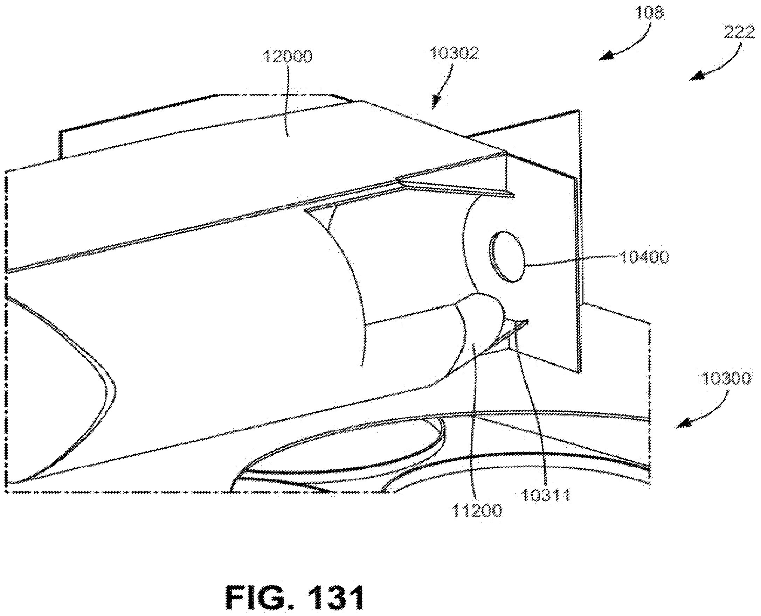

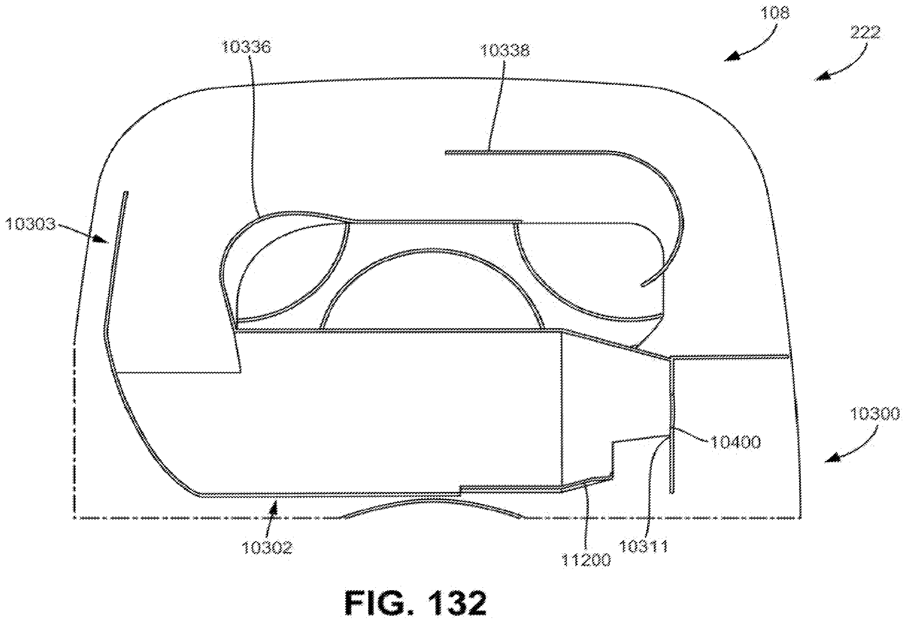

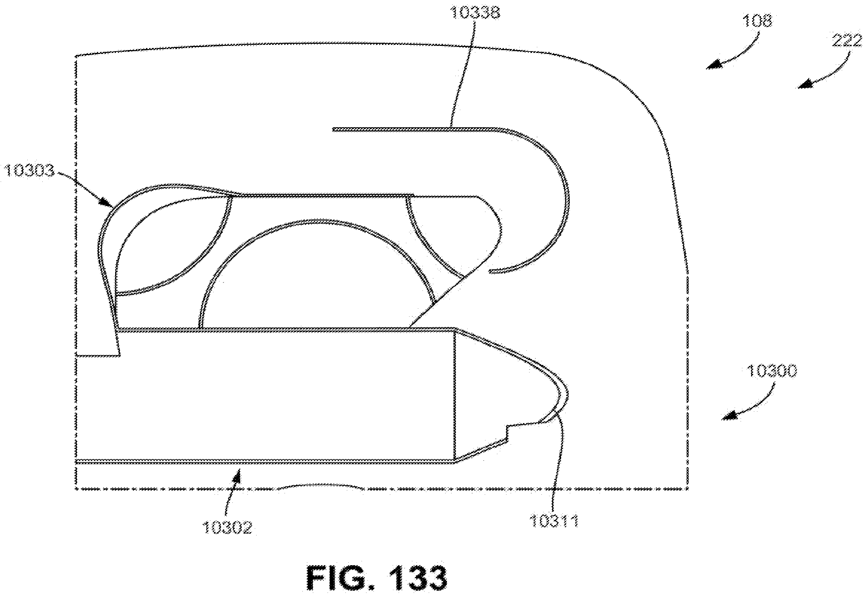

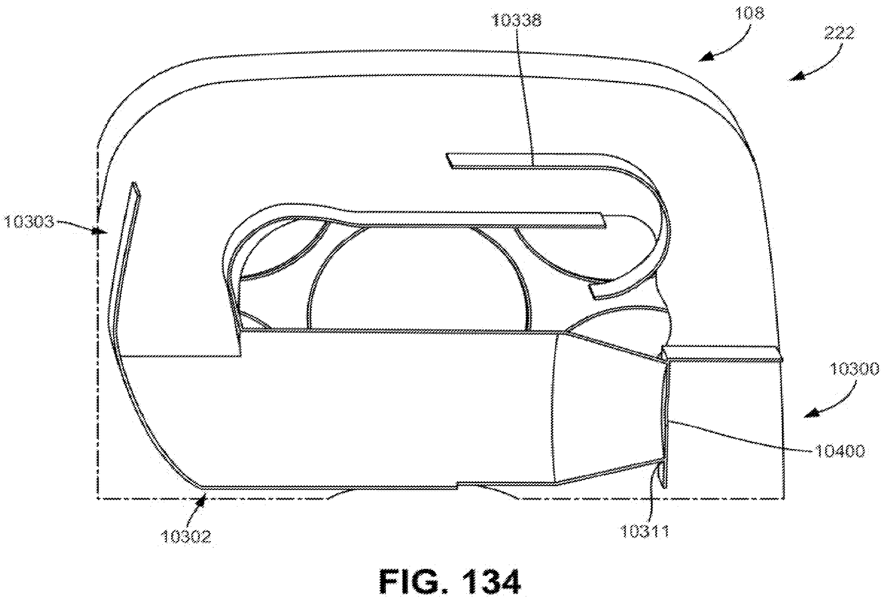

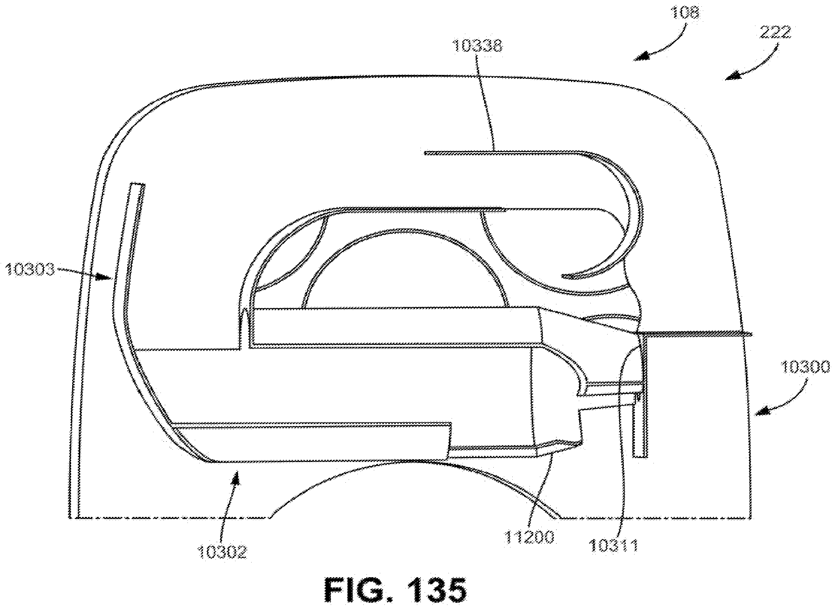

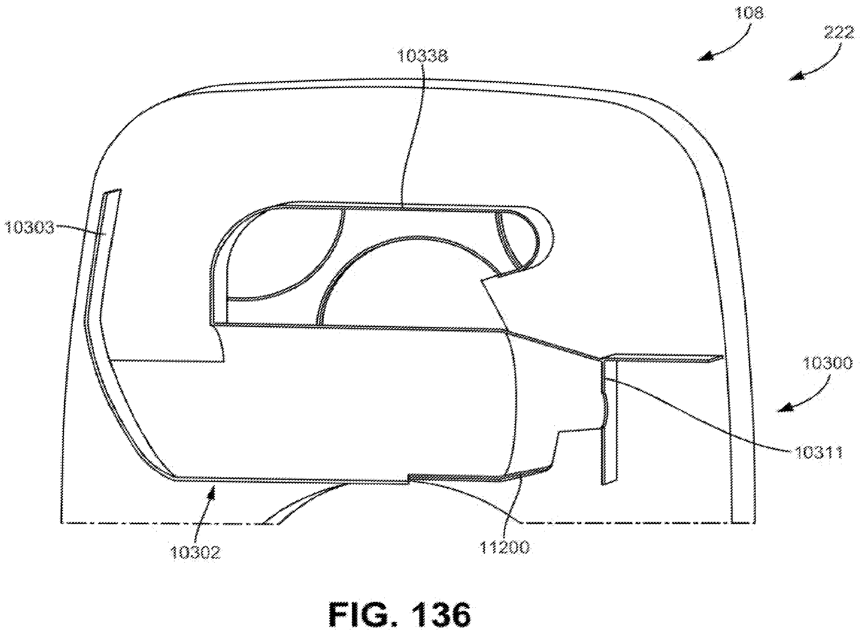

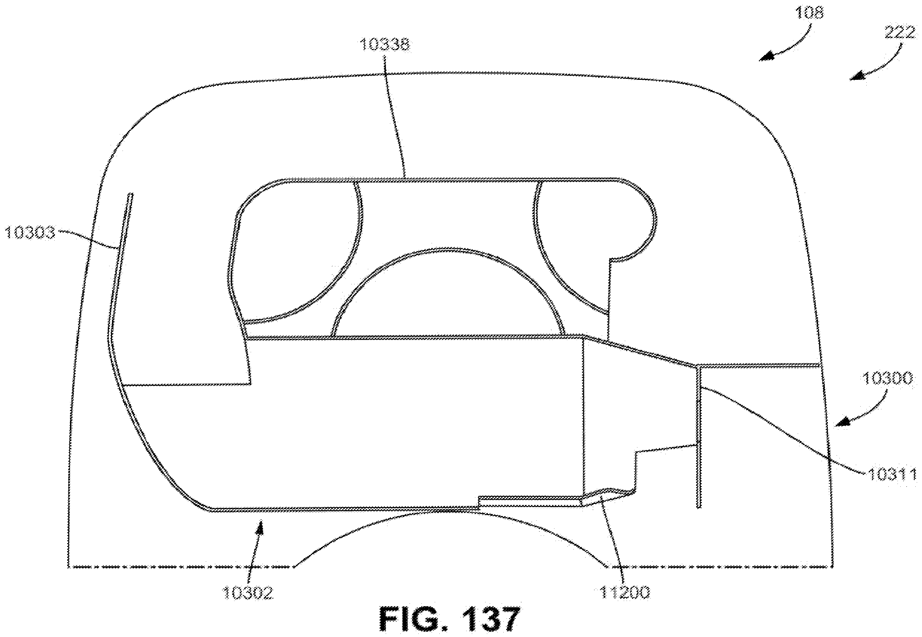

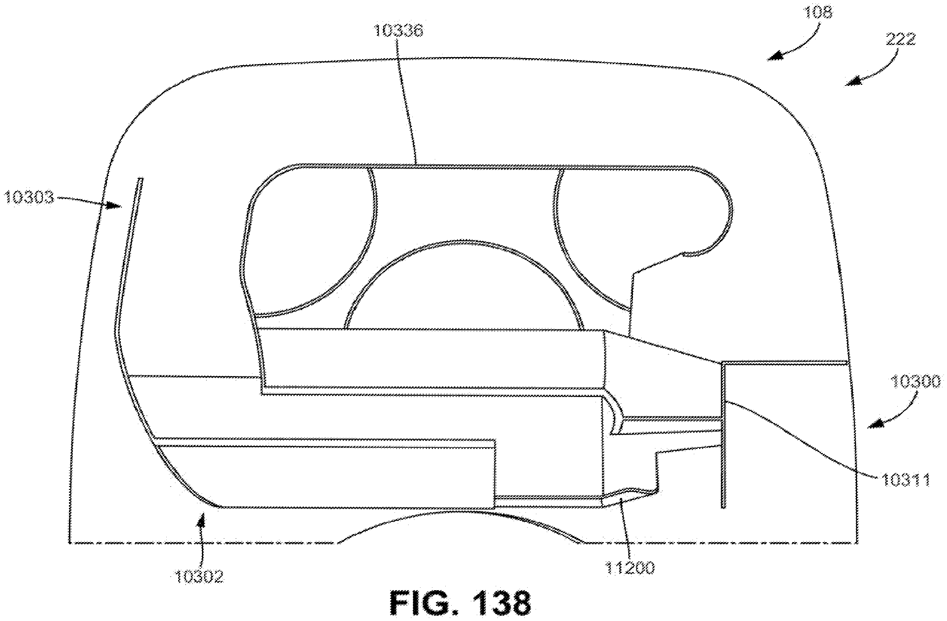

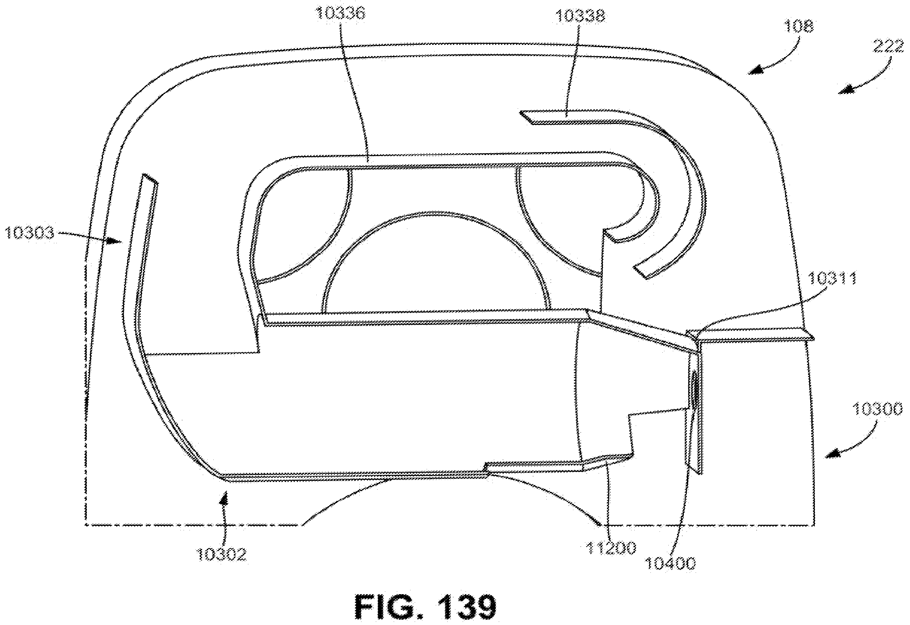

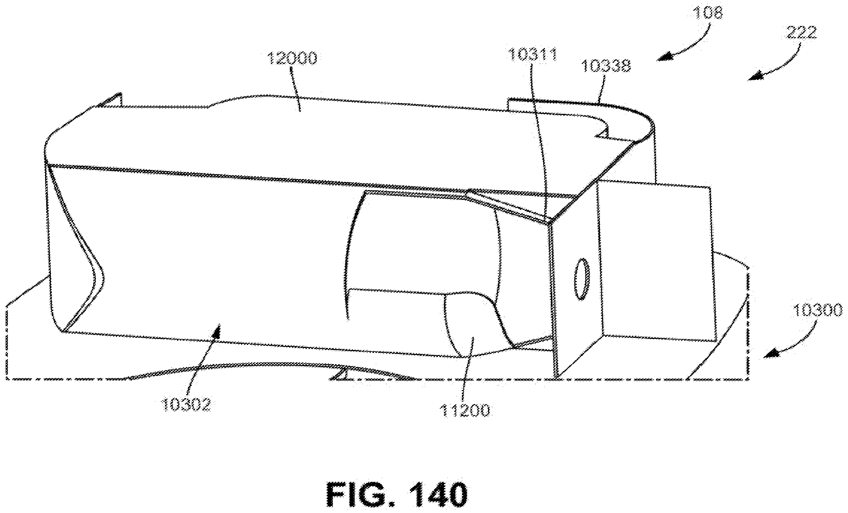

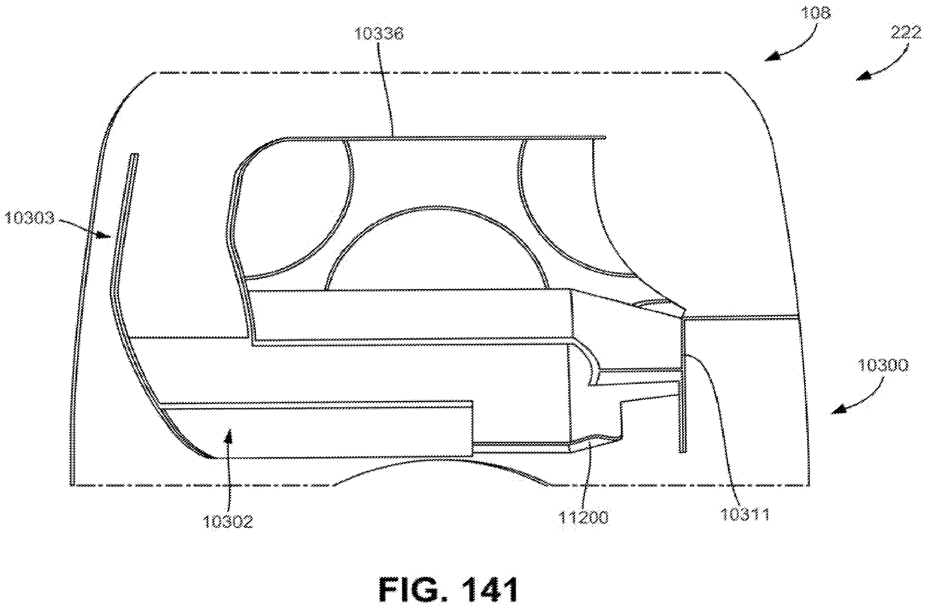

In various embodiments, such as is shown in Figure 108A and 108B, the dividing tube 10300 is separated from the outer housing wall 232 by a gap. The gap may be, for example, 4mm. In various embodiments, such as is shown in Figures 109-141, the second end 10311 may be tapered (e.g., frustoconical, etc.). This may mitigate undesirable recirculation of the exhaust gas. Only a portion (e.g., downstream portion, etc.) of the second end 10311 is tapered in some embodiments, such as is shown in Figure 109. In some embodiments, such as is shown in Figures 112-120, 122-128, 131, 132, and 135-141, the second end 10311 may include a deflecting lip 11200. The deflecting lip 11200 may cause the exhaust gas flowing into the dividing tube body 10302 to swirl within the dividing tube body 10302 away from the second end 10311. In various embodiments, such as is shown in Figures 116 and 117, an annular flange (e.g., ring, rib, etc.) is included around the second dividing tube flange aperture. In various embodiments, such as is shown in Figure 118, a portion (e.g., upstream portion, etc.) of the second end 10311 may be tapered. In various embodiments, such as is shown in Figure 119, a portion of the dividing tube 10300 proximate the outlet may be angled away from the first end 10310. In various embodiments, such as is shown in Figures 120, 121, 128-131, and 140 a roof 12000 may be included and attached to the dividing tube 10300.

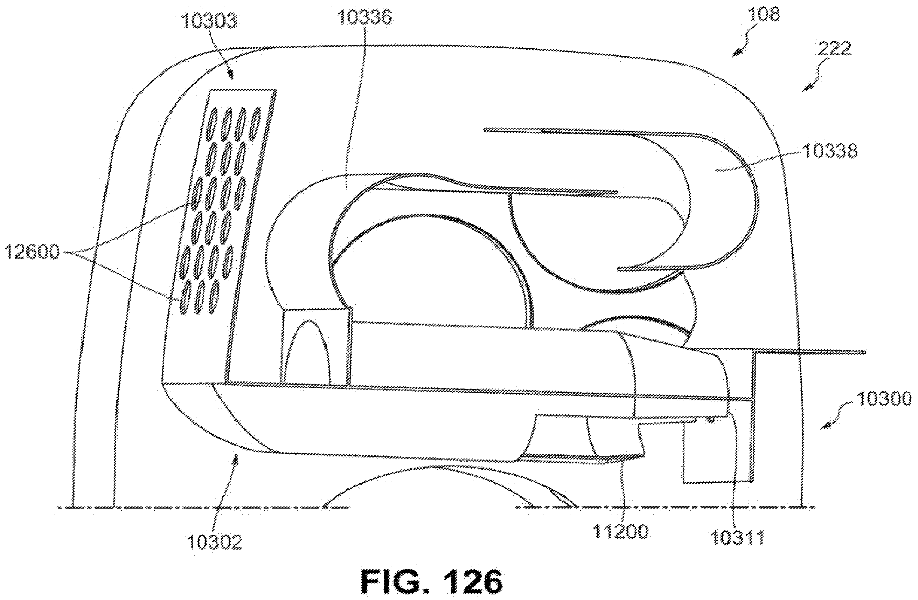

In various embodiments, such as is shown in Figure 126, the dividing tube flange 10303 includes a plurality of dividing tube flange transfer perforations 12600 (e.g., apertures, holes, etc.). The dividing tube flange transfer perforations 12600 are disposed on a portion of the dividing tube flange 10303 that is not opposite the dividing tube cavity 10314 (e.g., are located downstream of the dividing tube body 10302, etc.). In operation, the dividing tube flange transfer perforations 12600 facilitate passage of the exhaust gas (e.g., exhaust gas that has flowed between the mixing assembly wall 230 and the dividing tube flange 10303, etc.) through the dividing tube flange 10303 without passing through the dividing tube body 10202. As a result, the backpressure of the decomposition chamber 108 may be decreased. Furthermore, the exhaust gas flowing through the dividing tube flange transfer perforations 12600 functions to heat the dividing tube flange 10303, thereby mitigating impingement of the reductant on the dividing tube flange 10303. The exhaust gas flowing through the dividing tube flange transfer perforations 12600 may also be useful in redirecting the exhaust gas flowing towards the mixing assembly flow aperture 10308, thereby decreasing the backpressure of the decomposition chamber 108 and increasing the UI of the exhaust gas.

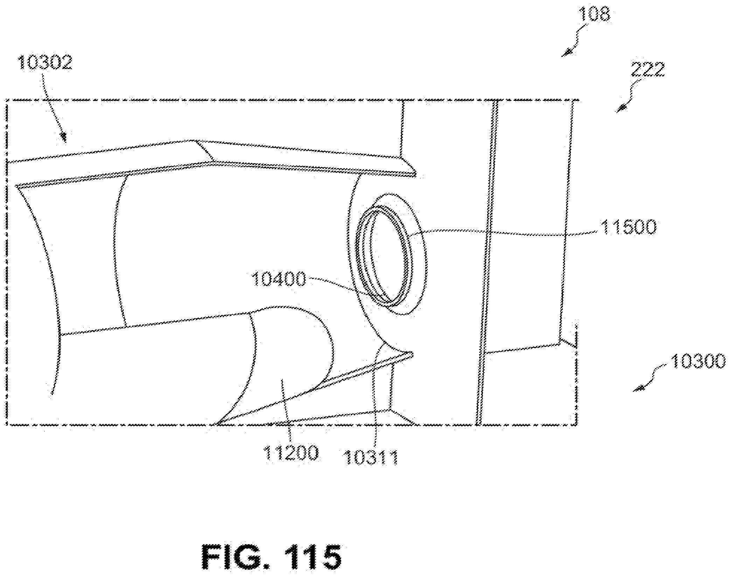

In various embodiments, such as is shown in Figures 115 and 116, the dividing tube body 10302 includes a flared portion 11500. The flared portion 11500 circumscribes the second dividing tube assembly flange aperture 10400 and extends away from the second flange. In other embodiments, such as is shown in Figures 104, 110, 125, 131, 132, 134, and 139 the dividing tube body 10302 does not include the flared portion 11500.

### XXXII. Construction of Example Embodiments

While this specification contains many specific implementation details, these should not be construed as limitations on the scope of what may be claimed but rather as descriptions of features specific to particular implementations. Certain features described in this specification in the context of separate implementations can also be implemented in combination in a single implementation. Conversely, various features described in the context of a single implementation can also be implemented in multiple implementations separately or in any suitable subcombination. Moreover, although features may be described as acting in certain combinations and even initially claimed as such, one or more features from a claimed combination can, in some cases, be excised from the combination, and the claimed combination may be directed to a subcombination or variation of a subcombination.

As utilized herein, the terms "substantially," "generally," and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be within the scope of the invention as recited in the appended claims.

The term "coupled" and the like, as used herein, mean the joining of two components directly or indirectly to one another. Such joining may be stationary (e.g., permanent) or moveable (e.g., removable or releasable). Such joining may be achieved with the two components or the two components and any additional intermediate components being integrally formed as a single unitary body with one another, with the two components, or with the two components and any additional intermediate components being attached to one another.

The terms "fluidly coupled to" and the like, as used herein, mean the two components or objects have a pathway formed between the two components or objects in which a fluid, such as air, exhaust gas, liquid reductant, gaseous reductant, aqueous reductant, gaseous ammonia, etc., may flow, either with or without intervening components or objects. Examples of fluid couplings or configurations for enabling fluid communication may include piping, channels, or any other suitable components for enabling the flow of a fluid from one component or object to another.

It is important to note that the construction and arrangement of the system shown in the various example implementations is illustrative only and not restrictive in character. All changes and modifications that come within the spirit and/or scope of the described implementations are desired to be protected. It should be understood that some features may not be necessary, and implementations lacking the various features may be contemplated as within the scope of the application, the scope being defined by the claims that follow. When the language "a portion" is used, the item can include a portion and/or the entire item unless specifically stated to the contrary.

Also, the term "or" is used in its inclusive sense (and not in its exclusive sense) so that when used, for example, to connect a list of elements, the term "or" means one, some, or all of the elements in the list. Conjunctive language such as the phrase "at least one of X, Y, and Z," unless specifically stated otherwise, is otherwise understood with the context as used in general to convey that an item, term, etc. may be either X, Y, Z, X and Y, X and Z, Y and Z, or X, Y, and Z (i.e., any combination of X, Y, and Z). Thus, such conjunctive language is not generally intended to imply that certain embodiments require at least one of X, at least one of Y, and at least one of Z to each be present, unless otherwise indicated.

Additionally, the use of ranges of values (e.g., W to P, etc.) herein are inclusive of their maximum values and minimum values (e.g., W to P includes W and includes P, etc.), unless otherwise indicated. Furthermore, a range of values (e.g., W to P, etc.) does not necessarily require the inclusion of intermediate values within the range of values (e.g., W to P can include only W and P, etc.), unless otherwise indicated.
The following numbered statements define further novel and inventive combinations of features and set out particular combinations of features which are considered relevant to particular embodiments of the present disclosure:
1. A decomposition chamber for an exhaust gas aftertreatment system, the decomposition chamber comprising:
   an inlet tube configured to receive exhaust gas;
   a selective catalytic reduction (SCR) catalyst member;
   a mixing collector wall comprising a mixing assembly flow aperture;
   a distribution cap coupled to the inlet tube and configured to receive the exhaust gas from the inlet tube; and
   a dividing tube coupled to the mixing collector wall, the dividing tube separating the distribution cap from the mixing assembly flow aperture, the dividing tube comprising:
      a first dividing tube inlet aperture configured to receive the exhaust gas from the distribution cap; and
      a dividing tube outlet aperture configured to provide the exhaust gas to the mixing assembly flow aperture.
2. The decomposition chamber of statement 1, further comprising:
   a housing body;
   a transfer assembly housing wall coupled to the housing body; and
   an outer housing wall;
   wherein the SCR catalyst member is coupled to the transfer assembly housing wall;
   wherein the mixing collector wall is coupled to the housing body; and
   wherein the outer housing wall is coupled to the housing body.
3. The decomposition chamber of statement 2, wherein:
   the transfer assembly housing wall further comprises a transfer assembly inlet tube aperture;
   the mixing collector wall comprises a mixing assembly inlet tube aperture coaxial with the transfer assembly inlet tube aperture; and
   the inlet tube extends through the transfer assembly inlet tube aperture and provides the exhaust gas through the mixing assembly inlet tube aperture.
4. The decomposition chamber of statement 1, further comprising a mixing assembly wall;
   wherein the mixing assembly wall is coupled to the mixing collector wall;
   wherein the dividing tube further comprises a dividing tube body, the dividing tube body comprising:
      a first end coupled to the mixing assembly wall, and
      a second end coupled to the mixing assembly wall; and
   wherein the first dividing tube inlet aperture extends through the dividing tube body and is disposed between the first end and the second end; and
   wherein the dividing tube outlet aperture extends through the dividing tube body and is disposed between the first end and the second end.
5. The decomposition chamber of statement 4, further comprising an outer housing wall;
   wherein the first dividing tube inlet aperture is disposed between the mixing collector wall and the outer housing wall; and
   wherein the dividing tube outlet aperture is disposed between the mixing collector wall and the outer housing wall.
6. The decomposition chamber of statement 4, wherein the dividing tube further comprises a plurality of dividing tube body perforations diametrically opposed to the dividing tube outlet aperture.
7. The decomposition chamber of statement 1, wherein:
   the mixing collector wall further comprises a dividing tube coupling aperture; and
   the dividing tube is disposed within the dividing tube coupling aperture.
8. The decomposition chamber of statement 1, wherein:
   the dividing tube further comprises a second dividing tube inlet aperture configured to receive the exhaust gas from the distribution cap; and
   the dividing tube outlet aperture is disposed between the first dividing tube inlet aperture and the second dividing tube inlet aperture.
9. The decomposition chamber of statement 1, further comprising a mixing assembly wall;
   wherein the mixing assembly wall is coupled to the mixing collector wall;
   wherein the dividing tube further comprises:
      a dividing tube body comprising:
         a first end, and
         a second end;
      a first dividing tube flange coupled to the first end and separated from the mixing assembly wall; and
      a plurality of first dividing tube flange perforations extending through the first dividing tube flange; and
   wherein the dividing tube outlet aperture is disposed between the first end and the first dividing tube inlet aperture.
10. The decomposition chamber of statement 1, further comprising:
   an outer housing wall;
   a mixing assembly wall coupled to the mixing collector wall;
   wherein the dividing tube is separated from the outer housing wall and the mixing collector wall so as to allow flow of the exhaust gas between the dividing tube and the outer housing wall and between the dividing tube and the mixing collector wall.
11. A decomposition chamber for an exhaust gas aftertreatment system, the decomposition chamber comprising:
   a selective catalytic reduction (SCR) catalyst member;
   a distribution cap configured to receive exhaust gas;
   a mixing collector wall comprising a mixing assembly flow aperture; and
   a dividing tube assembly extending between a first portion of the mixing collector wall and a second portion of the mixing collector wall, the dividing tube assembly comprising:
      an inlet dividing tube having an inlet dividing tube inlet aperture that is configured to receive the exhaust gas from the distribution cap; and
      an outlet dividing tube that is configured to receive the exhaust gas from the inlet dividing tube and having an outlet dividing tube outlet aperture that is configured to provide the exhaust gas to the mixing assembly flow aperture.
12. The decomposition chamber of statement 11, wherein the outlet dividing tube comprises a plurality of outlet dividing tube perforations oriented towards the mixing assembly flow aperture and configured to provide the exhaust gas to the mixing assembly flow aperture separately from the outlet dividing tube outlet aperture.
13. The decomposition chamber of statement 11, further comprising a first dividing tube assembly flange coupled to the inlet dividing tube and the outlet dividing tube, the first dividing tube assembly flange comprising:
   a plurality of first flange inlet body perforations circumscribed by the inlet dividing tube and configured to provide the exhaust gas into the inlet dividing tube; and
   a plurality of second flange inlet body perforations circumscribed by the outlet dividing tube and configured to provide the exhaust gas into the outlet dividing tube.
14. A decomposition chamber for an exhaust gas aftertreatment system, the decomposition chamber comprising:
   a selective catalytic reduction (SCR) catalyst member;
   a distribution cap configured to receive exhaust gas;
   a mixing collector wall comprising a mixing assembly flow aperture;
   a mixing assembly wall coupled to the mixing collector wall;
   an outer housing wall coupled to the mixing assembly wall; and
   a dividing tube coupled to the mixing collector wall around the mixing assembly flow aperture, the dividing tube separating the distribution cap from the mixing assembly flow aperture, the dividing tube comprising:
      a dividing tube body separated from the outer housing wall;
      a dividing tube inlet aperture extending through the dividing tube body and configured to receive the exhaust gas from the distribution cap;
      a dividing tube body bypass opening extending through the dividing tube body, aligned with the dividing tube inlet aperture, in confronting relation with the mixing assembly wall, and configured to receive the exhaust gas from between the dividing tube body and the mixing collector wall; and
      a dividing tube outlet aperture configured to provide the exhaust gas to the mixing assembly flow aperture.
15. The decomposition chamber of statement 14, wherein the dividing tube further comprises a first dividing tube flange comprising a plurality of first dividing tube flange openings that are configured to allow passage of the exhaust gas into the dividing tube, the first dividing tube flange coupled to the mixing collector wall and the dividing tube body.
16. The decomposition chamber of statement 15, wherein the dividing tube further comprises a second dividing tube flange coupled to the mixing collector wall and the dividing tube body, the second dividing tube flange comprising a second dividing tube flange aperture configured to allow passage of a reductant into the dividing tube.
17. The decomposition chamber of statement 16, wherein the dividing tube further comprises an exhaust assist cone coupled to the second dividing tube flange and extending from the second dividing tube flange into the dividing tube and towards the first dividing tube flange, the exhaust assist cone circumscribing the second dividing tube flange aperture.
18. The decomposition chamber of statement 17, wherein the exhaust assist cone comprises a plurality of exhaust assist apertures, each of the exhaust assist apertures configured to allow passage of the exhaust gas from within the dividing tube through the exhaust assist cone.
19. The decomposition chamber of statement 18, wherein:
   the dividing tube further comprises a splash guard extending from the dividing tube body into the dividing tube; and
   at least a portion of the splash guard is disposed between the exhaust assist cone and at least a portion of the dividing tube inlet aperture.
20. The decomposition chamber of statement 19, wherein the dividing tube further comprises a plurality of dividing tube body apertures, each of the dividing tube body apertures aligned with the splash guard and configured to allow passage of the exhaust gas through the dividing tube body.

## Claims

1. A decomposition chamber for an exhaust gas aftertreatment system, the decomposition chamber comprising:
a selective catalytic reduction (SCR) catalyst member;
a distribution cap configured to receive exhaust gas;
a mixing collector wall comprising a mixing assembly flow aperture;
a mixing assembly wall coupled to the mixing collector wall;
an outer housing wall coupled to the mixing assembly wall; and
a dividing tube coupled to the mixing collector wall around the mixing assembly flow aperture, the dividing tube separating the distribution cap from the mixing assembly flow aperture, the dividing tube comprising:
a dividing tube body separated from the outer housing wall;
a dividing tube inlet aperture extending through the dividing tube body and configured to receive the exhaust gas from the distribution cap;
a dividing tube body bypass opening extending through the dividing tube body, aligned with the dividing tube inlet aperture, in confronting relation with the mixing assembly wall, and configured to receive the exhaust gas from between the dividing tube body and the mixing collector wall; and
a dividing tube outlet aperture configured to provide the exhaust gas to the mixing assembly flow aperture.

2. The decomposition chamber of claim 1, wherein the dividing tube further comprises a first dividing tube flange comprising a plurality of first dividing tube flange openings that are configured to allow passage of the exhaust gas into the dividing tube, the first dividing tube flange coupled to the mixing collector wall and the dividing tube body.

3. The decomposition chamber of claim 2, wherein the dividing tube further comprises a second dividing tube flange coupled to the mixing collector wall and the dividing tube body, the second dividing tube flange comprising a second dividing tube flange aperture configured to allow passage of a reductant into the dividing tube.

4. The decomposition chamber of claim 3, wherein the dividing tube further comprises an exhaust assist cone coupled to the second dividing tube flange and extending from the second dividing tube flange into the dividing tube and towards the first dividing tube flange, the exhaust assist cone circumscribing the second dividing tube flange aperture.

5. The decomposition chamber of claim 4, wherein the exhaust assist cone comprises a plurality of exhaust assist apertures, each of the exhaust assist apertures configured to allow passage of the exhaust gas from within the dividing tube through the exhaust assist cone.

6. The decomposition chamber of claim 5, wherein:
the dividing tube further comprises a splash guard extending from the dividing tube body into the dividing tube; and
at least a portion of the splash guard is disposed between the exhaust assist cone and at least a portion of the dividing tube inlet aperture.

7. The decomposition chamber of claim 6, wherein the dividing tube further comprises a plurality of dividing tube body apertures, each of the dividing tube body apertures aligned with the splash guard and configured to allow passage of the exhaust gas through the dividing tube body.
